# EUROPEAN PATENT SPECIFICATION

(11) **EP 4 156 936 B1**
(45) Date of publication and mention of the grant of the patent: **12.08.2026**
(21) Application number: 21727890.2
(22) Date of filing: 26.05.2021
(51) Int. Cl.: A01N 43/58, A01P 3/00

(54) **ACTIVE COMPOUND COMBINATIONS**
WIRKSTOFFKOMBINATIONEN
COMBINAISONS DE COMPOSÉS ACTIFS

(30) Priority: 27.05.2020 EP 20176911
(43) Date of publication of application: 05.04.2023
(73) Proprietor: Bayer Aktiengesellschaft, 51373 Leverkusen (DE)
(72) Inventor: KLÜKEN, Michael, 47799 Krefeld (DE); GEIST, Julie, 69009 Lyon (FR); MONTAGNE, Cyril, 69009 Lyon (FR); MILLET, Anthony, 38230 TIGNIEU-JAMEYZIEU (FR)
(74) Representative: BIP Patents
(86) International application number: PCT/EP2021/063964
(87) International publication number: WO 2021/239766

(56) References cited:
- EP-A1- 2 042 491
- WO-A1-2007/141009
- WO-A1-2013/189801
- WO-A1-2020/109391

## Description

The present invention relates to active compound combinations, in particular within a fungicide composition, which comprise as compound (A) a compound of formula (I) and as compound (B) a further fungicidally active compound as specified below. Moreover, the invention relates to compositions comprising such compound combination and to the use of the compound combinations and the fungicide compositions as biologically active agent, especially for control of phytopathogenic fungi in crop protection and in the protection of industrial materials and as plant growth regulators.

Throughout this application the terms "composition" and "formulation" are used synonymously and refer to mixtures of a compound combination of the invention and at least one agriculturally suitable auxiliary.

US 2009/0143355 discloses a 6-chloropyridazine-4-carboxamide as an intermediate in the preparation of substituted arylamine derivatives useful in treating cancer. In WO 2011/117254 pyridazine-4-carboxamides are published as potential modulators of Ghrelin receptor useful in treating diabetes and obesity. A 6-chloropyridazine-4-carboxamide as a component of a composition that may be used in the preparation of light-emitting devices in mentioned in US 2011/0108767.

Albeit compounds of formula (I) provide excellent means in protecting plants from diseases caused by fungi, there is still need to even improve those means in order to address the ever increasing environmental and economic requirements imposed on modern-day crop protection agents and compositions. This includes, for example, improvement to the spectrum of action, safety profile, selectivity, application rate, formation of residues, and favourable preparation ability, and development of new compositions to deal with potential problems, like resistances.

The present invention provides active compound combinations and compositions comprising said combinations which at least in some aspects achieve the stated objective.

Accordingly, the present invention provides active compound combinations comprising
(A) at least one compound selected from the group consisting of (I-655) 6-chloro-3-(3-cyclopropyl-2-fluorophenoxy)-N-[2-(2,4-dimethylphenyl)-2,2-difluoroethyl]-5-methylpyridazine-4-carboxamide, (I-667) 3-(3-bromo-2-fluorophenoxy)-6-chloro-N-[2-(2-chloro-4-methylphenyl)-2,2-difluoroethyl]-5-methylpyridazine-4-carboxamide, (I-746) 6-chloro-N-[2-(2-chloro-4-methylphenyl)-2,2-difluoroethyl]-3-(3-cyclopropyl-2-fluorophenoxy)-5-methylpyridazine-4-carboxamide, (I-749) 6-chloro-3-(3-cyclopropyl-2-fluorophenoxy)-N-[2-(3,4-dimethylphenyl)-2,2-difluoroethyl]-5-methylpyridazine-4-carboxamide, (I-784) 6-chloro-3-(3-chloro-2-fluorophenoxy)-N-[2-(2,4-dimethylphenyl)-2,2-difluoroethyl]-5-methylpyridazine-4-carboxamide, (I-840) N-[2-(2-bromo-4-methylphenyl)-2,2-difluoroethyl]-6-chloro-3-(3-cyclopropyl-2-fluorophenoxy)-5-methylpyridazine-4-carboxamide
   and
(B) at least one further active compound selected from (1.002) difenoconazole, (1.018) prothioconazole, (1.020) spiroxamine, (1.021) tebuconazole, (1.055) mefentrifluconazole, (2.002) bixafen, (2.005) fluopyram, (2.028) inpyrfluxam, (2.038) isoflucypram, (3.020) trifloxystrobin, (3.025) fenpicoxamid, (5.003) captan, (5.010) dithianon, (5.012) folpet, (5.013) mancozeb, (5.018) propineb, (6.002) isotianil, (7.005) pyrimethanil, (13.001) fludioxonil, (13.004) proquinazid, (13.005) quinoxyfen, (15.012) fosetyl-aluminium, (15.016) metrafenone, (15.064) (N'-[2-chloro-4-(2-fluorophenoxy)-5-methylphenyl]-N-ethyl-N-methylimidoformamide) and (18.001) a composition comprising one or more fatty acids or derivatives thereof selected from unsaturated and saturated C₁₂-C₂₄ fatty acids, salts thereof, esters thereof or mixtures of any of the foregoing, wherein at least 95% of said fatty acids or derivatives thereof are in the range of C₁₄ to C₂₀ .

Even more preferred compound combinations according to the invention comprise (A) a compound of formula (I) selected from the group consisting of (I-655) 6-chloro-3-(3-cyclopropyl-2-fluorophenoxy)-N-[2-(2,4-dimethylphenyl)-2,2-difluoroethyl]-5-methylpyridazine-4-carboxamide, (I-746) 6-chloro-N-[2-(2-chloro-4-methylphenyl)-2,2-difluoroethyl]-3-(3-cyclopropyl-2-fluorophenoxy)-5-methylpyridazine-4-carboxamide, (I-749) 6-chloro-3-(3-cyclopropyl-2-fluorophenoxy)-N-[2-(3,4-dimethylphenyl)-2,2-difluoroethyl]-5-methylpyridazine-4-carboxamide.

### DEFINITIONS

The term "leaving group" as used herein is to be understood as meaning a group which is displaced from a compound in a substitution or an elimination reaction, for example a halogen atom, a trifluoromethanesulphonate ("triflate") group, alkoxy, methanesulphonate, p-toluenesulphonate, etc.

Not encompassed herein are compounds resulting from combinations which are against natural laws and which the person skilled in the art would therefore exclude based on his/her expert knowledge. For instance, ring structures having three or more adjacent oxygen atoms are excluded.

Depending on the nature of the substituents, the compound of fomula (I) may be present in the form of different stereoisomers. These stereoisomers are, for example, enantiomers, diastereomers, atropisomers or geometric isomers. Accordingly, the invention encompasses both pure stereoisomers and any mixture of these isomers. Where a compound can be present in two or more tautomer forms in equilibrium, reference to the compound by means of one tautomeric description is to be considered to include all tautomer forms.

Any of the compounds of the present invention can also exist in one or more geometric isomer forms depending on the number of double bonds in the compound. Geometric isomers by nature of substituents about a double bond or a ring may be present in *cis* (= *Z*-) or *trans* (*= E*-) form. The invention thus relates equally to all geometric isomers and to all possible mixtures, in all proportions.

Depending on the nature of the substituents, the compound of fomula (I) may be present in the form of the free compound and/or a salt thereof, such as an agrochemically active salt.

Agrochemically active salts include acid addition salts of inorganic and organic acids well as salts of customary bases. Examples of inorganic acids are hydrohalic acids, such as hydrogen fluoride, hydrogen chloride, hydrogen bromide and hydrogen iodide, sulfuric acid, phosphoric acid and nitric acid, and acidic salts, such as sodium bisulfate and potassium bisulfate. Useful organic acids include, for example, formic acid, carbonic acid and alkanoic acids such as acetic acid, trifluoroacetic acid, trichloroacetic acid and propionic acid, and also glycolic acid, thiocyanic acid, lactic acid, succinic acid, citric acid, benzoic acid, cinnamic acid, oxalic acid, saturated or mono- or diunsaturated fatty acids having 6 to 20 carbon atoms, alkylsulphuric monoesters, alkylsulphonic acids (sulphonic acids having straight-chain or branched alkyl radicals having 1 to 20 carbon atoms), arylsulphonic acids or aryldisulphonic acids (aromatic radicals, such as phenyl and naphthyl, which bear one or two sulphonic acid groups), alkylphosphonic acids (phosphonic acids having straight-chain or branched alkyl radicals having 1 to 20 carbon atoms), arylphosphonic acids or aryldiphosphonic acids (aromatic radicals, such as phenyl and naphthyl, which bear one or two phosphonic acid radicals), where the alkyl and aryl radicals may bear further substituents, for example p-toluenesulphonic acid, salicylic acid, p-aminosalicylic acid, 2-phenoxybenzoic acid, 2-acetoxybenzoic acid, etc.

Solvates of the compounds of the invention or their salts are stoichiometric compositions of the compounds with solvents.

The compounds of the invention may exist in multiple crystalline and/or amorphous forms. Crystalline forms include unsolvated crystalline forms, solvates and hydrates.

### Processes for the preparation of compounds of formula (I) and intermediates

Disclosed but not claimed are processes for the preparation of compounds of formula (I) and their intermediates.

Compounds of formula (I-a) - (I-g) are various subsets of formula (I). Compounds of formula (I-a-1) - (I-a-8) are various subsets of formula (I-a). All substituents for formula (I-a) - (I-g) and (I-a-1) - (I-a-8) are as defined above for formula (I) unless otherwise noted.

The compounds of the general formula (I) can be prepared by various routes in analogy to known processes (see e.g. and references therein). Non-limiting examples of suitable processes are herein described.

A compound of formula (I) may be directly obtained by performing process A or B or may be obtained by conversion or derivatization of another compound of formula (I) prepared in accordance with the processes described herein. For instance, a compound of formula (I) can be converted into another compound of formula (I) by replacing one or more substituents of the starting compound of formula (I) by other substituents. Non-limiting examples of such conversion or derivatization are described below (processes C to H).

The processes described herein may be suitably performed using one or more inert organic solvents which is/are customary for the considered reaction. Suitable inert organic solvents can be chosen from the following: aliphatic, alicyclic or aromatic hydrocarbons (e.g. petroleum ether, pentane, hexane, heptane, cyclohexane, methylcyclohexane, ligroin, benzene, toluene, xylene or decalin), halogenated aliphatic, alicyclic or aromatic hydrocarbons (e.g. chlorobenzene, dichlorobenzene, dichloromethane, chloroform, carbon tetrachloride, 1,2-dichloroethane or trichloroethane), ethers (e.g. diethyl ether, diisopropyl ether, methyl t-butyl ether, methyl t-amyl ether, dioxane, tetrahydrofuran, 2-methyltetrahydrofuran, 1,2-dimethoxyethane, 1,2-diethoxyethane or anisole), ketones (e.g. acetone, methyl ethyl ketone, methyl isopropyl ketone and methyl isobutyl ketone), esters (e.g. methyl acetate, ethyl acetate or butyl acetate), alcohols (e.g. methanol, ethanol, propanol, iso-propanol, butanol, tert-butanol), nitriles (e.g. acetonitrile, propionitrile, n- or i-butyronitrile or benzonitrile), amides (e.g. N,N-dimethylformamide, N,N-dimethylacetamide, N-methylformanilide, N-methylpyrrolidone, or hexamethylphosphoric triamide), sulfoxides (e.g. dimethyl sulfoxide) or sulfones (e.g. sulfolane), ureas (e.g. 1,3-dimethyl-3,4,5,6-tetrahydro-2(1H)-pyrimidinone) or any mixture thereof.

Some processes described herein may require or be optionally performed using one or more inorganic or organic bases which are customary for such reactions. Examples of suitable inorganic and organic bases include, but are not limited to, alkaline earth metal or alkali metal carbonates (e.g. sodium carbonate, potassium carbonate, potassium bicarbonate, sodium bicarbonate or cesium carbonate), alkali metal hydrides (e.g. sodium hydride), alkaline earth metal or alkali metal hydroxides (e.g. sodium hydroxide, calcium hydroxide, potassium hydroxide or other ammonium hydroxide derivatives), alkaline earth metal, alkali metal or ammonium fluorides (e.g. potassium fluoride, cesium fluoride or tetrabutylammonium fluoride), alkali metal or alkaline earth metal acetates (e.g. sodium acetate, lithium acetate, potassium acetate or calcium acetate), alkali metal alcoholates (e.g. potassium tert-butoxide or sodium tert-butoxide), alkali metal phosphates (e.g. tri-potassium phosphate), tertiary amines (e.g. trimethylamine, triethylamine, tributylamine, N,N-dimethylaniline, N,N-dicyclohexylmethylamine, N,N-diisopropylethylamine, N-methylpiperidine, N,N-dimethylaminopyridine, diazabicyclooctane (DABCO), diazabicyclononene (DBN), diazabicycloundecene (DBU), quinuclidine, 3-acetoxyquinuclidine, guanidines or aromatic bases (e.g. pyridines, picolines, lutidines or collidines).

Some of the processes described herein may be optionally performed in the presence of a transition metal catalyst, such as a metal (e.g. copper or palladium) salt or complex, if appropriate in the presence of a ligand.

Suitable copper salts or complexes and their hydrates include, but are not limited to, copper metal, copper(I) iodide, copper(I) chloride, copper(I) bromide, copper(II) chloride, copper(II) bromide, copper(II) oxide, copper(I) oxide, copper(II) acetate, copper(I) acetate, copper(I) thiophene-2-carboxylate, copper(I) cyanide, copper(II) sulfate, copper(II) bis(2,2,6,6-tetramethyl-3,5-heptanedionate), copper(II) trifluoromethanesulfonate, tetrakis(acetonitrile)copper(I) hexafluorophosphate, tetrakis(acetonitrile)-copper(I) tetrafluoroborate.

It is also possible to generate *in situ* a suitable copper complex in the reaction mixture by separate addition to the reaction of a copper salt and a ligand or salt, such as ethylenediamine, N,N-dimethylethylenediamine, N,N'-dimethylethylenediamine, *rac*-trans-1,2-diaminocyclohexane, *rac*-trans-N,N'-dimethylcyclohexane-1,2-diamine, 1,1'-binaphthyl-2,2'-diamine, N,N,N',N'-tetramethylethylenediamine, proline, N,N-dimethylglycine, quinolin-8-ol, pyridine, 2-aminopyridine, 4-(dimethyl-amino)pyridine, 2,2'-bipyridyl, 2,6-di(2-pyridyl)pyridine, 2-picolinic acid, 2-(dimethylaminomethyl)-3-hydroxypyridine, 1,10-phenanthroline, 3,4,7,8-tetramethyl-1,10-phenanthroline, 2,9-dimethyl-1,10-phenanthroline, 4,7-dimethoxy-1,10-phenanthroline, N,N'-bis[(E)-pyridin-2-ylmethylidene]cyclohexane-1,2-diamine, N-[(E)-phenylmethylidene], N-[(E)-phenylmethylidene]-cyclohexanamine, 1,1,1-tris(hydroxymethyl)ethane, ethylene glycol, 2,2,6,6-tetramethylheptane-3,5-dione, 2-(2,2-dimethylpropanoyl)cyclohexanone, acetylacetone, dibenzoylmethane, 2-(2-methylpropanoyl)cyclohexanone, biphenyl-2-yl(di-*tert*-butyl)phosphane, ethylenebis-(diphenylphosphine), N,N-diethylsalicylamide, 2-hydroxybenzaldehyde oxime, oxo[(2,4,6-trimethylphenyl)amino]acetic acid or 1H-pyrrole-2-carboxylic acid.

Suitable palladium salts or complexes include, but are not limited to, palladium chloride, palladium acetate, tetrakis(triphenylphosphine)palladium(0), bis(dibenzylideneacetone)palladium(0), tris(dibenzylideneacetone)dipalladium(0), bis(triphenylphosphine)palladium(II) dichloride, [1,1'-bis(diphenyl-phosphino)ferrocene]dichloropalladium(II), bis(cinnamyl)dichlorodipalladium(II), bis(allyl)-dichloro-dipalladium(II) or [1,1'-Bis(di-*tert*-butylphosphino)ferrocene]dichloropalladium(II).

It is also possible to generate a palladium complex in the reaction mixture by separate addition to the reaction of a palladium salt and a ligand or salt, such as triethylphosphine, tri-*tert*-butylphosphine, tri-*tert-*butylphosphonium tetrafluoroborate, tricyclohexylphosphine, 2-(dicyclohexylphosphino)biphenyl, 2-(di-*tert*-butylphosphino)biphenyl, 2-(dicyclohexylphosphino)-2'-(N,N-dimethylamino)biphenyl, 2-(tert-butylphosphino)-2'-(N,N-dimethylamino)biphenyl, 2-di-*tert*-butylphosphino-2',4',6'-triisopropyl-biphenyl, 2-dicyclohexylphosphino-2',4',6'-triisopropylbiphenyl, 2-dicyclohexylphosphino-2,6'-dimethoxybiphenyl, 2-dicyclohexylphosphino-2',6'-diisopropoxybiphenyl, triphenyl-phosphine, tris-(o-tolyl)phosphine, sodium 3-(diphenylphosphino)benzenesulfonate, tris-(2-methoxy-phenyl)phosphine, 2,2'-bis(diphenylphosphino)-1,1'-binaphthyl, 1,4-bis(diphenylphosphino)butane, 1,2-bis(diphenyl-phosphino) ethane, 1,4-bis(dicyclohexylphosphino)butane, 1,2-bis(dicyclohexylphosphino)-ethane, 2-(dicyclohexylphosphino)-2'-(N,N-dimethylamino)-biphenyl, 1,1'-bis(diphenylphosphino)-ferrocene, (R)-(-)-1-[(S)-2-diphenylphosphino)ferrocenyl]ethyldicyclohexylphosphine, tris-(2,4-*tert*-butyl-phenyl)phos-phite, di(1-adamantyl)-2-morpholinophenylphosphine or 1,3-bis(2,4,6-trimethylphenyl)imidazolium chloride.

The appropriate catalyst and/or ligand may be chosen from commercial catalogues such as "Metal Catalysts for Organic Synthesis" by Strem Chemicals or from reviews (Chemical Society Reviews (2014), 43, 3525, Coordination Chemistry Reviews (2004), 248, 2337 and references therein).

Some of the processes described herein may be performed by metallo-photoredox catalysis according to methods reported in the literature (Nature chemistry review, (2017) 0052 and references therein; Science (2016) 352, 6291, 1304; Org. Lett. 2016, 18, 4012, J. Org. Chem 2016, 81, 6898; J. Am. Chem. Soc. 2016, 138, 12715, J. Am. Chem. Soc. 2016, 138, 13862; J. Am. Chem. Soc. 2016, 138, 8034; J. Org. Chem. 2016, 81, 12525, J. Org. Chem. 2015, 80, 7642). The process is then performed in the presence a photosensitizer, such as Ir and Ru complexes or organic dyes, and a metal catalyst such as Ni complexes. The reaction can be performed in the presence of a ligand and if appropriate in the presence of a base under irradiation with blue or white light.

Suitable photosensitizers include, but are not limited to, Ir(III) photocatalyst such as [Ir(dFCF₃ppy)₂(bpy)]PF₆ (dFCF₃ppy = 2-(2,4-difluorophenyl)-5-trifluoromethylpyridine, bpy = 2,2'-bipyridine), [Ir(dFCF₃ppy)₂(dtbbpy)]PF₆ (dtbbpy = 4,4'-di-tert-butyl-2,2'-bipyridine), Ir(ppy)₂(dtbbpy)PF₆ (ppy = 2-phenylpyridine), Ir(ppy)₂(bpy)PF₆, Ir(dFppy)₃PF₆ (dFCF₃ppy = 2-(2,4-difluorophenyl)pyridine), *fac*-Ir(ppy)₃, (Ir[diF(5-Me)ppy]₂(tetraMePhen)PF₆ (diF(5-Me)ppy = 2-(2,4-difluorophenyl)-5-methylpyridine, tetraMePhen = 3,4,7,8-tetramethyl-1,10-phenanthroline), Ru(II) photocatalyst such as Ru(bpy)₃Cl₂ or Ru(bpy)₃(PF₆)₂ or organic dyes like 9-mesityl-10-acridinium, salts like perchlorate or tetrafluoroborate, or 2,4,5,6-tetra-9H-carbazol-9-yl-1,3-benzenedicarbonitrile, 9-fluorenone and 9,10-phenanthrenequinone.

Suitable nickel catalysts include, but are not limited to, bis(1,5-cyclooctadiene)nickel (0), nickel(II) choride, nickel(II) bromide, nickel(II) iodide under their anhydrous or hydrate forms or as dimethoxyethane complexes, nickel(II) acetylacetonate, nickel(II) nitrate hexahydrate. These nickel catalysts can be used in combination with bipyridine ligand such as 2,2'-bipyridine, 4,4'-di-tert-butyl-2,2'-bipyridine, 4,4'-dimethoxy-2,2'-bipyridine, 4,4'-dimethyl -2,2'-bipyridine or phenantroline such as 1,10-phenanthroline, 4,7-dimethyl-1,10-phenantroline, 4,7-dimethoxy-1,10-phenantroline or diamines such as N,N,N',N'-tetramethylethylenediamine or dione such as tetramethylheptanedione.

The processes described herein may be performed at temperatures ranging from -105°C to 250°C, preferably from -78°C to 185°C.

The reaction time varies as a function of the scale of the reaction and of the reaction temperature, but is generally between a few minutes and 48 hours.

The processes described herein are generally performed under standard pressure. However, it is also possible to work under elevated or reduced pressure.

In the processes described herein but not claimed, the starting materials are generally used in approximately equimolar amounts. However, it is also possible to use one of the starting materials in a relatively large excess.

Processes for the preparation of compounds of formula (I) The processes for preparation described in the following are not part of the claimed invention.

### Process A

A compound of formula (I-a) (*i.e. formula (I) wherein **T** is O and **R¹** is a defined in scheme 1*) can be prepared by a process comprising the step of reacting a compound of formula (1) with an amine of formula (2) or one of its salts as shown in scheme 1.

| |
|---|
| Scheme 1 : Process A Synthesis of amides of formula (I-a) 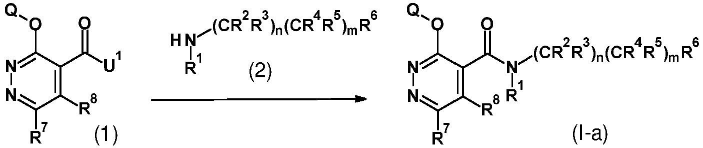 |
| **U¹** = hydroxyl, halogen, C₁-C₆-alkoxy |
| **R¹** = hydrogen, hydroxyl, cyano, C₁-C₆-alkyl, C₁-C₆-alkoxy, -C(=O)**R^{a1}**, -C(=O)(O**R^{a1}**), -S(=O)**R^{a1}**,-S(=O)₂**R^{a1}**, -C(=O)N(**R^{a2}**)₂ and S(=O)₂N(**R^{a2}**)₂ with **R^{a1}** and **R^{a2}** as described herein |

Compounds of formula (1) wherein **U¹** is a hydroxyl group can be reacted with an amine of formula (2) in the presence of a condensing reagent by means of methods described in the literature (e.g. Tetrahedron 2005, 61, 10827-10852). Examples of suitable condensing reagents include, but are not limited to, halogenating reagents (e.g. phosgene, phosphorous tribromide, phosphorous trichloride, phosphorous pentachloride, phosphorous trichloride oxide, oxalyl chloride or thionyl chloride), dehydrating reagents (e.g. ethyl chloroformate, methyl chloroformate, isopropyl chloroformate, isobutyl chloroformate or methanesulfonyl chloride), carbodiimides (e.g. N,N'-dicyclohexylcarbodiimide (DCC)) or other customary condensing (or peptide coupling) reagents (e.g. phosphorous pentoxide, polyphosphoric acid, bis(2-oxo-3-oxazolidinyl)phosphinic chloride, 1-[Bis(dimethylamino)methylene]-1H-1,2,3-triazolo[4,5-b]pyridinium 3-oxid hexafluorophosphate (HATU), N,N'-carbonyl-diimidazole, 2-ethoxy-N-ethoxycarbonyl-1,2-dihydroquinoline (EEDQ), triphenylphosphine/tetrachloro-methane, 4-(4,6-di-methoxy[1.3.5]-triazin-2-yl)-4-methylmorpholinium chloride hydrate, bromo-tripyrrolidinophos-phoniumhexafluorophosphate or propanephosphonic anhydride (T3P).

Compounds of formula (1) wherein U¹ is a halogen atom can be reacted with an amine of formula (2) in the presence of an acid scavenger by means of well-known methods. Suitable acid scavengers include any inorganic and organic bases, as described herein, which are customary for such reactions. Preference is given to alkali metal carbonates, alkaline earth metal acetates, tertiary amines or aromatic bases.

Compounds of formula (1) wherein **U¹** is a C₁-C₆-alkoxy group can be reacted with an excess of amine of formula (2), optionally in the presence of a Lewis acid such as trimethylaluminum.

Compounds of formula (1) can be prepared by one or more of the processes described herein (see processes I, J and K).

Amines of formula (2) are either commercially available or may be prepared in accordance with processes described in the literature (e.g. WO2007141009, WO2013064460, WO2015078800, WO2016066574, US20060116370, WO2007134799, WO2014177487, WO2011144338, EP0807629).

### Process B

A compound of formula (I-a-1) *(i.e. formula (I) wherein **T** is O, **R¹** is hydrogen, cyano, hydroxyl, C₁-C₆-alkyl or* C₁-C₆-alkoxy, ***R⁷** and **R⁸** are as defined in scheme 2*) can be prepared by a process comprising the step of reacting a compound of formula (3) and a compound of formula (4) in the presence of a base (e.g. organic or inorganic base) as shown in scheme 2.

| |
|---|
| Scheme 2: Process B - Synthesis of amides (I-a-1) 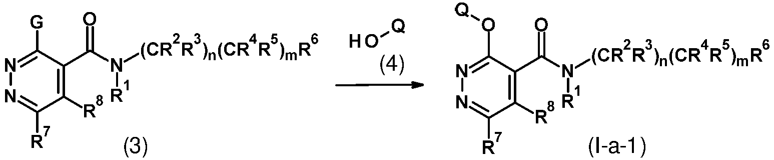 |
| **G** = halogen |
| **R¹** = hydrogen, hydroxyl, cyano, C₁-C₆-alkyl, C₁-C₆-alkoxy |
| **R⁸** = hydrogen, C₁-C₆-alkyl |
| **R⁷** = hydrogen, halogen, hydroxyl, mercapto, C₁-C₆-alkyl, C₁-C₆-haloalkyl, C₁-C₆-alkoxy, C₁-C₆-haloalkoxy, C₂-C₆-alkenyloxy, C₂-C₆-haloalkenyloxy, C₂-C₆-alkynyloxy, C₂-C₆-haloalkynyloxy, C₁-C₆-alkylsulfanyl, C₁-C₆-haloalkylsulfanyl, C₃-C₈-cycloalkylsulfanyl, C₃-C₈-cycloalkyl, C₃-C₆-cycloalkenyl, C₃-C₈-cycloalkyloxy, aromatic C₆-C₁₄-carbocyclyloxy, aromatic 5- or 6-membered monocyclic heterocyclyloxy, non-aromatic 3- to 7-membered monocyclic heterocyclyloxy, -N(**R^{e}**)₂ |

In scheme 2, **R^{e}** is as disclosed herein and **R⁷**, **R⁸** and **R^{e}** may be substituted as disclosed herein.

Process B may be performed in the presence of a transition metal catalyst, such as a copper salt or complex, if appropriate in the presence of a ligand.

Compounds of formula (3) can be prepared by process L described herein.

Compounds of formula (4) are commercially available or may be obtained by conversion or derivatization of another compound of formula (4) in accordance to well-known methods.

### Process C

A compound of formula (I-b) *(i.e. formula (I) wherein **T** is S and **R¹** is hydrogen)* can be prepared by a process comprising the step of reacting a compound of formula (I-a-2) *(i.e. formula (I) wherein **T** is O and **R¹** is hydrogen)* with a thionating agent as shown in scheme 3.

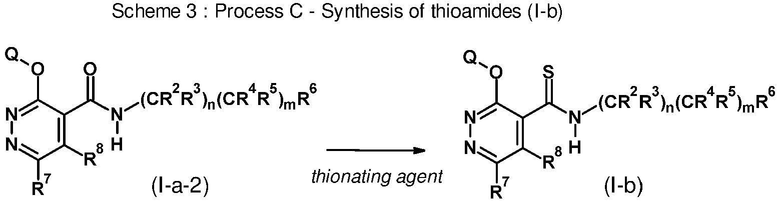

Suitable thionating agents for carrying out process C include, but are not limited to, sulfur (S), sulfhydric acid (H₂S), sodium sulfide (Na₂S), sodium hydrosulfide (NaHS), boron trisulfide (B₂S₃), bis(diethylaluminium) sulfide ((AlEt₂)₂S), ammonium sulfide ((NH₄)₂S), phosphorous pentasulfide (P₂S₅), Lawesson's reagent (2,4-bis(4-methoxyphenyl)-1,2,3,4-dithiadiphosphetane 2,4-disulfide) or a polymer-supported thionating reagent such as described in Journal of the Chemical Society, Perkin 1 (2001), 358.

The process is optionally performed in the presence of a catalytic or stoichiometric or excess amount of a base (inorganic and organic base). Preference is given to alkali metal carbonates (e.g. sodium carbonate, potassium carbonate, potassium bicarbonate, sodium bicarbonate), heterocyclic aromatic bases (e.g. pyridine, picoline, lutidine, collidine) and also tertiary amines (e.g. trimethylamine, triethylamine, tributylamine, N,N-dimethylaniline, N,N-dimethylpyridin-4-amine or N-methyl-piperidine).

A compound of formula (I-a-2) can be prepared by one or more of the processes herein described.

### Process D

A compound of formula (I-c) (*i.e. formula (I) wherein **R¹** is -C(=O)**R^{a1}**, -C(=O)(O**R^{a1}**), with **R^{a1}** being as described herein)* can be prepared by a process comprising the step of reacting a compound of formula (I-a-2) formula (*i.e. formula (I) wherein **T** is O and **R¹** is hydrogen) or a compound of formula (I-b) (i.e. formula (I) wherein **T** is S and **R¹** is hydrogen*) with a compound of formula (5) as shown in scheme 4.

| |
|---|
| Scheme 4: Process D - Synthesis of amides or thioamides (I-c) 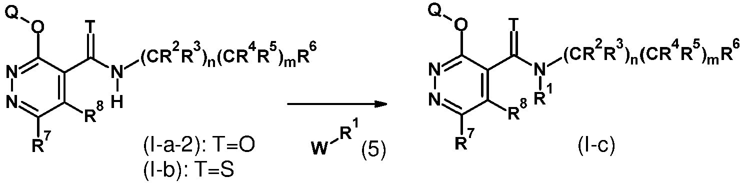 |
| **W** = halogen, -O-(C=O)**R^{a1}**, or -O-C(=O)(O**R^{a1}**) with **R^{a1}** being selected from the group consisting of C₁-C₆-alkyl and C₁-C₆-haloalkyl |
| **R¹** = -C(=O)**R^{a1}**, and -C(=O)(O**R^{a1}**) with **R^{a1}** and **R^{a2}** as described herein |

Process D can be performed by means of methods described in the literature (e.g. Tetrahedron Lett. 1995, 36, 8949; Greene's Protective Groups in organic Synthesis; Peter G. M. Wuts; Wiley; Fifth Edition; 2014; 1174-1175).

Compounds of formula (5) are commercially available.

Compounds of formula (I-a-2) or (I-b) can be prepared by one or more of the processes herein described.

### Process E

A compound of formula (I-a-3) *(i.e. formula (I) wherein **R¹** is H, **T** is O, **R⁷** is R^{7a} as shown in scheme 5)* can be converted by means of methods described in the literature to the corresponding compounds (I-a-4) *(i.e. formula (I) wherein **R¹** is H, **T** is O, **R⁷** is R^{7b} as shown in scheme 5*) or (I-a-5) (*i.e. formula (I) wherein **R¹** is H, **T** is O, **R⁷** is R^{7c} as shown in scheme 5*) in one or more steps as shown in scheme 5.

| |
|---|
| Scheme 5 : Process E - Preparation of amides (I-a-4) and (I-a-5) 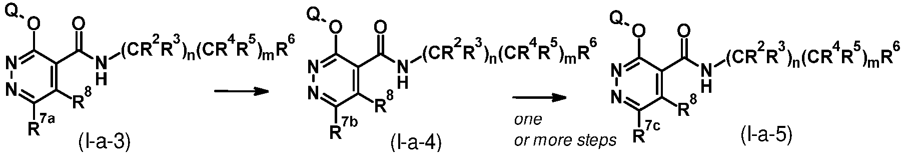 |
| **R^{7a}** = hydrogen or halogen (preferably chlorine) |
| **R^{7b}** = hydrogen, halogen, cyano, C₁-C₆-alkyl, C₁-C₆-haloalkyl, C₂-C₆-alkenyl, C₂-C₆-haloalkenyl, C₂-C₆-alkynyl, C₂-C₆-haloalkynyl, C₁-C₆-alkylsulfanyl, C₁-C₆-haloalkylsulfanyl, C₃-C₈-cycloalkylsulfanyl, C₃-C₈-cycloalkyl, C₃-C₆-cycloalkenyl, aromatic C₆-C₁₄-carbocycle, aromatic 5- or 6-membered monocyclic heterocycle, non-aromatic 3- to 7-membered monocyclic heterocycle, -N(**R^{e}**)₂, -C(=O)(O**R^{g}**) |
| **R^{7c}** = nitro, formyl, C₁-C₆-alkylcarbonyl, C₁-C₆-haloalkylcarbonyl, C₁-C₆-hydroxyalkyl, C₁-C₆-fluoroalkyl, C₁-C₆-alkylsulfinyl, C₁-C₆-haloalkylsulfinyl, C₃-C₈-cycloalkylsulfinyl, C₁-C₆-alkylsulfonyl, C₁-C₆-haloalkylsulfonyl, C₃-C₈-cycloalkylsulfonyl, -C(=N**R^{f}**)**R^{f}**, -C(=O)N(**R^{g}**)₂, -S(=O)(=N**R^{g}**)**R^{g}**,-S(=O)₂N(**R^{g}**)₂ |

In scheme 5, **R^{e}**, **R^{f}**, **R^{g}** are as disclosed herein and the aliphatic and cyclic substituents **R**^{**7b**,} **R^{7c}**, **R^{e}**, **R^{f}**, **R^{g}** may be substituted as disclosed herein.

Non-limiting examples of conversions performed in accordance with scheme 5 are provided below.

A compound of formula (I-a-3) wherein **R^{7a}** is a chlorine atom can be converted into a compound of formula (I-a-4) wherein **R^{7b}** is a bromine or an iodine atom by means of methods described in the literature (e.g. WO2016185342, WO2007022937).

A compound of formula (I-a-3) wherein **R^{7a}** is a halogen atom can be converted into a compound of formula (I-a-4) wherein **R^{7b}** is a hydrogen atom in the presence of a palladium catalyst as reported in the literature (Journal of Molecular Catalysis A: Chemical, 2014, 393, 191-209).

A compound of formula (I-a-3) wherein **R^{7a}** is a hydrogen atom or a halogen atom can be converted into a compound of formula (I-a-4) wherein **R^{7b}** is cyano, C₁-C₆-alkyl, C₁-C₆-haloalkyl, C₂-C₆-alkenyl, C₂-C₆-haloalkenyl, C₂-C₆-alkynyl, C₂-C₆-haloalkynyl, C₁-C₆-alkylsulfanyl, C₁-C₆-haloalkylsulfanyl, C₃-C₈-cycloalkyl, C₃-C₆-cycloalkenyl, aromatic C₆-C₁₄-carbocycle, aromatic 5- or 6-membered monocyclic heterocycle, non-aromatic 3- to 7-membered monocyclic heterocycle, -N(**R^{e}**)₂ or -C(=O)(O**R^{g}**) by transition metal catalyzed or metallo-photoredox catalyzed processes as described herein.

A compound of formula (I-a-4) wherein **R^{7b}** is a C₂-C₆-alkenyl group substituted by a C₁-C₃-alkoxy can be converted into a compound of formula (I-a-5) wherein **R^{7c}** is a C₁-C₆-alkylcarbonyl group by means of methods described in the literature (e.g. J. Org. Chem. 1993, 55, 3114).

The compound of formula (I-a-5) wherein **R^{7c}** is a C₁-C₆-alkylcarbonyl group can be further converted in a compound of formula (I-a-5) wherein **R^{7c}** is -C(=N**R^{f}**)-C₁-C₆-alkyl group by methods described in the literature (e.g. Greene's Protective Groups in organic Synthesis; Peter G. M. Wuts; Wiley; Fifth Edition; 2014; 655, 661, 667).

A compound of formula (I-a-5) wherein **R^{7c}** is a C₁-C₆-alkylcarbonyl group can be further converted in a compound of formula (I-a-5) wherein **R^{7c}** is C₁-C₆-hydroxyalkyl group by classical functional group interconversion such as reductions of ketones to alcohols in the presence of NaBH₄ in MeOH.

A compound of formula (I-a-5) wherein **R^{7c}** is C₁-C₆-hydroxyalkyl group can be further converted into a compound (I-a-5) wherein **R^{7c}** is C₁-C₆-fluoroalkyl in the presence of a fluorinating agent. Non-limitative examples of fluorinating agents include sulfur fluorides such as sulfur tetrafluoride, diethylaminosulfurtrifluoride, morpholinosulfur trifluoride, bis(2-methoxyethyl)aminosulfur trifluoride, 2,2-difluoro-1,3-dimethylimidazolidine or 4-tert-butyl-2,6-dimethylphenylsulfur trifluoride.

A compound of formula (I-a-3) can be prepared by one or more of the processes herein described.

### Process F

A compound of formula (I-a-6) (*i.e. formula (I) wherein **R¹** is H, **T** is O, **R⁷** is halogen and **R⁸** is hydrogen*) can be converted by means of methods described in the literature to the corresponding compound of formula (I-a-7) *(i.e. formula (I) wherein **R¹** is H, **T** is O, **R⁷** is halogen and **R⁸** is R^{8a} as shown in scheme* 6) or compound of formula (I-a-8) *(i.e. formula (I) wherein **R¹** is H, **T** is O, **R⁷** is halogen and **R⁸** is R^{8b} as shown in scheme 6*) in one or more steps as shown in scheme 6.

| |
|---|
| Scheme 6 : Process F - Preparation of amides (I-a-7) and (I-a-8) 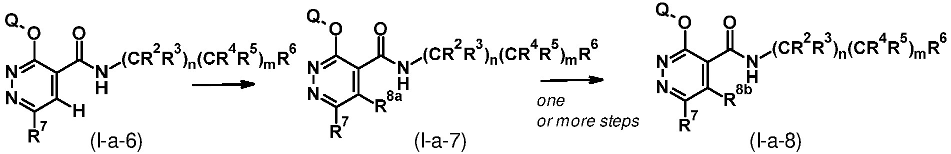 |
| **R⁷** = halogen |
| **R^{8a}** = halogen (preferably iodine), C₁-C₆-alkyl, C₁-C₆-haloalkyl, C₁-C₆-hydroxyalkyl, C₃-C₈-cycloalkyl, C₃-C₈-halocycloalkyl, C₃-C₆-cycloalkenyl, aromatic C₆-C₁₄-carbocycle, 5- to 14-membered aromatic heterocycle, 3- to 14-membered non-aromatic heterocycle; |
| **R^{8b}** = halogen, cyano, nitro, amino, mercapto, hydroxyl, C₂-C₆-alkenyl, C₂-C₆-haloalkenyl, C₂-C₆-alkynyl, C₂-C₆-haloalkynyl, C₁-C₆-alkoxy, C₁-C₆-haloalkoxy, C₂-C₆-alkenyloxy, C₂-C₆-haloalkenyloxy, C₂-C₆-alkynyloxy, C₂-C₆-haloalkynyloxy, C₃-C₈-cycloalkyl, C₃-C₆-cycloalkenyl, aromatic 5- to 14-membered heterocycle, C₃-C₈-cycloalkyloxy, aromatic C₆-C₁₄-carbocyclyloxy, non-aromatic 3- to 14-membered heterocyclyloxy, aromatic 5- to 14-membered heterocyclyloxy, -N(**R^{h}**)₂, -S**Rⁱ**, -S(=O)**Rⁱ** and -S(=O)₂**Rⁱ**; |

In scheme 6, **R^{h}** and **Rⁱ** are as disclosed herein and the aliphatic and cyclic substituents **R^{8a}** and **R^{8b}** may be substituted as disclosed herein.

Non-limiting examples of conversions performed in accordance with scheme 6 are provided below.

A compound of formula (I-a-6) can be converted into a compound of formula (I-a-7) wherein **R^{8a}** is a halogen atom in the presence of a base and an electrophile such as NCS, NBS, NIS, hexachloroethane, bromine or iodine by means of methods described in the literature (e.g. Org.Lett. 2009, 11, 1837). Suitable bases for carrying out the process can be selected from lithium-diisopropylamide, lithium 2,2,6,6-tetramethylpiperidide, n-butyl lithium, methyl lithium, TMPZnCl.LiCl (2,2,6,6-tetramethylpiperidinylzinc chloride lithium chloride complex), TMP₂Zn.2MgCl₂·2LiCl (bis(2,2,6,6-tetramethylpiperidinyl)zinc magnesium chloride lithium chloride complex), see e.g. Dissertation Albrecht Metzer 2010, University Munich.

A compound of formula (I-a-6) can be converted into a compound of formula (I-a-7) wherein **R^{8a}** is a C₁-C₆-alkyl, C₁-C₆-haloalkyl, C₁-C₆-hydroxyalkyl, C₃-C₈-cycloalkyl, C₃-C₈-halocycloalkyl, C₃-C₆-cycloalkenyl, aromatic C₆-C₁₄-carbocycle, 5- to 14-membered aromatic heterocycle or a 3- to 14-membered non-aromatic heterocycle, optionally in the presence of a base, and when appropriate in the presence of a transition metal catalyst such as a metal salt or complex and a ligand as described herein or by methods described in the literature (Heterocycles 1976, 4(8), 1331).

A compound of formula (I-a-7) wherein **R^{8a}** is a halogen atom can be converted in a compound of formula (I-a-8) wherein **R^{8b}** represents cyano, nitro, amino, mercapto, hydroxyl, C₂-C₆-alkenyl, C₂-C₆-haloalkenyl, C₂-C₆-alkynyl, C₂-C₆-haloalkynyl, C₁-C₆-alkoxy, C₁-C₆-haloalkoxy, C₂-C₆-alkenyloxy, C₂-C₆-haloalkenyloxy, C₃-C₈-cycloalkyl, C₃-C₆-cycloalkenyl, aromatic 5- to 14-membered heterocycle, C₃-C₈-cycloalkyloxy, aromatic C₆-C₁₄-carbocyclyloxy, non-aromatic 3- to 14-membered heterocyclyloxy, aromatic 5- to 14-membered heterocyclyloxy, -N(**R^{h}**)₂ or S**Rⁱ** in the presence of a base and optionally in the presence of a transition metal catalyst such as a metal salt or complex, and if appropriate in the presence of a ligand.

A compound of formula (I-a-8) wherein **R^{8b}** is a C₂-C₆-alkenyl group can be further converted in a compound of formula (I-a-8) wherein **R^{8b}** is C₁-C₆-alkyl substituted by C₁-C₆-alkoxy, C₁-C₆-haloalkoxy, C₁-C₆-alkoxy-C₁-C₆-alkoxy, C₁-C₆-alkylsulfanyl, C₁-C₆-haloalkylsulfanyl, non-aromatic 3- to 7-membered monocyclic heterocycle and -N(**R^{a'}**)₂ with **R^{a'}** being independently selected from the group consisting of hydrogen, C₁-C₆-alkyl, C₁-C₆-haloalkyl and C₃-C₈-cycloalkyl, by treating the reacting compound of formula (I-a-8) with an oxygen, a sulfur or an amino based nucleophile.

A compound of formula (I-a-8) wherein **R^{8b}** is a S**Rⁱ** group can be further converted in a compound of formula (I-a-8) wherein **R^{8b}** is a -S(=O)**Rⁱ**, or a -S(=O)₂**Rⁱ** group by reacting the starting compound of formula (I-a-8) with an oxidant such as hydrogen peroxide.

A compound of formula (I-a-6) can be prepared by one or more of the processes herein described.

### Process G

A compound of formula (I-d) *(i.e. formula (I) wherein **R^{6S}** is halogen*) or a compound of formula (6) can be reacted with a compound of formula (7) to provide a compound of formula (I-e) (*i.e. formula (I) wherein **R^{6S}** is as shown in scheme* 7) as shown in scheme 7.

| |
|---|
| Scheme 7: Process G - Syntheses of amides or thioamides (I-e) 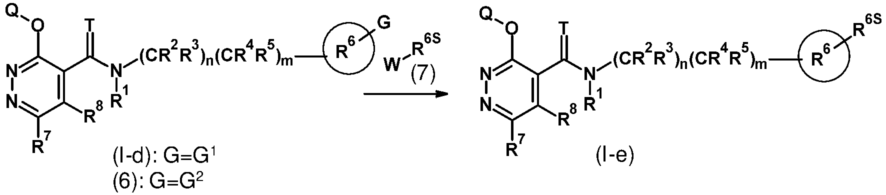 |
| **G¹** = halogen |
| **G²** = leaving group (e.g. O-S(=O)₂-C₁-C₆-alkyl or O-S(=O)₂-aryl , e.g. triflate, mesylate or a tosylate group) |
| **W** = hydrogen, halogen, a boronic acid, a boronic ester derivative or a potassium trifluoroborate derivative, or -Sn(C₁-C₆-alkyl)₃, -MgX, -ZnX with X being halogen |
| **R^{6S}** = cyano, C₁-C₆-alkyl, C₁-C₆-haloalkyl, C₂-C₆-alkenyl, C₂-C₆-haloalkenyl, C₂-C₆-alkynyl, C₂-C₆-haloalkynyl, C₁-C₆-alkylsulfanyl, C₁-C₆-haloalkylsulfanyl, C₃-C₈-cycloalkyl, C₃-C₈-cycloalkenyl, aromatic C₆-C₁₄-carbocycle, aromatic 5- or 6-membered monocyclic heterocycle, non-aromatic 3- to 7-membered monocyclic heterocycle |

In scheme 7, aliphatic and cyclic **R^{6S}** substituents may be substituted as disclosed herein.

Process G can be performed by metal catalysis as described herein.

Alternatively, process G can be performed by metallo-photoredox catalysis. More specifically, a compound of formula (I-d), wherein **G¹** is preferably Br or I, can be converted to a compound of formula (I-e) by a metallo-photoredox catalysed process in the presence a photosensitizer such as Ir and Ru complexes or organic dyes and metal catalysts such as Ni complexes. The reaction can be performed in the presence of a ligand and if appropriate in the presence of a base under irradiation with blue or white light.

A compound of formula (I-d) can be prepared by one or more of the processes herein described.

A compound of formula (6) can be prepared by well-known methods.

Compounds of formula (7) are commercially available.

### Process H

A compound of formula (I-f) *(i.e. formula (I) wherein **Q^{S}** is halogen*) or a compound of formula 8 can be reacted with a compound of formula 9 to provide a compound of formula (I-g) (*i.e. formula (I) wherein **Q^{S}** is as shown in scheme 8*) as shown in scheme 8.

| |
|---|
| Scheme 8: Process H - Synthesis of amides or thioamides (I-g) 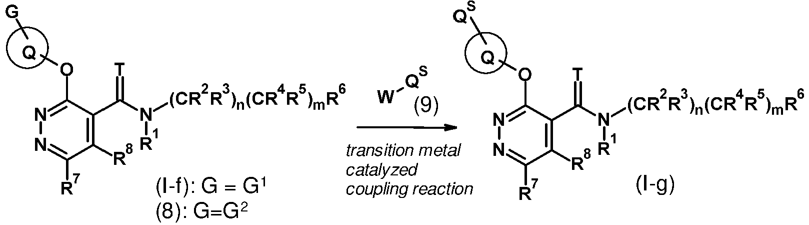 |
| **G¹** = halogen |
| **G²** = leaving group, e.g. O-S(=O)₂-C₁-C₆-alkyl or O-S(=O)₂-aryl |
| **W** = hydrogen, halogen, a boronic acid, a boronic ester derivative or a potassium trifluoroborate derivative, or -Sn(C₁-C₆-alkyl)₃, -MgX, -ZnX with X being halogen |
| **Q^{S}** = cyano, C₁-C₆-alkyl, C₁-C₆-haloalkyl, C₂-C₆₋alkenyl, C₂-C₆-haloalkenyl, C₂-C₆-alkynyl, C₂-C₆-haloalkynyl, C₃-C₈-cycloalkyl, C₃-C₆-cycloalkenyl, non-aromatic 3- to 7-membered monocyclic heterocycle, aromatic 5- to 6-membered heterocycle |

In scheme 8, aliphatic and cyclic **Q^{S}** substituents may be substituted as disclosed herein.

Process H can be performed by transition metal catalysis.

Alternatively, process H can be performed by metallo-photoredox catalysis. More specifically, a compound of formula (I-f), wherein **G¹** is preferably Br or I, can be converted to a compound of formula (I-g) by a metallo-photoredox catalysed process in the presence a photosensitizer such as Ir and Ru complexes or organic dyes and metal catalysts such as Ni complexes. The reaction can be performed in the presence of a ligand and if appropriate in the presence of a base under irradiation with blue or white light.

A compound of formula (I-f) can be prepared by one or more of the processes herein described.

A compound of formula (8) can be prepared by well-known methods.

Compounds of formula (9) are commercially available.

Processes for the preparation of a compound of formula (1)

A compound of formula (1) may be directly obtained by performing process I described below or may be obtained by conversion or derivatization of another compound of formula (1) prepared in accordance with the processes described herein. Compounds of formula (1-a) - (1-h) are various subsets of formula (1).

### Process I

A compound of formula (1-a) (*i.e. formula (1) wherein R⁷ and R⁸ are as defined in scheme 9*) can be prepared by a process comprising the step of reacting a compound of formula (10) with a reagent of formula (4) in the presence of a base as shown in scheme 9.

| |
|---|
| Scheme 9: Process I - Preparation of compounds (1-a) and (1-b) 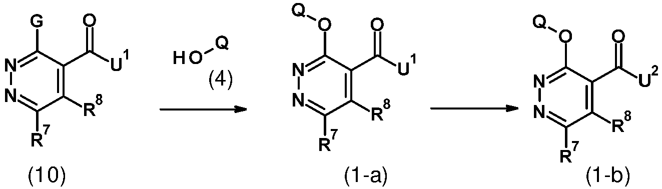 |
| **U¹** = C₁-C₆-alkoxy |
| **U²** = hydroxyl, halogen |
| **G** = halogen |
| **R⁸** = hydrogen, C₁-C₆-alkyl |
| **R⁷** = hydrogen, halogen, hydroxyl, mercapto, C₁-C₆-alkyl, C₁-C₆-haloalkyl, C₁-C₆-alkoxy, C₁-C₆-haloalkoxy, C₂-C₆-alkenyloxy, C₂-C₆-haloalkenyloxy, C₂-C₆-alkynyloxy, C₂-C₆-haloalkynyloxy C₁-C₆-alkylsulfanyl, C₁-C₆-haloalkylsulfanyl, C₃-C₈-cycloalkylsulfanyl, C₃-C₈-cycloalkyl, C₃-C₆-cycloalkenyl, C₃-C₈-cycloalkyloxy, aromatic C₆-C₁₄-carbocyclyloxy, aromatic 5- or 6-membered monocyclic heterocyclyloxy, non-aromatic 3- to 7-membered monocyclic heterocyclyloxy, -N(**R^{e}**)₂ |

In scheme 9, **R^{e}** is as disclosed herein and **R⁷, R⁸** and **R^{e}** may be substituted as disclosed herein.

Process I can be performed in the presence of suitable transition metal catalyst salts or complexes, if appropriate in the presence of a ligand.

The obtained compound of formula (1-a) can then be converted into a compound of formula (1-b) in one or more steps.

Non-limiting examples of such conversion are described below.

Compounds of formula (1-a) wherein **U¹** is a C₁-C₆-alkoxy can be converted to compounds of formula (1-b) wherein **U²** is a hydroxyl group by well-known functional group interconversion methods, for example by hydrolysis of an ester group with LiOH in THF/water.

Compounds of formula (1-b) wherein **U²** is a hydroxyl can be converted to compounds of formula (1-b) wherein **U²** is a halogen in the presence of halogenating agents by well-known methods. Suitable halogenating reagents include, but are not limited to, phosphorous tribromide, phosphorous trichloride, phosphorous pentachloride, phosphorous trichloride oxide, oxalyl chloride or thionyl chloride.

Compounds of formula (10) are commercially available or may be prepared by process M described herein.

Compounds of formula (4) are commercially available or may be obtained by conversion or derivatization of another compound of formula (4) in accordance to well-known methods.

### Process J

A compound of formula (1-c) (*i. e. formula (1) wherein R⁷ is R^{7a} as defined in scheme 10*) can be converted by means of know methods to the corresponding compounds of formula (1-d) *(i.e. formula (1) wherein R⁷* is *R^{7b} as defined in scheme 10*) or (1-e) (*i.e. formula (1) wherein R⁷ is R^{7c} as defined in scheme 10*) in one or more steps as shown in scheme 10.

| |
|---|
| Scheme 10: Process J - Preparation of compounds (1-d) or (1-e) 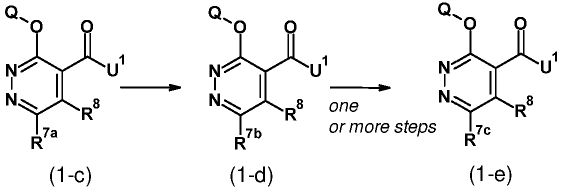 |
| **U¹**= C₁-C₆-alkoxy |
| **R^{7a}** = hydrogen or halogen (preferably chlorine) |
| **R^{7b}** = hydrogen, halogen, cyano, C₁-C₆-alkyl, C₁-C₆-haloalkyl, C₂-C₆-alkenyl, C₂-C₆-haloalkenyl, C₂-C₆-alkynyl, C₂-C₆-haloalkynyl, C₁-C₆-alkylsulfanyl, C₁-C₆-haloalkylsulfanyl, C₃-C₈-cycloalkylsulfanyl, C₃-C₈-cycloalkyl, C₃-C₆-cycloalkenyl, aromatic C₆-C₁₄-carbocycle, aromatic 5- or 6-membered monocyclic heterocycle, non-aromatic 3- to 7-membered monocyclic heterocycle, -N(**R^{e}**)₂, -C(=O)(O**R^{g}**) |
| **R^{7c}** = nitro, formyl, C₁-C₆-alkylcarbonyl, C₁-C₆-haloalkylcarbonyl, C₁-C₆-hydroxyalkyl, C₁-C₆-fluoroalkyl, C₁-C₆-alkylsulfinyl, C₁-C₆-haloalkylsulfinyl, C₃-C₈-cycloalkylsulfinyl, C₁-C₆-alkylsulfonyl, C₁-C₆-haloalkylsulfonyl, C₃-C₈-cycloalkylsulfonyl, -C(=N**R^{f}**)**R^{f}**, -C(=O)N(**R^{g}**)₂, -S(=O)(=N**R^{g}**)**R^{g}**,-S(=O)₂N(**R^{g}**)₂ |

In scheme 10, **R^{e}**, **R^{f}**, **R^{g}** are as disclosed herein and the aliphatic and cyclic substituents R**^{7b,} R^{7c}, R^{e}, R^{f}, R^{g}** may be substituted as disclosed herein.

Non-limiting examples of conversion may be performed in accordance to the description provided in process E.

Compounds of formula (1-c), (1-d), (1-e) wherein **U¹** is a C₁-C₆-alkoxy can be converted to compounds of formula (1-c), (1-d), (1-e) wherein **U¹** is a hydroxyl group by well-known functional group interconversion methods. For example by hydrolysis of an ester group with LiOH in THF/water.

Compounds of formula (1-c), (1-d), (1-e) wherein **U¹** is hydroxyl can then be further converted to compounds of formula (1-c), (1-d), (1-e) wherein **U¹** is a halogen in the presence of halogenating agents using well-known methods. Suitable halogenating reagents include, but are not limited to, phosphorous tribromide, phosphorous trichloride, phosphorous pentachloride, phosphorous trichloride oxide, oxalyl chloride or thionyl chloride.

Compounds of formula (1-c) can be prepared by one or more of the processes described herein.

### Process K

A compound of formula (1-f) (*i.e. formula (1) wherein* R⁸ *is H*) can be converted by means of methods described in the literature to the corresponding compound of formula (1-g) (*i.e. formula (1) wherein R⁸ is* R^{8a} *as defined in scheme 11*) or compound of formula (1-h) *(i.e. formula (1) wherein R⁸ is R ^{8b} as defined in scheme 11)* in one or more steps as shown in scheme 11.

| |
|---|
| Scheme 11: Preocess K - Preparation of compounds (1-g) or (1-h) 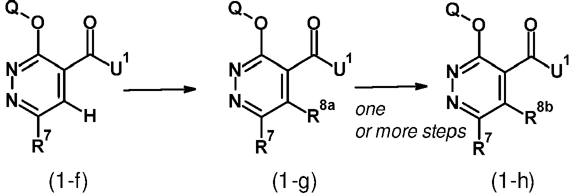 |
| **U¹** = C₁-C₆-alkoxy |
| **R^{8a}** = halogen (preferably iodine), C₁-C₆-alkyl, C₁-C₆-haloalkyl, C₁-C₆-hydroxyalkyl, C₃-C₈-cycloalkyl, C₃-C₈-halocycloalkyl, C₃-C₆-cycloalkenyl, aromatic C₆-C₁₄-carbocycle, 5- to 14-membered aromatic heterocycle, 3- to 14-membered non-aromatic heterocycle; |
| **R^{8b}** = halogen, cyano, nitro, amino, mercapto, hydroxyl, C₂-C₆-alkenyl, C₂-C₆-haloalkenyl, C₂-C₆-alkynyl, C₂-C₆-haloalkynyl, C₁-C₆-alkoxy, C₁-C₆-haloalkoxy, C₂-C₆-alkenyloxy, C₂-C₆-haloalkenyloxy, C₂-C₆-alkynyloxy, C₂-C₆-haloalkynyloxy, C₃-C₈-cycloalkyl, C₃-C₆-cycloalkenyl, aromatic 5- to 14-membered heterocycle, C₃-C₈-cycloalkyloxy, aromatic C₆-C₁₄-carbocyclyloxy, non-aromatic 3- to 14-membered heterocyclyloxy, aromatic 5- to 14-membered heterocyclyloxy, -N(**R^{h}**)₂, -S**Rⁱ**, -S(=O)**Rⁱ** and -S(=O)₂**Rⁱ** |

In scheme 11, **R^{h}** and **Rⁱ** are as disclosed herein and the aliphatic and cyclic substituents **R^{8a}** and **R^{8b}** may be substituted as disclosed herein.

Non-limiting examples of conversion may be performed in accordance to the description provided in process F.

Compounds of formula (1-f), (1-g), (1-h) wherein **U¹** is a C₁-C₆-alkoxy can be converted to compounds of formula (1-f), (1-g), (1-h) wherein **U¹** is a hydroxyl group by well-known functional group interconversion methods, for example by hydrolysis of an ester group with LiOH in THF/water.

Compounds of formula (1-f), (1-g), (1-h) wherein **U¹** is a hydroxyl can then be further converted to compounds of formula (1-f), (1-g), (1-h) wherein **U¹** is a halogen in the presence of halogenating agents using well-known methods. Suitable halogenating reagents include, but are not limited to, phosphorous tribromide, phosphorous trichloride, phosphorous pentachloride, phosphorous trichloride oxide, oxalyl chloride or thionyl chloride.

Compounds (1-f) can be prepared by one or more of the processes described herein.

### Process for the preparation of compound of formula (3)

### Process L

A compound of formula (3) can be prepared by a process comprising the step of reacting a compound of formula (10) with an amine of formula (2) or one of its salts as shown in scheme 12.

| |
|---|
| Scheme 12: Process L - Syntheseis of amides (3) 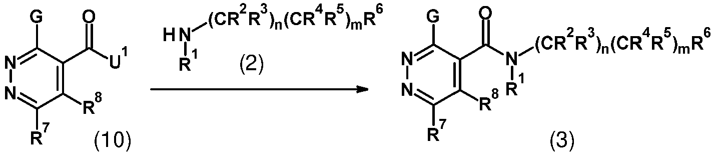 |
| **U¹** = hydroxyl, halogen, C₁-C₆-alkoxy |
| **G** = halogen |
| **R¹** = hydrogen, hydroxyl, C₁-C₆-alkyl, C₁-C₆-alkoxy |
| **R⁸** = hydrogen, C₁-C₆-alkyl |
| **R⁷** = hydrogen, halogen, hydroxyl, mercapto, C₁-C₆-alkyl, C₁-C₆-haloalkyl, C₁-C₆-alkoxy, C₁-C₆-haloalkoxy, C₂-C₆-alkenyloxy, C₂-C₆-haloalkenyloxy, C₂-C₆-alkynyloxy, C₂-C₆-haloalkynyloxy, C₁-C₆-alkylsulfanyl, C₁-C₆-haloalkylsulfanyl, C₃-C₈-cycloalkylsulfanyl, C₃-C₈-cycloalkyl, C₃-C₆-cycloalkenyl, C₃-C₈-cycloalkyloxy, aromatic C₆-C₁₄-carbocyclyloxy, aromatic 5- or 6-membered monocyclic heterocyclyloxy, non-aromatic 3- to 7-membered monocyclic heterocyclyloxy, -N(**R^{e}**)₂; wherein **R^{e}** as disclosed herein and wherein **R**⁷ and **R^{e}** may be substituted as disclosed herein. |

Process L can be performed using the same conditions described in process A.

Compounds of formula (10) are commercially available or can be obtained by process M.

### Process for the preparation of compound of formula (10)

### Process M

A compound of formula (10-a) (i.e. compound of formula 10 wherein R⁷ is halogen) can be converted by means of known methods (WO2000044755) into a compound of formula (10-b) (i.e. compound of formula 10 wherein R⁷ is as shown in scheme 13) in the presence of either an oxygen (ethanol), a sulfur (thioethyl) or an amino (methylamine) based nucleophile, optionally in the presence of base as shown in scheme 13.

| |
|---|
| Scheme 13: Process M - Preparation of compounds (10-b) 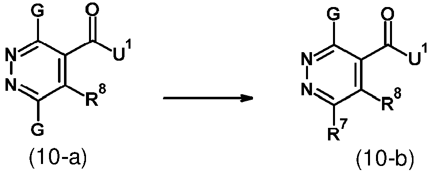 |
| **U¹** = C₁-C₆-alkoxy |
| **G** = halogen |
| **R⁸** = hydrogen, C₁-C₆-alkyl |
| **R⁷** = halogen, hydroxyl, mercapto, C₁-C₆-alkoxy, C₁-C₆-haloalkoxy, C₂-C₆-alkenyloxy, C₂-C₆-haloalkenyloxy, C₂-C₆-alkynyloxy, C₂-C₆-haloalkynyloxy, C₁-C₆-alkylsulfanyl, C₁-C₆-haloalkylsulfanyl, C₃-C₈-cycloalkylsulfanyl, C₃-C₈-cycloalkyloxy, aromatic C₆-C₁₄-carbocyclyloxy, aromatic 5- or 6-membered monocyclic heterocyclyloxy, non-aromatic 3- to 7-membered monocyclic heterocyclyloxy,-N(**R^{e}**)₂; wherein R^{e} as disclosed herein and wherein **R⁷** and **R^{e}** may be substituted as disclosed herein. |

The compounds of formula (10-a) and (10-b) can be converted into compound of formula (10-a) and (10-b) wherein U¹ (C₁-C₆-alkoxy) is replaced with hydroxyl or halogen using the same conditions as described in process K.

Starting materials of formula (10-a) are commercially available. The compounds employed according to the invention (1-655, 1-667, 1-746, 1-749, 1-784 and 1-840) can be prepared according to the above described processes. It will nevertheless be understood that, on the basis of his general knowledge and of available publications, the skilled worker will be able to adapt these processes according to the specifics of each of the compounds according to the invention that is desired to be synthesized.

### Compound (B)

The active compound combinations according to the invention comprise as compound (B) at least one further active compound selected from
(1.002) difenoconazole, (1.018) prothioconazole, (1.020) spiroxamine, (1.021) tebuconazole, (1.055) mefentrifluconazole
(2.002) bixafen, (2.005) fluopyram, (2.028) inpyrfluxam, (2.038) isoflucypram,
(3.020) trifloxystrobin, (3.025) fenpicoxamid,
(5.003) captan, (5.010) dithianon, (5.012) folpet, (5.013) mancozeb, (5.018) propineb,
(6.002) isotianil,
(7.005) pyrimethanil,
(13.001) fludioxonil, (13.004) proquinazid, (13.005) quinoxyfen,
(15.012) fosetyl-aluminium, (15.016) metrafenone and (15.064) (N'-[2-chloro-4-(2-fluorophenoxy)-5-methylphenyl]-N-ethyl-N-methylimidoformamide),
(18.001) a composition comprising one or more fatty acids or derivatives thereof selected from unsaturated and saturated C₁₂-C₂₄ fatty acids, salts thereof, esters thereof or mixtures of any of the foregoing, wherein at least 95% of said fatty acids or derivatives thereof are in the range of C₁₄ to C₂₀ (e.g. FLiPPER by AlphaBio Pesticides or Bayer AG).

Preferably, the compound combinations according to the invention comprise 1 compound (B).

Preferred compound combinations are selected from group (G1) consisting of the following mixtures:
(I-655) + (1.002), (I-655) + (1.018), (I-655) + (1.020), (I-655) + (1.021), (I-655) + (1.055), (I-655) + (2.002), (I-655) + (2.005), (I-655) + (2.028), (I-655) + (2.038), (I-655) + (5.003), (I-655) + (5.010), (I-655) + (5.012), (I-655) + (5.013), (I-655) + (5.018), (I-655) + (6.002), (I-655) + (7.005), (I-655) + (13.004), (I-655) + (13.005), (I-655) + (15.012), (I-655) + (15.016), (I-655) + (15.064), and (I-655) + (18.001).

Also preferred compound combinations are selected from group (G2) consisting of the following mixtures:
(I-667) + (1.002), (I-667) + (1.018), (I-667) + (1.020), (I-667) + (1.021), (I-667) + (1.055), (I-667) + (2.002), (I-667) + (2.005), (I-667) + (2.028), (I-667) + (2.038), (I-667) + (3.020), (I-667) + (3.025), (I-667) + (5.003), (I-667) + (5.010), (I-667) + (5.012), (I-667) + (5.013), (I-667) + (5.018), (I-667) + (6.002), (I-667) + (7.005), (I-667) + (13.001), (I-667) + (13.004), (I-667) + (13.005), (I-667) + (15.012), (I-667) + (15.016), (I-667) + (15.064), and (I-667) + (18.001).

Also preferred compound combinations are selected from group (G3) consisting of the following mixtures:
(I-746) + (1.002), (I-746) + (1.018), (I-746) + (1.020), (I-746) + (I-746) + (1.055), (I-746) + (2.002), (I-746) + (2.005), (I-746) + (2.028), (I-746) + (2.038), (I-746) + (3.020), (I-746) + (3.025), (I-746) + (5.003), (I-746) + (5.010), (I-746) + (5.012), (I-746) + (5.013), (I-746) + (5.018), (I-746) + (6.002), (I-746) + (7.005), (I-746) + (13.001), (I-746) + (13.004), (I-746) + (13.005), (I-746) + (15.012), (I-746) + (15.016), (I-746) + (15.064) and (I-746) + (18.001).

Also preferred compound combinations are selected from group (G4) consisting of the following mixtures:
(I-749) + (1.002), (I-749) + (1.018), (I-749) + (1.020), (I-749) + (1.021), (I-749) + (1.055), (I-749) + (2.002), (I-749) + (2.005), (I-749) + (2.028), (I-749) + (2.038), (I-749) + (3.020), (I-749) + (3.025), (I-749) + (5.003), (I-749) + (5.010), (I-749) + (5.013), (I-749) + (5.018), (I-749) + (6.002), (I-749) + (7.005), (I-749) + (13.001),(I-749) + (13.004), (I-749) + (13.005), (I-749) + (15.012), (I-749) + (15.016), (I-749) + (15.064)and (I-749) + (18.001).

Also preferred compound combinations are selected from group (G5) consisting of the following mixtures:
(I-784) + (1.002), (I-784) + (1.018), (I-784) + (1.020), (I-784) + (1.021), (I-784) + (1.055), (I-784) + (2.002), (I-784) + (2.005), (I-784) + (2.028), (I-784) + (2.038), (I-784) + (3.020), (I-784) + (3.025), (I-784) + (5.003), (I-784) + (5.010), (I-784) + (5.012), (I-784) + (5.013), (I-784) + (5.018), (I-784) + (6.002), (I-784) + (7.005), (I-784) + (13.001), (I-784) + (13.004), (I-784) + (13.005), (I-784) + (15.012), (I-784) + (15.016), (I-784) + (15.064) and (I-784) + (18.001).

Also preferred compound combinations are selected from group (G6) consisting of the following mixtures:
(I-840) + (1.002), (I-840) + (1.018), (I-840) + (1.020), (I-840) + (1.021), (I-840) + (1.055), (I-840) + (2.002), (I-840) + (2.005), (I-840) + (2.028), (I-840) + (2.038), (I-840) + (3.020), (I-840) + (3.025), (I-840) + (5.003), (I-840) + (5.012), (I-840) + (5.013), (I-840) + (5.018), (I-840) + (6.002), (I-840) + (7.005), (I-840) + (13.001), (I-840) + (13.004), (I-840) + (13.005), (I-840) + (15.012), (I-840) + (15.016), (I-840) + (15.064) and (I-840) + (18.001).

According to the invention, the expression "combination" stands for the various combinations of compounds (A) and (B), for example in a single "ready-mix" form, in a combined spray mixture composed from separate formulations of the single active compounds, such as a "tank-mix", and in a combined use of the single active ingredients when applied in a sequential manner, i.e. one after the other within a reasonably short period, such as a few hours or days. Preferably the order of applying the compounds (A) and (B) is not essential for working the present invention.

In the combinations according to the invention the compounds (A) and (B) can be present in a broad range of effective weight ratio of A:B, for example in a range of 50000:1 to 1:50000, preferably in a range of 10000:1 to 1:10000, more preferably in a weight ratio of 1000:1 to 1:1000, even more preferably in a weight ratio of 500:1 to 1:500, and most preferably in a weight ratio of 100:1 to 1:100.

Further ratios of A:B which can be used according to the present invention are: 95:1 to 1:95, 90:1 to 1:90, 85:1 to 1:85, 80:1 to 1:80, 75:1 to 1:75, 70:1 to 1:70, 65:1 to 1:65, 60:1 to 1:60, 55:1 to 1:55, 50:1 to 1:50, 45:1 to 1:45, 40:1 to 1:40, 35:1 to 1:35, 30:1 to 1:30, 25:1 to 1:25, 20:1 to 1:20, 15:1 to 1:15, 10:1 to 1:10, 5:1 to 1:5, 4:1 to 1:4, 3:1 to 1:3, 2:1 to 1:2.

Further ratios of A:B which can be used according to the present invention are: 1000:1 to 1:1, 500:1 to 1:1, 250:1 to 1:1, 100:1 to 1:1, 95:1 to 1:1, 90:1 to 1:1, 85:1 to 1:1, 80:1 to 1:1, 75:1 to 1:1, 70:1 to 1:1, 65:1 to 1:1, 60:1 to 1:1, 55:1 to 1:1, 50:1 to 1:1, 45:1 to 1:1, 40:1 to 1:1, 35:1 to 1:1, 30:1 to 1:1, 25:1 to 1:1, 20:1 to 1:1, 15:1 to 1:1, 10:1 to 1:1, 5:1 to 1:1, 4:1 to 1:1, 3:1 to 1:1, 2:1 to 1:1.

Further ratios of A:B which can be used according to the present invention are: 1:1 to 1:50000, 1:1 to 1:10000, 1:1 to 1:1000, 1:1 to 1:500, 1:1 to 1:250, 1:1 to 1:100, 1:1 to 1:95, 1:1 to 1:90, 1:1 to 1:85, 1:1 to 1:80, 1:1 to 1:75, 1:1 to 1:70, 1:1 to 1:65, 1:1 to 1:60, 1:1 to 1:55, 1:1 to 1:50, 1:1 to 1:45, 1:1 to 1:40, 1:1 to 1:35, 1:1 to 1:30, 1:1 to 1:25, 1:1 to 1:20, 1:1 to 1:15, 1:1 to 1:10, 1:1 to 1:5, 1:1 to 1:4, 1:1 to 1:3, 1:1 to 1:2.

### Isomers

Depending on the nature of the substituents of compound (A) and the nature of compound (B), those compounds may be present in the compound combinations of the invention in the form of different stereoisomers. These stereoisomers are, for example, enantiomers, diastereomers, atropisomers or geometric isomers. Accordingly, the invention encompasses both pure stereoisomers and any mixture of these isomers. Where a compound can be present in two or more tautomer forms in equilibrium, reference to the compound by means of one tautomeric description is to be considered to include all tautomer forms. Where a compound can be present in isomeric forms and/or tautomeric forms, such a compound is understood hereinabove and hereinbelow also to include, where applicable, corresponding isomeric and/or tautomeric forms or mixtures thereof, even when these are not specifically mentioned in each case.

### Salts / N-Oxides

The compounds present in the compound combination of the invention may independently of one another be present in the form of the free compound and/or, if applicable, an agrochemically active salt and/or a N-oxide thereof.

Agrochemically active salts include acid addition salts of inorganic and organic acids well as salts of customary bases. Examples of inorganic acids are hydrohalic acids, such as hydrogen fluoride, hydrogen chloride, hydrogen bromide and hydrogen iodide, sulfuric acid, phosphoric acid and nitric acid, and acidic salts, such as sodium bisulfate and potassium bisulfate. Useful organic acids include, for example, formic acid, carbonic acid and alkanoic acids such as acetic acid, trifluoroacetic acid, trichloroacetic acid and propionic acid, and also glycolic acid, thiocyanic acid, lactic acid, succinic acid, citric acid, benzoic acid, cinnamic acid, oxalic acid, saturated or mono- or diunsaturated fatty acids having 6 to 20 carbon atoms, alkylsulphuric monoesters, alkylsulphonic acids (sulphonic acids having straight-chain or branched alkyl radicals having 1 to 20 carbon atoms), arylsulphonic acids or aryldisulphonic acids (aromatic radicals, such as phenyl and naphthyl, which bear one or two sulphonic acid groups), alkylphosphonic acids (phosphonic acids having straight-chain or branched alkyl radicals having 1 to 20 carbon atoms), arylphosphonic acids or aryldiphosphonic acids (aromatic radicals, such as phenyl and naphthyl, which bear one or two phosphonic acid radicals), where the alkyl and aryl radicals may bear further substituents, for example p-toluenesulphonic acid, salicylic acid, p-aminosalicylic acid, 2-phenoxybenzoic acid, 2-acetoxybenzoic acid.

N-oxides of compounds present in the compound combination of the invention or intermediates thereof can be obtained in a simple manner by customary processes, for example by N-oxidation with hydrogen peroxide (H₂O₂), peracids, for example peroxy sulfuric acid or peroxy carboxylic acids, such as meta-chloroperoxybenzoic acid or peroxymonosulfuric acid (Caro's acid).

E.g. the corresponding N-oxides may be prepared starting from the respective compounds using conventional oxidation methods, e.g. by treating the compounds with an organic peracid such as metachloroperbenzoic acid (e.g. WO-A 2003/64572 or J. Med. Chem. 38 (11), 1892-1903, 1995); or with inorganic oxidizing agents such as hydrogen peroxide (e.g. J. Heterocyc. Chem. 18 (7), 1305-1308, 1981) or oxone (e.g. J. Am. Chem. Soc. 123 (25), 5962-5973, 2001). The oxidation may lead to pure mono-N-oxides or to a mixture of different N-oxides, which can be separated by conventional methods such as chromatography.

### Crystalline Form

The compounds present in the compound combinations of the invention may exist in multiple crystalline and/or amorphous forms. Crystalline forms include unsolvated crystalline forms, solvates and hydrates, in each case of the individual compounds or adducts thereof.

Solvates of the compounds present in the compound combinations of the invention or their salts are stoichiometric compositions of the compounds with solvents.

### Formulations

The present invention further relates to compositions for controlling unwanted microorganisms, comprising the compound combination according to the invention. The compositions may be applied to the microorganisms and/or in their habitat.

The composition comprises the compound combination of the invention and at least one agriculturally suitable auxiliary, e.g. carrier(s) and/or surfactant(s).

A carrier is a solid or liquid, natural or synthetic, organic or inorganic substance that is generally inert. The carrier generally improves the application of the compounds, for instance, to plants, plants parts or seeds. Examples of suitable *solid carriers* include, but are not limited to, ammonium salts, in particular ammonium sulfates, ammonium phosphates and ammonium nitrates, natural rock flours, such as kaolins, clays, talc, chalk, quartz, attapulgite, montmorillonite and diatomaceous earth, silica gel and synthetic rock flours, such as finely divided silica, alumina and silicates. Examples of typically useful solid carriers for preparing granules include, but are not limited to crushed and fractionated natural rocks such as calcite, marble, pumice, sepiolite and dolomite, synthetic granules of inorganic and organic flours and granules of organic material such as paper, sawdust, coconut shells, maize cobs and tobacco stalks. Examples of suitable *liquid carriers* include, but are not limited to, water, organic solvents and combinations thereof. Examples of suitable *solvents* include polar and nonpolar organic chemical liquids, for example from the classes of aromatic and nonaromatic hydrocarbons (such as cyclohexane, paraffins, alkylbenzenes, xylene, toluene, tetrahydronaphthalene, alkylnaphthalenes, chlorinated aromatics or chlorinated aliphatic hydrocarbons such as chlorobenzenes, chloroethylenes or methylene chloride), alcohols and polyols (which may optionally also be substituted, etherified and/or esterified, such as ethanol, propanol, butanol, benzylalcohol, cyclohexanol or glycol), ketones (such as acetone, methyl ethyl ketone, methyl isobutyl ketone or cyclohexanone), esters (including fats and oils) and (poly)ethers, unsubstituted and substituted amines, amides (such as dimethylformamide or fatty acid amides) and esters thereof, lactams (such as N-alkylpyrrolidones, in particular N-methylpyrrolidone) and lactones, sulfones and sulfoxides (such as dimethyl sulfoxide), oils of vegetable or animal origin. The carrier may also be a liquefied gaseous extender, i.e. liquid which is gaseous at standard temperature and under standard pressure, for example aerosol propellants such as halohydrocarbons, butane, propane, nitrogen and carbon dioxide.

Preferred solid carriers are selected from clays, talc and silica.

Preferred liquid carriers are selected from water, fatty acid amides and esters thereof, aromatic and nonaromatic hydrocarbons, lactams and carbonic acid esters.

The amount of carrier typically ranges from 1 to 99.99%, preferably from 5 to 99.9%, more preferably from 10 to 99.5%, and most preferably from 20 to 99% by weight of the composition.

Liquid carriers are typically present in a range of from 20 to 90%, for example 30 to 80% by weight of the composition.

Solid carriers are typically present in a range of from 0 to 50%, preferably 5 to 45%, for example 10 to 30% by weight of the composition.

If the composition comprises two or more carriers, the outlined ranges refer to the total amount of carriers.

The surfactant can be an ionic (cationic or anionic), amphoteric or non-ionic surfactant, such as ionic or non-ionic emulsifier(s), foam former(s), dispersant(s), wetting agent(s), penetration enhancer(s) and any mixtures thereof. Examples of suitable surfactants include, but are not limited to, salts of polyacrylic acid, salts of lignosulfonic acid (such as sodium lignosulfonate), salts of phenolsulfonic acid or naphthalenesulfonic acid, polycondensates of ethylene oxide and/or propylene oxide with fatty alcohols, fatty acids or fatty amines (for example, polyoxyethylene fatty acid esters such as castor oil ethoxylate, polyoxyethylene fatty alcohol ethers, for example alkylaryl polyglycol ethers), substituted phenols (preferably alkylphenols or arylphenols) and ethoxylates thereof (such as tristyrylphenol ethoxylate), salts of sulfosuccinic esters, taurine derivatives (preferably alkyl taurates), phosphoric esters of polyethoxylated alcohols or phenols, fatty esters of polyols (such a fatty acid esters of glycerol, sorbitol or sucrose), sulfates (such as alkyl sulfates and alkyl ether sulfates), sulfonates (for example, alkylsulfonates, arylsulfonates and alkylbenzene sulfonates), phosphate esters, protein hydrolysates, lignosulfite waste liquors and methylcellulose. Any reference to salts in this paragraph refers preferably to the respective alkali, alkaline earth and ammonium salts.

Preferred surfactants are selected from polyoxyethylene fatty alcohol ethers, polyoxyethylene fatty acid esters, alkylbenzene sulfonates, such as calcium dodecylbenzenesulfonate, castor oil ethoxylate, sodium lignosulfonate and arylphenol ethoxylates, such as tristyrylphenol ethoxylate.

The amount of surfactants typically ranges from 5 to 40%, for example 10 to 20%, by weight of the composition.

Further examples of suitable auxiliaries include water repellents, siccatives, binders (adhesive, tackifier, fixing agent, such as carboxymethylcellulose, natural and synthetic polymers in the form of powders, granules or latices, such as gum arabic, polyvinyl alcohol and polyvinyl acetate, natural phospholipids such as cephalins and lecithins and synthetic phospholipids, polyvinylpyrrolidone and tylose), thickeners and secondary thickeners (such as cellulose ethers, acrylic acid derivatives, xanthan gum, modified clays, e.g. the products available under the name Bentone, and finely divided silica), stabilizers (e.g. cold stabilizers, preservatives (e.g. dichlorophene and benzyl alcohol hemiformal), antioxidants, light stabilizers, in particular UV stabilizers, or other agents which improve chemical and/or physical stability), dyes or pigments (such as inorganic pigments, e.g. iron oxide, titanium oxide and Prussian Blue; organic dyes, e.g. alizarin, azo and metal phthalocyanine dyes), antifoams (e.g. silicone antifoams and magnesium stearate), antifreezes, stickers, gibberellins and processing auxiliaries, mineral and vegetable oils, perfumes, waxes, nutrients (including trace nutrients, such as salts of iron, manganese, boron, copper, cobalt, molybdenum and zinc), protective colloids, thixotropic substances, penetrants, sequestering agents and complex formers.

The choice of the auxiliaries depends on the intended mode of application of the compound combination of the invention and/or on the physical properties of the active compound(s) present in said compound combination. Furthermore, the auxiliaries may be chosen to impart particular properties (technical, physical and/or biological properties) to the compositions or use forms prepared therefrom. The choice of auxiliaries may allow customizing the compositions to specific needs.

The composition of the invention may be provided to the end user as ready-for-use formulation, i.e. the compositions may be directly applied to the plants or seeds by a suitable device, such as a spraying or dusting device. Alternatively, the compositions may be provided to the end user in the form of concentrates which have to be diluted, preferably with water, prior to use.

The composition of the invention can be prepared in conventional manners, for example by mixing the compound combination of the invention with one or more suitable auxiliaries, such as disclosed herein above.

The composition comprises a fungicidally effective amount of a compound combination of the invention. The term "effective amount" denotes an amount, which is sufficient for controlling harmful fungi on cultivated plants or in the protection of materials and which does not result in a substantial damage to the treated plants. Such an amount can vary in a broad range and is dependent on various factors, such as the fungal species to be controlled, the treated cultivated plant or material, the climatic conditions and the specific compound combination of the invention used. Usually, the composition according to the invention contains from 0.01 to 99% by weight, preferably from 0.05 to 98% by weight, more preferred from 0.1 to 95% by weight, even more preferably from 0.5 to 90% by weight, most preferably from 1 to 80% by weight of the compound combination of the invention.

The composition of the invention may be in any customary composition type, such as solutions (e.g aqueous solutions), emulsions, water- and oil-based suspensions, powders (e.g. wettable powders, soluble powders), dusts, pastes, granules (e.g. soluble granules, granules for broadcasting), suspoemulsion concentrates, natural or synthetic products impregnated with the compound combination of the invention, fertilizers and also microencapsulations in polymeric substances. The compound combination of the invention may be present in a suspended, emulsified or dissolved form. Examples of particular suitable composition types are solutions, watersoluble concentrates (e.g. SL, LS), dispersible concentrates (DC), suspensions and suspension concentrates (e.g. SC, OD, OF, FS), emulsifiable concentrates (e.g. EC), emulsions (e.g. EW, EO, ES, ME, SE), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GW, GF). These and further compositions types are defined by the Food and Agriculture Organization of the United Nations (FAO). An overview is given in the "Catalogue of pesticide formulation types and international coding system", Technical Monograph No. 2, 6th Ed. May 2008, Croplife International.

Preferably, the composition of the invention is in form of one of the following types: EC, SC, FS, SE, OD and WG, more preferred EC, SC,OD and WG.

Further details about examples of composition types and their preparation are given below. The outlined amount of compound combination of the invention refers to the total amount of compounds (A) and (B) present in the compound combination of the present invention. If two or more representatives of any further component of the composition, e.g. wetting agent, binder, are present, the outlined amounts of the respective component refers to the total amount of all representatives of said component, e.g. all wetting agents, all binders, all solvents and so on.

### i) Water-soluble concentrates (SL, LS)

10-60 % by weight of the compound combination of the invention and 5-15 % by weight surfactant (e.g. polyoxyethylene fatty alcohol ether) are dissolved in such amount of water and/or water-soluble solvent (e.g. alcohols such as propylene glycol or carbonates such as propylene carbonate) to result in a total amount of 100 % by weight. Before application the concentrate is diluted with water.

### ii) Dispersible concentrates (DC)

5-25 % by weight of the compound combination of the invention and 1-10 % by weight surfactant and/or binder (e.g. polyvinylpyrrolidone) are dissolved in such amount of organic solvent (e.g. cyclohexanone) to result in a total amount of 100 % by weight. Dilution with water gives a dispersion.

### iii) Emulsifiable concentrates (EC)

15-70 % by weight of the compound combination of the invention and 5-10 % by weight surfactant (e.g. a mixture of calcium dodecylbenzenesulfonate and castor oil ethoxylate) are dissolved in such amount of water-insoluble organic solvent (e.g. aromatic hydrocarbon or fatty acid amide) and if needed additional water-soluble solvent to result in a total amount of 100 % by weight. Dilution with water gives an emulsion.

### iv) Emulsions (EW, EO, ES)

5-40 % by weight of the compound combination of the invention and 1-10 % by weight surfactant (e.g. a mixture of calcium dodecylbenzenesulfonate and castor oil ethoxylate) are dissolved in 20-40 % by weight water-insoluble organic solvent (e.g. aromatic hydrocarbon). This mixture is added to such amount of water by means of an emulsifying machine to result in a total amount of 100 % by weight. The resulting composition is a homogeneous emulsion. Before application the emulsion may be further diluted with water.

### v) Suspensions and suspension concentrates

### v-1) Water-based (SC, FS)

In a suitable grinding equipment, e.g. an agitated ball mill, 20-60 % by weight of the compound combination of the invention are comminuted with addition of 2-10 % by weight surfactant (e.g. sodium lignosulfonate and polyoxyethylene fatty alcohol ether), 0.1-2 % by weight thickener (e.g. xanthan gum) and water to give a fine active substance suspension. Water is added in such amount to result in a total amount of 100 % by weight. Dilution with water gives a stable suspension of the active substances. For FS type compositions up to 40 % by weight binder (e.g. polyvinylalcohol) is added.

### v-2) Oil-based(OD, OF)

In a suitable grinding equipment, e.g. an agitated ball mill, 20-60 % by weight of the compound combination of the invention are comminuted with addition of 2-10 % by weight surfactant (e.g. sodium lignosulfonate and polyoxyethylene fatty alcohol ether), 0.1-2 % by weight thickener (e.g. modified clay, in particular Bentone, or silica) and an organic carrier to give a fine active substance oil suspension. The organic carrier is added in such amount to result in a total amount of 100 % by weight. Dilution with water gives a stable dispersion of the active substances.

### vi) Water-dispersible granules and water-soluble granules (WG, SG)

50-80 % by weight of the compound combination of the invention are ground finely with addition of surfactant (e.g. sodium lignosulfonate and polyoxyethylene fatty alcohol ether) and converted to water-dispersible or water-soluble granules by means of technical appliances (e. g. extrusion, spray tower, fluidized bed). The surfactant is used in such amount to result in a total amount of 100 % by weight. Dilution with water gives a stable dispersion or solution of the active substances.

### vii) Water-dispersible powders and water-soluble powders (WP, SP, WS)

50-80 % by weight of the compound combination of the invention are ground in a suitable mill, preferably a rotor-stator mill, with addition of 1-8 % by weight surfactant (e.g. sodium lignosulfonate, polyoxyethylene fatty alcohol ether) and such amount of solid carrier, e.g. silica gel, to result in a total amount of 100 % by weight. Dilution with water gives a stable dispersion or solution of the active substances.

### viii) Gel (GW, GF)

In a suitable mill, e.g. an agitated ball mill, 5-25 % by weight of the compound combination of the invention are comminuted with addition of 3-10 % by weight surfactant (e.g. sodium lignosulfonate), 1-5 % by weight binder (e.g. carboxymethylcellulose) and such amount of water to result in a total amount of 100 % by weight. This results in a fine suspension of the active substance. Dilution with water gives a stable suspension of the active substances.

### ix) Microemulsion (ME)

5-20 % by weight of the compound combination of the invention are added to 5-30 % by weight organic solvent blend (e.g. fatty acid dimethylamide and cyclohexanone), 10-25 % by weight surfactant blend (e.g. polyoxyethylene fatty alcohol ether and arylphenol ethoxylate), and such amount of water to result in a total amount of 100 % by weight. This mixture is stirred for 1 h to produce spontaneously a thermodynamically stable microemulsion.

### x) Microcapsules (CS)

An oil phase comprising 5-50 % by weight of the compound combination of the invention, 0-40 % by weight water-insoluble organic solvent (e.g. aromatic hydrocarbon), 2-15 % by weight acrylic monomers (e.g. methylmethacrylate, methacrylic acid and a di- or triacrylate) are dispersed into an aqueous solution of a protective colloid (e.g. polyvinyl alcohol). Radical polymerization initiated by a radical initiator results in the formation of poly(meth)acrylate microcapsules. Alternatively, an oil phase comprising 5-50 % by weight of the compound combination of the invention, 0-40 % by weight water-insoluble organic solvent (e.g. aromatic hydrocarbon), and an isocyanate monomer (e.g. diphenylmethene-4,4'-diisocyanatae) are dispersed into an aqueous solution of a protective colloid (e.g. polyvinyl alcohol). The addition of a polyamine (e.g. hexamethylenediamine) results in the formation of polyurea microcapsules. The monomers amount to 1-10 % by weight of the total CS composition.

### xi) Dustable powders (DP, DS)

1-10 % by weight of the compound combination of the invention are ground finely and mixed intimately with such amount of solid carrier, e.g. finely divided kaolin, to result in a total amount of 100 % by weight.

### xii) Granules (GR, FG)

0.5-30 % by weight of the compound combination of the invention are ground finely and associated with such amount of solid carrier (e.g. silicate) to result in a total amount of 100 % by weight. Granulation is achieved by extrusion, spray-drying or the fluidized bed.

### xiii) Ultra-low volume liquids (UL)

1-50 % by weight of the compound combination of the invention are dissolved in such amount of organic solvent, e.g. aromatic hydrocarbon, to result in a total amount of 100 % by weight.

The compositions types i) to xiii) may optionally comprise further auxiliaries, such as 0.1-1 % by weight preservatives, 0.1-1 % by weight antifoams, 0.1-1 % by weight dyes and/or pigments, and 5-10% by weight antifreezes.

### Methods and uses

The compound combination and the composition of the invention have potent microbicidal activity and/or plant defense modulating potential. They can be used for controlling unwanted microorganisms, such as unwanted fungi and bacteria, on plants. They can be particularly useful in crop protection (they control microorganisms that cause plants diseases) or for protecting materials (e.g. industrial materials, timber, storage goods) as described in more details herein below. More specifically, compound combination and the composition of the invention can be used to protect seeds, germinating seeds, emerged seedlings, plants, plant parts, fruits, harvest goods and/or the soil in which the plants grow from unwanted microorganisms.

Control or controlling as used herein encompasses protective, curative and eradicative treatment of unwanted microorganisms. Unwanted microorganisms may be pathogenic bacteria, pathogenic virus, pathogenic oomycetes or pathogenic fungi, more specifically phytopathogenic bacteria, phytopathogenic virus, phytopathogenic oomycetes or phytopathogenic fungi. As detailed herein below, these phytopathogenic microorganims are the causal agents of a broad spectrum of plants diseases.

More specifically, the compound combination and the composition of the invention can be used as fungicides. For the purpose of the specification, the term "fungicide" refers to a compound or composition that can be used in crop protection for the control of unwanted fungi, such as Plasmodiophoromycetes, Chytridiomycetes, Zygomycetes, Ascomycetes, Basidiomycetes and Deuteromycetes and/or for the control of Oomycetes.

The compound combination and the composition of the invention may also be used as antibacterial agent. In particular, they may be used in crop protection, for example for the control of unwanted bacteria, such as Pseudomonadaceae, Rhizobiaceae, Xanthomonadaceae, Enterobacteriaceae, Corynebacteriaceae and Streptomycetaceae.

The present invention also relates to a method for controlling unwanted microorganisms, such as unwanted fungi, oomycetes and bacteria, on plants comprising the step of applying the compound combination or the composition of the invention to the microorganisms and/or their habitat (to the plants, plant parts, seeds, fruits or to the soil in which the plants grow), wherein the compounds (A) and (B) may be applied in a simultaneous, separate or sequential manner. If the single compounds are applied in a sequential manner, i.e. at different times, they are applied one after the other within a reasonably short period, such as a few hours or days.

Typically, when the compound combination and the composition of the invention are used in curative or protective methods for controlling phytopathogenic fungi and/or phytopathogenic oomycetes, an effective and plant-compatible amount thereof is applied to the plants, plant parts, fruits, seeds or to the soil or substrates in which the plants grow. Suitable substrates that may be used for cultivating plants include inorganic based substrates, such as mineral wool, in particular stone wool, perlite, sand or gravel; organic

substrates, such as peat, pine bark or sawdust; and petroleum based substrates such as polymeric foams or plastic beads. Effective and plant-compatible amount means an amount that is sufficient to control or destroy the fungi present or liable to appear on the cropland and that does not entail any appreciable symptom of phytotoxicity for said crops. Such an amount can vary within a wide range depending on the fungus to be controlled, the type of crop, the crop growth stage, the climatic conditions and the respective compound or composition of the invention used. This amount can be determined by systematic field trials that are within the capabilities of a person skilled in the art.

### Plants and plant parts

The compound combination and the composition of the invention may be applied to any plants or plant parts.

Plants mean all plants and plant populations, such as desired and undesired wild plants or crop plants (including naturally occurring crop plants). Crop plants may be plants which can be obtained by conventional breeding and optimization methods or by biotechnological and genetic engineering methods or combinations of these methods, including the genetically modified plants (GMO or transgenic plants) and the plant cultivars which are protectable and non-protectable by plant breeders' rights.

### Genetically modified plants (GMO)

Genetically modified plants (GMO or transgenic plants) are plants in which a heterologous gene has been stably integrated into the genome. The expression "heterologous gene" essentially means a gene which is provided or assembled outside the plant and when introduced in the nuclear, chloroplastic or mitochondrial genome. This gene gives the transformed plant new or improved agronomic or other properties by expressing a protein or polypeptide of interest or by downregulating or silencing other gene(s) which are present in the plant (using for example, antisense technology, cosuppression technology, RNA interference - RNAi - technology or microRNA - miRNA - technology). A heterologous gene that is located in the genome is also called a transgene. A transgene that is defined by its particular location in the plant genome is called a transformation or transgenic event.

Plant cultivars are understood to mean plants which have new properties ("traits") and have been obtained by conventional breeding, by mutagenesis or by recombinant DNA techniques. They can be cultivars, varieties, bio- or genotypes.

Plant parts are understood to mean all parts and organs of plants above and below the ground, such as shoots, leaves, needles, stalks, stems, flowers, fruit bodies, fruits, seeds, roots, tubers and rhizomes. The plant parts also include harvested material and vegetative and generative propagation material, for example cuttings, tubers, rhizomes, slips and seeds.

Plants which may be treated in accordance with the methods of the invention include the following: cotton, flax, grapevine, fruit, vegetables, such as *Rosaceae sp.* (for example pome fruits such as apples and pears, but also stone fruits such as apricots, cherries, almonds and peaches, and soft fruits such as strawberries), *Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp.* (for example banana trees and plantations), *Rubiaceae sp.* (for example coffee), *Theaceae sp., Sterculiceae sp., Rutaceae sp.* (for example lemons, oranges and grapefruit); *Solanaceae sp.* (for example tomatoes), *Liliaceae sp., Asteraceae sp.* (for example lettuce), *Umbelliferae sp., Cruciferae sp., Chenopodiaceae sp., Cucurbitaceae sp.* (for example cucumber), *Alliaceae sp.* (for example leek, onion), *Papilionaceae sp.* (for example peas); major crop plants, such as *Gramineae sp.* (for example maize, turf, cereals such as wheat, rye, rice, barley, oats, millet and triticale), *Asteraceae sp.* (for example sunflower), *Brassicaceae sp.* (for example white cabbage, red cabbage, broccoli, cauliflower, Brussels sprouts, pak choi, kohlrabi, radishes, and oilseed rape, mustard, horseradish and cress), *Fabacae sp.* (for example bean, peanuts), *Papilionaceae sp.* (for example soya bean), *Solanaceae sp.* (for example potatoes), *Chenopodiaceae sp.* (for example sugar beet, fodder beet, swiss chard, beetroot); useful plants and ornamental plants for gardens and wooded areas; and genetically modified varieties of each of these plants.

Plants and plant cultivars which may be treated by the above disclosed methods include plants and plant cultivars which are resistant against one or more biotic stresses, i.e. said plants show a better defense against animal and microbial pests, such as against nematodes, insects, mites, phytopathogenic fungi, bacteria, viruses and/or viroids.

Plants and plant cultivars which may be treated by the above disclosed methods include those plants which are resistant to one or more abiotic stresses. Abiotic stress conditions may include, for example, drought, cold temperature exposure, heat exposure, osmotic stress, flooding, increased soil salinity, increased mineral exposure, ozone exposure, high light exposure, limited availability of nitrogen nutrients, limited availability of phosphorus nutrients, shade avoidance.

Plants and plant cultivars which may be treated by the above disclosed methods include those plants characterized by enhanced yield characteristics. Increased yield in said plants may be the result of, for example, improved plant physiology, growth and development, such as water use efficiency, water retention efficiency, improved nitrogen use, enhanced carbon assimilation, improved photosynthesis, increased germination efficiency and accelerated maturation. Yield may furthermore be affected by improved plant architecture (under stress and non-stress conditions), including but not limited to, early flowering, flowering control for hybrid seed production, seedling vigor, plant size, internode number and distance, root growth, seed size, fruit size, pod size, pod or ear number, seed number per pod or ear, seed mass, enhanced seed filling, reduced seed dispersal, reduced pod dehiscence and lodging resistance. Further yield traits include seed composition, such as carbohydrate content and composition for example cotton or starch, protein content, oil content and composition, nutritional value, reduction in anti-nutritional compounds, improved processability and better storage stability.

Plants and plant cultivars which may be treated by the above disclosed methods include plants and plant cultivars which are hybrid plants that already express the characteristic of heterosis or hybrid vigor which results in generally higher yield, vigor, health and resistance towards biotic and abiotic stresses.

Plants and plant cultivars (obtained by plant biotechnology methods such as genetic engineering) which may be treated by the above disclosed methods include plants and plant cultivars which are herbicide-tolerant plants, i.e. plants made tolerant to one or more given herbicides. Such plants can be obtained either by genetic transformation, or by selection of plants containing a mutation imparting such herbicide tolerance.

Plants and plant cultivars (obtained by plant biotechnology methods such as genetic engineering) which may be treated by the above disclosed methods include plants and plant cultivars which are insect-resistant transgenic plants, i.e. plants made resistant to attack by certain target insects. Such plants can be obtained by genetic transformation, or by selection of plants containing a mutation imparting such insect resistance.

Plants and plant cultivars (obtained by plant biotechnology methods such as genetic engineering) which may be treated by the above disclosed methods include plants and plant cultivars which are disease-resistant transgenic plants, i.e. plants made resistant to attack by certain target insects. Such plants can be obtained by genetic transformation, or by selection of plants containing a mutation imparting such insect resistance.

Plants and plant cultivars (obtained by plant biotechnology methods such as genetic engineering) which may be treated by the above disclosed methods include plants and plant cultivars which are tolerant to abiotic stresses. Such plants can be obtained by genetic transformation, or by selection of plants containing a mutation imparting such stress resistance.

Plants and plant cultivars (obtained by plant biotechnology methods such as genetic engineering) which may be treated by the above disclosed methods include plants and plant cultivars which show altered quantity, quality and/or storage-stability of the harvested product and/or altered properties of specific ingredients of the harvested product.

Plants and plant cultivars (obtained by plant biotechnology methods such as genetic engineering) which may be treated by the above disclosed methods include plants and plant cultivars, such as cotton plants, with altered fiber characteristics. Such plants can be obtained by genetic transformation, or by selection of plants contain a mutation imparting such altered fiber characteristics.

Plants and plant cultivars (obtained by plant biotechnology methods such as genetic engineering) which may be treated by the above disclosed methods include plants and plant cultivars, such as oilseed rape or related Brassica plants, with altered oil profile characteristics. Such plants can be obtained by genetic transformation, or by selection of plants contain a mutation imparting such altered oil profile characteristics.

Plants and plant cultivars (obtained by plant biotechnology methods such as genetic engineering) which may be treated by the above disclosed methods include plants and plant cultivars, such as oilseed rape or related Brassica plants, with altered seed shattering characteristics. Such plants can be obtained by genetic transformation, or by selection of plants contain a mutation imparting such altered seed shattering characteristics and include plants such as oilseed rape plants with delayed or reduced seed shattering.

Plants and plant cultivars (obtained by plant biotechnology methods such as genetic engineering) which may be treated by the above disclosed methods include plants and plant cultivars, such as Tobacco plants, with altered post-translational protein modification patterns.

### Pathogens

Non-limiting examples of pathogens of fungal diseases which may be treated in accordance with the invention include:
diseases caused by powdery mildew pathogens, for example *Blumeria* species, for example *Blumeria graminis; Podosphaera* species, for example *Podosphaera leucotricha*; *Sphaerotheca* species, for example *Sphaerotheca fuliginea*; *Uncinula* species, for example *Uncinula necator*;
diseases caused by rust disease pathogens, for example *Gymnosporangium* species, for example *Gymnosporangium sabinae*; *Hemileia* species, for example *Hemileia vastatrix*; *Phakopsora* species, for example *Phakopsora pachyrhizi* or *Phakopsora meibomiae*; *Puccinia* species, for example *Puccinia recondita, Puccinia graminis* oder *Puccinia striiformis*; *Uromyces* species, for example *Uromyces appendiculatus*;
diseases caused by pathogens from the group of the Oomycetes, for example *Albugo* species, for example *Albugo candida*; *Bremia* species, for example *Bremia lactucae*; *Peronospora* species, for example *Peronospora pisi* or *P. brassicae*; *Phytophthora* species, for example *Phytophthora infestans*; *Plasmopara* species, for example *Plasmopara viticola*; *Pseudoperonospora* species, for example *Pseudoperonospora humuli* or *Pseudoperonospora cubensis*; *Pythium* species, for example *Pythium ultimum*;
leaf blotch diseases and leaf wilt diseases caused, for example, by *Alternaria* species, for example *Alternaria solani* and *Alternaria alternate*; *Cercospora* species, for example *Cercospora beticola*; *Cladiosporium* species, for example *Cladiosporium cucumerinum*; *Cochliobolus* species, for example Cochliobolus sativus (conidial form: *Drechslera,* syn: *Helminthosporium*) or *Cochliobolus miyabeanus*; *Colletotrichum* species, for example *Colletotrichum lindemuthanium*; *Cordana* species, for example *Cordana musae*; *Corynespora* species, for example *Corynespora cassiicola*; *Cycloconium* species, for example *Cycloconium oleaginum*; *Diaporthe* species, for example *Diaporthe citri*; *Elsinoe* species, for example *Elsinoe fawcettii*; *Gloeosporium* species, for example *Gloeosporium laeticolor*; *Glomerella* species, for example *Glomerella cingulata*; *Guignardia* species, for example *Guignardia bidwelli*; *Leptosphaeria* species, for example *Leptosphaeria maculans*; *Magnaporthe* species, for example *Magnaporthe grisea*; *Microdochium* species, for example *Microdochium nivale*; *Mycosphaerella* species, for example *Mycosphaerella graminicola, Mycosphaerella arachidicola* or *Mycosphaerella fijiensis*; *Parastagonospora* species, for example *Parastagonospora nodorum*; *Phaeosphaeria* species, for example *Phaeosphaeria nodorum*; *Pyrenophora* species, for example *Pyrenophora teres* or *Pyrenophora tritici repentis*; *Ramularia* species, for example *Ramularia collo-cygni* or *Ramularia areola*; *Rhynchosporium* species, for example *Rhynchosporium secalis*; *Septoria* species, for example *Septoria apii* or *Septoria lycopersici*; *Stagonospora* species, for example *Stagonospora nodorum*; *Typhula* species, for example *Typhula incarnata*; *Ustilago* species, for example *Ustilago segetum*; *Venturia* species, for example *Venturia inaequalis*;
root and stem diseases caused, for example, by *Corticium* species, for example *Corticium graminearum*; *Fusarium* species, for example *Fusarium oxysporum*; *Gaeumannomyces* species, for example *Gaeumannomyces graminis*; *Plasmodiophora* species, for example *Plasmodiophora brassicae*; *Rhizoctonia* species, for example *Rhizoctonia solani*; *Sarocladium* species, for example *Sarocladium oryzae*; *Sclerotium* species, for example *Sclerotium oryzae*; *Tapesia* species, for example *Tapesia acuformis*; *Thielaviopsis* species, for example *Thielaviopsis basicola*;
ear and panicle diseases (including corn cobs) caused, for example, by *Alternaria* species, for example *Alternaria spp*.; *Aspergillus* species, for example *Aspergillus flavus*; *Cladosporium* species, for example *Cladosporium cladosporioides*; *Claviceps* species, for example *Claviceps purpurea*; *Fusarium* species, for example *Fusarium culmorum*; *Gibberella* species, for example *Gibberella zeae*; *Monographella* species, for example *Monographella nivalis*; *Stagnospora* species, for example *Stagnospora nodorum*;
diseases caused by smut fungi, for example *Sphacelotheca* species, for example *Sphacelotheca reiliana*; *Tilletia* species, for example *Tilletia caries* or *Tilletia controversa*; *Urocystis* species, for example *Urocystis occulta*; *Ustilago* species, for example *Ustilago nuda*;
fruit rot caused, for example, by *Aspergillus* species, for example *Aspergillus flavus*; *Botrytis* species, for example *Botrytis cinerea*; *Monilinia* species, for example *Monilinia laxa*; *Penicillium* species, for example *Penicillium expansum* or *Penicillium purpurogenum*; *Rhizopus* species, for example *Rhizopus stolonifer*; *Sclerotinia* species, for example *Sclerotinia sclerotiorum*; *Verticilium* species, for example *Verticilium alboatrum*;
seed- and soil-borne rot and wilt diseases, and also diseases of seedlings, caused, for example, by *Alternaria* species, for example *Alternaria brassicicola*; *Aphanomyces* species, for example *Aphanomyces euteiches*; *Ascochyta* species, for example *Ascochyta lentis*; *Aspergillus* species, for example *Aspergillus flavus*; *Cladosporium* species, for example *Cladosporium herbarum*; *Cochliobolus* species, for example *Cochliobolus sativus* (conidial form: *Drechslera,* Bipolaris Syn: *Helminthosporium*); *Colletotrichum* species, for example *Colletotrichum coccodes*; *Fusarium* species, for example *Fusarium culmorum*; *Gibberella* species, for example *Gibberella zeae*; *Macrophomina* species, for example *Macrophomina phaseolina*; *Microdochium* species, for example *Microdochium nivale*; *Monographella* species, for example *Monographella nivalis*; *Penicillium* species, for example *Penicillium expansum*; *Phoma* species, for example *Phoma lingam*; *Phomopsis* species, for example *Phomopsis sojae*; *Phytophthora* species, for example *Phytophthora cactorum*; *Pyrenophora* species, for example *Pyrenophora graminea*; *Pyricularia* species, for example *Pyricularia oryzae*; *Pythium* species, for example *Pythium ultimum*; *Rhizoctonia* species, for example *Rhizoctonia solani*; *Rhizopus* species, for example *Rhizopus oryzae*; *Sclerotium* species, for example *Sclerotium rolfsii*; *Septoria* species, for example *Septoria nodorum*; *Typhula* species, for example *Typhula incarnata*; *Verticillium* species, for example *Verticillium dahliae*;
cancers, galls and witches' broom caused, for example, by *Nectria* species, for example *Nectria galligena*;
wilt diseases caused, for example, by *Verticillium* species, for example *Verticillium longisporum*; *Fusarium* species, for example *Fusarium oxysporum*;
deformations of leaves, flowers and fruits caused, for example, by *Exobasidium* species, for example *Exobasidium vexans*; *Taphrina* species, for example *Taphrina deformans*;
degenerative diseases in woody plants, caused, for example, by *Esca* species, for example *Phaeomoniella chlamydospora, Phaeoacremonium aleophilum* or *Fomitiporia mediterranea*; *Ganoderma* species, for example *Ganoderma boninense*;
diseases of plant tubers caused, for example, by *Rhizoctonia* species, for example *Rhizoctonia solani*; *Helminthosporium* species, for example *Helminthosporium solani*;
diseases caused by bacterial pathogens, for example *Xanthomonas* species, for example *Xanthomonas campestris pv. oryzae*; *Pseudomonas* species, for example *Pseudomonas syringae pv. lachrymans*; *Erwinia* species, for example *Erwinia amylovora*; *Liberibacter* species, for example *Liberibacter asiaticus*; *Xyella* species, for example *Xylella fastidiosa*; *Ralstonia* species, for example *Ralstonia solanacearum*; *Dickeya* species, for example *Dickeya solani*; *Clavibacter* species, for example *Clavibacter michiganensis*; *Streptomyces* species, for example *Streptomyces scabies.*
diseases of soya beans:
Fungal diseases on leaves, stems, pods and seeds caused, for example, by *Alternaria* leaf spot (*Alternaria spec. atrans tenuissima*), *Anthracnose* (*Colletotrichum gloeosporoides dematium var. truncatum*), brown spot (*Septoria glycines*), *cercospora* leaf spot and blight (*Cercospora kikuchii*), *choanephora* leaf blight (*Choanephora infundibulifera trispora (Syn.)*), *dactuliophora* leaf spot (*Dactuliophora glycines*), downy mildew (*Peronospora manshurica*), *drechslera* blight (*Drechslera glycini),* frogeye leaf spot (*Cercospora sojina*), *leptosphaerulina* leaf spot (*Leptosphaerulina trifolii*), *phyllostica* leaf spot (*Phyllosticta sojaecola*), pod and stem blight (*Phomopsis sojae*), powdery mildew (*Microsphaera diffusa*), *pyrenochaeta* leaf spot (*Pyrenochaeta glycines*), rhizoctonia aerial, foliage, and web blight (*Rhizoctonia solani),* rust (*Phakopsora pachyrhizi, Phakopsora meibomiae*)*,* scab (*Sphaceloma glycines), stemphylium* leaf blight (*Stemphylium botryosum*), sudden death syndrome (*Fusarium virguliforme*), target spot (*Corynespora cassiicola*).

Fungal diseases on roots and the stem base caused, for example, by black root rot (*Calonectria crotalariae*), charcoal rot (*Macrophomina phaseolina*), fusarium blight or wilt, root rot, and pod and collar rot (*Fusarium oxysporum, Fusarium orthoceras, Fusarium semitectum, Fusarium equiseti*), mycoleptodiscus root rot (*Mycoleptodiscus terrestris*), neocosmospora (*Neocosmospora vasinfecta*), pod and stem blight (*Diaporthe phaseolorum*)*,* stem canker (*Diaporthe phaseolorum var. caulivora*), phytophthora rot (*Phytophthora megasperma*), brown stem rot (*Phialophora gregata*), pythium rot (*Pythium aphanidermatum, Pythium irregulare, Pythium debaryanum, Pythium myriotylum, Pythium ultimum*), rhizoctonia root rot, stem decay, and damping-off (*Rhizoctonia solani*), sclerotinia stem decay (*Sclerotinia sclerotiorum*), sclerotinia southern blight (*Sclerotinia rolfsii*), thielaviopsis root rot (*Thielaviopsis basicola*).

### Mycotoxins

In addition, the compound combination and the composition of the invention may reduce the mycotoxin content in the harvested material and the foods and feeds prepared therefrom. Mycotoxins include particularly, but not exclusively, the following: deoxynivalenol (DON), nivalenol, 15-Ac-DON, 3-Ac-DON, T2- and HT2-toxin, fumonisins, zearalenon, moniliformin, fusarin, diaceotoxyscirpenol (DAS), beauvericin, enniatin, fusaroproliferin, fusarenol, ochratoxins, patulin, ergot alkaloids and aflatoxins which can be produced, for example, by the following fungi: *Fusarium* spec., such as *F. acuminatum, F. asiaticum, F. avenaceum, F. crookwellense, F. culmorum, F. graminearum* (*Gibberella zeae*), *F. equiseti, F. fujikoroi, F. musarum, F. oxysporum, F. proliferatum, F. poae, F. pseudograminearum, F. sambucinum, F. scirpi, F. semitectum, F. solani, F. sporotrichoides, F. langsethiae, F. subglutinans, F. tricinctum, F. verticillioides,* and also by *Aspergillus* spec., such as *A. flavus, A. parasiticus, A. nomius, A. ochraceus, A. clavatus, A. terreus, A. versicolor, Penicillium* spec., such as *P. verrucosum, P. viridicatum, P. citrinum, P. expansum, P. claviforme, P. roqueforti, Claviceps* spec., such as *C. purpurea, C. fusiformis, C. paspali, C. africana, Stachybotrys* spec. and others.

### Material Protection

The compound combination and the composition of the invention may also be used in the protection of materials, especially for the protection of industrial materials against attack and destruction by phytopathogenic fungi.

In addition, the compound combination and the composition of the invention may be used as antifouling compositions, alone or in combinations with other active ingredients.

Industrial materials in the present context are understood to mean inanimate materials which have been prepared for use in industry. For example, industrial materials which are to be protected from microbial alteration or destruction may be adhesives, glues, paper, wallpaper and board/cardboard, textiles, carpets, leather, wood, fibers and tissues, paints and plastic articles, cooling lubricants and other materials which can be infected with or destroyed by microorganisms. Parts of production plants and buildings, for example cooling-water circuits, cooling and heating systems and ventilation and air-conditioning units, which may be impaired by the proliferation of microorganisms may also be mentioned within the scope of the materials to be protected. Industrial materials within the scope of the present invention preferably include adhesives, sizes, paper and card, leather, wood, paints, cooling lubricants and heat transfer fluids, more preferably wood.

The compound combination and the composition of the invention may prevent adverse effects, such as rotting, decay, discoloration, decoloration or formation of mould.

In the case of treatment of wood the compound combination and the composition of the invention may also be used against fungal diseases liable to grow on or inside timber.

Timber means all types of species of wood, and all types of working of this wood intended for construction, for example solid wood, high-density wood, laminated wood, and plywood. In addition, the compound and the composition of the invention may be used to protect objects which come into contact with saltwater or brackish water, especially hulls, screens, nets, buildings, moorings and signalling systems, from fouling.

The compound combination and the composition of the invention may also be employed for protecting storage goods. Storage goods are understood to mean natural substances of vegetable or animal origin or processed products thereof which are of natural origin, and for which long-term protection is desired. Storage goods of vegetable origin, for example plants or plant parts, such as stems, leaves, tubers, seeds, fruits, grains, may be protected freshly harvested or after processing by (pre)drying, moistening, comminuting, grinding, pressing or roasting. Storage goods also include timber, both unprocessed, such as construction timber, electricity poles and barriers, or in the form of finished products, such as furniture. Storage goods of animal origin are, for example, hides, leather, furs and hairs. The compound combination and the composition of the invention may prevent adverse effects, such as rotting, decay, discoloration, decoloration or formation of mould.

Microorganisms capable of degrading or altering industrial materials include, for example, bacteria, fungi, yeasts, algae and slime organisms. The compound combination and the composition of the invention preferably act against fungi, especially moulds, wood-discoloring and wood-destroying fungi (*Ascomycetes, Basidiomycetes, Deuteromycetes* and *Zygomycetes*), and against slime organisms and algae. Examples include microorganisms of the following genera: *Alternaria*, such as *Alternaria tenuis*; *Aspergillus*, such as *Aspergillus niger*; *Chaetomium*, such as *Chaetomium globosum*; *Coniophora*, such as *Coniophora puetana*; *Lentinus*, such as *Lentinus tigrinus*; *Penicillium*, such as *Penicillium glaucum*; *Polyporus*, such as *Polyporus versicolor*; *Aureobasidium*, such as *Aureobasidium pullulans*; *Sclerophoma*, such as *Sclerophoma pityophila*; *Trichoderma*, such as *Trichoderma viride*; *Ophiostoma spp*., *Ceratocystis spp., Humicola spp*., *Petriella spp., Trichurus spp*., *Coriolus spp*., *Gloeophyllum spp*., *Pleurotus spp*., *Poria spp*., *Serpula spp.* and *Tyromyces spp., Cladosporium spp*., *Paecilomyces spp. Mucor spp*., *Escherichia*, such as *Escherichia coli*; *Pseudomonas*, such as *Pseudomonas aeruginosa*; *Staphylococcus*, such as *Staphylococcus aureus*, *Candida spp.* and *Saccharomyces spp*., such as *Saccharomyces cerevisae.*

### Seed Treatment

The compound combination and the composition of the invention may also be used to protect seeds from unwanted microorganisms, such as phytopathogenic microorganisms, for instance phytopathogenic fungi or phytopathogenic oomycetes. The term seed(s) as used herein include dormant seeds, primed seeds, pregerminated seeds and seeds with emerged roots and leaves.

Thus, the present invention also relates to a method for protecting seeds from unwanted microorganisms which comprises the step of treating the seeds with the compound combination or the composition of the invention, wherein the seeds may be treated simultaneously, separately or sequentially with the compounds (A) and (B).

The treatment of seeds with the compound combination or the composition of the invention protects the seeds from phytopathogenic microorganisms, but also protects the germinating seeds, the emerging seedlings and the plants after emergence from the treated seeds. Therefore, the present invention also relates to a method for protecting seeds, germinating seeds and emerging seedlings.

The seeds treatment may be performed prior to sowing, at the time of sowing or shortly thereafter.

When the seeds treatment is performed prior to sowing (e.g. so-called on-seed applications), the seeds treatment may be performed as follows: the seeds may be placed into a mixer with a desired amount of the compound combination or the composition of the invention, the seeds and the compound combination or the composition of the invention are mixed until an homogeneous distribution on seeds is achieved. If appropriate, the seeds may then be dried.

The invention also relates to seeds coated with the compound combination or the composition of the invention.

Preferably, the seeds are treated in a state in which it is sufficiently stable for no damage to occur in the course of treatment. In general, seeds can be treated at any time between harvest and shortly after sowing. It is customary to use seeds which have been separated from the plant and freed from cobs, shells, stalks, coats, hairs or the flesh of the fruits. For example, it is possible to use seeds which have been harvested, cleaned and dried down to a moisture content of less than 15% by weight. Alternatively, it is also possible to use seeds which, after drying, for example, have been treated with water and then dried again, or seeds just after priming, or seeds stored in primed conditions or pre-germinated seeds, or seeds sown on nursery trays, tapes or paper.

The amount of the compound combination or the composition of the invention applied to the seeds is typically such that the germination of the seed is not impaired, or that the resulting plant is not damaged. This must be ensured particularly in case the compounds contained in the compound combination of the invention would exhibit phytotoxic effects at certain application rates. The intrinsic phenotypes of transgenic plants should also be taken into consideration when determining the amount of the compound combination of the invention to be applied to the seed in order to achieve optimum seed and germinating plant protection with a minimum amount of compound being employed.

The compounds contained in the compound combination of the invention can be applied as such, directly to the seeds, i.e. without the use of any other components and without having been diluted. They can be applied in a simultaneous, separate or sequential manner. Also compositions containing the compounds contained in the compound combination of the invention, such as the composition of the invention, can be applied to the seeds.

The compound combination and the composition of the invention are suitable for protecting seeds of any plant variety. Preferred seeds are that of cereals (such as wheat, barley, rye, millet, triticale, and oats), oilseed rape, maize, cotton, soybean, rice, potatoes, sunflower, beans, coffee, peas, beet (e.g. sugar beet and fodder beet), peanut, vegetables (such as tomato, cucumber, onions and lettuce), lawns and ornamental plants. More preferred are seeds of wheat, soybean, oilseed rape, maize and rice.

The compound combination and the composition of the invention may be used for treating transgenic seeds, in particular seeds of plants capable of expressing a polypeptide or protein which acts against pests, herbicidal damage or abiotic stress, thereby increasing the protective effect. Seeds of plants capable of expressing a polypeptide or protein which acts against pests, herbicidal damage or abiotic stress may contain at least one heterologous gene which allows the expression of said polypeptide or protein. These heterologous genes in transgenic seeds may originate, for example, from microorganisms of the species Bacillus, Rhizobium, Pseudomonas, Serratia, Trichoderma, Clavibacter, Glomus or Gliocladium. These heterologous genes preferably originate from Bacillus sp., in which case the gene product is effective against the European corn borer and/or the Western corn rootworm. Particularly preferably, the heterologous genes originate from Bacillus thuringiensis.

### Application

The compound combination of the invention can be applied as such, or for example in the form of as ready-to-use solutions, emulsions, water- or oil-based suspensions, powders, wettable powders, pastes, soluble powders, dusts, soluble granules, granules for broadcasting, suspoemulsion concentrates, natural products impregnated with the compound combination of the invention, synthetic substances impregnated with the compound combination of the invention, fertilizers or microencapsulations in polymeric substances.

Application is accomplished in a customary manner, for example by watering, spraying, atomizing, broadcasting, dusting, foaming or spreading-on. It is also possible to deploy the compound combination of the invention by the ultra-low volume method, via a drip irrigation system or drench application, to apply it in-furrow or to inject it into the soil stem or trunk. It is further possible to apply the compound combination of the invention by means of a wound seal, paint or other wound dressing. The effective and plant-compatible amount of the compound combination of the invention which is applied to the plants, plant parts, fruits, seeds or soil will depend on various factors, such as the compound/composition employed, the subject of the treatment (plant, plant part, fruit, seed or soil), the type of treatment (dusting, spraying, seed dressing), the purpose of the treatment (curative and protective), the type of microorganisms, the development stage of the microorganisms, the sensitivity of the microorganisms, the crop growth stage and the environmental conditions.

When the compound combination of the invention is used as a fungicide, the application rates can vary within a relatively wide range, depending on the kind of application. For the treatment of plant parts, such as leaves, the application rate may range from 0.1 to 10 000 g/ha, preferably from 10 to 1000 g/ha, more preferably from 50 to 300 g/ha (in the case of application by watering or dripping, it is even possible to reduce the application rate, especially when inert substrates such as rockwool or perlite are used). For the treatment of seeds, the application rate may range from 0.1 to 200 g per 100 kg of seeds, preferably from 1 to 150 g per 100 kg of seeds, more preferably from 2.5 to 25 g per 100 kg of seeds, even more preferably from 2.5 to 12.5 g per 100 kg of seeds. For the treatment of soil, the application rate may range from 0.1 to 10 000 g/ha, preferably from 1 to 5000 g/ha. The outlined application rates refer to the total application rates of compounds (A) and (B) present in the compound combination of the present invention.

These application rates are merely examples and are not intended to limit the scope of the present invention.

The compound combination of the invention can be used in combination with models e.g. embedded in computer programs for site specific crop management, satellite farming, precision farming or precision agriculture. Such models support the site specific management of agricultural sites with data from various sources such as soils, weather, crops (e.g. type, growth stage, plant health), weeds (e.g. type, growth stage), diseases, pests, nutrients, water, moisture, biomass, satellite data, yield etc. with the purpose to optimize profitability, sustainability and protection of the environment. In particular, such models can help to optimize agronomical decisions, control the precision of pesticide applications and record the work performed.

As an example, the compound of the invention can be applied to a crop plant according to appropriate dose regime if a model models the development of a fungal disease and calculates that a threshold has been reached for which it is recommendable to apply the compound of the invention to the crop plant.

Commercially available systems which include agronomic models are e.g. FieldScripts^{™} from The Climate Corporation, Xarvio^{™} from BASF, AGLogic^{™} from John Deere, etc.

The compounds of the invention can also be used in combination with smart spraying equipment such as e.g. spot spraying or precision spraying equipment attached to or housed within a farm vehicle such as a tractor, robot, helicopter, airplane, unmanned aerial vehicle (UAV) such as a drone, etc. Such an equipment usually includes input sensors (such as e.g. a camera) and a processing unit configured to analyze the input data and configured to provide a decision based on the analysis of the input data to apply the compound of the invention to the crop plants (respectively the weeds) in a specific and precise manner. The use of such smart spraying equipment usually also requires positions systems (e.g. GPS receivers) to localize recorded data and to guide or to control farm vehicles; geographic information systems (GIS) to represent the information on intelligible maps, and appropriate farm vehicles to perform the required farm action such as the spraying.

In an example, fungal diseases can be detected from imagery acquired by a camera. In an example fungal diseases can be identified and/or classified based on that imagery. Such identification and/ classification can make use of image processing algorithms. Such image processing algorithms can utilize machine learning algorithms, such as trained neutral networks, decision trees and utilize artificial intelligence algorithms. In this manner, the compounds described herein can be applied only where needed.

### EXAMPLES

### Generality

### Measurement of LogP values

Measurement of LogP values as provided herein was performed according to EEC directive 79/831 Annex V.A8 by HPLC (High Performance Liquid Chromatography) on reversed phase columns with the following methods:
[a]LogP value is determined by measurement of LC-UV, in an acidic range, with 0.1% formic acid in water and acetonitrile as eluent (linear gradient from 10% acetonitrile to 95% acetonitrile).
[b] LogP value is determined by measurement of LC-UV, in a neutral range, with 0.001 molar ammonium acetate solution in water and acetonitrile as eluent (linear gradient from 10% acetonitrile to 95% acetonitrile).
[c] LogP value is determined by measurement of LC-UV, in an acidic range, with 0.1% phosphoric acid and acetonitrile as eluent (linear gradient from 10% acetonitrile to 95% acetonitrile).

If more than one LogP value is available within the same method, all the values are given and separated by "+".

Calibration was done with straight-chain alkan2-ones (with 3 to 16 carbon atoms) with known LogP values (measurement of LogP values using retention times with linear interpolation between successive alkanones). Lambda-max-values were determined using UV-spectra from 200 nm to 400 nm and the peak values of the chromatographic signals
¹H-NMR data
¹H-NMR data of selected examples as provided herein are written in form of ¹H-NMR-peak lists. To each signal peak are listed the δ-value in ppm and the signal intensity in round brackets. Between the δ-value - signal intensity pairs are semicolons as delimiters.

The peak list of an example has therefore the form:
δ₁ (intensity₁); δ₂ (intensity₂);........; δᵢ (intensityᵢ);......; δₙ (intensityₙ)
Intensity of sharp signals correlates with the height of the signals in a printed example of a NMR spectrum in cm and shows the real relations of signal intensities. From broad signals several peaks or the middle of the signal and their relative intensity in comparison to the most intensive signal in the spectrum can be shown.

For calibrating chemical shift for ¹H spectra, we use tetramethylsilane and/or the chemical shift of the solvent used, especially in the case of spectra measured in DMSO. Therefore in NMR peak lists, tetramethylsilane peak can occur but not necessarily.

The ¹H-NMR peak lists are similar to classical ¹H-NMR prints and contains therefore usually all peaks, which are listed at classical NMR-interpretation.

Additionally they can show like classical ¹H-NMR prints signals of solvents, stereoisomers of the target compounds, which are also object of the invention, and/or peaks of impurities. To show compound signals in the delta-range of solvents and/or water the usual peaks of solvents, for example peaks of DMSO in DMSO-D₆ and the peak of water are shown in our ¹H-NMR peak lists and have usually on average a high intensity .

The peaks of stereoisomers of the target compounds and/or peaks of impurities have usually on average a lower intensity than the peaks of target compounds (for example with a purity >90%).

Such stereoisomers and/or impurities can be typical for the specific preparation process. Therefore their peaks can help to recognize the reproduction of our preparation process via "side-products-fingerprints". An expert, who calculates the peaks of the target compounds with known methods (MestreC, ACD-simulation, but also with empirically evaluated expectation values) can isolate the peaks of the target compounds as needed optionally using additional intensity filters. This isolation would be similar to relevant peak picking at classical 1H-NMR interpretation.

Further details of NMR-data description with peak lists you find in the publication "Citation of NMR Peaklist Data within Patent Applications" of the Research Disclosure Database Number 564025. The following examples illustrate in a non-limiting manner the preparation and biological activity of the compounds of formula (I) according to the invention.

### Synthesis of compounds of formula (I) and intermediates

Only compounds 1-655, 1-667, 1-746, 1-749, 1-784 and I-840 are compounds within the scope of the present invention. All other compounds of formula (I) and indicated in the following as I-xxx or I.xxx (with xxx being a number different from 655, 667, 746, 749, 784 and 840) are presented for reference only.

### Preparation example 1: preparation of methyl N-[6-chloro-3-[3-(trifluoromethyl)phenoxy]pyridazine-4-carbonyl]-N-[2-(2,4-dimethylphenyl)-2,2-difluoro-ethyl]carbamate (compound I.335)

To a solution of 6-chloro-N-[2-(2,4-dimethylphenyl)-2,2-difluoro-ethyl]-3-[3-(trifluoromethyl)phenoxy]pyridazine-4-carboxamide (100 mg, 0.206 mmol) and potassium tert-butoxide (34 mg, 0.309 mmol) in THF (3 mL) was added methyl chloroformate (0.024 mL, 0.309 mmol). The reaction mixture was stirred 3h at room temperature, then diluted with water and extracted with ethyl acetate (2 x 50 mL). The organic extracts were washed with brine, dried over magnesium sulfate, filtered and concentrated under reduced pressure. Purification of the residue by column chromatography on silica gel (gradient heptane/EtOAc) afforded, after evaporation of the solvents, 69 mg (88% purity, 54% yield of methyl N-[6-chloro-3-[3-(trifluoromethyl)phenoxy]pyridazine-4-carbonyl]-N-[2-(2,4-dimethylphenyl)-2,2-difluoro-ethyl]carbamate as an oil.

### Preparation example 2: preparation of N-[2-(2,4-dimethylphenyl)ethyl]-6-methyl-3-[3-(trifluoromethyl)phenoxy]pyridazine-4-carbothioamide (compound I.094)

In a microwave vial, N-[2-(2,4-dimethylphenyl)ethyl]-6-methyl-3-[3-(trifluoromethyl)phenoxy]pyridazine-4-carboxamide (97.7 mg, 0.22 mmol) and P₂S₅ (25.28 mg, 0.11 mmol) were dissolved in dioxane (4.8 mL). The tube was sealed and the reaction mixture was heated in the microwave at 130°C for 10 min. The reaction mixture was diluted with water and extracted with ethyl acetate (2 x 50 mL). The organic extracts were washed with water and brine, dried over magnesium sulfate, filtered and concentrated under reduced pressure. Purification of the residue by column chromatography on silica gel (gradient heptane/EtOAc) afforded, after evaporation of the solvents, 27.5 mg (100% purity, 27% yield) of N-[2-(2,4-dimethylphenyl)ethyl]-6-methyl-3-[3-(trifluoromethyl)phenoxy]pyridazine-4-carbothioamide
as a yellow solid.

### Preparation example 3: preparation of 6-chloro-N-[2-(2,4-dimethylphenyl)-2,2-difluoro-ethyl]-3-[3-(trifluoromethyl)phenoxy]pyridazine-4-carboxamide (compound I.014)

### Step 1: preparation of ethyl 6-chloro-3-[3-(trifluoromethyl)phenoxy]pyridazine-4-carboxylate

Under argon, sodium hydride (2.8 g, 70 mmol) was added to a solution of 3-(trifluoromethyl)phenol (9.7 g, 60 mmol) in DMF (30 mL). The reaction mixture was stirred 1h at room temperature, then ethyl 3,6-dichloropyridazine-4-carboxylate (13.8 g, 50 mmol) was added portionwise to the solution. The reaction mixture was stirred for 18h at room temperature, then diluted with water and extracted with diethylether (3 x 200 mL). The organic extracts were washed with water and brine, dried over magnesium sulfate, filtered and concentrated under reduced pressure. Purification of the residue by column chromatography on silica gel (gradient heptane/EtOAc) afforded, after evaporation of the solvents, 20 g (90% purity, 100% yield) of ethyl 6-chloro-3-[3-(trifluoromethyl)phenoxy]pyridazine-4-carboxylate as an oil.

### Step 2: preparation of 6-chloro-3-[3-(trifluoromethyl)phenoxy]pyridazine-4-carboxylic acid

To a solution of ethyl 6-chloro-3-[3-(trifluoromethyl)phenoxy]pyridazine-4-carboxylate (15 g, 35 mmol) in dioxane/water 2:1 (75 mL) was added lithium hydroxide (2.5 g, 105 mmol). The reaction was stirred for 4h at room temperature then diluted with water. The aqueous phase was acidified with 1M aqueous HCl solution and extracted with ethyl acetate (3 x 200 mL). The organic extracts were dried over magnesium sulfate, filtered and concentrated under reduced pressure. Evaporation of the solvents afforded 9.7 g (98% purity, 85% yield) of 6-chloro-3-[3-(trifluoromethyl)phenoxy]pyridazine-4-carboxylic acid as a solid.

### Step 3: preparation of 6-chloro-N-[2-(2,4-dimethylphenyl)-2,2-difluoro-ethyl]-3-[3-(trifluoromethyl)phenoxy]pyridazine-4-carboxamide

In a microwave vial, 6-chloro-3-[3-(trifluoromethyl)phenoxy]pyridazine-4-carboxylic acid (1.74 g, 9.4 mmol), triethylamine (2 mL, 14 mmol), propylphosphonic anhydride (5.19 g, 8.1 mmol, 50% in THF) and 2-(2,4-dimethylphenyl)-2,2-difluoro-ethanamine (1.74 g, 9.41 mmol) were dissolved in THF (10 mL). The tube was sealed and the reaction mixture was heated in the microwave at 130°C for 15 min. The reaction mixture was diluted with water and extracted with ethyl acetate (2 x 50 mL). The organic extracts were washed with a saturated aqueous sodium bicarbonate solution and brine, dried over magnesium sulfate, filtered and concentrated under reduced pressure. Evaporation of the solvents afforded 3.2 g (93% purity, 98% yield) of 6-chloro-N-[2-(2,4-dimethylphenyl)-2,2-difluoro-ethyl]-3-[3-(trifluoromethyl)phenoxy]pyridazine-4-carboxamide as a white solid

### Preparation example 4: preparation of N-[2-(4-bromo-2-chloro-phenyl)-2,2-difluoro-ethyl]-6-chloro-3-(2,3-difluorophenoxy)pyridazine-4-carboxamide (compound I.530)

### Step 1: preparation of N-[2-(4-bromo-2-chloro-phenyl)-2,2-difluoro-ethyl]-3,6-dichloro-pyridazine-4-carboxamide (compound 3.10)

To a white suspension of 3,6-dichloropyridazine-4-carboxylic acid (8.0 g, 41.4 mmol) in dichloromethane (50 mL) was added oxalyl chloride (7.89 g, 126.93 mmol) followed by two drops of DMF. The reaction mixture was stirred at room temperature for 1h. To the pre-formed acyl chloride was added a solution of 2-(4-bromo-2-chloro-phenyl)-2,2-difluoro-ethanamine (11.77 g, 43.52 mmol) and triethylamine (11.55 mL, 82.90 mmol) in DCM (100 mL). The reaction mixture was stirred at room temperature for 1h, then it was diluted with water and extracted with DCM (2 x 100 mL). The organic extracts were washed with water and brine, dried over magnesium sulfate, filtered and concentrated under reduced pressure. Purification of the residue by column chromatography on silica gel (gradient heptane/EtOAc) afforded, after evaporation of the solvents, 4.15 g (82% purity, 20% yield) of N-[2-(4-bromo-2-chloro-phenyl)-2,2-difluoro-ethyl]-3,6-dichloro-pyridazine-4-carboxamide as a white solid.

### Step 2: preparation of N-[2-(4-bromo-2-chloro-phenyl)-2,2-difluoro-ethyl]-6-chloro-3-(2,3-difluoro-phenoxy)pyridazine-4-carboxamide

To a solution of N-[2-(4-bromo-2-chloro-phenyl)-2,2-difluoro-ethyl]-3,6-dichloro-pyridazine-4-carboxamide (150 mg, 0.33 mmol) in AcCN (4 mL) were added 2,3-difluorophenol (56.95 mg, 0.44 mmol) and potassium carbonate (93 mg, 0.67 mmol). The reaction mixture was stirred at room temperature for 18h, then it was diluted with water and extracted with ethyl acetate (2 x 100 mL). The organic extracts were washed with water and brine, dried over magnesium sulfate, filtered and concentrated under reduced pressure. Purification of the residue by preparative HPLC afforded, after evaporation of the solvents, 85 mg (100% purity, 46% yield) of N-[2-(4-bromo-2-chloro-phenyl)-2,2-difluoro-ethyl]-6-chloro-3-(2,3-difluorophenoxy)pyridazine-4-carboxamide as a colourless oil.

### Preparation example 5: preparation of 6-chloro-N-[2-(4-cyclopropyl-2-methyl-phenyl)-2,2-difluoroethyl]-3-[3-(trifluoromethyl)phenoxy]pyridazine-4-carboxamide (compound I.240)

Under argon, cyclopropylboronic acid (19.7 mg, 0.22 mmol) was added to a stirred solution of N-[2-(4-bromo-2-methyl-phenyl)-2,2-difluoro-ethyl]-6-chloro-3-[3-(trifluoromethyl)phenoxy]pyridazine-4-carboxamide (100 mg, 0.18 mmol), palladium acetate (8.5 mg, 0.018 mmol) and potassium phosphate (238.42 mg, 1.09 mmol) in toluene/water (20:1, 3 mL). The reaction mixture was stirred at 100°C for 18h, filtered over Celite^{®}, washed with ethyl acetate and concentrated under reduced pressure. Purification of the residue by preparative HPLC afforded, after evaporation of the solvents, 22 mg (90% purity, 21% yield) of 6-chloro-N-[2-(4-cyclopropyl-2-methyl-phenyl)-2,2-difluoro-ethyl]-3-[3-(trifluoromethyl)phenoxy]pyridazine-4-carboxamide as colourless oil.

### Preparation example 6: preparation of 3-(3-cyclobutylphenoxy)-N-[2-(2,4-dimethylphenyl)-2,2-difluoroethyl]-6-methyl-pyridazine-4-carboxamide (compound I.564)

Under argon, a solution of NiCl₂.glyme (0.23 mg, 0.001 mmol) and 4,4'-di-tert-butyl-2,2'-bipyridine (0.28 mg, 0.001 mmol) in dioxane (0.5 mL) was added to a mixture 3-(3-bromophenoxy)-N-[2-(2,4-dimethylphenyl)-2,2-difluoro-ethyl]-6-methyl-pyridazine-4-carboxamide (100 mg, 0.21 mmol), bromocyclobutane (57 mg, 0.42 mmol), tris(trimethylsilyl)silane (52 mg, 0.21 mmol), sodium carbonate (44 mg, 0.42 mmol) and [Ir(dF(CF₃)ppy)₂(dtbbpy)]PF₆ (2.3 mg, 0.002 mmol, CAS number 870987-63-6) dissolved in dioxane (1 mL). The reaction mixture was stirred at room temperature for 18h under blue light irradiation (Kessyl lamp 40W), then filtered over Celite^{®} and concentrated under reduced pressure. Purification of the residue by preparative HPLC afforded, after evaporation of the solvents, 14 mg (85% purity, 12% yield) of 3-(3-cyclobutylphenoxy)-N-[2-(2,4-dimethylphenyl)-2,2-difluoro-ethyl]-6-methylpyridazine-4-carboxamide as a colourless oil.

### Preparation example 7: preparation of 6-acetyl-N-[rac-2-(4-bromo-2-chloro-phenyl)-2-fluoro-ethyl]-3-[3-(trifluoromethyl)phenoxy]pyridazine-4-carboxamide (compound I.605)

### Step 1: preparation of isopropyl 6-(1-ethoxyvinyl)-3-[3-(trifluoromethyl)phenoxy]pyridazine-4-carboxylate

In a microwave vial, isopropyl 6-chloro-3-[3-(trifluoromethyl)phenoxy]pyridazine-4-carboxylate (2.7 g, 7.5 mmol), tributyl(1-ethoxyvinyl)stannane (3.38 g, 9.35 mmol) and bis(triphenylphosphine)palladium dichloride (527 mg, 0.75 mmol) were dissolved under argon in DMF (10 mL). The tube was sealed and the reaction mixture was heated in the microwave at 120°C for 20 min. The reaction mixture was diluted with water and extracted with ethyl acetate (2 x 50 mL). The organic extracts were washed with water and brine, dried over magnesium sulfate, filtered and concentrated under reduced pressure. Purification of the residue by column chromatography on silica gel (gradient heptane/EtOAc) afforded, after evaporation of the solvents, 2.2 g (95% purity, 70% yield) of isopropyl 6-(1-ethoxyvinyl)-3-[3-(trifluoromethyl)phenoxy]pyridazine-4-carboxylate as a solid.

### Step 2: preparation of isopropyl 6-acetyl-3-[3-(trifluoromethyl)phenoxy]pyridazine-4-carboxylate (compound 1.075)

To a solution of isopropyl 6-(1-ethoxyvinyl)-3-[3-(trifluoromethyl)phenoxy]pyridazine-4-carboxylate (1.9 g, 4.9 mmol) in THF (20 mL) was added at room temperature a 2M aqueous HCl (7 mL, 14 mmol) solution. The reaction was stirred for 30 min then it was diluted with water and extracted with ethyl acetate (2 x 50 mL). The organic extracts were washed with water and brine, dried over magnesium sulfate, filtered and concentrated under reduced pressure. Purification of the residue by column chromatography on silica gel (gradient heptane/EtOAc) afforded, after evaporation of the solvents, 1.67 g (100% purity, 93% yield) of isopropyl 6-acetyl-3-[3-(trifluoromethyl)phenoxy]pyridazine-4-carboxylate as a oil.

### Step 3: preparation of 6-acetyl-3-[3-(trifluoromethyl)phenoxy]pyridazine-4-carboxylic acid (compound 1.034)

To a solution of isopropyl 6-acetyl-3-[3-(trifluoromethyl)phenoxy]pyridazine-4-carboxylate (600 mg, 1.63 mmol) in THF/water 9:1 (5.5 mL) cooled at 0°C was added lithium hydroxide (80 mg, 3.2 mmol). The reaction was stirred for 1h at room temperature then it was diluted with water. The aqueous phase was acidified with 1M aqueous HCl solution and extracted with ethyl acetate (2 x 50 mL). The organic extracts were dried over magnesium sulfate, filtered and concentrated under reduced pressure. Evaporation of the solvents afforded 540 mg (90% purity, 91% yield) of 6-acetyl-3-[3-(trifluoromethyl)phenoxy]pyridazine-4-carboxylic acid as a solid.

### Step 4: preparation of 6-acetyl-N-[rac-2-(4-bromo-2-chloro-phenyl)-2-fluoro-ethyl]-3-[3-(trifluoromethyl)phenoxy]pyridazine-4-carboxamide

In a microwave vial, 6-acetyl-3-[3-(trifluoromethyl)phenoxy]pyridazine-4-carboxylic acid (350 mg, 1.1 mmol), triethylamine (0.6 mL, 4 mmol), propylphosphonic anhydride (2.05 g, 3.22 mmol, 50% in THF) and rac-2-(4-bromo-2-chloro-phenyl)-2-fluoro-ethanamine.hydrochloride (465 mg, 1.61 mmol) were dissolved in THF (7 mL). The tube was sealed and the reaction mixture was heated in the microwave at 130°C for 15 min. The reaction mixture was diluted with water and extracted with ethyl acetate (2 x 50 mL). The organic extracts were washed with a saturated aqueous sodium bicarbonate solution and brine, dried over magnesium sulfate, filtered and concentrated under reduced pressure. Purification of the residue by column chromatography on silica gel (gradient heptane/EtOAc) afforded, after evaporation of the solvents, 336 mg (92% purity, 51% yield) of 6-acetyl-N-[rac-2-(4-bromo-2-chloro-phenyl)-2-fluoroethyl]-3-[3-(trifluoromethyl)phenoxy]pyridazine-4-carboxamide as a solid.

### Preparation example 8: preparation of N-[2-(2,4-dimethylphenyl)-2,2-difluoro-ethyl]-6-iodo-3-[3-(trifluoromethyl)phenoxy]pyridazine-4-carboxamide (compound I.461)

### Step 1: preparation of isopropyl 6-iodo-3-[3-(trifluoromethyl)phenoxy]pyridazine-4-carboxylate (compound 1.066)

Under argon, sodium iodide (10.4 g, 69.3 mmol) was added at room temperature to a solution of isopropyl 6-chloro-3-[3-(trifluoromethyl)phenoxy]pyridazine-4-carboxylate (10.0 g, 27.7 mmol) in hydriodic acid (30 mL, 57% in water). AcCN (20 mL) was added and the mixture was stirred at 40°C for 4h. The reaction was stopped by addition of 1M aqueous NaOH solution, the pH was adujsted to 3-4 and the reaction mixture was extracted with ethyl acetate (3 x 200 mL). The organic extracts were washed with water and brine, dried over magnesium sulfate, filtered and concentrated under reduced pressure. Purification of the residue by column chromatography on silica gel (gradient heptane/EtOAc) afforded, after evaporation of the solvents, 4.3 g (86% purity, 30% yield) of isopropyl 6-iodo-3-[3-(trifluoromethyl)phenoxy]pyridazine-4-carboxylate as a solid.

### Step 2: preparation of 6-iodo-3-[3-(trifluoromethyl)phenoxy]pyridazine-4-carboxylic acid

To a solution of isopropyl 6-iodo-3-[3-(trifluoromethyl)phenoxy]pyridazine-4-carboxylate (800 mg, 1.77 mmol) in THF/water 9:1 (44 mL) cooled at 0°C was added lithium hydroxide (51 mg, 2.12 mmol). The reaction was stirred for 30 min at 0°C then it was diluted with water. The aqueous phase was acidified with 1M aqueous HCl solution and extracted with ethyl acetate (2 x 100 mL). The organic extracts were dried over magnesium sulfate, filtered and concentrated under reduced pressure. Evaporation of the solvents afforded 657 mg (100% purity, 90% yield) of 6-iodo-3-[3-(trifluoromethyl)phenoxy]pyridazine-4-carboxylic acid was obtained as a solid.

### Step 3: preparation of N-[2-(2,4-dimethylphenyl)-2,2-difluoro-ethyl]-6-iodo-3-[3-(trifluoromethyl)phenoxy]pyridazine-4-carboxamide

In a microwave vial, 6-iodo-3-[3-(trifluoromethyl)phenoxy]pyridazine-4-carboxylic acid (657 mg, 1.6 mmol), trielthylamine (0.9 mL, 6.4 mmol), propylphosphonic anhydride (3.05 g, 4.81 mmol, 50% in THF) and 2-(2,4-dimethylphenyl)-2,2-difluoro-ethanamine were dissolved in THF (8 mL). The tube was sealed and the reaction mixture was heated in the microwave at 130°C for 15 min. The reaction mixture was diluted with water and extracted with ethyl acetate (2 x 100 mL). The organic extracts were washed with brine, dried over magnesium sulfate, filtered and concentrated under reduced pressure. Purification of the residue by column chromatography on silica gel (gradient heptane/EtOAc) afforded, after evaporation of the solvents, 621 mg (97% purity, 60% yield) of N-[2-(2,4-dimethylphenyl)-2,2-difluoro-ethyl]-6-iodo-3-[3-(trifluoromethyl)phenoxy]pyridazine-4-carboxamide as a solid.

### Preparation example 9: preparation of N-[2-(4-bromo-2-chloro-phenyl)-2,2-difluoro-ethyl]-6-chloro-5-(2-methoxyethyl)-3-[3-(trifluoromethyl)phenoxy]pyridazine-4-carboxamide (compound I.070)

### Step 1: preparation of methyl 6-chloro-5-iodo-3-[3-(trifluoromethyl)phenoxy]pyridazine-4-carboxylate (compound 1.052)

Under argon, a solution of TMPZnCl.LiCl (1.22 mL, 0.66 mL, 17% in THF, CAS number 109-99-9) was added to methyl 6-chloro-3-[3-(trifluoromethyl)phenoxy]pyridazine-4-carboxylate (200 mg, 0.6 mmol) in THF (1.2 mL). After stirring 1h at room temperature, NIS (203 mg, 0.90 mmol) was added. The reaction mixture was stirred 3h at room temperature, then it was diluted with a saturated sodium thiosulfate solution and extracted with ethyl acetate (2 x 50 mL). The organic extracts were washed with brine, dried over magnesium sulfate, filtered and concentrated under reduced pressure. Purification of the residue by column chromatography on silica gel (gradient heptane/EtOAc) afforded, after evaporation of the solvents, 191 mg (97% purity, 67% yield) of methyl 6-chloro-5-iodo-3-[3-(trifluoromethyl)phenoxy]pyridazine-4-carboxylate as a yellow solid.

### Step 2: preparation of methyl 6-chloro-3-[3-(trifluoromethyl)phenoxy]-5-vinyl-pyridazine-4-carboxylate (compound 1.069)

Under argon, in a microwave vial 6-chloro-5-iodo-3-[3-(trifluoromethyl)phenoxy]pyridazine-4-carboxylate (500 mg, 1.1 mmol), potassium vinyltrifluoroborate (146 mg, 1.1 mmol), potassium phosphate (463 mg, 2.18 mmol) and [1,1'-Bis(diphenylphosphino)ferrocene]dichloropalladium(II) (179 mg, 0.22 mmol) were dissolved in DME/water 2:1 (10 mL). The tube was sealed and the reaction mixture was heated in the microwave at 110°C for 30 min. The reaction mixture was diluted with a saturated ammonium chloride solution and extracted with ethyl acetate (2 x 50 mL). The organic extracts were washed with brine, dried over magnesium sulfate, filtered and concentrated under reduced pressure. Purification of the residue by column chromatography on silica gel (gradient heptane/EtOAc) afforded, after evaporation of the solvents, 255 mg (98% purity, 64% yield) of methyl 6-chloro-3-[3-(trifluoromethyl)phenoxy]-5-vinyl-pyridazine-4-carboxylate as a solid.

### Step 3: preparation of methyl 6-chloro-5-(2-methoxyethyl)-3-[3-(trifluoromethyl)phenoxy]pyridazine-4-carboxylate

Sodium methoxide (93 mg, 1.71 mmol) was added to a solution of methyl 6-chloro-3-[3-(trifluoromethyl)phenoxy]-5-vinyl-pyridazine-4-carboxylate (880 mg, 2.46 mmol) in methanol (15 mL). The reaction mixture was stirred for 1h at room temperature. The reaction mixture was diluted with a saturated aqueous sodium bicarbonate solution and extracted with ethyl acetate (2 x 100 mL). The organic extracts were washed with brine, dried over magnesium sulfate, filtered and concentrated under reduced pressure. Purification of the residue by column chromatography on silica gel (gradient heptane/EtOAc) afforded, after evaporation of the solvents, 223 mg (93% purity, 22% yield) of methyl 6-chloro-5-(2-methoxyethyl)-3-[3-(trifluoromethyl)phenoxy]pyridazine-4-carboxylate as an oil.

### Step 4: preparation of 6-chloro-5-(2-methoxyethyl)-3-[3-(trifluoromethyl)phenoxy]pyridazine-4-carboxylic acid (compound 1.026)

To a solution of methyl 6-chloro-5-(2-methoxyethyl)-3-[3-(trifluoromethyl)phenoxy]pyridazine-4-carboxylate (272 mg, 0.67 mmol) in THF/water 9:1 (4 mL) was added lithium hydroxide (33 mg, 1.4 mmol). The reaction was stirred for 8h at room temperature then it was diluted with water. The aqueous phase was acidified with 1M aqueous HCl solution and extracted with ethyl acetate (2 x 50 mL). The organic extracts were dried over magnesium sulfate, filtered and concentrated under reduced pressure. Evaporation of the solvents afforded 210 mg (100% purity, 80% yield) of 6-chloro-5-(2-methoxyethyl)-3-[3-(trifluoromethyl)phenoxy]pyridazine-4-carboxylic acid as a solid.

### Step 5: preparation of N-[2-(4-bromo-2-chloro-phenyl)-2,2-difluoro-ethyl]-6-chloro-5-(2-methoxyethyl)-3-[3-(trifluoromethyl)phenoxy]pyridazine-4-carboxamide

Under argon, to a solution of 6-chloro-5-(2-methoxyethyl)-3-[3-(trifluoromethyl)phenoxy]pyridazine-4-carboxylic acid (50 mg, 0.133 mmol) and HATU (100 mg, 0.26 mmol) in DMF (2 mL) were successively added 2-(4-bromo-2-chloro-phenyl)-2,2-difluoro-ethanamine hydrochloride (53 mg, 0.17 mmol) and N,N-diisopropylethylamine (0.12 mL, 0.66 mmol). The reaction mixture was stirred for 3h at room temperature then it was diluted with water and extracted with ethyl acetate (2 x 50 mL). The organic extracts were dried over magnesium sulfate, filtered and concentrated under reduced pressure. Purification of the residue by preparative HPLC afforded, after evaporation of the solvents, 34 mg (100% purity, 40% yield) of N-[2-(4-bromo-2-chloro-phenyl)-2,2-difluoro-ethyl]-6-chloro-5-(2-methoxyethyl)-3-[3-(trifluoromethyl)phenoxy]pyridazine-4-carboxamide as a colourless oil.

### Preparation example 10: preparation of 6-chloro-N-[2-(2,4-dimethylphenyl)-2,2-difluoro-ethyl]-5-iodo-3-[3-(trifluoromethyl)phenoxy]pyridazine-4-carboxamide (compound I.020)

Under argon, a solution of TMPZnCl.LiCl (12.35 mmol, 22.7 mL, 17% in THF, CAS number 109-99-9) was added to 6-chloro-N-[2-(2,4-dimethylphenyl)-2,2-difluoro-ethyl]-3-[3-(trifluoromethyl)phenoxy]pyridazine-4-carboxamide (3.0 g, 6.2 mmol) in THF (30 mL). After stirring 1h at room temperature, NIS (3.4 g, 15.4 mmol) was added portionwise. The reaction mixture was stirred 2h at room temperature, then it was diluted with a saturated sodium thiosulfate solution and saturated sodium bicarbonate solution, and extracted with ethyl acetate (2 x 250 mL). The organic extracts were washed with brine, dried over magnesium sulfate, filtered and concentrated under reduced pressure. Purification of the residue by column chromatography on silica gel (gradient heptane/EtOAc) afforded, after evaporation of the solvents, 3.05 g (100% purity, 80% yield) of 6-chloro-N-[2-(2,4-dimethylphenyl)-2,2-difluoro-ethyl]-5-iodo-3-[3-(trifluoromethyl)phenoxy]pyridazine-4-carboxamide as a solid.

### Preparation example 11: preparation of 6-chloro-N-[2-(2,4-dimethylphenyl)-2,2-difluoro-ethyl]-5-(oxetan-3-ylamino)-3-[3-(trifluoromethyl)phenoxy]pyridazine-4-carboxamide (compound I.408)

Under argon, oxetan-3-amine (14.3 mg, 0.20 mmol) and N,N-diisopropylethylamine (0.034 mL, 0.20 mmol) were added at room temperature to a solution of 6-chloro-N-[2-(2,4-dimethylphenyl)-2,2-difluoroethyl]-5-iodo-3-[3-(trifluoromethyl)phenoxy]pyridazine-4-carboxamide (100 mg, 0.16 mmol) in AcCN (3 mL). The reaction mixture was stirred at 60°C for 18h, then it was diluted with water and extracted with ethyl acetate (2 x 50 mL). The organic extracts were washed with brine, dried over magnesium sulfate, filtered and concentrated under reduced pressure. Purification of the residue by column chromatography on silica gel (gradient heptane/EtOAc) afforded, after evaporation of the solvents, 79 mg (90% purity, 78% yield) of 6-chloro-N-[2-(2,4-dimethylphenyl)-2,2-difluoro-ethyl]-5-(oxetan-3-ylamino)-3-[3-(trifluoromethyl)phenoxy]pyridazine-4-carboxamide as a solid.

### Preparation example 12: preparation of 6-chloro-N-[2-(4-chlorophenyl)-2,2-difluoro-ethyl]-5-ethyl-3-[3-(trifluoromethyl)phenoxy]pyridazine-4-carboxamide (compound I.254)

Under argon, a solution of EtMgBr (2.26 mL, 2.03 mmol, 0.9 M in THF) was added at -20°C to a solution of 6-chloro-N-[2-(4-chlorophenyl)-2,2-difluoro-ethyl]-3-[3-(trifluoromethyl)phenoxy]pyridazine-4-carboxamide (200.0 mg, 0.40 mmol) in THF (5 mL). The reaction mixture was stirred 30 min at -20°C, then MeOH (1 mL) and NBS (86.7 mg, 0.49 mmol) were added. The reaction mixture was further stirred at room temperature for 2h, then it was diluted with a saturated ammonium chloride solution and extracted with ethyl acetate (2 x 50 mL). The organic extracts were washed with water, dried over magnesium sulfate, filtered and concentrated under reduced pressure. Purification of the residue by column chromatography on silica gel (gradient heptane/EtOAc) afforded, after evaporation of the solvents, 94 mg (100% purity, 45% yield) of 6-chloro-N-[2-(4-chlorophenyl)-2,2-difluoro-ethyl]-5-ethyl-3-[3-(trifluoromethyl)phenoxy]pyridazine-4-carboxamide as a solid.

### Preparation example 13: preparation 6-chloro-N-[2-(2,4-dimethylphenyl)-2,2-difluoro-ethyl]-5-(3-pyridyl)-3-[3-(trifluoromethyl)phenoxy]pyridazine-4-carboxamide (compound I.550)

Under argon, a solution of TMPZnCl.LiCl (0.86 mmol, 1.6 mL, 17% in THF) was added to 6-chloro-N-[2-(2,4-dimethylphenyl)-2,2-difluoro-ethyl]-3-[3-(trifluoromethyl)phenoxy]pyridazine-4-carboxamide (200 mg, 0.41 mmol) in THF (2 mL). After stirring 1h at room temperature, 3-bromopyridine (0.048 mL, 0.49 mmol), palladium acetate (71 mg, 0.123 mmol), and trifurylphosphine (57.3 mg, 0.24 mmol) were added. The reaction mixture was stirred at 60 °C for 4h, then diluted with a saturated ammonium chloride solution and a saturated sodium thiosulfate solution, and extracted with ethyl acetate (2 x 50 mL). The organic extracts were washed with brine, dried over magnesium sulfate, filtered and concentrated under reduced pressure. Purification of the residue by column chromatography on silica gel (gradient heptane/EtOAc) afforded, after evaporation of the solvents, 227 mg (96% purity, 94% yield) of 6-chloro-N-[2-(2,4-dimethylphenyl)-2,2-difluoro-ethyl]-5-(3-pyridyl)-3-[3-(trifluoromethyl)phenoxy]pyridazine-4-carboxamide as a solid.

### Preparation example 14: preparation of N-[2-(2,4-dimethylphenyl)-2,2-difluoro-ethyl]-6-methylsulfanyl-3-[3-(trifluoromethyl)phenoxy]pyridazine-4-carboxamide (compound I.767)

### Step 1: preparation of ethyl 6-methylsulfanyl-3-[3-(trifluoromethyl)phenoxy]pyridazine-4-carboxylate

Under argon, sodium methanethiolate (85 mg, 1.15 mmol) was added to a solution of ethyl 6-chloro-3-[3-(trifluoromethyl)phenoxy]pyridazine-4-carboxylate (400 mg, 1.15 mmol) in DMF (3 mL). The reaction mixture was stirred 2h at room temperature, then diluted with saturated ammonium chloride solution and extracted with ethyl acetate (2 x 100 mL). The organic extracts were washed with water and brine, dried over magnesium sulfate, filtered and concentrated under reduced pressure. Purification of the residue by preparative HPLC afforded, after evaporation of the solvents, 43 mg (100% purity, 10% yield) of ethyl 6-methylsulfanyl-3-[3-(trifluoromethyl)phenoxy]pyridazine-4-carboxylate as an oil.

### Step 2: preparation of 6-methylsulfanyl-3-[3-(trifluoromethyl)phenoxy]pyridazine-4-carboxylic acid (compound 1.004)

### To a solution of ethyl 6-methylsulfanyl-3-[3-(trifluoromethyl)phenoxy]pyridazine-4-carboxylate

(71 mg, 0.20 mmol) in THF/water 2:1 (1.5 mL) was added lithium hydroxide (6 mg, 0.24 mmol). The reaction was stirred for 1h at room temperature then it was diluted with water. The aqueous phase was acidified with 1M aqueous HCl solution and extracted with ethyl acetate (2 x 50 mL). The organic extracts were dried over magnesium sulfate, filtered and concentrated under reduced pressure. Evaporation of the solvents afforded 34 mg (100% purity, 51% yield) of 6-methylsulfanyl-3-[3-(trifluoromethyl)phenoxy]pyridazine-4-carboxylic acid as a white solid.

### Step 3: preparation of N-[2-(2,4-dimethylphenyl)-2,2-difluoro-ethyl]-6-methylsulfanyl-3-[3-(trifluoromethyl)phenoxy]pyridazine-4-carboxamide

In a microwave vial, 6-methylsulfanyl-3-[3-(trifluoromethyl)phenoxy]pyridazine-4-carboxylic acid (34 mg, 0.10 mmol), triethylamine (0.06 mL, 0.4 mmol), propylphosphonic anhydride (195 mg, 0.30 mmol, 50% in THF) and 2-(2,4-dimethylphenyl)-2,2-difluoro-ethanamine hydrochloride (34 mg; 0.15 mmol) were dissolved in THF (0.4 mL). The tube was sealed and the reaction mixture was stirred at room temperature for 1 h. The reaction mixture was diluted with water and extracted with ethyl acetate (2 x 50 mL). The organic extracts was dried over magnesium sulfate, filtered and concentrated under reduced pressure. After evaporation of the solvents, 21 mg (100% purity, 41% yield) of N-[2-(2,4-dimethylphenyl)-2,2-difluoro-ethyl]-6-methylsulfanyl-3-[3-(trifluoromethyl)phenoxy]pyridazine-4-carboxamide as a yellow solid.

### Preparation example 15: preparation of 6-chloro-3-(3-chlorophenoxy)-N-[2-(2,4-dimethylphenyl)-2,2-difluoro-ethyl]-5-methyl-pyridazine-4-carboxamide (compound I.790)

### Step 1: preparation of methyl 6-chloro-3-(3-chlorophenoxy)-5-methyl-pyridazine-4-carboxylate (compound 1.033)

To a solution of methyl 6-chloro-3-(3-chlorophenoxy)pyridazine-4-carboxylate (24 g, 80 mmol) in dimethyl sulfoxide (75 mL) was added at room temperature nitromethane (24 g, 400 mmol). After 30 min, triethylamine (16.7 mL, 120 mmol) was added. The reaction mixture was stirred at room temperature for 3 days then it was diluted with water. The aqueous phase was extracted with ethyl acetate (500 mL) and the organic extract was dried over magnesium sulfate, filtered and concentrated under reduced pressure. Purification of the residue by column chromatography on silica gel (gradient heptane/EtOAc) afforded, after evaporation of the solvents, 18.9 g (96% purity, 72% yield) of methyl 6-chloro-3-(3-chlorophenoxy)-5-methyl-pyridazine-4-carboxylate as a yellow oil.

### Step 2: preparation of 6-chloro-3-(3-chlorophenoxy)-5-methyl-pyridazine-4-carboxylic acid (compound 1.002)

To a solution of methyl 6-chloro-3-(3-chlorophenoxy)-5-methyl-pyridazine-4-carboxylate (8 g, 25 mmol) in THF/water 2:1 (60 mL) was added at 0°C lithium hydroxide (2.3 g, 31 mmol). The reaction was stirred for 4h at room temperature then it was diluted with water. The aqueous phase was extracted with diethyl ether (2 x 60 mL) then acidified with 1M aqueous HCl solution. The aqueous phase was cooled to 0°C, the white precipitate was filtered off, dried under reduced pressure to afford 7.2 g (97% purity, 91% yield) of 6-chloro-3-(3-chlorophenoxy)-5-methyl-pyridazine-4-carboxylic acid as a white solid.

### Step 3: preparation of 6-chloro-3-(3-chlorophenoxy)-N-[2-(2,4-dimethylphenyl)-2,2-difluoro-ethyl]-5-methyl-pyridazine-4-carboxamide

Under argon, to a solution of 6-chloro-3-(3-chlorophenoxy)-5-methyl-pyridazine-4-carboxylic acid (200 mg, 0.67 mmol) and HATU (0.33 g, 0.87 mmol) cooled at 0°C in DMF (3 mL) were successively added 2-(2,4-dimethylphenyl)-2,2-difluoro-ethanamine hydrochloride (185 mg, 0.84 mmol) and N,N-diisopropylethylamine (0.35 mL, 2.0 mmol). The reaction mixture was stirred for 18h at room temperature then it was diluted with water and extracted with ethyl acetate (2 x 200 mL). The organic extracts were dried over magnesium sulfate, filtered and concentrated under reduced pressure. Purification of the residue by column chromatography on silica gel (gradient heptane/EtOAc) afforded, after evaporation of the solvents, 200 mg (97% purity, 62% yield) of 6-chloro-3-(3-chlorophenoxy)-N-[2-(2,4-dimethylphenyl)-2,2-difluoro-ethyl]-5-methyl-pyridazine-4-carboxamide as a white solid.

The compounds as shown in table 1 below were prepared in analogy with the examples provided above. ¹H-NMR data of these compounds is shown in table 2.

**Table 1: Compounds according to formula (I)**

| 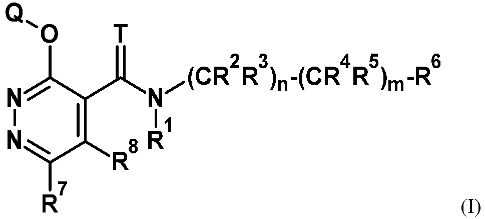 | | | | | | | |
|---|---|---|---|---|---|---|---|
| **Ex N°** | **R¹** | **R⁷** | **R⁸** | **T** | **Q** | 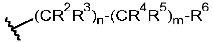 | **LogP** |
| I-655 | H | Cl | methyl | O | 3-cyclopropyl-2-fluorophenyl | 2-(2,4-dimethylphenyl)-2,2-difluoroethyl | 4.49^{[a]} |
| I-667 | H | Cl | methyl | O | 3-bromo-2-fluorophenyl | 2-(2-chloro-4-methylphenyl)-2,2-difluoroethyl | 4.33^{[a]} |
| I-746 | H | Cl | methyl | O | 3-cyclopropyl-2-fluorophenyl | 2-(2-chloro-4-methylphenyl)-2,2-difluoroethyl | 4.55^{[a]} |
| I-749 | H | Cl | methyl | O | 3-cyclopropyl-2-fluorophenyl | 2-(3,4-dimethylphenyl)-2,2-difluoroethyl | 4.51^{[a]} |
| I-784 | H | Cl | methyl | O | 3-chloro-2-fluorophenyl | 2-(2,4-dimethylphenyl)-2,2-difluoroethyl | 4.37^{[a]} |
| I-840 | H | Cl | methyl | O | 3-cyclopropyl-2-fluorophenyl | 2-(2-bromo-4-methylphenyl)-2,2-difluoroethyl | 4.57^{[a]} |

**Table 2:**

| |
|---|
| I-655: ¹H-NMR(499.9 MHz, d₆-DMSO): |
| δ= 9.3667 (0.8); 9.3542 (1.7); 9.3417 (0.8); 7.3396 (2.2); 7.3236 (2.5); 7.1746 (0.8); 7.1587 (2.0); 7.1428 (1.4); 7.0988 (2.6); 7.0909 (1.1); 7.0770 (1.4); 7.0627 (0.7); 7.0599 (0.6); 6.9851 (1.4); 6.9692 (1.2); 6.9423 (0.8); 6.9397 (0.8); 6.9267 (1.4); 6.9133 (0.7); 4.1569 (0.6); 4.1444 (0.7); 4.1270 (1.5); 4.1144 (1.4); 4.0969 (0.8); 4.0844 (0.7); 3.3290 (90.6); 2.5266 (0.5); 2.5229 (0.6); 2.5121 (10.7); 2.5087 (21.8); 2.5051 (29.4); 2.5016 (21.0); 2.4982 (9.8); 2.4413 (7.0); 2.2352 (9.9); 2.2092 (16.0); 2.0762 (7.7); 2.0645 (1.2); 2.0542 (0.7); 2.0477 (0.6); 1.0412 (0.8); 1.0325 (2.2); 1.0282 (2.3); 1.0246 (1.2); 1.0198 (1.2); 1.0156 (2.2); 1.0113 (2.3); 1.0031 (0.8); 0.7944 (0.9); 0.7859 (2.5); 0.7821 (2.6); 0.7758 (2.4); 0.7719 (2.6); 0.7629 (0.8) |
| I-667: ¹H-NMR(400.1 MHz, CDCl3): |
| δ= 7.9973 (1.5); 7.4968 (0.8); 7.4937 (0.9); 7.4774 (1.6); 7.4646 (2.7); 7.4449 (2.5); 7.2738 (3.0); 7.2601 (12.8); 7.2342 (0.8); 7.2309 (0.8); 7.2139 (1.6); 7.1967 (1.0); 7.1166 (1.1); 7.1135 (1.0); 7.0962 (1.7); 7.0930 (1.6); 7.0759 (0.7); 7.0726 (0.7); 6.9885 (1.5); 6.9684 (1.4); 6.3962 (0.6); 6.3818 (1.0); 6.3667 (0.6); 4.4413 (1.0); 4.4253 (1.1); 4.4058 (2.2); 4.3898 (2.1); 4.3701 (1.1); 4.3542 (1.0); 2.9504 (10.0); 2.8725 (9.4); 2.3798 (16.0); 2.3077 (10.3); 2.2031 (0.4); 1.5610 (13.6); -0.0002 (13.1) |
| 1-746: ¹H-NMR(300.2 MHz, CDCl3): |
| δ= 7.4988 (2.1); 7.4721 (2.1); 7.3054 (2.2); 7.2987 (6.9); 7.1361 (0.4); 7.1096 (1.4); 7.0824 (2.4); 7.0732 (1.3); 7.0581 (0.9); 7.0522 (1.1); 7.0313 (0.5); 7.0250 (0.4); 7.0018 (1.1); 6.9751 (1.0); 6.8557 (0.6); 6.8479 (0.6); 6.8327 (1.1); 6.8264 (0.9); 6.8078 (0.6); 6.8019 (0.5); 6.4765 (0.4); 6.4553 (0.8); 6.4346 (0.4); 4.4886 (0.9); 4.4672 (0.8); 4.4417 (1.9); 4.4202 (1.8); 4.3947 (0.9); 4.3732 (0.9); 3.3952 (0.4); 2.4155 (0.4); 2.3946 (16.0); 2.3367 (7.9); 2.1310 (0.4); 2.1200 (0.5); 2.1029 (0.8); 2.0859 (0.5); 2.0747 (0.5); 1.6082 (0.5); 1.3021 (0.6); 1.0809 (0.6); 1.0655 (1.6); 1.0587 (1.8); 1.0440 (1.0); 1.0369 (1.8); 1.0303 (1.6); 1.0158 (0.8); 0.9183 (0.6); 0.8195 (0.8); 0.8044 (2.0); 0.7986 (1.9); 0.7876 (1.7); 0.7819 (2.1); 0.7654 (0.6); 0.0363 (7.8) |
| 1-749: ¹H-NMR(300.2 MHz, CDCl3): |
| δ= 7.3188 (2.6); 7.2975 (1.9); 7.2660 (1.6); 7.1740 (1.7); 7.1484 (1.2); 7.1094 (0.4); 7.0803 (1.5); 7.0610 (2.6); 6.8140 (1.4); 6.6368 (1.2); 5.3332 (1.2); 4.2169 (0.8); 4.1990 (0.8); 4.1690 (1.5); 4.1528 (1.4); 4.1246 (0.8); 2.3611 (8.3); 2.2773 (16.0); 2.1089 (0.7); 2.0838 (1.0); 2.0704 (0.9); 1.6555 (1.4); 1.0435 (2.4); 1.0204 (2.3); 0.7810 (3.1); 0.0382 (1.0) |
| 1-784: ¹H-NMR(300.2 MHz, CDCl3): |
| δ= 7.3722 (0.8); 7.3651 (1.1); 7.3601 (1.9); 7.3507 (0.9); 7.3462 (1.1); 7.3401 (1.5); 7.3334 (2.2); 7.3278 (1.1); 7.3180 (0.9); 7.2989 (1.2); 7.2187 (0.4); 7.2121 (0.5); 7.1912 (1.6); 7.1846 (1.1); 7.1727 (1.9); 7.1685 (2.8); 7.1638 (1.4); 7.1455 (1.3); 7.1414 (1.4); 7.1179 (0.4); 7.1141 (0.5); 7.0708 (1.9); 6.9777 (1.0); 6.9512 (0.9); 6.8647 (0.5); 6.8439 (1.0); 6.8233 (0.5); 5.3307 (0.4); 4.2481 (0.8); 4.2270 (0.8); 4.1999 (1.7); 4.1788 (1.6); 4.1516 (0.9); 4.1306 (0.8); 3.1936 (0.6); 2.5119 (5.6); 2.3565 (0.5); 2.3323 (16.0); 2.3206 (8.1); 1.7043 (1.2); 1.3062 (0.3); 0.9208 (0.4); 0.0397 (1.2) |
| 1-840: ¹H-NMR(400.1 MHz, CDCl3): |
| δ= 8.0078 (1.7); 7.4864 (2.7); 7.4653 (2.3); 7.4452 (2.5); 7.2594 (15.7); 7.0899 (0.6); 7.0700 (1.8); 7.0504 (2.2); 7.0400 (1.4); 7.0245 (1.4); 7.0117 (1.7); 6.9930 (1.4); 6.8182 (0.8); 6.8131 (0.8); 6.8004 (1.4); 6.7824 (0.7); 6.4075 (0.6); 6.3927 (1.0); 6.3791 (0.6); 4.4663 (1.0); 4.4502 (1.0); 4.4310 (2.2); 4.4150 (2.1); 4.3957 (1.1); 4.3798 (1.0); 2.9518 (12.0); 2.8777 (11.2); 2.3774 (16.0); 2.2968 (10.1); 2.1532 (0.4); 2.0879 (0.6); 2.0791 (0.7); 2.0665 (1.1); 2.0541 (0.7); 2.0457 (0.6); 1.5487 (19.7); 1.0334 (0.7); 1.0218 (2.1); 1.0171 (2.2); 1.0056 (1.2); 1.0005 (2.2); 0.9959 (2.1); 0.9847 (0.8); 0.7782 (0.9); 0.7664 (2.6); 0.7539 (2.3); 0.7500 (2.6); 0.7377 (0.7); - 0.0002 (21.0) |

### Biological Data

The advanced fungicidal activity of the active compound combinations according to the invention is evident from the example below. While the individual active compounds exhibit weaknesses with regard to the fungicidal activity, the combinations have an activity, which exceeds a simple addition of activities.

A synergistic effect of fungicides is always present, when the fungicidal activity of the active compound combinations exceeds the total of activities of the active compounds when applied individually. The expected activity for a given combination of two active compounds can be calculated as follows (cf. Colby, S.R., "Calculating Synergistic and Antagonistic Responses of Herbicide Combinations", Weeds 1967, 15, 20-22):
If
   - X: is the efficacy when active compound A is applied at an application rate of m ppm (or g/ha),
   - Y: is the efficacy when active compound B is applied at an application rate of n ppm (or g/ha),
   - E: is the efficacy when the active compounds A and B are applied at application rates of m and n ppm (or g/ha), respectively, and
then $E = X + Y - \frac{X ⋅ Y}{100}$

The degree of efficacy expressed in % is denoted: 0 % means an efficacy, which corresponds to that of the control, while an efficacy of 100 % means that no disease is observed.

If the actual fungicidal activity exceeds the calculated value, then the activity of the combination is superadditive, i.e. a synergistic effect exists. In this case, the efficacy, which was actually observed, must be greater than the value for the expected efficacy (E), that was calculated from the abovementioned formula.

A further way of demonstrating a synergistic effect is the method of Tammes (cf. "Isoboles, a graphic representation of synergism in pesticides" in Neth. J. Plant Path., 1964, 70, 73-80).

The invention is illustrated by the following examples. However, the invention is not limited to the examples.

### Example: in vitro-Test with fungal microorganisms

Wells of 96-well microtiter plates are filled with 10µl of a preparation of test compound or compound combination in methanol + emulsifier alkylaryl-polyglycol-ether. Thereafter, the solvent is evaporated in a

hood. At the next step, 100µl of liquid potato dextrose medium is given into each well, that has been amended with an appropriate concentration of spores or mycelium suspension of the test fungus.

With the aid of a photometer, the extinction in all wells is measured at the wavelength of 620nm.

The microtiter plates are incubated at 20°C and 85% relative humidity. The inhibition of growth is determined again photometrically 3-5 days after the application. Efficacy is calculated in relation to the untreated control, 0% efficacy means fungal growth as high as in untreated control while 100% efficacy means no fungal growth is measured.

The invention is illustrated by the following example. However the invention is not limited to the example.

**Table A1: in vitro -Test with Alternaria alternate**

| (I-655) (ppm) | (7.005) pyrimethanil (ppm) | (2.038) isoflucypram (ppm) | (3.025) fenpicoxamid (ppm) | Ratio | Efficacy % | Colby expected value % |
|---|---|---|---|---|---|---|
| 0.5 | | | | | 100 | |
| 0.1 | | | | | 20 | |
| 0.02 | | | | | 0 | |
| 0.004 | | | | | 0 | |
| | 20 | | | | 100 | |
| | 4 | | | | 99 | |
| | 0.8 | | | | 88 | |
| | 0.16 | | | | 3 | |
| | | 1.0 | | | 74 | |
| | | 0.2 | | | 85 | |
| | | 0.04 | | | 69 | |
| | | 0.008 | | | 44 | |
| | | | 5.0 | | 80 | |
| | | | 1.0 | | 47 | |
| | | | 0.2 | | 10 | |
| | | | 0.04 | | 0 | |
| 0.02 | 20 | | | 1:1000 | 100 | 100 |
| 0.02 | 4 | | | 1:200 | 100 | 100 |
| 0.02 | 0.8 | | | 1:40 | 100 | 96 |
| 0.02 | 0.16 | | | 1:8 | 100 | 69 |
| 0.5 | | 1.0 | | 1:2 | 100 | 100 |
| 0.5 | | 0.2 | | 1:0.4 | 100 | 100 |
| 0.5 | | 0.04 | | 1:0.08 | 99 | 100 |
| 0.5 | | 0.008 | | 1:0.016 | 100 | 100 |
| 0.1 | | 1.0 | | 1:10 | 99 | 79 |
| 0.1 | | 0.2 | | 1:2 | 96 | 88 |
| 0.1 | | 0.04 | | 1:0.4 | 94 | 75 |
| 0.1 | | 0.008 | | 1:0.08 | 86 | 56 |
| 0.02 | | 1.0 | | 1:50 | 97 | 74 |
| 0.02 | | 0.2 | | 1:10 | 97 | 85 |
| 0.02 | | 0.04 | | 1:2 | 86 | 69 |
| 0.02 | | 0.008 | | 1:0.4 | 87 | 45 |
| 0.004 | | 1.0 | | 1:250 | 97 | 74 |
| 0.004 | | 0.2 | | 1:50 | 98 | 85 |
| 0.004 | | 0.04 | | 1:10 | 87 | 69 |
| 0.02 | | | 5.0 | 1:250 | 87 | 80 |
| 0.02 | | | 1.0 | 1:50 | 67 | 47 |
| 0.02 | | | 0.2 | 1:10 | 13 | 10 |
| 0.02 | | | 0.04 | 1:2 | 5 | 0 |

**Table A2: in vitro -Test with Alternaria alternate**

| (I-655) (ppm) | (3.020) trifloxy-strobin (ppm) | (1.002) difeno-conazole (ppm) | (1.055) mefentriflu-conazole (ppm) | (1.018) prothio-conazole (ppm) | Ratio | Efficacy % | Colby expected value % |
|---|---|---|---|---|---|---|---|
| 0.5 | | | | | | 100 | |
| 0.1 | | | | | | 20 | |
| 0.020 | | | | | | 0 | |
| 0.004 | | | | | | 0 | |
| | 1.0 | | | | | 98 | |
| | 0.2 | | | | | 90 | |
| | 0.04 | | | | | 84 | |
| | 0.008 | | | | | 56 | |
| | | 1.0 | | | | 98 | |
| | | 0.2 | | | | 22 | |
| | | 0.008 | | | | 8 | |
| | | | 1.0 | | | 100 | |
| | | | 0.2 | | | 99 | |
| | | | 0.04 | | | 23 | |
| | | | 0.008 | | | 0 | |
| | | | | 1.0 | | 100 | |
| | | | | 0.2 | | 100 | |
| | | | | 0.04 | | 57 | |
| | | | | 0.008 | | 0 | |
| 0.5 | 1.0 | | | | 1:2 | 100 | 100 |
| 0.5 | 0.2 | | | | 1:0.4 | 100 | 100 |
| 0.5 | 0.04 | | | | 1:0.08 | 100 | 96 |
| 0.5 | 0.008 | | | | 1:0.016 | 100 | 69 |
| 0.02 | 1.0 | | | | 1:50 | 98 | 98 |
| 0.02 | 0.2 | | | | 1:10 | 96 | 90 |
| 0.02 | 0.04 | | | | 1:2 | 84 | 84 |
| 0.02 | 0.008 | | | | 1:0.4 | 55 | 57 |
| 0.5 | | 1.0 | | | 1:2 | 100 | 100 |
| 0.5 | | 0.2 | | | 1:0.4 | 100 | 100 |
| 0.5 | | 0.008 | | | 1:0.016 | 100 | 100 |
| 0.1 | | 1.0 | | | 1:10 | 98 | 99 |
| 0.1 | | 0.2 | | | 1:2 | 52 | 38 |
| 0.1 | | 0.008 | | | 1:0.08 | 34 | 26 |
| 0.02 | | 1.0 | | | 1:50 | 100 | 98 |
| 0.02 | | 0.2 | | | 1:10 | 42 | 23 |
| 0.02 | | 0.008 | | | 1:0.4 | 0 | 8 |
| 0.5 | | | 1.0 | | 1:2 | 100 | 100 |
| 0.5 | | | 0.2 | | 1:0.4 | 100 | 100 |
| 0.5 | | | 0.04 | | 1:0.08 | 100 | 100 |
| 0.5 | | | 0.008 | | 1:0.016 | 100 | 100 |
| 0.1 | | | 1.0 | | 1:10 | 100 | 100 |
| 0.1 | | | 0.2 | | 1:2 | 100 | 99 |
| 0.1 | | | 0.04 | | 1:0.4 | 56 | 24 |
| 0.1 | | | 0.008 | | 1:0.08 | 16 | 2 |
| 0.020 | | | 1.0 | | 1:50 | 99 | 100 |
| 0.020 | | | 0.2 | | 1:10 | 99 | 99 |
| 0.020 | | | 0.04 | | 1:2 | 89 | 23 |
| 0.020 | | | 0.008 | | 1:0.4 | 2 | 0 |
| 0.1 | | | | 1.0 | 1:10 | 100 | 100 |
| 0.1 | | | | 0.2 | 1:2 | 99 | 100 |
| 0.1 | | | | 0.04 | 1:0.4 | 67 | 57 |
| 0.1 | | | | 0.008 | 1:0.08 | 0 | 2 |
| 0.004 | | | | 1.0 | 1:250 | 100 | 100 |
| 0.004 | | | | 0.2 | 1:50 | 99 | 100 |
| 0.004 | | | | 0.04 | 1:10 | 64 | 57 |
| 0.004 | | | | 0.008 | 1:2 | 28 | 0 |

**Table A3: in vitro -Test with Alternaria alternate**

| (I-655) (ppm) | (1.021) tebuconazole (ppm) | (1.020) spiroxamine (ppm) | (13.001) fludioxonil (ppm) | Ratio | Efficacy % | Colby expected value % |
|---|---|---|---|---|---|---|
| 0.5 | | | | | 100 | |
| 0.1 | | | | | 20 | |
| 0.020 | | | | | 0 | |
| 0.004 | | | | | 0 | |
| | 1.0 | | | | 98 | |
| | 0.2 | | | | 32 | |
| | 0.04 | | | | 9 | |
| | 0.008 | | | | 11 | |
| | | 4 | | | 1 | |
| | | 0.8 | | | 1 | |
| | | 0.16 | | | 9 | |
| | | | 5.0 | | 100 | |
| | | | 1.0 | | 87 | |
| | | | 0.2 | | 0 | |
| | | | 0.04 | | 0 | |
| 0.5 | 1.0 | | | 1:2 | 100 | 100 |
| 0.5 | 0.2 | | | 1:0.4 | 99 | 100 |
| 0.5 | 0.04 | | | 1:0.08 | 100 | 100 |
| 0.5 | 0.008 | | | 1:0.016 | 100 | 100 |
| 0.1 | 1.0 | | | 1:10 | 98 | 98 |
| 0.1 | 0.2 | | | 1:2 | 35 | 33 |
| 0.1 | 0.04 | | | 1:0.4 | 27 | 11 |
| 0.1 | 0.008 | | | 1:0.08 | 24 | 12 |
| 0.5 | | 4 | | 1:8 | 100 | 100 |
| 0.5 | | 0.8 | | 1:1.6 | 100 | 100 |
| 0.5 | | 0.16 | | 1:0.32 | 100 | 100 |
| 0.1 | | 4 | | 1:40 | 22 | 1 |
| 0.1 | | 0.8 | | 1:8 | 0 | 1 |
| 0.1 | | 0.16 | | 1:1.6 | 19 | 9 |
| 0.5 | | | 5.0 | 1:10 | 100 | 100 |
| 0.5 | | | 1.0 | 1:2 | 100 | 100 |
| 0.5 | | | 0.2 | 1:0.4 | 100 | 100 |
| 0.5 | | | 0.04 | 1:0.08 | 100 | 100 |
| 0.1 | | | 5.0 | 1:50 | 100 | 100 |
| 0.1 | | | 1.0 | 1:10 | 96 | 87 |
| 0.1 | | | 0.2 | 1:2 | 80 | 0 |
| 0.1 | | | 0.04 | 1:0.4 | 7 | 0 |

**Table A4: in vitro -Test with Alternaria alternate**

| (I-655) (ppm) | (13.004) proquinazid (ppm) | (5.003) captan (ppm) | (5.010) dithianon (ppm) | Ratio | Efficacy % | Colby expected value % |
|---|---|---|---|---|---|---|
| 0.5 | | | | | 100 | |
| 0.1 | | | | | 20 | |
| 0.020 | | | | | 0 | |
| 0.004 | | | | | 0 | |
| | 10 | | | | 0 | |
| | 2 | | | | 0 | |
| | 0.4 | | | | 0 | |
| | 0.08 | | | | 0 | |
| | | 20 | | | 83 | |
| | | 4 | | | 21 | |
| | | 0.16 | | | 0 | |
| | | | 20 | | 100 | |
| | | | 4 | | 71 | |
| | | | 0.8 | | 0 | |
| 0.5 | 10 | | | 1:20 | 100 | 100 |
| 0.5 | 2 | | | 1:4 | 100 | 100 |
| 0.5 | 0.4 | | | 1:0.8 | 100 | 100 |
| 0.5 | 0.08 | | | 1:0.16 | 100 | 100 |
| 0.1 | 10 | | | 1:100 | 22 | 0 |
| 0.1 | 2 | | | 1:20 | 19 | 0 |
| 0.1 | 0.4 | | | 1:4 | 4 | 0 |
| 0.1 | 0.08 | | | 1:0.8 | 0 | 0 |
| 0.5 | | 20 | | 1:40 | 100 | 100 |
| 0.5 | | 4 | | 1:8 | 100 | 100 |
| 0.5 | | 0.16 | | 1:0.32 | 100 | 100 |
| 0.1 | | 20 | | 1:200 | 96 | 86 |
| 0.1 | | 4 | | 1:40 | 59 | 35 |
| 0.1 | | 0.16 | | 1:1.6 | 14 | 18 |
| 0.5 | | | 20 | 1:40 | 100 | 100 |
| 0.5 | | | 4 | 1:8 | 100 | 100 |
| 0.5 | | | 0.8 | 1:1.6 | 100 | 100 |
| 0.1 | | | 20 | 1:200 | 100 | 100 |
| 0.1 | | | 4 | 1:40 | 100 | 76 |
| 0.1 | | | 0.8 | 1:8 | 19 | 18 |
| 0.004 | | | 20 | 1:5000 | 99 | 100 |
| 0.004 | | | 4 | 1:1000 | 76 | 71 |
| 0.004 | | | 0.8 | 1:200 | 5 | 0 |

**Table A5: in vitro -Test with Alternaria alternate**

| (I-655) (ppm) | (5.012) folpet (ppm) | (5.018) propineb (ppm) | Ratio | Efficacy % | Colby expected value % |
|---|---|---|---|---|---|
| 0.5 | | | | 100 | |
| 0.1 | | | | 20 | |
| 0.020 | | | | 0 | |
| 0.004 | | | | 0 | |
| | 10 | | | 100 | |
| | 2 | | | 100 | |
| | 0.4 | | | 0 | |
| | | 100 | | 92 | |
| | | 20 | | 66 | |
| | | 4 | | 32 | |
| | | 0.8 | | 18 | |
| 0.5 | 10 | | 1:20 | 100 | 100 |
| 0.5 | 2 | | 1:4 | 100 | 100 |
| 0.5 | 0.4 | | 1:0.8 | 100 | 100 |
| 0.1 | 10 | | 1:100 | 100 | 100 |
| 0.1 | 2 | | 1:20 | 100 | 100 |
| 0.1 | 0.4 | | 1:4 | 47 | 18 |
| 0.020 | 10 | | 1:500 | 100 | 100 |
| 0.020 | 2 | | 1:100 | 100 | 100 |
| 0.020 | 0.4 | | 1:20 | 25 | 8 |
| 0.004 | 10 | | 1:2500 | 100 | 100 |
| 0.004 | 2 | | 1:500 | 100 | 100 |
| 0.004 | 0.4 | | 1:100 | 13 | 0 |
| 0.5 | | 100 | 1:200 | 100 | 100 |
| 0.5 | | 20 | 1:40 | 100 | 100 |
| 0.5 | | 4 | 1:8 | 100 | 100 |
| 0.5 | | 0.8 | 1:1.6 | 100 | 100 |
| 0.1 | | 20 | 1:200 | 70 | 69 |
| 0.1 | | 4 | 1:40 | 67 | 38 |
| 0.1 | | 0.8 | 1:8 | 28 | 26 |
| 0.004 | | 100 | 1:25000 | 96 | 92 |
| 0.004 | | 20 | 1:5000 | 65 | 66 |
| 0.004 | | 4 | 1:1000 | 31 | 32 |
| 0.004 | | 0.8 | 1:200 | 20 | 18 |

**Table A6: in vitro -Test with Alternaria alternate**

| (I-655) (ppm) | (15.012) fosetylaluminium (ppm) | (17.012) Paenibacillus terrae (ppm) | Ratio | Efficacy % | Colby expected value % |
|---|---|---|---|---|---|
| 0.5 | | | | 100 | |
| 0.1 | | | | 20 | |
| 0.020 | | | | 0 | |
| 0.004 | | | | 0 | |
| | 100 | | | 37 | |
| | 20 | | | 27 | |
| | 4 | | | 8 | |
| | | 200 | | 100 | |
| | | 40 | | 13 | |
| | | 8 | | 1 | |
| 0.5 | 100 | | 1:200 | 100 | 100 |
| 0.5 | 20 | | 1:40 | 100 | 100 |
| 0.5 | 4 | | 1:8 | 100 | 100 |
| 0.004 | 100 | | 1:25000 | 43 | 37 |
| 0.004 | 20 | | 1:5000 | 27 | 27 |
| 0.004 | 4 | | 1:1000 | 22 | 8 |
| 0.5 | | 200 | 1:400 | 100 | 100 |
| 0.5 | | 40 | 1:80 | 99 | 100 |
| 0.5 | | 8 | 1:16 | 100 | 100 |
| 0.1 | | 200 | 1:2000 | 100 | 100 |
| 0.1 | | 40 | 1:400 | 66 | 31 |
| 0.1 | | 8 | 1:80 | 26 | 21 |

**Table A7: in vitro -Test with Alternaria alternate**

| (I-746) (ppm) | (7.005) pyrimethanil (ppm) | (2.002) bixafen (ppm) | (2.005) fluopyram (ppm) | Ratio | Efficacy % | Colby expected value % |
|---|---|---|---|---|---|---|
| 0.5 | | | | | 100 | |
| 0.1 | | | | | 22 | |
| 0.020 | | | | | 0 | |
| 0.004 | | | | | 0 | |
| | 20 | | | | 100 | |
| | 4 | | | | 100 | |
| | 0.8 | | | | 96 | |
| | 0.16 | | | | 1 | |
| | | 1.0 | | | 86 | |
| | | 0.2 | | | 81 | |
| | | 0.04 | | | 79 | |
| | | | 4 | | 94 | |
| | | | 0.8 | | 77 | |
| | | | 0.16 | | 72 | |
| 0.1 | 20 | | | 1:200 | 100 | 100 |
| 0.1 | 4 | | | 1:40 | 100 | 100 |
| 0.1 | 0.8 | | | 1:8 | 100 | 96 |
| 0.1 | 0.16 | | | 1:1.6 | 47 | 9 |
| 0.004 | | 1.0 | | 1:250 | 97 | 86 |
| 0.004 | | 0.2 | | 1:50 | 81 | 81 |
| 0.004 | | 0.04 | | 1:10 | 80 | 79 |
| 0.5 | | | 4 | 1:8 | 99 | 100 |
| 0.5 | | | 0.8 | 1:1.6 | 100 | 100 |
| 0.5 | | | 0.16 | 1:0.32 | 100 | 100 |
| 0.1 | | | 4 | 1:8 | 95 | 95 |
| 0.1 | | | 0.8 | 1:1.6 | 90 | 79 |
| 0.1 | | | 0.16 | 1:0.32 | 76 | 74 |
| 0.020 | | | 4 | 1:8 | 96 | 94 |
| 0.020 | | | 0.8 | 1:1.6 | 78 | 77 |
| 0.020 | | | 0.16 | 1:0.32 | 75 | 72 |
| 0.1 | | | 4 | 1:8 | 92 | 94 |
| 0.1 | | | 0.8 | 1:1.6 | 87 | 77 |
| 0.1 | | | 0.16 | 1:0.32 | 81 | 72 |

**Table A8: in vitro -Test with Alternaria alternate**

| (I-746) (ppm) | (2.038) isoflucypram (ppm) | (3.025) fenpicoxamid (ppm) | Ratio | Efficacy % | Colby expected value % |
|---|---|---|---|---|---|
| 0.5 | | | | 100 | |
| 0.1 | | | | 22 | |
| 0.020 | | | | 0 | |
| 0.004 | | | | 0 | |
| | 0.2 | | | 81 | |
| | 0.04 | | | 76 | |
| | 0.008 | | | 41 | |
| | | 5.0 | | 81 | |
| | | 1.0 | | 14 | |
| | | 0.2 | | 4 | |
| | | 0.04 | | 11 | |
| 0.5 | 0.2 | | 1:0.4 | 100 | 100 |
| 0.5 | 0.04 | | 1:0.08 | 100 | 100 |
| 0.5 | 0.008 | | 1:0.016 | 100 | 100 |
| 0.1 | 0.2 | | 1:2 | 82 | 82 |
| 0.1 | 0.04 | | 1:0.4 | 86 | 77 |
| 0.1 | 0.008 | | 1:0.08 | 59 | 44 |
| 0.020 | 0.2 | | 1:10 | 77 | 81 |
| 0.020 | 0.04 | | 1:2 | 81 | 76 |
| 0.020 | 0.008 | | 1:0.4 | 50 | 41 |
| 0.004 | 0.2 | | 1:50 | 89 | 82 |
| 0.004 | 0.04 | | 1:10 | 76 | 76 |
| 0.004 | 0.008 | | 1:2 | 56 | 42 |
| 0.5 | | 5.0 | 1:10 | 100 | 100 |
| 0.5 | | 1.0 | 1:2 | 100 | 100 |
| 0.5 | | 0.2 | 1:0.4 | 100 | 100 |
| 0.5 | | 0.04 | 1:0.08 | 100 | 100 |
| 0.1 | | 5.0 | 1:50 | 83 | 82 |
| 0.1 | | 1.0 | 1:10 | 56 | 17 |
| 0.1 | | 0.2 | 1:2 | 11 | 9 |
| 0.1 | | 0.04 | 1:0.4 | 23 | 15 |
| 0.020 | | 5.0 | 1:250 | 80 | 81 |
| 0.020 | | 1.0 | 1:50 | 20 | 14 |
| 0.020 | | 0.2 | 1:10 | 6 | 4 |
| 0.020 | | 0.04 | 1:2 | 15 | 11 |

**Table A9: in vitro -Test with Alternaria alternate**

| (I-746) (ppm) | (1.002) difeno-conazole (ppm) | (1.055) mefen-triflu-conazole (ppm) | (1.018) prothio-conazole (ppm) | Ratio | Efficacy % | Colby expected value % |
|---|---|---|---|---|---|---|
| 0.5 | | | | | 100 | |
| 0.1 | | | | | 22 | |
| 0.020 | | | | | 0 | |
| 0.004 | | | | | 0 | |
| | 1.0 | | | | 92 | |
| | 0.2 | | | | 51 | |
| | 0.04 | | | | 4 | |
| | 0.008 | | | | 8 | |
| | | 1.0 | | | 100 | |
| | | 0.2 | | | 100 | |
| | | 0.04 | | | 54 | |
| | | 0.008 | | | 0 | |
| | | | 1.0 | | 100 | |
| | | | 0.2 | | 99 | |
| | | | 0.04 | | 31 | |
| 0.5 | 1.0 | | | 1:2 | 100 | 100 |
| 0.5 | 0.2 | | | 1:0.4 | 100 | 100 |
| 0.5 | 0.04 | | | 1:0.08 | 100 | 100 |
| 0.5 | 0.008 | | | 1:0.016 | 100 | 100 |
| 0.020 | 1.0 | | | 1:50 | 96 | 92 |
| 0.020 | 0.2 | | | 1:10 | 68 | 51 |
| 0.020 | 0.04 | | | 1:2 | 1 | 4 |
| 0.020 | 0.008 | | | 1:0.4 | 11 | 8 |
| 0.5 | | 1.0 | | 1:2 | 100 | 100 |
| 0.5 | | 0.2 | | 1:0.4 | 100 | 100 |
| 0.5 | | 0.04 | | 1:0.08 | 100 | 100 |
| 0.5 | | 0.008 | | 1:0.016 | 100 | 100 |
| 0.020 | | 1.0 | | 1:50 | 100 | 100 |
| 0.020 | | 0.2 | | 1:10 | 100 | 100 |
| 0.020 | | 0.04 | | 1:2 | 67 | 54 |
| 0.020 | | 0.008 | | 1:0.4 | 10 | 0 |
| 0.1 | | | 1.0 | 1:10 | 100 | 100 |
| 0.1 | | | 0.2 | 1:2 | 100 | 99 |
| 0.1 | | | 0.04 | 1:0.4 | 88 | 35 |
| 0.020 | | | 1.0 | 1:50 | 100 | 100 |
| 0.020 | | | 0.2 | 1:10 | 100 | 99 |
| 0.020 | | | 0.04 | 1:2 | 48 | 31 |

**Table A10: in vitro -Test with Alternaria alternate**

| (I-746) (ppm) | (1.021) tebuconazole (ppm) | (13.001) fludioxonil (ppm) | Ratio | Efficacy % | Colby expected value % |
|---|---|---|---|---|---|
| 0.5 | | | | 100 | |
| 0.1 | | | | 22 | |
| 0.020 | | | | 0 | |
| 0.004 | | | | 0 | |
| | 1.0 | | | 96 | |
| | 0.2 | | | 22 | |
| | 0.04 | | | 15 | |
| | 0.008 | | | 10 | |
| | | 5.0 | | 100 | |
| | | 1.0 | | 89 | |
| | | 0.04 | | 0 | |
| 0.5 | 1.0 | | 1:2 | 100 | 100 |
| 0.5 | 0.04 | | 1:0.08 | 100 | 100 |
| 0.5 | 0.008 | | 1:0.016 | 100 | 100 |
| 0.020 | 1.0 | | 1:50 | 98 | 96 |
| 0.020 | 0.2 | | 1:10 | 24 | 22 |
| 0.020 | 0.04 | | 1:2 | 11 | 15 |
| 0.020 | 0.008 | | 1:0.4 | 16 | 10 |
| 0.5 | | 5.0 | 1:10 | 100 | 100 |
| 0.5 | | 1.0 | 1:2 | 100 | 100 |
| 0.5 | | 0.04 | 1:0.08 | 100 | 100 |
| 0.020 | | 5.0 | 1:250 | 100 | 100 |
| 0.020 | | 1.0 | 1:50 | 85 | 89 |
| 0.020 | | 0.04 | 1:2 | 4 | 0 |
| 0.004 | | 5.0 | 1:1250 | 97 | 100 |
| 0.004 | | 1.0 | 1:250 | 89 | 89 |
| 0.004 | | 0.04 | 1:10 | 16 | 0 |

**Table A11: in vitro -Test with Alternaria alternate**

| (I-746) (ppm) | (5.003) captan (ppm) | (5.010) dithianon (ppm) | (5.018) propineb (ppm) | (6.002) isotianil (ppm) | Ratio | Efficacy % | Colby expected value % |
|---|---|---|---|---|---|---|---|
| 0.5 | | | | | | 100 | |
| 0.1 | | | | | | 22 | |
| 0.020 | | | | | | 0 | |
| 0.004 | | | | | | 0 | |
| | 20 | | | | | 100 | |
| | 4 | | | | | 66 | |
| | 0.16 | | | | | 2 | |
| | | 20 | | | | 100 | |
| | | 4 | | | | 81 | |
| | | | 20 | | | 71 | |
| | | | 4 | | | 21 | |
| | | | 0.8 | | | 11 | |
| | | | | 100 | | 0 | |
| | | | | 20 | | 7 | |
| | | | | 4 | | 0 | |
| 0.5 | 20 | | | | 1:40 | 100 | 100 |
| 0.5 | 4 | | | | 1:8 | 100 | 100 |
| 0.5 | 0.16 | | | | 1:0.32 | 100 | 100 |
| 0.1 | 20 | | | | 1:200 | 100 | 100 |
| 0.1 | 4 | | | | 1:40 | 87 | 73 |
| 0.1 | 0.16 | | | | 1:1.6 | 26 | 25 |
| 0.004 | 20 | | | | 1:5000 | 100 | 100 |
| 0.004 | 4 | | | | 1:1000 | 83 | 66 |
| 0.004 | 0.16 | | | | 1:40 | 13 | 2 |
| 0.5 | | 20 | | | 1:40 | 100 | 100 |
| 0.5 | | 4 | | | 1:8 | 100 | 100 |
| 0.1 | | 20 | | | 1:200 | 100 | 100 |
| 0.1 | | 4 | | | 1:40 | 100 | 86 |
| 0.020 | | 20 | | | 1:1000 | 100 | 100 |
| 0.020 | | 4 | | | 1:200 | 89 | 83 |
| 0.004 | | 20 | | | 1:5000 | 100 | 100 |
| 0.004 | | 4 | | | 1:1000 | 80 | 81 |
| 0.5 | | | 20 | | 1:40 | 100 | 100 |
| 0.5 | | | 4 | | 1:8 | 100 | 100 |
| 0.5 | | | 0.8 | | 1:1.6 | 100 | 100 |
| 0.1 | | | 20 | | 1:200 | 83 | 71 |
| 0.1 | | | 4 | | 1:40 | 64 | 21 |
| 0.1 | | | 0.8 | | 1:8 | 16 | 11 |
| 0.020 | | | 20 | | 1:1000 | 93 | 72 |
| 0.020 | | | 4 | | 1:200 | 47 | 23 |
| 0.020 | | | 0.8 | | 1:40 | 31 | 14 |
| 0.004 | | | 20 | | 1:5000 | 69 | 71 |
| 0.004 | | | 4 | | 1:1000 | 29 | 21 |
| 0.004 | | | 0.8 | | 1:200 | 23 | 11 |
| 0.5 | | | | 100 | 1:200 | 100 | 100 |
| 0.5 | | | | 20 | 1:40 | 100 | 100 |
| 0.5 | | | | 4 | 1:8 | 100 | 100 |
| 0.1 | | | | 100 | 1:1000 | 33 | 10 |
| 0.1 | | | | 20 | 1:200 | 23 | 16 |
| 0.1 | | | | 4 | 1:40 | 11 | 10 |
| 0.004 | | | | 100 | 1:25000 | 0 | 0 |
| 0.004 | | | | 20 | 1:5000 | 12 | 7 |
| 0.004 | | | | 4 | 1:1000 | 16 | 0 |

**Table A12: in vitro -Test with Alternaria alternate**

| (I-749) (ppm) | (7.005) pyrimethanil (ppm) | (2.005) fluopyram (ppm) | Ratio | Efficacy % | Colby expected value % |
|---|---|---|---|---|---|
| 0.5 | | | | 100 | |
| 0.1 | | | | 24 | |
| 0.020 | | | | 14 | |
| 0.004 | | | | 0 | |
| | 20 | | | 100 | |
| | 4 | | | 100 | |
| | 0.8 | | | 100 | |
| | 0.16 | | | 25 | |
| | | 20 | | 99 | |
| | | 4 | | 85 | |
| | | 0.8 | | 81 | |
| | | 0.16 | | 63 | |
| 0.1 | 20 | | 1:200 | 100 | 100 |
| 0.1 | 4 | | 1:40 | 100 | 100 |
| 0.1 | 0.8 | | 1:8 | 100 | 100 |
| 0.1 | 0.16 | | 1:1.6 | 100 | 62 |
| 0.020 | 20 | | 1:1000 | 100 | 100 |
| 0.020 | 4 | | 1:200 | 100 | 100 |
| 0.020 | 0.8 | | 1:40 | 100 | 100 |
| 0.020 | 0.16 | | 1:8 | 100 | 25 |
| 0.004 | 20 | | 1:5000 | 100 | 100 |
| 0.004 | 4 | | 1:1000 | 100 | 100 |
| 0.004 | 0.8 | | 1:200 | 100 | 100 |
| 0.004 | 0.16 | | 1:40 | 90 | 29 |
| 0.5 | | 20 | 1:40 | 100 | 100 |
| 0.5 | | 4 | 1:8 | 99 | 100 |
| 0.5 | | 0.8 | 1:1.6 | 100 | 100 |
| 0.5 | | 0.16 | 1:0.32 | 100 | 100 |
| 0.020 | | 20 | 1:1000 | 97 | 99 |
| 0.020 | | 4 | 1:200 | 91 | 85 |
| 0.020 | | 0.16 | 1:8 | 58 | 63 |
| 0.004 | | 20 | 1:5000 | 98 | 99 |
| 0.004 | | 4 | 1:1000 | 90 | 86 |
| 0.004 | | 0.8 | 1:200 | 86 | 82 |
| 0.004 | | 0.16 | 1:40 | 66 | 65 |

**Table A13: in vitro -Test with Alternaria alternate**

| (I-749) (ppm) | (2.028) inpyrfluxam (ppm) | (2.038) isoflucypram (ppm) | (3.025) fenpicoxamid (ppm) | Ratio | Efficacy % | Colby expected value % |
|---|---|---|---|---|---|---|
| 0.5 | | | | | 100 | |
| 0.1 | | | | | 24 | |
| 0.020 | | | | | 14 | |
| 0.004 | | | | | 0 | |
| | 1.0 | | | | 79 | |
| | 0.2 | | | | 73 | |
| | 0.04 | | | | 57 | |
| | 0.008 | | | | 0 | |
| | | 0.2 | | | 73 | |
| | | 0.04 | | | 71 | |
| | | 0.008 | | | 53 | |
| | | | 5.0 | | 64 | |
| 0.5 | 1.0 | | | 1:2 | 100 | 100 |
| 0.5 | 0.2 | | | 1:0.4 | 100 | 100 |
| 0.5 | 0.04 | | | 1:0.08 | 100 | 100 |
| 0.5 | 0.008 | | | 1:0.016 | 100 | 92 |
| 0.020 | 1.0 | | | 1:50 | 93 | 79 |
| 0.020 | 0.2 | | | 1:10 | 75 | 73 |
| 0.020 | 0.04 | | | 1:2 | 63 | 57 |
| 0.020 | 0.008 | | | 1:0.4 | 1 | 0 |
| 0.004 | 1.0 | | | 1:250 | 85 | 80 |
| 0.004 | 0.2 | | | 1:50 | 78 | 74 |
| 0.004 | 0.04 | | | 1:10 | 56 | 59 |
| 0.004 | 0.008 | | | 1:2 | 0 | 5 |
| 0.5 | | 0.2 | | 1:0.4 | 100 | 100 |
| 0.5 | | 0.04 | | 1:0.08 | 100 | 100 |
| 0.5 | | 0.008 | | 1:0.016 | 100 | 100 |
| 0.1 | | 0.2 | | 1:2 | 85 | 77 |
| 0.1 | | 0.04 | | 1:0.4 | 75 | 75 |
| 0.1 | | 0.008 | | 1:0.08 | 56 | 59 |
| 0.020 | | 0.2 | | 1:10 | 90 | 73 |
| 0.020 | | 0.04 | | 1:2 | 74 | 71 |
| 0.020 | | 0.008 | | 1:0.4 | 68 | 53 |
| 0.004 | | 0.2 | | 1:50 | 79 | 74 |
| 0.004 | | 0.04 | | 1:10 | 80 | 72 |
| 0.004 | | 0.008 | | 1:2 | 60 | 54 |
| 0.5 | | | 5.0 | 1:10 | 100 | 100 |
| 0.1 | | | 5.0 | 1:50 | 81 | 69 |
| 0.020 | | | 5.0 | 1:250 | 69 | 64 |
| 0.004 | | | 5.0 | 1:1250 | 71 | 65 |

**Table A14: in vitro -Test with Alternaria alternate**

| (I-749) (ppm) | (3.020) trifloxy-strobin (ppm) | (1.002) difeno-conazole (ppm) | (1.018) prothio-conazole (ppm) | Ratio | Efficacy % | Colby expected value % |
|---|---|---|---|---|---|---|
| 0.5 | | | | | 100 | |
| 0.1 | | | | | 24 | |
| 0.020 | | | | | 14 | |
| 0.004 | | | | | 0 | |
| | 0.2 | | | | 87 | |
| | 0.04 | | | | 82 | |
| | 0.008 | | | | 51 | |
| | | 1.0 | | | 96 | |
| | | 0.2 | | | 3 | |
| | | 0.008 | | | 11 | |
| | | | 1.0 | | 100 | |
| | | | 0.2 | | 99 | |
| | | | 0.04 | | 32 | |
| 0.1 | 0.2 | | | 1:2 | 93 | 89 |
| 0.1 | 0.04 | | | 1:0.4 | 84 | 84 |
| 0.1 | 0.008 | | | 1:0.08 | 57 | 57 |
| 0.020 | 0.2 | | | 1:10 | 93 | 87 |
| 0.020 | 0.04 | | | 1:2 | 84 | 82 |
| 0.020 | 0.008 | | | 1:0.4 | 76 | 51 |
| 0.004 | 0.2 | | | 1:50 | 96 | 88 |
| 0.004 | 0.04 | | | 1:10 | 90 | 82 |
| 0.004 | 0.008 | | | 1:2 | 62 | 52 |
| 0.5 | | 1.0 | | 1:2 | 100 | 100 |
| 0.5 | | 0.2 | | 1:0.4 | 99 | 100 |
| 0.5 | | 0.008 | | 1:0.016 | 100 | 100 |
| 0.1 | | 1.0 | | 1:10 | 97 | 96 |
| 0.1 | | 0.2 | | 1:2 | 53 | 16 |
| 0.1 | | 0.008 | | 1:0.08 | 27 | 23 |
| 0.020 | | 1.0 | | 1:50 | 94 | 96 |
| 0.020 | | 0.2 | | 1:10 | 54 | 3 |
| 0.020 | | 0.008 | | 1:0.4 | 0 | 11 |
| 0.004 | | 1.0 | | 1:250 | 97 | 96 |
| 0.004 | | 0.2 | | 1:50 | 23 | 5 |
| 0.004 | | 0.008 | | 1:2 | 17 | 13 |
| 0.1 | | | 1.0 | 1:10 | 100 | 100 |
| 0.1 | | | 0.2 | 1:2 | 99 | 99 |
| 0.1 | | | 0.04 | 1:0.4 | 73 | 66 |

**Table A15: in vitro -Test with Alternaria alternate**

| (I-749) (ppm) | (1.021) tebuconazole (ppm) | (13.001) fludioxonil (ppm) | (5.003) captan (ppm) | Ratio | Efficacy % | Colby expected value % |
|---|---|---|---|---|---|---|
| 0.5 | | | | | 100 | |
| 0.1 | | | | | 24 | |
| 0.020 | | | | | 14 | |
| 0.004 | | | | | 0 | |
| | 1.0 | | | | 99 | |
| | 0.2 | | | | 48 | |
| | 0.04 | | | | 14 | |
| | 0.008 | | | | 0 | |
| | | 5.0 | | | 100 | |
| | | 1.0 | | | 96 | |
| | | 0.2 | | | 0 | |
| | | 0.04 | | | 0 | |
| | | | 20 | | 100 | |
| | | | 4 | | 100 | |
| | | | 0.8 | | 10 | |
| | | | 0.16 | | 13 | |
| 0.5 | 1.0 | | | 1:2 | 100 | 100 |
| 0.5 | 0.2 | | | 1:0.4 | 100 | 98 |
| 0.5 | 0.04 | | | 1:0.08 | 100 | 100 |
| 0.5 | 0.008 | | | 1:0.016 | 100 | 100 |
| 0.004 | 1.0 | | | 1:250 | 99 | 99 |
| 0.004 | 0.2 | | | 1:50 | 61 | 51 |
| 0.004 | 0.04 | | | 1:10 | 20 | 20 |
| 0.004 | 0.008 | | | 1:2 | 0 | 6 |
| 0.020 | | 5.0 | | 1:250 | 100 | 100 |
| 0.020 | | 1.0 | | 1:50 | 89 | 96 |
| 0.020 | | 0.2 | | 1:10 | 86 | 5 |
| 0.020 | | 0.04 | | 1:2 | 13 | 5 |
| 0.020 | | | 20 | 1:1000 | 100 | 100 |
| 0.020 | | | 4 | 1:200 | 100 | 100 |
| 0.020 | | | 0.8 | 1:40 | 38 | 23 |
| 0.020 | | | 0.16 | 1:8 | 26 | 25 |

**Table A16: in vitro -Test with Alternaria alternate**

| (I-749) (ppm) | (5.012) folpet (ppm) | (5.013) mancozeb (ppm) | (5.018) propineb (ppm) | Ratio | Efficacy % | Colby expected value % |
|---|---|---|---|---|---|---|
| 0.5 | | | | | 100 | |
| 0.1 | | | | | 24 | |
| 0.020 | | | | | 14 | |
| 0.004 | | | | | 0 | |
| | 10 | | | | 100 | |
| | 2 | | | | 100 | |
| | 0.4 | | | | 1 | |
| | 0.08 | | | | 5 | |
| | | 10 | | | 95 | |
| | | 2 | | | 6 | |
| | | | 100 | | 96 | |
| | | | 20 | | 73 | |
| | | | 4 | | 56 | |
| 0.020 | 10 | | | 1:500 | 100 | 100 |
| 0.020 | 2 | | | 1:100 | 100 | 100 |
| 0.020 | 0.4 | | | 1:20 | 60 | 15 |
| 0.020 | 0.08 | | | 1:4 | 25 | 18 |
| 0.004 | 10 | | | 1:2500 | 100 | 100 |
| 0.004 | 2 | | | 1:500 | 100 | 100 |
| 0.004 | 0.4 | | | 1:100 | 18 | 1 |
| 0.004 | 0.08 | | | 1:20 | 12 | 5 |
| 0.5 | | 10 | | 1:20 | 99 | 100 |
| 0.5 | | 2 | | 1:4 | 100 | 100 |
| 0.1 | | 10 | | 1:100 | 100 | 97 |
| 0.1 | | 2 | | 1:20 | 71 | 45 |
| 0.020 | | 10 | | 1:500 | 96 | 95 |
| 0.020 | | 2 | | 1:100 | 10 | 10 |
| 0.5 | | | 100 | 1:200 | 100 | 100 |
| 0.5 | | | 20 | 1:40 | 100 | 100 |
| 0.5 | | | 4 | 1:8 | 100 | 100 |
| 0.1 | | | 100 | 1:1000 | 95 | 98 |
| 0.1 | | | 20 | 1:200 | 98 | 84 |
| 0.1 | | | 4 | 1:40 | 68 | 74 |
| 0.020 | | | 100 | 1:5000 | 90 | 96 |
| 0.020 | | | 20 | 1:1000 | 98 | 74 |
| 0.020 | | | 4 | 1:200 | 67 | 58 |
| 0.004 | | | 100 | 1:25000 | 95 | 96 |
| 0.004 | | | 20 | 1:5000 | 80 | 75 |
| 0.004 | | | 4 | 1:1000 | 66 | 59 |

**Table B1: in vitro -Test with Botrytis cinerea**

| (I-655) (ppm) | (7.005) pyrimethanil (ppm) | (1.055) mefentriflu-conazole (ppm) | (1.021) tebuconazole (ppm) | Ratio | Efficacy % | Colby expected value % |
|---|---|---|---|---|---|---|
| 0.5 | | | | | 100 | |
| 0.1 | | | | | 58 | |
| 0.020 | | | | | 0 | |
| 0.004 | | | | | 0 | |
| | 20 | | | | 100 | |
| | 4 | | | | 99 | |
| | 0.8 | | | | 96 | |
| | 0.16 | | | | 56 | |
| | | 1.0 | | | 100 | |
| | | 0.2 | | | 63 | |
| | | 0.04 | | | 36 | |
| | | | 1.0 | | 100 | |
| | | | 0.2 | | 20 | |
| | | | 0.04 | | 8 | |
| | | | 0.008 | | 0 | |
| 0.004 | 20 | | | 1:5000 | 100 | 100 |
| 0.004 | 4 | | | 1:1000 | 100 | 99 |
| 0.004 | 0.8 | | | 1:200 | 100 | 96 |
| 0.004 | 0.16 | | | 1:40 | 80 | 59 |
| 0.1 | | 1.0 | | 1:10 | 100 | 100 |
| 0.1 | | 0.2 | | 1:2 | 80 | 71 |
| 0.1 | | 0.04 | | 1:0.4 | 54 | 48 |
| 0.004 | | 1.0 | | 1:250 | 100 | 100 |
| 0.004 | | 0.2 | | 1:50 | 73 | 63 |
| 0.004 | | 0.04 | | 1:10 | 41 | 36 |
| 0.5 | | | 1.0 | 1:2 | 100 | 100 |
| 0.5 | | | 0.04 | 1:0.08 | 90 | 70 |
| 0.5 | | | 0.008 | 1:0.016 | 100 | 68 |
| 0.1 | | | 1.0 | 1:10 | 100 | 100 |
| 0.1 | | | 0.2 | 1:2 | 67 | 36 |
| 0.1 | | | 0.04 | 1:0.4 | 20 | 27 |
| 0.020 | | | 1.0 | 1:50 | 100 | 100 |
| 0.020 | | | 0.2 | 1:10 | 81 | 20 |
| 0.020 | | | 0.04 | 1:2 | 0 | 8 |
| 0.020 | | | 0.008 | 1:0.4 | 6 | 0 |
| 0.004 | | | 1.0 | 1:250 | 100 | 100 |
| 0.004 | | | 0.2 | 1:50 | 56 | 20 |
| 0.004 | | | 0.04 | 1:10 | 10 | 8 |
| 0.004 | | | 0.008 | 1:2 | 22 | 0 |

**Table B2: in vitro -Test with Botrytis cinerea**

| (I-655) (ppm) | (1.020) spiroxamine (ppm) | (15.064) (ppm) | (13.001) fludioxonil (ppm) | (13.004) proquinazid (ppm) | Ratio | Efficacy % | Colby expected value % |
|---|---|---|---|---|---|---|---|
| 0.5 | | | | | | 100 | |
| 0.1 | | | | | | 58 | |
| 0.020 | | | | | | 0 | |
| 0.004 | | | | | | 0 | |
| | 4 | | | | | 4 | |
| | 0.8 | | | | | 5 | |
| | 0.16 | | | | | 0 | |
| | | 2 | | | | 31 | |
| | | 0.4 | | | | 0 | |
| | | 0.080 | | | | 0 | |
| | | | 5.0 | | | 100 | |
| | | | 1.0 | | | 100 | |
| | | | 0.2 | | | 99 | |
| | | | 0.04 | | | 12 | |
| | | | | 10 | | 0 | |
| | | | | 2 | | 0 | |
| | | | | 0.4 | | 0 | |
| 0.5 | 4 | | | | 1:8 | 100 | 78 |
| 0.5 | 0.8 | | | | 1:1.6 | 100 | 78 |
| 0.5 | 0.16 | | | | 1:0.32 | 100 | 77 |
| 0.020 | 4 | | | | 1:200 | 15 | 4 |
| 0.020 | 0.8 | | | | 1:40 | 0 | 5 |
| 0.020 | 0.16 | | | | 1:8 | 0 | 0 |
| 0.5 | | 2 | | | 1:4 | 100 | 84 |
| 0.5 | | 0.4 | | | 1:0.8 | 100 | 77 |
| 0.5 | | 0.080 | | | 1:0.16 | 99 | 77 |
| 0.5 | | | 5.0 | | 1:10 | 100 | 100 |
| 0.5 | | | 1.0 | | 1:2 | 100 | 100 |
| 0.5 | | | 0.2 | | 1:0.4 | 100 | 100 |
| 0.5 | | | 0.04 | | 1:0.08 | 100 | 80 |
| 0.004 | | | 5.0 | | 1:1250 | 100 | 100 |
| 0.004 | | | 1.0 | | 1:250 | 100 | 100 |
| 0.004 | | | 0.2 | | 1:50 | 99 | 99 |
| 0.004 | | | 0.04 | | 1:10 | 29 | 18 |
| 0.5 | | | | 10 | 1:20 | 100 | 77 |
| 0.5 | | | | 2 | 1:4 | 100 | 77 |
| 0.5 | | | | 0.4 | 1:0.8 | 100 | 77 |
| 0.1 | | | | 10 | 1:100 | 55 | 36 |
| 0.1 | | | | 2 | 1:20 | 62 | 36 |
| 0.1 | | | | 0.4 | 1:4 | 50 | 36 |

**Table B3: in vitro -Test with Botrytis cinerea**

| (I-655) (ppm) | (5.010) dithianon (ppm) | (15.016) metrafenone (ppm) | (6.002) isotianil (ppm) | Ratio | Efficacy % | Colby expected value % |
|---|---|---|---|---|---|---|
| 0.5 | | | | | 100 | |
| 0.1 | | | | | 58 | |
| 0.020 | | | | | 0 | |
| 0.004 | | | | | 0 | |
| | 20 | | | | 100 | |
| | 4 | | | | 12 | |
| | | 4 | | | 0 | |
| | | 0.8 | | | 0 | |
| | | | 4 | | 0 | |
| | | | 0.8 | | 0 | |
| 0.5 | 20 | | | 1:40 | 100 | 100 |
| 0.5 | 4 | | | 1:8 | 100 | 100 |
| 0.1 | 20 | | | 1:200 | 100 | 100 |
| 0.1 | 4 | | | 1:40 | 100 | 63 |
| 0.020 | 20 | | | 1:1000 | 100 | 100 |
| 0.020 | 4 | | | 1:200 | 21 | 12 |
| 0.004 | 20 | | | 1:5000 | 100 | 100 |
| 0.004 | 4 | | | 1:1000 | 39 | 12 |
| 0.5 | | 4 | | 1:8 | 100 | 96 |
| 0.5 | | 0.8 | | 1:1.6 | 100 | 96 |
| 0.020 | | 4 | | 1:200 | 10 | 5 |
| 0.020 | | 0.8 | | 1:40 | 0 | 5 |
| 0.004 | | 4 | | 1:1000 | 19 | 17 |
| 0.004 | | 0.8 | | 1:200 | 19 | 17 |
| 0.5 | | | 4 | 1:8 | 100 | 84 |
| 0.5 | | | 0.8 | 1:1.6 | 100 | 84 |
| 0.020 | | | 4 | 1:200 | 0 | 0 |
| 0.020 | | | 0.8 | 1:40 | 1 | 0 |

**Table B4: in vitro -Test with Botrytis cinerea**

| (I-655) (ppm) | (17.001) Bacillus subtilis (ppm) | (17.012) Paenibacillus terrae (ppm) | (18.001) FLiPPER (ppm) | Ratio | Efficacy % | Colby expected value % |
|---|---|---|---|---|---|---|
| 0.5 | | | | | 100 | |
| 0.1 | | | | | 58 | |
| 0.020 | | | | | 0 | |
| 0.004 | | | | | 0 | |
| | 200 | | | | 100 | |
| | 40 | | | | 12 | |
| | 8 | | | | 0 | |
| | | 200 | | | 100 | |
| | | 40 | | | 0 | |
| | | 8 | | | 0 | |
| | | | 200 | | 0 | |
| | | | 40 | | 0 | |
| 0.020 | 200 | | | 1:10000 | 21 | 12 |
| 0.020 | 40 | | | 1:2000 | 7 | 2 |
| 0.020 | 8 | | | 1:400 | 0 | 0 |
| 0.004 | 200 | | | 1:50000 | 15 | 12 |
| 0.004 | 40 | | | 1:10000 | 14 | 2 |
| 0.004 | 8 | | | 1:2000 | 0 | 0 |
| 0.5 | | 200 | | 1:400 | 96 | 100 |
| 0.5 | | 40 | | 1:80 | 96 | 84 |
| 0.5 | | 8 | | 1:16 | 100 | 84 |
| 0.1 | | 200 | | 1:2000 | 100 | 100 |
| 0.1 | | 40 | | 1:400 | 31 | 29 |
| 0.5 | | | 200 | 1:400 | 89 | 84 |
| 0.5 | | | 40 | 1:80 | 100 | 84 |
| 0.1 | | | 200 | 1:2000 | 31 | 29 |
| 0.1 | | | 40 | 1:400 | 28 | 29 |
| 0.020 | | | 200 | 1:10000 | 0 | 0 |
| 0.020 | | | 40 | 1:2000 | 0 | 0 |

**Table B5: in vitro -Test with Botrytis cinerea**

| (I-746) (ppm) | (7.005) pyrimethanil (ppm) | (2.002) bixafen (ppm) | (2.005) fluopyram (ppm) | (2.028) inpyrfluxam (ppm) | Ratio | Efficacy % | Colby expected value % |
|---|---|---|---|---|---|---|---|
| 0.5 | | | | | | 100 | |
| 0.1 | | | | | | 38 | |
| 0.020 | | | | | | 0 | |
| 0.004 | | | | | | 0 | |
| | 4 | | | | | 100 | |
| | 0.8 | | | | | 78 | |
| | 0.16 | | | | | 0 | |
| | | 1.0 | | | | 67 | |
| | | 0.2 | | | | 55 | |
| | | 0.04 | | | | 42 | |
| | | | 20 | | | 100 | |
| | | | 4 | | | 64 | |
| | | | 0.8 | | | 66 | |
| | | | 0.16 | | | 6 | |
| | | | | 1.0 | | 63 | |
| | | | | 0.2 | | 60 | |
| | | | | 0.04 | | 48 | |
| | | | | 0.008 | | 0 | |
| 0.5 | 4 | | | | 1:8 | 100 | 100 |
| 0.5 | 0.8 | | | | 1:1.6 | 100 | 96 |
| 0.5 | 0.16 | | | | 1:0.32 | 93 | 81 |
| 0.1 | 4 | | | | 1:40 | 100 | 100 |
| 0.1 | 0.8 | | | | 1:8 | 98 | 85 |
| 0.1 | 0.16 | | | | 1:1.6 | 87 | 31 |
| 0.020 | 4 | | | | 1:200 | 100 | 100 |
| 0.020 | 0.8 | | | | 1:40 | 100 | 81 |
| 0.020 | 0.16 | | | | 1:8 | 67 | 14 |
| 0.5 | | 1.0 | | | 1:2 | 100 | 94 |
| 0.5 | | 0.2 | | | 1:0.4 | 100 | 91 |
| 0.5 | | 0.04 | | | 1:0.08 | 100 | 89 |
| 0.5 | | | 20 | | 1:40 | 100 | 100 |
| 0.5 | | | 4 | | 1:8 | 100 | 93 |
| 0.5 | | | 0.8 | | 1:1.6 | 100 | 93 |
| 0.5 | | | 0.16 | | 1:0.32 | 100 | 82 |
| 0.5 | | | | 1.0 | 1:2 | 100 | 93 |
| 0.5 | | | | 0.2 | 1:0.4 | 100 | 92 |
| 0.5 | | | | 0.04 | 1:0.08 | 99 | 90 |
| 0.5 | | | | 0.008 | 1:0.016 | 100 | 81 |
| 0.020 | | | | 1.0 | 1:50 | 77 | 68 |
| 0.020 | | | | 0.2 | 1:10 | 70 | 66 |
| 0.020 | | | | 0.04 | 1:2 | 50 | 55 |
| 0.020 | | | | 0.008 | 1:0.4 | 12 | 14 |

**Table B6: in vitro -Test with Botrytis cinerea**

| (I-746) (ppm) | (2.038) isoflucypram (ppm) | (3.025) fenpicoxamid (ppm) | (3.020) trifloxy-strobin (ppm) | (1.002) difeno-conazole (ppm) | Ratio | Efficacy % | Colby expected value % |
|---|---|---|---|---|---|---|---|
| 0.5 | | | | | | 100 | |
| 0.1 | | | | | | 38 | |
| 0.020 | | | | | | 0 | |
| 0.004 | | | | | | 0 | |
| | 1.0 | | | | | 83 | |
| | 0.2 | | | | | 63 | |
| | 0.04 | | | | | 43 | |
| | 0.008 | | | | | 0 | |
| | | 5.0 | | | | 34 | |
| | | 1.0 | | | | 0 | |
| | | 0.2 | | | | 13 | |
| | | 0.04 | | | | 0 | |
| | | | 1.0 | | | 14 | |
| | | | 0.2 | | | 3 | |
| | | | 0.04 | | | 0 | |
| | | | 0.008 | | | 0 | |
| | | | | 1.0 | | 0 | |
| | | | | 0.2 | | 0 | |
| | | | | 0.04 | | 0 | |
| 0.5 | 1.0 | | | | 1:2 | 100 | 98 |
| 0.5 | 0.2 | | | | 1:0.4 | 100 | 95 |
| 0.5 | 0.04 | | | | 1:0.08 | 100 | 92 |
| 0.5 | 0.008 | | | | 1:0.016 | 100 | 87 |
| 0.020 | 1.0 | | | | 1:50 | 87 | 83 |
| 0.020 | 0.2 | | | | 1:10 | 72 | 63 |
| 0.020 | 0.04 | | | | 1:2 | 56 | 43 |
| 0.020 | 0.008 | | | | 1:0.4 | 19 | 0 |
| 0.5 | | 5.0 | | | 1:10 | 96 | 91 |
| 0.5 | | 1.0 | | | 1:2 | 100 | 87 |
| 0.5 | | 0.2 | | | 1:0.4 | 100 | 88 |
| 0.5 | | 0.04 | | | 1:0.08 | 100 | 87 |
| 0.5 | | | 1.0 | | 1:2 | 100 | 88 |
| 0.5 | | | 0.2 | | 1:0.4 | 100 | 87 |
| 0.5 | | | 0.04 | | 1:0.08 | 100 | 87 |
| 0.5 | | | 0.008 | | 1:0.016 | 100 | 87 |
| 0.5 | | | | 1.0 | 1:2 | 100 | 87 |
| 0.5 | | | | 0.2 | 1:0.4 | 100 | 87 |
| 0.5 | | | | 0.04 | 1:0.08 | 100 | 87 |
| 0.020 | | | | 1.0 | 1:50 | 15 | 0 |
| 0.020 | | | | 0.2 | 1:10 | 0 | 0 |
| 0.020 | | | | 0.04 | 1:2 | 1 | 0 |
| 0.004 | | | | 1.0 | 1:250 | 5 | 0 |
| 0.004 | | | | 0.2 | 1:50 | 0 | 0 |
| 0.004 | | | | 0.04 | 1:10 | 0 | 0 |

**Table B7: in vitro -Test with Botrytis cinerea**

| (I-746) (ppm) | (1.055) mefentrifluconazole (ppm) | (1.018) prothioconazole (ppm) | (1.021) tebuconazole (ppm) | (1.020) spiroxamine (ppm) | Ratio | Efficacy % | Colby expected value % |
|---|---|---|---|---|---|---|---|
| 0.5 | | | | | | 100 | |
| 0.1 | | | | | | 38 | |
| 0.020 | | | | | | 0 | |
| 0.004 | | | | | | 0 | |
| | 1.0 | | | | | 100 | |
| | 0.2 | | | | | 60 | |
| | 0.04 | | | | | 9 | |
| | | 1.0 | | | | 100 | |
| | | 0.2 | | | | 100 | |
| | | 0.04 | | | | 63 | |
| | | | 1.0 | | | 100 | |
| | | | 0.04 | | | 0 | |
| | | | 0.008 | | | 0 | |
| | | | | 20 | | 15 | |
| | | | | 0.8 | | 0 | |
| | | | | 0.16 | | 1 | |
| 0.1 | 1.0 | | | | 1:10 | 100 | 100 |
| 0.1 | 0.2 | | | | 1:2 | 99 | 69 |
| 0.1 | 0.04 | | | | 1:0.4 | 36 | 30 |
| 0.004 | 1.0 | | | | 1:250 | 99 | 100 |
| 0.004 | 0.2 | | | | 1:50 | 75 | 60 |
| 0.004 | 0.04 | | | | 1:10 | 15 | 9 |
| 0.1 | | 1.0 | | | 1:10 | 100 | 100 |
| 0.1 | | 0.2 | | | 1:2 | 100 | 100 |
| 0.1 | | 0.04 | | | 1:0.4 | 88 | 72 |
| 0.004 | | 1.0 | | | 1:250 | 100 | 100 |
| 0.004 | | 0.2 | | | 1:50 | 100 | 100 |
| 0.004 | | 0.04 | | | 1:10 | 80 | 63 |
| 0.5 | | | 1.0 | | 1:2 | 100 | 100 |
| 0.5 | | | 0.04 | | 1:0.08 | 99 | 88 |
| 0.5 | | | 0.008 | | 1:0.016 | 100 | 88 |
| 0.5 | | | | 20 | 1:40 | 100 | 100 |
| 0.5 | | | | 0.8 | 1:1.6 | 100 | 100 |
| 0.5 | | | | 0.16 | 1:0.32 | 100 | 100 |
| 0.1 | | | | 20 | 1:200 | 46 | 42 |
| 0.1 | | | | 0.8 | 1:8 | 50 | 32 |
| 0.1 | | | | 0.16 | 1:1.6 | 44 | 33 |
| 0.004 | | | | 20 | 1:5000 | 24 | 15 |
| 0.004 | | | | 0.8 | 1:200 | 0 | 0 |
| 0.004 | | | | 0.16 | 1:40 | 0 | 1 |

**Table B8: in vitro -Test with Botrytis cinerea**

| (I-746) (ppm) | (15.064) (ppm) | (5.010) dithianon (ppm) | (5.012) folpet (ppm) | Ratio | Efficacy % | Colby expected value % |
|---|---|---|---|---|---|---|
| 0.5 | | | | | 100 | |
| 0.1 | | | | | 38 | |
| 0.020 | | | | | 0 | |
| 0.004 | | | | | 0 | |
| | 5.0 | | | | 100 | |
| | 1.0 | | | | 100 | |
| | 0.2 | | | | 100 | |
| | 0.04 | | | | 0 | |
| | | 20 | | | 100 | |
| | | 4 | | | 64 | |
| | | | 10 | | 100 | |
| | | | 2 | | 100 | |
| | | | 0.4 | | 0 | |
| | | | 0.08 | | 0 | |
| 0.5 | 0.04 | | | 1:0.08 | 100 | 100 |
| 0.1 | 0.04 | | | 1:0.4 | 66 | 32 |
| 0.020 | 0.04 | | | 1:2 | 18 | 0 |
| 0.004 | 0.04 | | | 1:10 | 21 | 0 |
| 0.5 | | 20 | | 1:40 | 100 | 100 |
| 0.5 | | 4 | | 1:8 | 100 | 100 |
| 0.1 | | 20 | | 1:200 | 100 | 100 |
| 0.1 | | 4 | | 1:40 | 100 | 85 |
| 0.020 | | 20 | | 1:1000 | 100 | 100 |
| 0.020 | | 4 | | 1:200 | 81 | 64 |
| 0.5 | | | 10 | 1:20 | 100 | 100 |
| 0.5 | | | 2 | 1:4 | 100 | 100 |
| 0.5 | | | 0.4 | 1:0.8 | 100 | 99 |
| 0.5 | | | 0.08 | 1:0.16 | 100 | 99 |
| 0.020 | | | 10 | 1:500 | 100 | 100 |
| 0.020 | | | 2 | 1:100 | 100 | 100 |
| 0.020 | | | 0.4 | 1:20 | 4 | 0 |
| 0.020 | | | 0.08 | 1:4 | 27 | 0 |
| 0.004 | | | 10 | 1:2500 | 100 | 100 |
| 0.004 | | | 2 | 1:500 | 100 | 100 |
| 0.004 | | | 0.4 | 1:100 | 3 | 0 |
| 0.004 | | | 0.08 | 1:20 | 24 | 0 |

**Table B9: in vitro -Test with Botrytis cinerea**

| (I-746) (ppm) | (5.013) mancozeb (ppm) | (15.016) metrafenone (ppm) | (17.012) paenibacillus terrae (ppm) | Ratio | Efficacy % | Colby expected value % |
|---|---|---|---|---|---|---|
| 0.5 | | | | | 100 | |
| 0.1 | | | | | 38 | |
| 0.020 | | | | | 0 | |
| 0.004 | | | | | 0 | |
| | 10 | | | | 19 | |
| | 2 | | | | 2 | |
| | 0.4 | | | | 0 | |
| | | 20 | | | 0 | |
| | | 4 | | | 0 | |
| | | 0.8 | | | 0 | |
| | | | 200 | | 100 | |
| | | | 40 | | 0 | |
| | | | 8 | | 1 | |
| | | | 1.6 | | 0 | |
| 0.5 | 10 | | | 1:20 | 100 | 100 |
| 0.5 | 2 | | | 1:4 | 100 | 100 |
| 0.5 | 0.4 | | | 1:0.8 | 100 | 100 |
| 0.1 | 10 | | | 1:100 | 75 | 38 |
| 0.1 | 2 | | | 1:20 | 26 | 24 |
| 0.1 | 0.4 | | | 1:4 | 67 | 23 |
| 0.020 | 10 | | | 20 | 19 | 20 |
| 0.020 | 2 | | | 0 | 2 | 0 |
| 0.020 | 0.4 | | | 11 | 0 | 11 |
| 0.5 | | 20 | | 1:40 | 100 | 100 |
| 0.5 | | 4 | | 1:8 | 100 | 100 |
| 0.5 | | 0.8 | | 1:1.6 | 100 | 100 |
| 0.1 | | 20 | | 1:200 | 21 | 23 |
| 0.1 | | 4 | | 1:40 | 38 | 23 |
| 0.1 | | 0.8 | | 1:8 | 67 | 23 |
| 0.020 | | 20 | | 1:1000 | 0 | 0 |
| 0.020 | | 4 | | 1:200 | 0 | 0 |
| 0.020 | | 0.8 | | 1:40 | 13 | 0 |
| 0.1 | | | 200 | 1:2000 | 100 | 100 |
| 0.1 | | | 40 | 1:400 | 72 | 38 |
| 0.1 | | | 8 | 1:80 | 34 | 38 |
| 0.1 | | | 1.6 | 1:16 | 49 | 38 |
| 0.004 | | | 200 | 1:50000 | 100 | 100 |
| 0.004 | | | 40 | 1:10000 | 9 | 0 |
| 0.004 | | | 8 | 1:2000 | 0 | 1 |
| 0.004 | | | 1.6 | 1:400 | 15 | 0 |

**Table B10: in vitro -Test with Botrytis cinerea**

| (I-749) (ppm) | (7.005) pyrimethanil (ppm) | (2.002) bixafen (ppm) | (2.028) inpyrfluxam (ppm) | Ratio | Efficacy % | Colby expected value % |
|---|---|---|---|---|---|---|
| 0.5 | | | | | 99 | |
| 0.1 | | | | | 45 | |
| 0.020 | | | | | 0 | |
| 0.004 | | | | | 0 | |
| | 20 | | | | 100 | |
| | 0.8 | | | | 100 | |
| | 0.16 | | | | 38 | |
| | | 1.0 | | | 73 | |
| | | 0.2 | | | 67 | |
| | | 0.008 | | | 9 | |
| | | | 1.0 | | 91 | |
| | | | 0.2 | | 66 | |
| | | | 0.04 | | 55 | |
| | | | 0.008 | | 0 | |
| 0.1 | 20 | | | 1:200 | 100 | 100 |
| 0.1 | 0.8 | | | 1:8 | 100 | 100 |
| 0.1 | 0.16 | | | 1:1.6 | 75 | 66 |
| 0.020 | 20 | | | 1:1000 | 100 | 100 |
| 0.020 | 0.8 | | | 1:40 | 100 | 100 |
| 0.020 | 0.16 | | | 1:8 | 78 | 38 |
| 0.004 | 20 | | | 1:5000 | 100 | 100 |
| 0.004 | 0.8 | | | 1:200 | 100 | 100 |
| 0.004 | 0.16 | | | 1:40 | 82 | 38 |
| 0.5 | | 1.0 | | 1:2 | 100 | 100 |
| 0.5 | | 0.2 | | 1:0.4 | 100 | 100 |
| 0.5 | | 0.008 | | 1:0.016 | 100 | 99 |
| 0.020 | | 1.0 | | 1:50 | 81 | 73 |
| 0.020 | | 0.2 | | 1:10 | 71 | 67 |
| 0.020 | | 0.008 | | 1:0.4 | 14 | 9 |
| 0.5 | | | 1.0 | 1:2 | 100 | 100 |
| 0.5 | | | 0.2 | 1:0.4 | 100 | 100 |
| 0.5 | | | 0.04 | 1:0.08 | 100 | 99 |
| 0.5 | | | 0.008 | 1:0.016 | 100 | 99 |
| 0.020 | | | 1.0 | 1:50 | 91 | 91 |
| 0.020 | | | 0.2 | 1:10 | 74 | 66 |
| 0.020 | | | 0.04 | 1:2 | 58 | 55 |
| 0.020 | | | 0.008 | 1:0.4 | 25 | 0 |
| 0.004 | | | 1.0 | 1:250 | 84 | 91 |
| 0.004 | | | 0.2 | 1:50 | 66 | 66 |
| 0.004 | | | 0.04 | 1:10 | 60 | 55 |
| 0.004 | | | 0.008 | 1:2 | 9 | 0 |

**Table B11: in vitro -Test with Botrytis cinerea**

| (I-749) (ppm) | (2.038) isoflucypram (ppm) | (1.055) mefentrifluconazole (ppm) | (1.018) prothioconazole (ppm) | Ratio | Efficacy % | Colby expected value % |
|---|---|---|---|---|---|---|
| 0.5 | | | | | 99 | |
| 0.1 | | | | | 45 | |
| 0.020 | | | | | 0 | |
| 0.004 | | | | | 0 | |
| | 1.0 | | | | 87 | |
| | 0.2 | | | | 75 | |
| | 0.04 | | | | 57 | |
| | 0.008 | | | | 13 | |
| | | 1.0 | | | 100 | |
| | | 0.2 | | | 96 | |
| | | 0.04 | | | 0 | |
| | | 0.008 | | | 0 | |
| | | | 1.0 | | 100 | |
| | | | 0.2 | | 100 | |
| | | | 0.04 | | 43 | |
| | | | 0.008 | | 0 | |
| 0.020 | 1.0 | | | 1:50 | 87 | 87 |
| 0.020 | 0.2 | | | 1:10 | 74 | 75 |
| 0.020 | 0.04 | | | 1:2 | 61 | 58 |
| 0.020 | 0.008 | | | 1:0.4 | 19 | 15 |
| 0.1 | | 1.0 | | 1:10 | 99 | 100 |
| 0.1 | | 0.2 | | 1:2 | 98 | 96 |
| 0.1 | | 0.04 | | 1:0.4 | 25 | 0 |
| 0.1 | | 0.008 | | 1:0.08 | 0 | 0 |
| 0.004 | | 1.0 | | 1:250 | 100 | 100 |
| 0.004 | | 0.2 | | 1:50 | 99 | 96 |
| 0.004 | | 0.04 | | 1:10 | 0 | 0 |
| 0.004 | | 0.008 | | 1:2 | 0 | 0 |
| 0.1 | | | 1.0 | 1:10 | 100 | 100 |
| 0.1 | | | 0.2 | 1:2 | 100 | 100 |
| 0.1 | | | 0.04 | 1:0.4 | 52 | 43 |
| 0.1 | | | 0.008 | 1:0.08 | 0 | 0 |
| 0.004 | | | 1.0 | 1:250 | 100 | 100 |
| 0.004 | | | 0.2 | 1:50 | 100 | 100 |
| 0.004 | | | 0.04 | 1:10 | 60 | 43 |
| 0.004 | | | 0.008 | 1:2 | 1 | 0 |

**Table B12: in vitro -Test with Botrytis cinerea**

| (I-749) (ppm) | (1.021) tebuconazole (ppm) | (5.003) captan (ppm) | (5.012) folpet (ppm) | Ratio | Efficacy % | Colby expected value % |
|---|---|---|---|---|---|---|
| 0.5 | | | | | 99 | |
| 0.1 | | | | | 45 | |
| 0.020 | | | | | 0 | |
| 0.004 | | | | | 0 | |
| | 0.2 | | | | 39 | |
| | 0.04 | | | | 5 | |
| | 0.008 | | | | 2 | |
| | | 20 | | | 100 | |
| | | 4 | | | 20 | |
| | | | 2 | | 100 | |
| | | | 0.4 | | 2 | |
| | | | 0.08 | | 0 | |
| 0.1 | 0.2 | | | 1:2 | 78 | 39 |
| 0.1 | 0.04 | | | 1:0.4 | 0 | 5 |
| 0.1 | 0.008 | | | 1:0.08 | 0 | 2 |
| 0.020 | 0.2 | | | 1:10 | 52 | 39 |
| 0.020 | 0.04 | | | 1:2 | 0 | 5 |
| 0.020 | 0.008 | | | 1:0.4 | 4 | 2 |
| 0.004 | 0.2 | | | 1:50 | 46 | 39 |
| 0.004 | 0.04 | | | 1:10 | 0 | 5 |
| 0.004 | 0.008 | | | 1:2 | 3 | 2 |
| 0.1 | | 20 | | 1:200 | 100 | 100 |
| 0.1 | | 4 | | 1:40 | 100 | 61 |
| 0.020 | | 20 | | 1:1000 | 99 | 100 |
| 0.020 | | 4 | | 1:200 | 88 | 20 |
| 0.004 | | 20 | | 1:5000 | 100 | 100 |
| 0.004 | | 4 | | 1:1000 | 84 | 24 |
| 0.5 | | | 2 | 1:4 | 100 | 100 |
| 0.5 | | | 0.4 | 1:0.8 | 99 | 95 |
| 0.5 | | | 0.08 | 1:0.16 | 99 | 95 |
| 0.020 | | | 2 | 1:100 | 99 | 100 |
| 0.020 | | | 0.4 | 1:20 | 11 | 2 |
| 0.020 | | | 0.08 | 1:4 | 23 | 0 |

**Table B13: in vitro -Test with Botrytis cinerea**

| (I-749) (ppm) | (6.002) isotianil (ppm) | (17.001) Bacillus subtilis (ppm) | (17.012) Paenibacillus terrae (ppm) | (18.001) FLiPPER (ppm) | Ratio | Efficacy % | Colby expected value % |
|---|---|---|---|---|---|---|---|
| 0.5 | | | | | | 99 | |
| 0.1 | | | | | | 45 | |
| 0.020 | | | | | | 0 | |
| 0.004 | | | | | | 0 | |
| | 100 | | | | | 0 | |
| | 20 | | | | | 0 | |
| | 4 | | | | | 0 | |
| | 0.8 | | | | | 11 | |
| | | 8 | | | | 3 | |
| | | 1.6 | | | | 9 | |
| | | | 200 | | | 100 | |
| | | | 40 | | | 29 | |
| | | | 8 | | | 5 | |
| | | | | 40 | | 0 | |
| | | | | 8 | | 0 | |
| | | | | 1.6 | | 0 | |
| 0.5 | 100 | | | | 1:200 | 100 | 95 |
| 0.5 | 20 | | | | 1:40 | 100 | 95 |
| 0.5 | 4 | | | | 1:8 | 100 | 95 |
| 0.5 | 0.8 | | | | 1:1.6 | 100 | 96 |
| 0.5 | | 8 | | | 1:16 | 100 | 95 |
| 0.5 | | 1.6 | | | 1:3.2 | 100 | 95 |
| 0.004 | | 8 | | | 1:2000 | 11 | 3 |
| 0.004 | | 1.6 | | | 1:400 | 0 | 9 |
| 0.5 | | | 200 | | 1:400 | 100 | 100 |
| 0.5 | | | 40 | | 1:80 | 100 | 97 |
| 0.5 | | | 8 | | 1:16 | 100 | 95 |
| 0.1 | | | 200 | | 1:2000 | 100 | 100 |
| 0.1 | | | 40 | | 1:400 | 54 | 42 |
| 0.1 | | | 8 | | 1:80 | 0 | 2 |
| 0.020 | | | 200 | | 1:10000 | 100 | 100 |
| 0.020 | | | 40 | | 1:2000 | 37 | 29 |
| 0.020 | | | 8 | | 1:400 | 4 | 5 |
| 0.5 | | | | 40 | 1:80 | 95 | 95 |
| 0.5 | | | | 8 | 1:16 | 100 | 95 |
| 0.5 | | | | 1.6 | 1:3.2 | 100 | 95 |

**Table C1: in vitro -Test with Cercospora beticola**

| (I-655) (ppm) | (7.005) pyrimethanil (ppm) | (2.005) fluopyram (ppm) | (2.038) isoflucypram (ppm) | Ratio | Efficacy % | Colby expected value % |
|---|---|---|---|---|---|---|
| 0.5 | | | | | 7 | |
| 0.1 | | | | | 0 | |
| 0.020 | | | | | 0 | |
| 0.004 | | | | | 0 | |
| | 20 | | | | 100 | |
| | 4 | | | | 7 | |
| | 0.8 | | | | 0 | |
| | 0.16 | | | | 0 | |
| | | 20 | | | 17 | |
| | | 0.16 | | | 0 | |
| | | | 1.0 | | 35 | |
| | | | 0.008 | | 11 | |
| 0.5 | 20 | | | 1:40 | 100 | 100 |
| 0.5 | 4 | | | 1:8 | 70 | 7 |
| 0.1 | 20 | | | 1:200 | 100 | 100 |
| 0.1 | 4 | | | 1:40 | 55 | 26 |
| 0.020 | 20 | | | 1:1000 | 100 | 100 |
| 0.020 | 4 | | | 1:200 | 35 | 19 |
| 0.004 | 20 | | | 1:5000 | 100 | 100 |
| 0.004 | 4 | | | 1:1000 | 0 | 11 |
| 0.5 | | 20 | | 1:40 | 64 | 17 |
| 0.5 | | 0.16 | | 1:0.32 | 2 | 0 |
| 0.1 | | 20 | | 1:200 | 39 | 34 |
| 0.1 | | 0.16 | | 1:1.6 | 26 | 21 |
| 0.020 | | 20 | | 1:1000 | 35 | 28 |
| 0.020 | | 0.16 | | 1:8 | 0 | 13 |
| 0.004 | | 20 | | 1:5000 | 63 | 27 |
| 0.004 | | 0.16 | | 1:40 | 23 | 11 |
| 0.5 | | | 1.0 | 1:2 | 67 | 35 |
| 0.5 | | | 0.008 | 1:0.016 | 0 | 11 |
| 0.1 | | | 1.0 | 1:10 | 60 | 35 |
| 0.1 | | | 0.008 | 1:0.08 | 13 | 11 |
| 0.020 | | | 1.0 | 1:50 | 46 | 35 |
| 0.020 | | | 0.008 | 1:0.4 | 17 | 11 |
| 0.004 | | | 1.0 | 1:250 | 72 | 42 |
| 0.004 | | | 0.008 | 1:2 | 21 | 21 |

**Table C2: in vitro -Test with Cercospora beticola**

| (I-655) (ppm) | (3.025) fenpicoxamid (ppm) | (1.002) difenoconazole (ppm) | (1.055) mefentrifluconazole (ppm) | Ratio | Efficacy % | Colby expected value % |
|---|---|---|---|---|---|---|
| 0.5 | | | | | 7 | |
| 0.1 | | | | | 0 | |
| 0.020 | | | | | 0 | |
| 0.004 | | | | | 0 | |
| | 5.0 | | | | 86 | |
| | 1.0 | | | | 74 | |
| | 0.2 | | | | 22 | |
| | | 1.0 | | | 100 | |
| | | 0.2 | | | 68 | |
| | | 0.04 | | | 41 | |
| | | | 0.2 | | 100 | |
| | | | 0.04 | | 100 | |
| | | | 0.008 | | 42 | |
| 0.5 | 5.0 | | | 1:10 | 99 | 86 |
| 0.5 | 1.0 | | | 1:2 | 98 | 74 |
| 0.5 | 0.2 | | | 1:0.4 | 84 | 22 |
| 0.1 | 5.0 | | | 1:50 | 100 | 86 |
| 0.1 | 1.0 | | | 1:10 | 78 | 74 |
| 0.1 | 0.2 | | | 1:2 | 30 | 22 |
| 0.5 | | 1.0 | | 1:2 | 100 | 100 |
| 0.5 | | 0.2 | | 1:0.4 | 98 | 68 |
| 0.5 | | 0.04 | | 1:0.08 | 52 | 41 |
| 0.1 | | 1.0 | | 1:10 | 100 | 100 |
| 0.1 | | 0.2 | | 1:2 | 84 | 68 |
| 0.1 | | 0.04 | | 1:0.4 | 70 | 41 |
| 0.020 | | 1.0 | | 1:50 | 100 | 100 |
| 0.020 | | 0.2 | | 1:10 | 74 | 68 |
| 0.020 | | 0.04 | | 1:2 | 40 | 41 |
| 0.5 | | | 0.2 | 1:0.4 | 100 | 100 |
| 0.5 | | | 0.04 | 1:0.08 | 100 | 100 |
| 0.5 | | | 0.008 | 1:0.016 | 86 | 42 |
| 0.1 | | | 0.2 | 1:2 | 100 | 100 |
| 0.1 | | | 0.04 | 1:0.4 | 100 | 100 |
| 0.1 | | | 0.008 | 1:0.08 | 67 | 42 |
| 0.020 | | | 0.2 | 1:10 | 100 | 100 |
| 0.020 | | | 0.04 | 1:2 | 100 | 100 |
| 0.020 | | | 0.008 | 1:0.4 | 55 | 42 |

**Table C3: in vitro -Test with Cercospora beticola**

| (I-655) (ppm) | (1.018) prothioconazole (ppm) | (1.021) tebuconazole (ppm) | (5.003) captan (ppm) | (17.001) Bacillus subtilis (ppm) | Ratio | Efficacy % | Colby expected value % |
|---|---|---|---|---|---|---|---|
| 0.5 | | | | | | 7 | |
| 0.1 | | | | | | 0 | |
| 0.020 | | | | | | 0 | |
| 0.004 | | | | | | 0 | |
| | 0.2 | | | | | 100 | |
| | 0.04 | | | | | 88 | |
| | 0.008 | | | | | 0 | |
| | | 0.2 | | | | 83 | |
| | | 0.04 | | | | 22 | |
| | | 0.008 | | | | 0 | |
| | | | 20 | | | 100 | |
| | | | 4 | | | 73 | |
| | | | 0.8 | | | 0 | |
| | | | 0.16 | | | 5 | |
| | | | | 200 | | 0 | |
| | | | | 40 | | 0 | |
| | | | | 8 | | 19 | |
| 0.5 | 0.2 | | | | 1:0.4 | 100 | 100 |
| 0.5 | 0.04 | | | | 1:0.08 | 100 | 88 |
| 0.5 | 0.008 | | | | 1:0.016 | 29 | 0 |
| 0.1 | 0.2 | | | | 1:2 | 100 | 100 |
| 0.1 | 0.04 | | | | 1:0.4 | 88 | 88 |
| 0.1 | 0.008 | | | | 1:0.08 | 45 | 0 |
| 0.020 | 0.2 | | | | 1:10 | 100 | 100 |
| 0.020 | 0.04 | | | | 1:2 | 89 | 88 |
| 0.020 | 0.008 | | | | 1:0.4 | 0 | 0 |
| 0.004 | 0.2 | | | | 1:50 | 100 | 100 |
| 0.004 | 0.04 | | | | 1:10 | 84 | 88 |
| 0.004 | 0.008 | | | | 1:2 | 38 | 0 |
| 0.5 | | 0.2 | | | 1:0.4 | 86 | 83 |
| 0.5 | | 0.04 | | | 1:0.08 | 29 | 22 |
| 0.5 | | 0.008 | | | 1:0.016 | 5 | 0 |
| 0.1 | | 0.2 | | | 1:2 | 82 | 83 |
| 0.1 | | 0.04 | | | 1:0.4 | 40 | 22 |
| 0.1 | | 0.008 | | | 1:0.08 | 0 | 0 |
| 0.020 | | 0.2 | | | 1:10 | 93 | 83 |
| 0.020 | | 0.04 | | | 1:2 | 27 | 22 |
| 0.020 | | 0.008 | | | 1:0.4 | 0 | 0 |
| 0.5 | | | 20 | | 1:40 | 100 | 100 |
| 0.5 | | | 4 | | 1:8 | 100 | 73 |
| 0.5 | | | 0.8 | | 1:1.6 | 41 | 0 |
| 0.5 | | | 0.16 | | 1:0.32 | 20 | 5 |
| 0.1 | | | 20 | | 1:200 | 100 | 100 |
| 0.1 | | | 4 | | 1:40 | 76 | 73 |
| 0.1 | | | 0.8 | | 1:8 | 58 | 0 |
| 0.1 | | | 0.16 | | 1:1.6 | 52 | 5 |
| 0.020 | | | 20 | | 1:1000 | 100 | 100 |
| 0.020 | | | 4 | | 1:200 | 64 | 73 |
| 0.020 | | | 0.8 | | 1:40 | 25 | 0 |
| 0.020 | | | 0.16 | | 1:8 | 54 | 5 |
| 0.004 | | | 20 | | 1:5000 | 100 | 100 |
| 0.004 | | | 4 | | 1:1000 | 100 | 75 |
| 0.004 | | | 0.8 | | 1:200 | 35 | 6 |
| 0.004 | | | 0.16 | | 1:40 | 41 | 11 |
| 0.5 | | | | 200 | 1:400 | 66 | 0 |
| 0.5 | | | | 40 | 1:80 | 0 | 0 |
| 0.5 | | | | 8 | 1:16 | 23 | 19 |

**Table C4: in vitro -Test with Cercospora beticola**

| (I-746) (ppm) | (2.038) isoflucypram (ppm) | (3.025) fenpicoxamid (ppm) | (3.020) trifloxystrobin (ppm) | Ratio | Efficacy % | Colby expected value % |
|---|---|---|---|---|---|---|
| 0.5 | | | | | 26 | |
| 0.1 | | | | | 4 | |
| 0.020 | | | | | 5 | |
| 0.004 | | | | | 0 | |
| | 1.0 | | | | 39 | |
| | 0.04 | | | | 16 | |
| | | 5.0 | | | 78 | |
| | | 1.0 | | | 58 | |
| | | 0.2 | | | 0 | |
| | | 0.04 | | | 16 | |
| | | | 1.0 | | 100 | |
| | | | 0.2 | | 95 | |
| | | | 0.04 | | 100 | |
| | | | 0.008 | | 98 | |
| 0.5 | 1.0 | | | 1:2 | 70 | 39 |
| 0.5 | 0.04 | | | 1:0.08 | 26 | 16 |
| 0.1 | 1.0 | | | 1:10 | 63 | 46 |
| 0.1 | 0.04 | | | 1:0.4 | 34 | 25 |
| 0.020 | 1.0 | | | 1:50 | 60 | 40 |
| 0.020 | 0.04 | | | 1:2 | 0 | 8 |
| 0.5 | | 5.0 | | 1:10 | 100 | 78 |
| 0.5 | | 1.0 | | 1:2 | 89 | 58 |
| 0.5 | | 0.2 | | 1:0.4 | 25 | 0 |
| 0.5 | | 0.04 | | 1:0.08 | 51 | 16 |
| 0.5 | | | 1.0 | 1:2 | 100 | 100 |
| 0.5 | | | 0.2 | 1:0.4 | 100 | 95 |
| 0.5 | | | 0.04 | 1:0.08 | 100 | 100 |
| 0.5 | | | 0.008 | 1:0.016 | 100 | 98 |
| 0.1 | | | 1.0 | 1:10 | 100 | 100 |
| 0.1 | | | 0.2 | 1:2 | 100 | 96 |
| 0.1 | | | 0.04 | 1:0.4 | 100 | 100 |
| 0.1 | | | 0.008 | 1:0.08 | 97 | 98 |
| 0.020 | | | 1.0 | 1:50 | 99 | 100 |
| 0.020 | | | 0.2 | 1:10 | 100 | 95 |
| 0.020 | | | 0.04 | 1:2 | 100 | 100 |
| 0.020 | | | 0.008 | 1:0.4 | 97 | 98 |
| 0.004 | | | 1.0 | 1:250 | 100 | 100 |
| 0.004 | | | 0.2 | 1:50 | 100 | 96 |
| 0.004 | | | 0.04 | 1:10 | 100 | 100 |
| 0.004 | | | 0.008 | 1:2 | 100 | 99 |

**Table C5: in vitro -Test with Cercospora beticola**

| (I-746) (ppm) | (1.002) difenoconazole (ppm) | (1.055) mefentrifluconazole (ppm) | (1.021) tebuconazole (ppm) | (13.001) fludioxonil (ppm) | Ratio | Efficacy % | Colby expected value % |
|---|---|---|---|---|---|---|---|
| 0.5 | | | | | | 26 | |
| 0.1 | | | | | | 4 | |
| 0.020 | | | | | | 5 | |
| 0.004 | | | | | | 0 | |
| | 1.0 | | | | | 100 | |
| | 0.2 | | | | | 87 | |
| | 0.04 | | | | | 20 | |
| | | 0.2 | | | | 100 | |
| | | 0.04 | | | | 100 | |
| | | 0.008 | | | | 15 | |
| | | | 1.0 | | | 100 | |
| | | | 0.2 | | | 93 | |
| | | | 0.04 | | | 11 | |
| | | | | 5.0 | | 95 | |
| | | | | 1.0 | | 80 | |
| 0.5 | 1.0 | | | | 1:2 | 99 | 100 |
| 0.5 | 0.2 | | | | 1:0.4 | 100 | 87 |
| 0.5 | 0.04 | | | | 1:0.08 | 64 | 20 |
| 0.1 | 1.0 | | | | 1:10 | 99 | 100 |
| 0.1 | 0.2 | | | | 1:2 | 92 | 88 |
| 0.1 | 0.04 | | | | 1:0.4 | 51 | 29 |
| 0.020 | 1.0 | | | | 1:50 | 100 | 100 |
| 0.020 | 0.2 | | | | 1:10 | 89 | 87 |
| 0.020 | 0.04 | | | | 1:2 | 43 | 22 |
| 0.004 | 1.0 | | | | 1:250 | 100 | 100 |
| 0.004 | 0.2 | | | | 1:50 | 89 | 90 |
| 0.004 | 0.04 | | | | 1:10 | 50 | 41 |
| 0.5 | | 0.2 | | | 1:0.4 | 100 | 100 |
| 0.5 | | 0.04 | | | 1:0.08 | 100 | 100 |
| 0.5 | | 0.008 | | | 1:0.016 | 78 | 15 |
| 0.1 | | 0.2 | | | 1:2 | 100 | 100 |
| 0.1 | | 0.04 | | | 1:0.4 | 100 | 100 |
| 0.1 | | 0.008 | | | 1:0.08 | 73 | 32 |
| 0.020 | | 0.2 | | | 1:10 | 100 | 100 |
| 0.020 | | 0.04 | | | 1:2 | 100 | 100 |
| 0.020 | | 0.008 | | | 1:0.4 | 58 | 36 |
| 0.004 | | 0.2 | | | 1:50 | 100 | 100 |
| 0.004 | | 0.04 | | | 1:10 | 100 | 100 |
| 0.004 | | 0.008 | | | 1:2 | 48 | 23 |
| 0.5 | | | 1.0 | | 1:2 | 99 | 100 |
| 0.5 | | | 0.2 | | 1:0.4 | 94 | 93 |
| 0.5 | | | 0.04 | | 1:0.08 | 36 | 11 |
| 0.020 | | | 1.0 | | 1:50 | 100 | 100 |
| 0.020 | | | 0.2 | | 1:10 | 100 | 95 |
| 0.020 | | | 0.04 | | 1:2 | 48 | 33 |
| 0.004 | | | 1.0 | | 1:250 | 100 | 100 |
| 0.004 | | | 0.2 | | 1:50 | 99 | 94 |
| 0.004 | | | 0.04 | | 1:10 | 22 | 19 |
| 0.5 | | | | 5.0 | 1:10 | 96 | 95 |
| 0.5 | | | | 1.0 | 1:2 | 87 | 80 |
| 0.1 | | | | 5.0 | 1:50 | 100 | 95 |
| 0.1 | | | | 1.0 | 1:10 | 95 | 80 |
| 0.020 | | | | 5.0 | 1:250 | 100 | 96 |
| 0.020 | | | | 1.0 | 1:50 | 85 | 83 |
| 0.004 | | | | 5.0 | 1:1250 | 100 | 96 |
| 0.004 | | | | 1.0 | 1:250 | 92 | 84 |

**Table C6: in vitro -Test with Cercospora beticola**

| (I-746) (ppm) | (13.005) quinoxyfen (ppm) | (5.010) dithianon (ppm) | (5.012) folpet (ppm) | Ratio | Efficacy % | Colby expected value % |
|---|---|---|---|---|---|---|
| 0.5 | | | | | 26 | |
| 0.1 | | | | | 4 | |
| 0.020 | | | | | 5 | |
| 0.004 | | | | | 0 | |
| | 10 | | | | 20 | |
| | 0.4 | | | | 2 | |
| | 0.080 | | | | 0 | |
| | | 20 | | | 98 | |
| | | 4 | | | 99 | |
| | | 0.8 | | | 6 | |
| | | 0.16 | | | 0 | |
| | | | 10 | | 100 | |
| | | | 2 | | 100 | |
| | | | 0.4 | | 29 | |
| | | | 0.08 | | 7 | |
| 0.1 | 10 | | | 1:100 | 17 | 23 |
| 0.1 | 0.4 | | | 1:4 | 29 | 6 |
| 0.1 | 0.080 | | | 1:0.8 | 24 | 4 |
| 0.020 | 10 | | | 1:500 | 19 | 24 |
| 0.020 | 0.4 | | | 1:20 | 10 | 7 |
| 0.020 | 0.080 | | | 1:4 | 43 | 5 |
| 0.004 | 10 | | | 1:2500 | 22 | 20 |
| 0.004 | 0.4 | | | 1:100 | 21 | 2 |
| 0.004 | 0.080 | | | 1:20 | 29 | 0 |
| 0.5 | | 20 | | 1:40 | 100 | 99 |
| 0.5 | | 4 | | 1:8 | 100 | 100 |
| 0.5 | | 0.8 | | 1:1.6 | 61 | 31 |
| 0.5 | | 0.16 | | 1:0.32 | 40 | 26 |
| 0.004 | | 20 | | 1:5000 | 99 | 98 |
| 0.004 | | 4 | | 1:1000 | 100 | 99 |
| 0.004 | | 0.8 | | 1:200 | 0 | 6 |
| 0.004 | | 0.16 | | 1:40 | 20 | 0 |
| 0.5 | | | 10 | 1:20 | 99 | 100 |
| 0.5 | | | 2 | 1:4 | 99 | 100 |
| 0.5 | | | 0.4 | 1:0.8 | 56 | 48 |
| 0.004 | | | 10 | 1:2500 | 100 | 100 |
| 0.004 | | | 2 | 1:500 | 100 | 100 |
| 0.004 | | | 0.4 | 1:100 | 25 | 29 |
| 0.004 | | | 0.08 | 1:20 | 26 | 7 |

**Table C7: in vitro -Test with Cercospora beticola**

| (I-746) (ppm) | (5.013) mancozeb (ppm) | (6.002) isotianil (ppm) | Ratio | Efficacy % | Colby expected value % |
|---|---|---|---|---|---|
| 0.5 | | | | 26 | |
| 0.1 | | | | 4 | |
| 0.020 | | | | 5 | |
| 0.004 | | | | 0 | |
| | 10 | | | 100 | |
| | 2 | | | 100 | |
| | 0.4 | | | 0 | |
| | | 100 | | 29 | |
| | | 20 | | 12 | |
| | | 4 | | 17 | |
| | | 0.8 | | 17 | |
| 0.5 | 10 | | 1:20 | 100 | 100 |
| 0.5 | 2 | | 1:4 | 100 | 100 |
| 0.5 | 0.4 | | 1:0.8 | 57 | 26 |
| 0.5 | | 100 | 1:200 | 42 | 29 |
| 0.5 | | 20 | 1:40 | 16 | 12 |
| 0.5 | | 4 | 1:8 | 34 | 17 |
| 0.5 | | 0.8 | 1:1.6 | 14 | 17 |
| 0.020 | | 100 | 1:5000 | 40 | 29 |
| 0.020 | | 20 | 1:1000 | 26 | 12 |
| 0.020 | | 4 | 1:200 | 38 | 17 |
| 0.020 | | 0.8 | 1:40 | 9 | 17 |

**Table C8: in vitro -Test with Cercospora beticola**

| (I-749) (ppm) | (7.005) pyrimethanil (ppm) | (3.025) fenpicoxamid (ppm) | (1.002) difenoconazole (ppm) | Ratio | Efficacy % | Colby expected value % |
|---|---|---|---|---|---|---|
| 0.5 | | | | | 22 | |
| 0.1 | | | | | 8 | |
| 0.020 | | | | | 0 | |
| 0.004 | | | | | 0 | |
| | 20 | | | | 100 | |
| | 4 | | | | 55 | |
| | 0.8 | | | | 0 | |
| | | 1.0 | | | 42 | |
| | | 0.2 | | | 2 | |
| | | 0.04 | | | 0 | |
| | | | 0.2 | | 82 | |
| | | | 0.04 | | 19 | |
| | | | 0.008 | | 9 | |
| 0.1 | 20 | | | 1:200 | 100 | 100 |
| 0.1 | 4 | | | 1:40 | 100 | 55 |
| 0.1 | 0.8 | | | 1:8 | 0 | 0 |
| 0.020 | 20 | | | 1:1000 | 100 | 100 |
| 0.020 | 4 | | | 1:200 | 100 | 55 |
| 0.020 | 0.8 | | | 1:40 | 0 | 0 |
| 0.004 | 20 | | | 1:5000 | 100 | 100 |
| 0.004 | 4 | | | 1:1000 | 100 | 55 |
| 0.004 | 0.8 | | | 1:200 | 7 | 0 |
| 0.5 | | 1.0 | | 1:2 | 86 | 42 |
| 0.5 | | 0.2 | | 1:0.4 | 73 | 3 |
| 0.5 | | 0.04 | | 1:0.08 | 38 | 1 |
| 0.1 | | 1.0 | | 1:10 | 65 | 42 |
| 0.1 | | 0.2 | | 1:2 | 31 | 2 |
| 0.1 | | 0.04 | | 1:0.4 | 28 | 0 |
| 0.004 | | 1.0 | | 1:250 | 75 | 42 |
| 0.004 | | 0.2 | | 1:50 | 0 | 2 |
| 0.004 | | 0.04 | | 1:10 | 15 | 0 |
| 0.5 | | | 0.2 | 1:0.4 | 99 | 82 |
| 0.5 | | | 0.04 | 1:0.08 | 75 | 19 |
| 0.5 | | | 0.008 | 1:0.016 | 27 | 9 |
| 0.1 | | | 0.2 | 1:2 | 91 | 82 |
| 0.1 | | | 0.04 | 1:0.4 | 69 | 19 |
| 0.1 | | | 0.008 | 1:0.08 | 2 | 9 |
| 0.004 | | | 0.2 | 1:50 | 94 | 82 |
| 0.004 | | | 0.04 | 1:10 | 34 | 19 |
| 0.004 | | | 0.008 | 1:2 | 12 | 9 |

**Table C9: in vitro -Test with Cercospora beticola**

| (I-749) (ppm) | (1.055) mefentrifluconazole (ppm) | (1.021) tebuconazole (ppm) | (15.064) (ppm) | Ratio | Efficacy % | Colby expected value % |
|---|---|---|---|---|---|---|
| 0.5 | | | | | 22 | |
| 0.1 | | | | | 8 | |
| 0.020 | | | | | 0 | |
| 0.004 | | | | | 0 | |
| | 0.2 | | | | 100 | |
| | 0.04 | | | | 100 | |
| | 0.008 | | | | 72 | |
| | | 1.0 | | | 100 | |
| | | 0.2 | | | 96 | |
| | | 0.04 | | | 19 | |
| | | 0.008 | | | 0 | |
| | | | 10 | | 14 | |
| | | | 0.4 | | 0 | |
| | | | 0.080 | | 0 | |
| 0.5 | 0.2 | | | 1:0.4 | 100 | 100 |
| 0.5 | 0.04 | | | 1:0.08 | 100 | 100 |
| 0.5 | 0.008 | | | 1:0.016 | 96 | 78 |
| 0.1 | 0.2 | | | 1:2 | 100 | 100 |
| 0.1 | 0.04 | | | 1:0.4 | 99 | 100 |
| 0.1 | 0.008 | | | 1:0.08 | 96 | 74 |
| 0.5 | | 1.0 | | 1:2 | 99 | 100 |
| 0.5 | | 0.2 | | 1:0.4 | 96 | 97 |
| 0.5 | | 0.008 | | 1:0.016 | 54 | 22 |
| 0.020 | | 1.0 | | 1:50 | 100 | 100 |
| 0.020 | | 0.2 | | 1:10 | 98 | 96 |
| 0.020 | | 0.008 | | 1:0.4 | 0 | 0 |
| 0.004 | | 1.0 | | 1:250 | 100 | 100 |
| 0.004 | | 0.2 | | 1:50 | 99 | 96 |
| 0.004 | | 0.04 | | 1:10 | 44 | 19 |
| 0.004 | | 0.008 | | 1:2 | 0 | 0 |
| 0.1 | | | 10 | 1:100 | 53 | 14 |
| 0.1 | | | 0.4 | 1:4 | 20 | 0 |
| 0.1 | | | 0.080 | 1:0.8 | 25 | 0 |
| 0.004 | | | 10 | 1:2500 | 54 | 14 |
| 0.004 | | | 0.4 | 1:100 | 0 | 0 |
| 0.004 | | | 0.080 | 1:20 | 27 | 0 |

**Table C10: in vitro -Test with Cercospora beticola**

| (I-749) (ppm) | (13.001) fludioxonil (ppm) | (5.010) dithianon (ppm) | (5.012) folpet (ppm) | Ratio | Efficacy % | Colby expected value % |
|---|---|---|---|---|---|---|
| 0.5 | | | | | 22 | |
| 0.1 | | | | | 8 | |
| 0.020 | | | | | 0 | |
| 0.004 | | | | | 0 | |
| | 5.0 | | | | 93 | |
| | 1.0 | | | | 59 | |
| | | 20 | | | 100 | |
| | | 4 | | | 100 | |
| | | 0.8 | | | 0 | |
| | | | 10 | | 100 | |
| | | | 2 | | 100 | |
| | | | 0.4 | | 0 | |
| 0.5 | 5.0 | | | 1:10 | 100 | 95 |
| 0.5 | 1.0 | | | 1:2 | 87 | 67 |
| 0.1 | 5.0 | | | 1:50 | 98 | 93 |
| 0.1 | 1.0 | | | 1:10 | 100 | 59 |
| 0.020 | 5.0 | | | 1:250 | 100 | 93 |
| 0.020 | 1.0 | | | 1:50 | 78 | 59 |
| 0.004 | 5.0 | | | 1:1250 | 90 | 93 |
| 0.004 | 1.0 | | | 1:250 | 61 | 59 |
| 0.5 | | 20 | | 1:40 | 100 | 100 |
| 0.5 | | 4 | | 1:8 | 100 | 100 |
| 0.5 | | 0.8 | | 1:1.6 | 74 | 0 |
| 0.1 | | 20 | | 1:200 | 100 | 100 |
| 0.1 | | 4 | | 1:40 | 100 | 100 |
| 0.1 | | 0.8 | | 1:8 | 17 | 0 |
| 0.020 | | 20 | | 1:1000 | 99 | 100 |
| 0.020 | | 4 | | 1:200 | 100 | 100 |
| 0.020 | | 0.8 | | 1:40 | 0 | 0 |
| 0.5 | | | 10 | 1:20 | 100 | 100 |
| 0.5 | | | 2 | 1:4 | 100 | 100 |
| 0.5 | | | 0.4 | 1:0.8 | 45 | 0 |
| 0.1 | | | 10 | 1:100 | 100 | 100 |
| 0.1 | | | 2 | 1:20 | 99 | 100 |
| 0.1 | | | 0.4 | 1:4 | 27 | 0 |
| 0.020 | | | 10 | 1:500 | 100 | 100 |
| 0.020 | | | 2 | 1:100 | 100 | 100 |
| 0.020 | | | 0.4 | 1:20 | 0 | 0 |

**Table C11: in vitro -Test with Cercospora beticola**

| (I-749) (ppm) | (5.013) mancozeb (ppm) | (5.018) propineb (ppm) | (15.012) fosetylaluminium (ppm) | (15.016) metrafenone (ppm) | (17.012) Paenibacillus terrae (ppm) | Ratio | Efficacy % | Colby expected value % |
|---|---|---|---|---|---|---|---|---|
| 0.5 | | | | | | | 22 | |
| 0.1 | | | | | | | 8 | |
| 0.020 | | | | | | | 0 | |
| 0.004 | | | | | | | 0 | |
| | 10 | | | | | | 100 | |
| | 2 | | | | | | 94 | |
| | 0.4 | | | | | | 20 | |
| | 0.080 | | | | | | 13 | |
| | | 100 | | | | | 99 | |
| | | 20 | | | | | 100 | |
| | | 4 | | | | | 100 | |
| | | 0.8 | | | | | 5 | |
| | | | 100 | | | | 15 | |
| | | | 20 | | | | 4 | |
| | | | 4 | | | | 0 | |
| | | | 0.8 | | | | 0 | |
| | | | | 4 | | | 13 | |
| | | | | 0.8 | | | 0 | |
| | | | | 0.16 | | | 0 | |
| | | | | | 200 | | 100 | |
| | | | | | 40 | | 43 | |
| | | | | | 8 | | 0 | |
| 0.5 | 10 | | | | | 1:20 | 100 | 100 |
| 0.5 | 2 | | | | | 1:4 | 100 | 95 |
| 0.5 | 0.4 | | | | | 1:0.8 | 80 | 25 |
| 0.5 | 0.080 | | | | | 1:0.16 | 23 | 19 |
| 0.5 | | 100 | | | | 1:200 | 98 | 99 |
| 0.5 | | 20 | | | | 1:40 | 100 | 100 |
| 0.5 | | 4 | | | | 1:8 | 100 | 100 |
| 0.5 | | 0.8 | | | | 1:1.6 | 97 | 12 |
| 0.020 | | 100 | | | | 1:5000 | 100 | 99 |
| 0.020 | | 20 | | | | 1:1000 | 100 | 100 |
| 0.020 | | 4 | | | | 1:200 | 100 | 100 |
| 0.020 | | 0.8 | | | | 1:40 | 11 | 5 |
| 0.1 | | | 100 | | | 1:1000 | 53 | 15 |
| 0.1 | | | 20 | | | 1:200 | 8 | 4 |
| 0.1 | | | 4 | | | 1:40 | 0 | 0 |
| 0.1 | | | 0.8 | | | 1:8 | 0 | 0 |
| 0.020 | | | 100 | | | 1:5000 | 22 | 15 |
| 0.020 | | | 20 | | | 1:1000 | 16 | 4 |
| 0.020 | | | 4 | | | 1:200 | 0 | 0 |
| 0.020 | | | 0.8 | | | 1:40 | 26 | 0 |
| 0.5 | | | | 4 | | 1:8 | 23 | 19 |
| 0.5 | | | | 0.8 | | 1:1.6 | 13 | 7 |
| 0.5 | | | | 0.16 | | 1:0.32 | 0 | 7 |
| 0.1 | | | | 4 | | 1:40 | 27 | 13 |
| 0.1 | | | | 0.8 | | 1:8 | 51 | 0 |
| 0.1 | | | | 0.16 | | 1:1.6 | 15 | 0 |
| 0.004 | | | | | 200 | 1:50000 | 100 | 100 |
| 0.004 | | | | | 40 | 1:10000 | 71 | 47 |
| 0.004 | | | | | 8 | 1:2000 | 2 | 6 |

**Table D1: in vitro -Test with Colletotrichum lindemuthianum**

| (I-655) (ppm) | (2.005) fluopyram (ppm) | (2.038) isoflucypram (ppm) | (3.020) trifloxystrobin (ppm) | (1.002) difenoconazole (ppm) | Ratio | Efficacy % | Colby expected value % |
|---|---|---|---|---|---|---|---|
| 0.5 | | | | | | 100 | |
| 0.1 | | | | | | 98 | |
| 0.020 | | | | | | 20 | |
| 0.004 | | | | | | 0 | |
| | 20 | | | | | 19 | |
| | 4 | | | | | 7 | |
| | 0.8 | | | | | 0 | |
| | 0.16 | | | | | 0 | |
| | | 1.0 | | | | 5 | |
| | | 0.2 | | | | 20 | |
| | | 0.04 | | | | 11 | |
| | | 0.008 | | | | 15 | |
| | | | 1.0 | | | 79 | |
| | | | 0.2 | | | 78 | |
| | | | 0.04 | | | 56 | |
| | | | | 1.0 | | 13 | |
| | | | | 0.2 | | 0 | |
| | | | | 0.04 | | 13 | |
| | | | | 0.008 | | 2 | |
| 0.020 | 20 | | | | 1:1000 | 51 | 52 |
| 0.020 | 4 | | | | 1:200 | 47 | 45 |
| 0.020 | 0.8 | | | | 1:40 | 44 | 41 |
| 0.020 | 0.16 | | | | 1:8 | 61 | 40 |
| 0.1 | | 1.0 | | | 1:10 | 100 | 85 |
| 0.1 | | 0.2 | | | 1:2 | 100 | 88 |
| 0.1 | | 0.04 | | | 1:0.4 | 91 | 86 |
| 0.1 | | 0.008 | | | 1:0.08 | 97 | 87 |
| 0.1 | | | 1.0 | | 1:10 | 100 | 97 |
| 0.1 | | | 0.2 | | 1:2 | 96 | 97 |
| 0.1 | | | 0.04 | | 1:0.4 | 96 | 93 |
| 0.020 | | | 1.0 | | 1:50 | 88 | 87 |
| 0.020 | | | 0.2 | | 1:10 | 82 | 86 |
| 0.020 | | | 0.04 | | 1:2 | 74 | 72 |
| 0.004 | | | 1.0 | | 1:250 | 83 | 83 |
| 0.004 | | | 0.2 | | 1:50 | 82 | 82 |
| 0.004 | | | 0.04 | | 1:10 | 72 | 63 |
| 0.1 | | | | 1.0 | 1:10 | 99 | 87 |
| 0.1 | | | | 0.2 | 1:2 | 92 | 85 |
| 0.1 | | | | 0.04 | 1:0.4 | 84 | 87 |
| 0.1 | | | | 0.008 | 1:0.08 | 95 | 85 |

**Table D2: in vitro -Test with Colletotrichum lindemuthianum**

| (I-655) (ppm) | (1.018) prothioconazole (ppm) | (13.001) fludioxonil (ppm) | (5.003) captan (ppm) | (15.012) fosetylaluminium (ppm) | Ratio | Efficacy % | Colby expected value % |
|---|---|---|---|---|---|---|---|
| 0.5 | | | | | | 100 | |
| 0.1 | | | | | | 98 | |
| 0.020 | | | | | | 20 | |
| 0.004 | | | | | | 0 | |
| | 1.0 | | | | | 100 | |
| | 0.2 | | | | | 73 | |
| | | 1.0 | | | | 81 | |
| | | 0.2 | | | | 60 | |
| | | 0.04 | | | | 8 | |
| | | | 20 | | | 100 | |
| | | | 4 | | | 52 | |
| | | | | 100 | | 53 | |
| | | | | 20 | | 0 | |
| | | | | 4 | | 7 | |
| | | | | 0.8 | | 0 | |
| 0.5 | 1.0 | | | | 1:2 | 100 | 100 |
| 0.5 | 0.2 | | | | 1:0.4 | 100 | 100 |
| 0.1 | 1.0 | | | | 1:10 | 100 | 100 |
| 0.1 | 0.2 | | | | 1:2 | 100 | 100 |
| 0.020 | 1.0 | | | | 1:50 | 100 | 100 |
| 0.020 | 0.2 | | | | 1:10 | 95 | 78 |
| 0.004 | 1.0 | | | | 1:250 | 99 | 100 |
| 0.004 | 0.2 | | | | 1:50 | 80 | 73 |
| 0.020 | | 1.0 | | | 1:50 | 88 | 84 |
| 0.020 | | 0.2 | | | 1:10 | 78 | 67 |
| 0.020 | | 0.04 | | | 1:2 | 38 | 23 |
| 0.004 | | 1.0 | | | 1:250 | 88 | 82 |
| 0.004 | | 0.2 | | | 1:50 | 68 | 63 |
| 0.004 | | 0.04 | | | 1:10 | 0 | 14 |
| 0.1 | | | 20 | | 1:200 | 100 | 100 |
| 0.1 | | | 4 | | 1:40 | 100 | 98 |
| 0.020 | | | 20 | | 1:1000 | 100 | 100 |
| 0.020 | | | 4 | | 1:200 | 100 | 63 |
| 0.004 | | | 20 | | 1:5000 | 100 | 100 |
| 0.004 | | | 4 | | 1:1000 | 82 | 52 |
| 0.020 | | | | 100 | 1:5000 | 61 | 61 |
| 0.020 | | | | 20 | 1:1000 | 35 | 17 |
| 0.020 | | | | 4 | 1:200 | 18 | 23 |
| 0.020 | | | | 0.8 | 1:40 | 47 | 17 |
| 0.004 | | | | 100 | 1:25000 | 64 | 53 |
| 0.004 | | | | 20 | 1:5000 | 8 | 0 |
| 0.004 | | | | 4 | 1:1000 | 2 | 7 |
| 0.004 | | | | 0.8 | 1:200 | 0 | 0 |

**Table D3: in vitro -Test with Colletotrichum lindemuthianum**

| (I-655) (ppm) | (15.016) metrafenone (ppm) | (17.012) Paeni-bacillus terrae (ppm) | (18.001) FLiPPER (ppm) | Ratio | Efficacy % | Colby expected value % |
|---|---|---|---|---|---|---|
| 0.5 | | | | | 100 | |
| 0.1 | | | | | 98 | |
| 0.020 | | | | | 20 | |
| 0.004 | | | | | 0 | |
| | 20 | | | | 10 | |
| | 4 | | | | 15 | |
| | | 200 | | | 100 | |
| | | 40 | | | 26 | |
| | | | 200 | | 0 | |
| | | | 40 | | 3 | |
| 0.5 | 20 | | | 1:40 | 100 | 100 |
| 0.1 | 20 | | | 1:200 | 98 | 100 |
| 0.020 | 20 | | | 1:1000 | 44 | 25 |
| 0.004 | 20 | | | 1:5000 | 19 | 10 |
| 0.5 | | 200 | | 1:400 | 100 | 100 |
| 0.5 | | 40 | | 1:80 | 95 | 100 |
| 0.020 | | 200 | | 1:10000 | 100 | 100 |
| 0.020 | | 40 | | 1:2000 | 44 | 41 |
| 0.004 | | 200 | | 1:50000 | 100 | 100 |
| 0.004 | | 40 | | 1:10000 | 47 | 41 |
| 0.1 | | | 200 | 1:400 | 98 | 100 |
| 0.1 | | | 40 | 1:80 | 96 | 100 |
| 0.020 | | | 200 | 1:10000 | 33 | 20 |
| 0.020 | | | 40 | 1:2000 | 48 | 23 |

**Table D4: in vitro -Test with Colletotrichum lindemuthianum**

| (I-746) (ppm) | (2.005) fluopyram (ppm) | (3.020) trifloxystrobin (ppm) | (1.018) prothioconazole (ppm) | (1.021) tebuconazo le (ppm) | Ratio | Efficacy % | Colby expected value % |
|---|---|---|---|---|---|---|---|
| 0.5 | | | | | | 100 | |
| 0.1 | | | | | | 100 | |
| 0.020 | | | | | | 14 | |
| 0.004 | | | | | | 0 | |

| (I-746) (ppm) | (2.005) fluopyram (ppm) | (3.020) trifloxystrobin (ppm) | (1.018) prothioconazole (ppm) | (1.021) tebuconazole (ppm) | Ratio | Efficacy % | Colby expected value % |
|---|---|---|---|---|---|---|---|
| | 20 | | | | | 23 | |
| | 4 | | | | | 7 | |
| | 0.8 | | | | | 14 | |
| | 0.16 | | | | | 18 | |
| | | 1.0 | | | | 82 | |
| | | 0.2 | | | | 88 | |
| | | 0.04 | | | | 69 | |
| | | 0.008 | | | | 27 | |
| | | | 1.0 | | | 100 | |
| | | | 0.2 | | | 59 | |
| | | | 0.04 | | | 10 | |
| | | | | 1.0 | | 28 | |
| | | | | 0.2 | | 0 | |
| | | | | 0.04 | | 0 | |
| | | | | 0.008 | | 0 | |
| 0.020 | 20 | | | | 1:1000 | 70 | 48 |
| 0.020 | 4 | | | | 1:200 | 47 | 38 |
| 0.020 | 0.8 | | | | 1:40 | 44 | 42 |
| 0.020 | 0.16 | | | | 1:8 | 55 | 44 |
| 0.020 | | 1.0 | | | 1:50 | 90 | 85 |
| 0.020 | | 0.2 | | | 1:10 | 84 | 90 |
| 0.020 | | 0.04 | | | 1:2 | 84 | 74 |
| 0.020 | | 0.008 | | | 1:0.4 | 63 | 40 |
| 0.1 | | | 1.0 | | 1:10 | 100 | 100 |
| 0.1 | | | 0.2 | | 1:2 | 100 | 100 |
| 0.1 | | | 0.04 | | 1:0.4 | 98 | 100 |
| 0.020 | | | 1.0 | | 1:50 | 100 | 100 |
| 0.020 | | | 0.2 | | 1:10 | 73 | 65 |
| 0.020 | | | 0.04 | | 1:2 | 16 | 23 |
| 0.004 | | | 1.0 | | 1:250 | 100 | 100 |
| 0.004 | | | 0.2 | | 1:50 | 74 | 59 |
| 0.004 | | | 0.04 | | 1:10 | 14 | 10 |
| 0.020 | | | | 1.0 | 1:50 | 63 | 38 |
| 0.020 | | | | 0.2 | 1:10 | 30 | 14 |
| 0.020 | | | | 0.04 | 1:2 | 42 | 14 |
| 0.020 | | | | 0.008 | 1:0.4 | 45 | 14 |
| 0.004 | | | | 1.0 | 1:250 | 29 | 28 |
| 0.004 | | | | 0.2 | 1:50 | 0 | 0 |
| 0.004 | | | | 0.04 | 1:10 | 5 | 0 |
| 0.004 | | | | 0.008 | 1:2 | 17 | 0 |

**Table D5: in vitro -Test with Colletotrichum lindemuthianum**

| (I-746) (ppm) | (13.001) fludioxonil (ppm) | (5.013) mancozeb (ppm) | (15.012) fosetylaluminium (ppm) | Ratio | Efficacy % | Colby expected value % |
|---|---|---|---|---|---|---|
| 0.5 | | | | | 100 | |
| 0.1 | | | | | 100 | |
| 0.020 | | | | | 14 | |
| 0.004 | | | | | 0 | |
| | 5.0 | | | | 44 | |
| | 1.0 | | | | 81 | |
| | 0.2 | | | | 68 | |
| | | 10 | | | 100 | |
| | | 2 | | | 0 | |
| | | 0.4 | | | 0 | |
| | | 0.080 | | | 4 | |
| | | | 100 | | 70 | |
| | | | 20 | | 22 | |
| | | | 4 | | 0 | |
| 0.020 | 5.0 | | | 1:250 | 83 | 54 |
| 0.020 | 1.0 | | | 1:50 | 82 | 84 |
| 0.020 | 0.2 | | | 1:10 | 76 | 73 |
| 0.004 | 5.0 | | | 1:125 | 79 | 45 |
| 0.004 | 1.0 | | | 1:2500 | 85 | 81 |
| 0.004 | 0.2 | | | 1:50 | 81 | 68 |
| 0.1 | | 10 | | 1:100 | 100 | 100 |
| 0.1 | | 2 | | 1:20 | 100 | 100 |
| 0.1 | | 0.4 | | 1:4 | 99 | 100 |
| 0.1 | | 0.080 | | 1:0.8 | 100 | 100 |
| 0.020 | | 10 | | 1:500 | 100 | 100 |
| 0.020 | | 2 | | 1:100 | 42 | 20 |
| 0.020 | | 0.4 | | 1:20 | 24 | 20 |
| 0.020 | | 0.080 | | 1:4 | 21 | 24 |
| 0.004 | | 10 | | 1:2500 | 100 | 100 |
| 0.004 | | 2 | | 1:500 | 0 | 0 |
| 0.004 | | 0.4 | | 1:100 | 0 | 0 |
| 0.004 | | 0.080 | | 1:20 | 13 | 4 |
| 0.5 | | | 100 | 1:200 | 98 | 100 |
| 0.5 | | | 20 | 1:40 | 99 | 100 |
| 0.5 | | | 4 | 1:8 | 100 | 100 |
| 0.020 | | | 100 | 1:5000 | 74 | 76 |
| 0.020 | | | 20 | 1:1000 | 49 | 37 |
| 0.020 | | | 4 | 1:200 | 38 | 20 |

**Table D6: in vitro -Test with Colletotrichum lindemuthianum**

| (I-746) (ppm) | (6.002) isotianil (ppm) | (17.001) Bacillus subtilis (ppm) | (17.012) Paenibacillus terrae (ppm) | (18.001) FLiPPER (ppm) | Ratio | Efficacy % | Colby expected value % |
|---|---|---|---|---|---|---|---|
| 0.5 | | | | | | 100 | |
| 0.1 | | | | | | 100 | |
| 0.020 | | | | | | 14 | |
| 0.004 | | | | | | 0 | |
| | 100 | | | | | 17 | |
| | 20 | | | | | 0 | |
| | 4 | | | | | 19 | |
| | 0.8 | | | | | 7 | |
| | | 200 | | | | 0 | |
| | | 40 | | | | 0 | |
| | | 8 | | | | 0 | |
| | | 1.6 | | | | 0 | |
| | | | 200 | | | 99 | |
| | | | 40 | | | 30 | |
| | | | 8 | | | 31 | |
| | | | 1.6 | | | 3 | |
| | | | | 200 | | 0 | |
| | | | | 40 | | 11 | |
| | | | | 8 | | 36 | |
| | | | | 1.6 | | 5 | |
| 0.1 | 100 | | | | 1:1000 | 100 | 100 |
| 0.1 | 20 | | | | 1:200 | 100 | 100 |
| 0.1 | 4 | | | | 1:40 | 100 | 100 |
| 0.1 | 0.8 | | | | 1:8 | 100 | 100 |
| 0.020 | 100 | | | | 1:5000 | 32 | 30 |
| 0.020 | 20 | | | | 1:1000 | 23 | 17 |
| 0.020 | 4 | | | | 1:200 | 29 | 32 |
| 0.020 | 0.8 | | | | 1:40 | 49 | 23 |
| 0.004 | 100 | | | | 1:25000 | 20 | 17 |
| 0.004 | 20 | | | | 1:5000 | 14 | 0 |
| 0.004 | 4 | | | | 1:1000 | 20 | 19 |
| 0.004 | 0.8 | | | | 1:200 | 19 | 7 |
| 0.1 | | 200 | | | 1:2000 | 98 | 100 |
| 0.1 | | 40 | | | 1:400 | 100 | 100 |
| 0.1 | | 8 | | | 1:80 | 100 | 100 |
| 0.1 | | 1.6 | | | 1:16 | 100 | 100 |
| 0.020 | | 200 | | | 1:10000 | 78 | 17 |
| 0.020 | | 40 | | | 1:2000 | 40 | 17 |
| 0.020 | | 8 | | | 1:400 | 31 | 17 |
| 0.020 | | 1.6 | | | 1:80 | 38 | 17 |
| 0.004 | | 200 | | | 1:50000 | 20 | 0 |
| 0.004 | | 40 | | | 1:10000 | 6 | 0 |
| 0.004 | | 8 | | | 1:2000 | 0 | 0 |
| 0.004 | | 1.6 | | | 1:400 | 18 | 0 |
| 0.5 | | | 200 | | 1:400 | 100 | 100 |
| 0.5 | | | 40 | | 1:80 | 99 | 100 |
| 0.5 | | | 8 | | 1:16 | 99 | 100 |
| 0.5 | | | 1.6 | | 1:3.2 | 100 | 100 |
| 0.020 | | | 200 | | 1:10000 | 100 | 99 |
| 0.020 | | | 40 | | 1:2000 | 44 | 42 |
| 0.020 | | | 8 | | 1:400 | 41 | 42 |
| 0.020 | | | 1.6 | | 1:80 | 47 | 19 |
| 0.5 | | | | 200 | 1:400 | 99 | 100 |
| 0.5 | | | | 40 | 1:80 | 100 | 100 |
| 0.5 | | | | 8 | 1:16 | 99 | 100 |
| 0.5 | | | | 1.6 | 1:3.2 | 98 | 100 |
| 0.020 | | | | 200 | 1:10000 | 26 | 17 |
| 0.020 | | | | 40 | 1:2000 | 31 | 26 |
| 0.020 | | | | 8 | 1:400 | 57 | 47 |
| 0.020 | | | | 1.6 | 1:80 | 50 | 20 |

**Table D7: in vitro -Test with Colletotrichum lindemuthianum**

| (I-749) (ppm) | (2.038) isoflucypram (ppm) | (3.020) trifloxystrobin (ppm) | (1.018) prothioconazole (ppm) | Ratio | Efficacy % | Colby expected value % |
|---|---|---|---|---|---|---|
| 0.5 | | | | | 100 | |
| 0.1 | | | | | 100 | |
| 0.020 | | | | | 19 | |
| 0.004 | | | | | 1 | |
| | 0.2 | | | | 5 | |
| | 0.04 | | | | 0 | |
| | 0.008 | | | | 8 | |
| | | 1.0 | | | 80 | |
| | | 0.2 | | | 77 | |
| | | 0.04 | | | 49 | |
| | | 0.008 | | | 25 | |
| | | | 1.0 | | 100 | |
| | | | 0.2 | | 55 | |
| | | | 0.04 | | 0 | |
| | | | 0.008 | | 0 | |
| 0.5 | 0.2 | | | 1:0.4 | 100 | 100 |
| 0.5 | 0.04 | | | 1:0.08 | 100 | 100 |
| 0.5 | 0.008 | | | 1:0.016 | 100 | 100 |
| 0.020 | 0.2 | | | 1:10 | 38 | 23 |
| 0.020 | 0.04 | | | 1:2 | 26 | 19 |
| 0.020 | 0.008 | | | 1:0.4 | 30 | 25 |
| 0.5 | | 1.0 | | 1:2 | 99 | 100 |
| 0.5 | | 0.2 | | 1:0.4 | 100 | 100 |
| 0.5 | | 0.04 | | 1:0.08 | 100 | 100 |
| 0.5 | | 0.008 | | 1:0.016 | 99 | 100 |
| 0.020 | | 1.0 | | 1:50 | 90 | 84 |
| 0.020 | | 0.2 | | 1:10 | 88 | 82 |
| 0.020 | | 0.04 | | 1:2 | 75 | 58 |
| 0.020 | | 0.008 | | 1:0.4 | 46 | 40 |
| 0.004 | | 1.0 | | 1:250 | 86 | 81 |
| 0.004 | | 0.2 | | 1:50 | 87 | 78 |
| 0.004 | | 0.04 | | 1:10 | 71 | 49 |
| 0.004 | | 0.008 | | 1:2 | 41 | 26 |
| 0.5 | | | 1.0 | 1:2 | 100 | 100 |
| 0.5 | | | 0.2 | 1:0.4 | 100 | 100 |
| 0.5 | | | 0.04 | 1:0.08 | 100 | 100 |
| 0.5 | | | 0.008 | 1:0.016 | 99 | 100 |
| 0.004 | | | 1.0 | 1:250 | 99 | 100 |
| 0.004 | | | 0.2 | 1:50 | 66 | 56 |
| 0.004 | | | 0.04 | 1:10 | 12 | 2 |
| 0.004 | | | 0.008 | 1:2 | 0 | 2 |

**Table D8: in vitro -Test with Colletotrichum lindemuthianum**

| (I-749) (ppm) | (1.021) tebuconazole (ppm) | (5.003) captan (ppm) | (17.001) Bacillus subtilis (ppm) | Ratio | Efficacy % | Colby expected value % |
|---|---|---|---|---|---|---|
| 0.5 | | | | | 100 | |
| 0.1 | | | | | 100 | |
| 0.020 | | | | | 19 | |
| 0.004 | | | | | 1 | |
| | 1.0 | | | | 38 | |
| | 0.2 | | | | 2 | |
| | 0.04 | | | | 20 | |
| | 0.008 | | | | 7 | |
| | | 20 | | | 100 | |
| | | 4 | | | 20 | |
| | | 0.8 | | | 0 | |
| | | | 200 | | 0 | |
| | | | 40 | | 0 | |
| | | | 8 | | 0 | |
| | | | 1.6 | | 7 | |
| 0.5 | 1.0 | | | 1:2 | 100 | 100 |
| 0.5 | 0.2 | | | 1:0.4 | 100 | 100 |
| 0.5 | 0.04 | | | 1:0.08 | 100 | 100 |
| 0.5 | 0.008 | | | 1:0.016 | 99 | 100 |
| 0.020 | 1.0 | | | 1:50 | 49 | 48 |
| 0.020 | 0.2 | | | 1:10 | 23 | 18 |
| 0.020 | 0.04 | | | 1:2 | 55 | 33 |
| 0.020 | 0.008 | | | 1:0.4 | 34 | 22 |
| 0.1 | | 20 | | 1:200 | 100 | 100 |
| 0.1 | | 4 | | 1:40 | 100 | 100 |
| 0.1 | | 0.8 | | 1:8 | 100 | 100 |
| 0.020 | | 20 | | 1:1000 | 100 | 100 |
| 0.020 | | 4 | | 1:200 | 100 | 38 |
| 0.020 | | 0.8 | | 1:40 | 18 | 22 |
| 0.004 | | 20 | | 1:5000 | 100 | 100 |
| 0.004 | | 4 | | 1:1000 | 100 | 24 |
| 0.004 | | 0.8 | | 1:200 | 0 | 5 |
| 0.5 | | | 200 | 1:400 | 98 | 100 |
| 0.5 | | | 40 | 1:80 | 99 | 100 |
| 0.5 | | | 8 | 1:16 | 100 | 100 |
| 0.5 | | | 1.6 | 1:3.2 | 99 | 100 |
| 0.020 | | | 200 | 1:10000 | 46 | 0 |
| 0.020 | | | 40 | 1:2000 | 0 | 0 |
| 0.020 | | | 8 | 1:400 | 11 | 0 |
| 0.020 | | | 1.6 | 1:80 | 21 | 7 |

**Table D9: in vitro -Test with Colletotrichum lindemuthianum**

| (I-749) (ppm) | (17.012) Paenibacillus terrae (ppm) | (18.001) FLiPPER (ppm) | Ratio | Efficacy % | Colby expected value % |
|---|---|---|---|---|---|
| 0.5 | | | | 100 | |
| 0.1 | | | | 100 | |
| 0.020 | | | | 19 | |
| 0.004 | | | | 1 | |
| | 200 | | | 100 | |
| | 40 | | | 12 | |
| | 8 | | | 0 | |
| | | 200 | | 0 | |
| | | 40 | | 23 | |
| | | 8 | | 2 | |
| | | 1.6 | | 0 | |
| 0.5 | 200 | | 1:400 | 99 | 100 |
| 0.5 | 40 | | 1:80 | 98 | 100 |
| 0.5 | 8 | | 1:16 | 99 | 100 |
| 0.020 | 200 | | 1:10000 | 100 | 100 |
| 0.020 | 40 | | 1:2000 | 30 | 12 |
| 0.020 | 8 | | 1:400 | 3 | 0 |
| 0.004 | 200 | | 1:50000 | 100 | 100 |
| 0.004 | 40 | | 1:10000 | 21 | 12 |
| 0.004 | 8 | | 1:2000 | 3 | 0 |
| 0.020 | | 200 | 1:10000 | 30 | 0 |
| 0.020 | | 40 | 1:2000 | 55 | 23 |
| 0.020 | | 8 | 1:400 | 37 | 2 |
| 0.020 | | 1.6 | 1:80 | 21 | 0 |
| 0.004 | | 200 | 1:50000 | 1 | 0 |
| 0.004 | | 40 | 1:10000 | 28 | 23 |
| 0.004 | | 8 | 1:2000 | 24 | 2 |
| 0.004 | | 1.6 | 1:400 | 0 | 0 |

**Table E1: in vitro -Test with Cordana musae**

| (I-655) (ppm) | (2.038) isoflucypram (ppm) | (3.020) trifloxystrobin (ppm) | (1.002) difenoconazole (ppm) | Ratio | Efficacy % | Colby expected value % |
|---|---|---|---|---|---|---|
| 0.5 | | | | | 100 | |
| 0.1 | | | | | 100 | |
| 0.020 | | | | | 4 | |
| 0.004 | | | | | 2 | |
| | 1.0 | | | | 18 | |
| | 0.2 | | | | 0 | |
| | 0.04 | | | | 10 | |
| | 0.008 | | | | 0 | |
| | | 0.2 | | | 66 | |
| | | 0.04 | | | 28 | |
| | | 0.008 | | | 29 | |
| | | | 1.0 | | 42 | |
| | | | 0.2 | | 0 | |
| | | | 0.04 | | 0 | |
| | | | 0.008 | | 0 | |
| 0.1 | 1.0 | | | 1:10 | 100 | 100 |
| 0.1 | 0.2 | | | 1:2 | 100 | 100 |
| 0.1 | 0.04 | | | 1:0.4 | 100 | 100 |
| 0.1 | 0.008 | | | 1:0.08 | 100 | 100 |
| 0.020 | 1.0 | | | 1:50 | 54 | 21 |
| 0.020 | 0.2 | | | 1:10 | 51 | 4 |
| 0.020 | 0.04 | | | 1:2 | 51 | 13 |
| 0.020 | 0.008 | | | 1:0.4 | 37 | 4 |
| 0.5 | | 0.2 | | 1:0.4 | 99 | 100 |
| 0.5 | | 0.04 | | 1:0.08 | 99 | 100 |
| 0.5 | | 0.008 | | 1:0.016 | 100 | 100 |
| 0.020 | | 0.2 | | 1:10 | 78 | 68 |
| 0.020 | | 0.04 | | 1:2 | 59 | 31 |
| 0.020 | | 0.008 | | 1:0.4 | 41 | 32 |
| 0.004 | | 0.2 | | 1:50 | 70 | 67 |
| 0.004 | | 0.04 | | 1:10 | 46 | 29 |
| 0.004 | | 0.008 | | 1:2 | 24 | 30 |
| 0.5 | | | 1.0 | 1:2 | 100 | 100 |
| 0.5 | | | 0.2 | 1:0.4 | 99 | 100 |
| 0.5 | | | 0.04 | 1:0.08 | 99 | 100 |
| 0.5 | | | 0.008 | 1:0.016 | 99 | 100 |
| 0.020 | | | 1.0 | 1:50 | 55 | 44 |
| 0.020 | | | 0.2 | 1:10 | 5 | 4 |
| 0.020 | | | 0.04 | 1:2 | 10 | 4 |
| 0.020 | | | 0.008 | 1:0.4 | 17 | 4 |

**Table E2: in vitro -Test with Cordana musae**

| (I-655) (ppm) | (1.055) mefentrifluconazole (ppm) | (13.001) fludioxonil (ppm) | (13.005) quinoxyfen (ppm) | (5.003) captan (ppm) | Ratio | Efficacy % | Colby expected value % |
|---|---|---|---|---|---|---|---|
| 0.5 | | | | | | 100 | |
| 0.1 | | | | | | 100 | |
| 0.020 | | | | | | 4 | |
| 0.004 | | | | | | 2 | |
| | 1.0 | | | | | 100 | |
| | 0.2 | | | | | 93 | |
| | | 5.0 | | | | 44 | |
| | | 1.0 | | | | 20 | |
| | | 0.2 | | | | 0 | |
| | | | 10 | | | 15 | |
| | | | 2 | | | 1 | |
| | | | | 20 | | 100 | |
| | | | | 4 | | 2 | |
| | | | | 0.8 | | 0 | |
| 0.5 | 1.0 | | | | 1:2 | 100 | 100 |
| 0.5 | 0.2 | | | | 1:0.4 | 100 | 100 |
| 0.020 | 1.0 | | | | 1:50 | 100 | 100 |
| 0.020 | 0.2 | | | | 1:10 | 97 | 95 |
| 0.004 | 1.0 | | | | 1:250 | 100 | 100 |
| 0.004 | 0.2 | | | | 1:50 | 100 | 93 |
| 0.1 | | 5.0 | | | 1:10 | 100 | 100 |
| 0.1 | | 1.0 | | | 1:2 | 99 | 100 |
| 0.1 | | 0.2 | | | 1:0.4 | 99 | 100 |
| 0.020 | | 5.0 | | | 1:250 | 78 | 66 |
| 0.020 | | 1.0 | | | 1:50 | 75 | 51 |
| 0.020 | | 0.2 | | | 1:10 | 84 | 38 |
| 0.004 | | 5.0 | | | 1:1250 | 57 | 50 |
| 0.004 | | 1.0 | | | 1:250 | 51 | 29 |
| 0.004 | | 0.2 | | | 1:50 | 16 | 12 |
| 0.1 | | | 10 | | 1:100 | 100 | 100 |
| 0.1 | | | 2 | | 1:20 | 100 | 99 |
| 0.020 | | | 10 | | 1:500 | 75 | 53 |
| 0.020 | | | 2 | | 1:100 | 54 | 45 |
| 0.5 | | | | 4 | 1:8 | 99 | 100 |
| 0.1 | | | | 4 | 1:40 | 100 | 99 |
| 0.020 | | | | 4 | 1:200 | 100 | 46 |
| 0.004 | | | | 4 | 1:1000 | 43 | 19 |

**Table E3: in vitro -Test with Cordana musae**

| (I-655) (ppm) | (5.018) propineb (ppm) | (15.012) fosetylaluminium (ppm) | Ratio | Efficacy % | Colby expected value % |
|---|---|---|---|---|---|
| 0.5 | | | | 100 | |
| 0.1 | | | | 100 | |
| 0.020 | | | | 4 | |
| 0.004 | | | | 2 | |
| | 100 | | | 100 | |
| | 20 | | | 25 | |
| | 4 | | | 15 | |
| | | 100 | | 6 | |
| | | 20 | | 0 | |
| 0.5 | 100 | | 1:200 | 100 | 100 |
| 0.5 | 20 | | 1:40 | 100 | 100 |
| 0.5 | 4 | | 1:8 | 100 | 100 |
| 0.1 | 100 | | 1:5000 | 100 | 100 |
| 0.1 | 20 | | 1:1000 | 73 | 53 |
| 0.1 | 4 | | 1:200 | 62 | 47 |
| 0.020 | 100 | | 1:25000 | 100 | 100 |
| 0.020 | 20 | | 1:5000 | 66 | 25 |
| 0.020 | 4 | | 1:1000 | 30 | 15 |
| 0.5 | | 100 | 1:200 | 100 | 100 |
| 0.5 | | 20 | 1:40 | 100 | 100 |
| 0.020 | | 100 | 1:5000 | 43 | 42 |
| 0.020 | | 20 | 1:1000 | 48 | 38 |
| 0.004 | | 100 | 1:25000 | 27 | 6 |
| 0.004 | | 20 | 1:5000 | 10 | 0 |

**Table E4: in vitro -Test with Cordana musae**

| (I-746) (ppm) | (7.005) pyrimethanil (ppm) | (2.005) fluopyram (ppm) | (2.038) isoflucypram (ppm) | Ratio | Efficacy % | Colby expected value % |
|---|---|---|---|---|---|---|
| 0.5 | | | | | 100 | |
| 0.1 | | | | | 79 | |
| 0.020 | | | | | 10 | |
| 0.004 | | | | | 0 | |
| | 20 | | | | 15 | |
| | 0.8 | | | | 9 | |
| | 0.16 | | | | 0 | |
| | | 20 | | | 20 | |
| | | 4 | | | 5 | |
| | | 0.8 | | | 0 | |
| | | 0.16 | | | 0 | |
| | | | 1.0 | | 8 | |
| | | | 0.2 | | 0 | |
| | | | 0.04 | | 12 | |
| | | | 0.008 | | 0 | |
| 0.1 | 20 | | | 1:200 | 99 | 100 |
| 0.1 | 0.8 | | | 1:8 | 100 | 100 |
| 0.1 | 0.16 | | | 1:1.6 | 99 | 100 |
| 0.020 | 20 | | | 1:1000 | 56 | 27 |
| 0.020 | 0.8 | | | 1:40 | 28 | 21 |
| 0.020 | 0.16 | | | 1:8 | 41 | 14 |
| 0.004 | 20 | | | 1:5000 | 21 | 15 |
| 0.004 | 0.8 | | | 1:200 | 13 | 9 |
| 0.004 | 0.16 | | | 1:40 | 11 | 0 |
| 0.020 | | 20 | | 1:1000 | 64 | 31 |
| 0.020 | | 4 | | 1:200 | 42 | 18 |
| 0.020 | | 0.8 | | 1:40 | 26 | 14 |
| 0.020 | | 0.16 | | 1:8 | 22 | 14 |
| 0.004 | | 20 | | 1:5000 | 25 | 20 |
| 0.004 | | 4 | | 1:1000 | 16 | 5 |
| 0.004 | | 0.8 | | 1:200 | 10 | 0 |
| 0.004 | | 0.16 | | 1:40 | 23 | 0 |
| 0.1 | | | 1.0 | 1:10 | 100 | 81 |
| 0.1 | | | 0.2 | 1:2 | 100 | 79 |
| 0.1 | | | 0.04 | 1:0.4 | 85 | 81 |
| 0.1 | | | 0.008 | 1:0.08 | 84 | 79 |
| 0.020 | | | 1.0 | 1:50 | 55 | 17 |
| 0.020 | | | 0.2 | 1:10 | 39 | 10 |
| 0.020 | | | 0.04 | 1:2 | 17 | 20 |
| 0.020 | | | 0.008 | 1:0.4 | 15 | 10 |
| 0.004 | | | 1.0 | 1:250 | 23 | 8 |
| 0.004 | | | 0.2 | 1:50 | 0 | 0 |
| 0.004 | | | 0.04 | 1:10 | 25 | 12 |
| 0.004 | | | 0.008 | 1:2 | 0 | 0 |

**Table E5: in vitro -Test with Cordana musae**

| (I-746) (ppm) | (3.025) fenpicoxamid (ppm) | (3.020) trifloxystrobin (ppm) | (1.055) mefentrifluconazole (ppm) | Ratio | Efficacy % | Colby expected value % |
|---|---|---|---|---|---|---|
| 0.5 | | | | | 100 | |
| 0.1 | | | | | 79 | |
| 0.020 | | | | | 10 | |
| 0.004 | | | | | 0 | |
| | 5.0 | | | | 74 | |
| | 1.0 | | | | 50 | |
| | | 0.2 | | | 58 | |
| | | 0.04 | | | 49 | |
| | | 0.008 | | | 19 | |
| | | | 1.0 | | 100 | |
| | | | 0.2 | | 79 | |
| | | | 0.008 | | 0 | |
| 0.5 | 5.0 | | | 1:10 | 100 | 100 |
| 0.5 | 1.0 | | | 1:2 | 100 | 100 |
| 0.020 | 5.0 | | | 1:250 | 85 | 77 |
| 0.020 | 1.0 | | | 1:50 | 60 | 55 |
| 0.004 | 5.0 | | | 1:1250 | 82 | 74 |
| 0.004 | 1.0 | | | 1:250 | 52 | 50 |
| 0.5 | | 0.2 | | 1:0.4 | 100 | 100 |
| 0.5 | | 0.04 | | 1:0.08 | 100 | 100 |
| 0.5 | | 0.008 | | 1:0.016 | 100 | 100 |
| 0.020 | | 0.2 | | 1:10 | 62 | 62 |
| 0.020 | | 0.04 | | 1:2 | 60 | 54 |
| 0.020 | | 0.008 | | 1:0.4 | 41 | 27 |
| 0.004 | | 0.2 | | 1:50 | 69 | 58 |
| 0.004 | | 0.04 | | 1:10 | 63 | 49 |
| 0.004 | | 0.008 | | 1:2 | 38 | 19 |
| 0.5 | | | 1.0 | 1:2 | 100 | 100 |
| 0.5 | | | 0.2 | 1:0.4 | 100 | 100 |
| 0.5 | | | 0.008 | 1:0.016 | 100 | 100 |
| 0.020 | | | 1.0 | 1:50 | 100 | 100 |
| 0.020 | | | 0.2 | 1:10 | 95 | 79 |
| 0.020 | | | 0.008 | 1:0.4 | 5 | 0 |
| 0.004 | | | 1.0 | 1:250 | 100 | 100 |
| 0.004 | | | 0.2 | 1:50 | 83 | 80 |
| 0.004 | | | 0.008 | 1:2 | 12 | 4 |

**Table E6: in vitro -Test with Cordana musae**

| (I-746) (ppm) | (1.018) prothioconazole (ppm) | (1.021) tebuconazole (ppm) | (1.020) spiroxamine (ppm) | Ratio | Efficacy % | Colby expected value % |
|---|---|---|---|---|---|---|
| 0.5 | | | | | 100 | |
| 0.1 | | | | | 79 | |
| 0.020 | | | | | 10 | |
| 0.004 | | | | | 0 | |
| | 0.2 | | | | 100 | |
| | 0.04 | | | | 64 | |
| | 0.008 | | | | 0 | |
| | | 1.0 | | | 99 | |
| | | 0.04 | | | 5 | |
| | | 0.008 | | | 0 | |
| | | | 20 | | 4 | |
| | | | 4 | | 0 | |
| | | | 0.8 | | 6 | |
| | | | 0.16 | | 0 | |
| 0.5 | 0.2 | | | 1:0.4 | 100 | 100 |
| 0.5 | 0.04 | | | 1:0.08 | 100 | 100 |
| 0.5 | 0.008 | | | 1:0.016 | 100 | 100 |
| 0.004 | 0.2 | | | 1:50 | 100 | 100 |
| 0.004 | 0.04 | | | 1:10 | 77 | 65 |
| 0.004 | 0.008 | | | 1:2 | 0 | 4 |
| 0.5 | | 1.0 | | 1:2 | 100 | 100 |
| 0.5 | | 0.04 | | 1:0.08 | 100 | 100 |
| 0.5 | | 0.008 | | 1:0.016 | 100 | 100 |
| 0.020 | | 1.0 | | 1:50 | 100 | 99 |
| 0.020 | | 0.04 | | 1:2 | 7 | 5 |
| 0.020 | | 0.008 | | 1:0.4 | 9 | 0 |
| 0.004 | | 1.0 | | 1:250 | 99 | 99 |
| 0.004 | | 0.04 | | 1:10 | 20 | 9 |
| 0.004 | | 0.008 | | 1:2 | 6 | 4 |
| 0.1 | | | 20 | 1:200 | 100 | 87 |
| 0.1 | | | 4 | 1:40 | 94 | 87 |
| 0.1 | | | 0.8 | 1:8 | 83 | 88 |
| 0.1 | | | 0.16 | 1:1.6 | 93 | 87 |
| 0.004 | | | 20 | 1:5000 | 20 | 4 |
| 0.004 | | | 4 | 1:1000 | 38 | 0 |
| 0.004 | | | 0.8 | 1:200 | 0 | 6 |
| 0.004 | | | 0.16 | 1:40 | 6 | 0 |

**Table E7: in vitro -Test with Cordana musae**

| (I-746) (ppm) | (15.064) (ppm) | (13.001) fludioxonil (ppm) | (13.004) proquinazid (ppm) | Ratio | Efficacy % | Colby expected value % |
|---|---|---|---|---|---|---|
| 0.5 | | | | | 100 | |
| 0.1 | | | | | 79 | |
| 0.020 | | | | | 10 | |
| 0.004 | | | | | 0 | |
| | 10 | | | | 5 | |
| | 2 | | | | 14 | |
| | 0.4 | | | | 18 | |
| | 0.080 | | | | 0 | |
| | | 5.0 | | | 36 | |
| | | 1.0 | | | 13 | |
| | | 0.2 | | | 15 | |
| | | | 10 | | 23 | |
| | | | 2 | | 0 | |
| 0.5 | 10 | | | 1:20 | 100 | 100 |
| 0.5 | 2 | | | 1:4 | 100 | 100 |
| 0.5 | 0.4 | | | 1:0.8 | 100 | 100 |
| 0.5 | 0.080 | | | 1:0.16 | 100 | 100 |
| 0.1 | 10 | | | 1:100 | 100 | 88 |
| 0.1 | 2 | | | 1:20 | 98 | 89 |
| 0.1 | 0.4 | | | 1:4 | 82 | 89 |
| 0.1 | 0.080 | | | 1:0.8 | 87 | 87 |
| 0.1 | | 5.0 | | 1:50 | 98 | 92 |
| 0.1 | | 1.0 | | 1:10 | 99 | 89 |
| 0.1 | | 0.2 | | 1:2 | 89 | 89 |
| 0.020 | | 5.0 | | 1:250 | 62 | 67 |
| 0.020 | | 1.0 | | 1:50 | 68 | 55 |
| 0.020 | | 0.2 | | 1:10 | 61 | 56 |
| 0.004 | | 5.0 | | 1:1250 | 34 | 36 |
| 0.004 | | 1.0 | | 1:250 | 42 | 13 |
| 0.004 | | 0.2 | | 1:50 | 0 | 15 |
| 0.5 | | | 10 | 1:20 | 100 | 100 |
| 0.5 | | | 2 | 1:4 | 99 | 100 |
| 0.1 | | | 10 | 1:100 | 96 | 90 |
| 0.1 | | | 2 | 1:20 | 91 | 87 |
| 0.004 | | | 10 | 1:2500 | 29 | 23 |
| 0.004 | | | 2 | 1:500 | 19 | 0 |

**Table E8: in vitro -Test with Cordana musae**

| (I-746) (ppm) | (5.003) captan (ppm) | (5.018) propineb (ppm) | (15.012) fosetylaluminium (ppm) | Ratio | Efficacy % | Colby expected value % |
|---|---|---|---|---|---|---|
| 0.5 | | | | | 100 | |
| 0.1 | | | | | 79 | |
| 0.020 | | | | | 10 | |
| 0.004 | | | | | 0 | |
| | 20 | | | | 100 | |
| | 4 | | | | 100 | |
| | 0.16 | | | | 0 | |
| | | 100 | | | 99 | |
| | | 20 | | | 59 | |
| | | 4 | | | 30 | |
| | | 0.8 | | | 0 | |
| | | | 100 | | 38 | |
| | | | 20 | | 0 | |
| | | | 4 | | 12 | |
| | | | 0.8 | | 0 | |
| 0.002 | 20 | | | 1:1000 | 100 | 100 |
| 0.002 | 4 | | | 1:200 | 100 | 100 |
| 0.002 | 0.16 | | | 1:8 | 36 | 24 |
| 0.004 | 20 | | | 1:5000 | 100 | 100 |
| 0.004 | 4 | | | 1:1000 | 100 | 100 |
| 0.004 | 0.16 | | | 1:40 | 20 | 0 |
| 0.5 | | 100 | | 1:200 | 100 | 100 |
| 0.5 | | 20 | | 1:40 | 100 | 100 |
| 0.5 | | 4 | | 1:8 | 100 | 100 |
| 0.5 | | 0.8 | | 1:1.6 | 100 | 100 |
| 0.020 | | 100 | | 1:5000 | 100 | 99 |
| 0.020 | | 20 | | 1:1000 | 76 | 60 |
| 0.020 | | 4 | | 1:200 | 62 | 31 |
| 0.020 | | 0.8 | | 1:40 | 51 | 2 |
| 0.5 | | | 100 | 1:200 | 100 | 100 |
| 0.5 | | | 20 | 1:40 | 99 | 100 |
| 0.5 | | | 4 | 1:8 | 99 | 100 |
| 0.5 | | | 0.8 | 1:1.6 | 99 | 100 |
| 0.020 | | | 100 | 1:5000 | 36 | 40 |
| 0.020 | | | 20 | 1:1000 | 44 | 2 |
| 0.020 | | | 4 | 1:200 | 31 | 14 |
| 0.020 | | | 0.8 | 1:40 | 16 | 2 |

**Table E9: in vitro -Test with Cordana musae**

| (I-746) (ppm) | (6.002) isotianil (ppm) | (17.012) Paeni-bacillus terrae (ppm) | (18.001) FLiPPER (ppm) | Ratio | Efficacy % | Colby expected value % |
|---|---|---|---|---|---|---|
| 0.5 | | | | | 100 | |
| 0.1 | | | | | 79 | |
| 0.020 | | | | | 10 | |
| 0.004 | | | | | 0 | |
| | 100 | | | | 16 | |
| | 20 | | | | 3 | |
| | | 200 | | | 100 | |
| | | 40 | | | 7 | |
| | | 8 | | | 0 | |
| | | 1.6 | | | 0 | |
| | | | 200 | | 15 | |
| | | | 40 | | 24 | |
| | | | 8 | | 13 | |
| | | | 1.6 | | 0 | |
| 0.5 | 100 | | | 1:200 | 100 | 100 |
| 0.5 | 20 | | | 1:40 | 100 | 100 |
| 0.002 | 100 | | | 1:5000 | 52 | 32 |
| 0.002 | 20 | | | 1:1000 | 45 | 21 |
| 0.004 | 100 | | | 1:25000 | 19 | 18 |
| 0.004 | 20 | | | 1:5000 | 6 | 5 |
| 0.5 | | 200 | | 1:400 | 100 | 100 |
| 0.5 | | 40 | | 1:80 | 99 | 100 |
| 0.5 | | 8 | | 1:16 | 100 | 100 |
| 0.5 | | 1.6 | | 1:3.2 | 99 | 100 |
| 0.004 | | 200 | | 1:50000 | 100 | 100 |
| 0.004 | | 40 | | 1:10000 | 38 | 9 |
| 0.004 | | 8 | | 1:2000 | 9 | 2 |
| 0.004 | | 1.6 | | 1:400 | 49 | 2 |
| 0.5 | | | 200 | 1:400 | 97 | 100 |
| 0.5 | | | 40 | 1:80 | 100 | 100 |
| 0.5 | | | 8 | 1:16 | 100 | 100 |
| 0.5 | | | 1.6 | 1:3.2 | 98 | 100 |
| 0.020 | | | 200 | 1:10000 | 41 | 31 |
| 0.020 | | | 40 | 1:2000 | 37 | 38 |
| 0.020 | | | 8 | 1:400 | 46 | 29 |
| 0.020 | | | 1.6 | 1:80 | 42 | 19 |

**Table E10: in vitro -Test with Cordana musae**

| (I-749) (ppm) | (3.020) trifloxystrobin (ppm) | (1.021) tebuconazole (ppm) | (1.020) spiroxamine (ppm) | Ratio | Efficacy % | Colby expected value % |
|---|---|---|---|---|---|---|
| 0.5 | | | | | 100 | |
| 0.1 | | | | | 100 | |
| 0.020 | | | | | 64 | |
| 0.004 | | | | | 0 | |
| | 0.2 | | | | 64 | |
| | 0.04 | | | | 45 | |
| | 0.008 | | | | 29 | |
| | | 1.0 | | | 38 | |
| | | 0.2 | | | 2 | |
| | | 0.04 | | | 20 | |
| | | 0.008 | | | 7 | |
| | | | 20 | | 3 | |
| | | | 4 | | 0 | |
| | | | 0.8 | | 0 | |
| | | | 0.16 | | 0 | |
| 0.5 | 0.2 | | | 1:0.4 | 100 | 100 |
| 0.5 | 0.04 | | | 1:0.08 | 100 | 100 |
| 0.5 | 0.008 | | | 1:0.016 | 100 | 100 |
| 0.004 | 0.2 | | | 1:50 | 75 | 65 |
| 0.004 | 0.04 | | | 1:10 | 60 | 47 |
| 0.004 | 0.008 | | | 1:2 | 36 | 31 |
| 0.5 | | 1.0 | | 1:2 | 100 | 100 |
| 0.5 | | 0.2 | | 1:0.4 | 100 | 100 |
| 0.5 | | 0.04 | | 1:0.08 | 100 | 100 |
| 0.5 | | 0.008 | | 1:0.016 | 99 | 100 |
| 0.020 | | 1.0 | | 1:50 | 49 | 48 |
| 0.020 | | 0.2 | | 1:10 | 23 | 18 |
| 0.020 | | 0.04 | | 1:2 | 55 | 33 |
| 0.020 | | 0.008 | | 1:0.4 | 34 | 22 |
| 0.5 | | | 20 | 1:40 | 100 | 100 |
| 0.5 | | | 4 | 1:8 | 100 | 100 |
| 0.5 | | | 0.8 | 1:1.6 | 100 | 100 |
| 0.5 | | | 0.16 | 1:0.32 | 100 | 100 |
| 0.004 | | | 20 | 1:5000 | 47 | 3 |
| 0.004 | | | 4 | 1:1000 | 10 | 0 |
| 0.004 | | | 0.8 | 1:200 | 0 | 0 |
| 0.004 | | | 0.16 | 1:40 | 0 | 0 |

**Table E11: in vitro -Test with Cordana musae**

| (I-749) (ppm) | (13.004) proquinazid (ppm) | (5.010) dithianon (ppm) | (5.018) propineb (ppm) | (15.016) metrafenone (ppm) | Ratio | Efficacy % | Colby expected value % |
|---|---|---|---|---|---|---|---|
| 0.5 | | | | | | 100 | |
| 0.1 | | | | | | 100 | |
| 0.020 | | | | | | 64 | |
| 0.004 | | | | | | 0 | |
| | 10 | | | | | 1 | |
| | 2 | | | | | 0 | |
| | 0.4 | | | | | 0 | |
| | 0.080 | | | | | 0 | |
| | | 20 | | | | 98 | |
| | | 4 | | | | 99 | |
| | | 0.8 | | | | 9 | |
| | | 0.16 | | | | 0 | |
| | | | 100 | | | 100 | |
| | | | 20 | | | 42 | |
| | | | 0.8 | | | 0 | |
| | | | | 20 | | 22 | |
| | | | | 0.8 | | 0 | |
| | | | | 0.16 | | 0 | |
| 0.5 | 10 | | | | 1:20 | 100 | 100 |
| 0.5 | 2 | | | | 1:4 | 100 | 100 |
| 0.5 | 0.4 | | | | 1:0.8 | 100 | 100 |
| 0.5 | 0.080 | | | | 1:0.16 | 100 | 100 |
| 0.004 | 10 | | | | 1:2500 | 34 | 10 |
| 0.004 | 2 | | | | 1:500 | 10 | 9 |
| 0.004 | 0.4 | | | | 1:100 | 7 | 9 |
| 0.004 | 0.080 | | | | 1:20 | 41 | 9 |
| 0.5 | | 20 | | | 1:40 | 100 | 100 |
| 0.5 | | 4 | | | 1:8 | 99 | 100 |
| 0.5 | | 0.8 | | | 1:1.6 | 99 | 100 |
| 0.5 | | 0.16 | | | 1:0.32 | 100 | 100 |
| 0.004 | | 20 | | | 1:5000 | 99 | 98 |
| 0.004 | | 4 | | | 1:1000 | 99 | 99 |
| 0.004 | | 0.8 | | | 1:200 | 29 | 17 |
| 0.004 | | 0.16 | | | 1:40 | 0 | 9 |
| 0.5 | | | 100 | | 1:200 | 100 | 100 |
| 0.5 | | | 20 | | 1:40 | 100 | 100 |
| 0.5 | | | 0.8 | | 1:1.6 | 100 | 100 |
| 0.004 | | | 100 | | 1:25000 | 100 | 100 |
| 0.004 | | | 20 | | 1:5000 | 79 | 42 |
| 0.004 | | | 0.8 | | 1:200 | 18 | 0 |
| 0.004 | | | | 20 | 1:5000 | 32 | 22 |
| 0.004 | | | | 0.8 | 1:200 | 6 | 0 |
| 0.004 | | | | 0.16 | 1:40 | 16 | 0 |

**Table F1: in vitro -Test with Diaporthe citri**

| (I-655) (ppm) | (2.028) inpyr-fluxam (ppm) | (2.038) isoflu-cypram (ppm) | (3.025) fenpicoxamid (ppm) | (1.021) tebuconazole (ppm) | Ratio | Efficacy % | Colby expected value % |
|---|---|---|---|---|---|---|---|
| 0.5 | | | | | | 100 | |
| 0.1 | | | | | | 13 | |
| 0.020 | | | | | | 0 | |
| 0.004 | | | | | | 0 | |
| | 1.0 | | | | | 92 | |
| | 0.2 | | | | | 47 | |
| | 0.04 | | | | | 23 | |
| | 0.008 | | | | | 0 | |
| | | 1.0 | | | | 49 | |
| | | 0.04 | | | | 0 | |
| | | | 5.0 | | | 94 | |
| | | | 1.0 | | | 87 | |
| | | | 0.04 | | | 0 | |
| | | | | 1.0 | | 98 | |
| | | | | 0.2 | | 96 | |
| | | | | 0.04 | | 47 | |
| | | | | 0.008 | | 0 | |
| 0.1 | 1.0 | | | | 1:10 | 90 | 93 |
| 0.1 | 0.2 | | | | 1:2 | 72 | 50 |
| 0.1 | 0.04 | | | | 1:0.4 | 33 | 27 |
| 0.1 | 0.008 | | | | 1:0.08 | 3 | 6 |
| 0.5 | | 1.0 | | | 1:2 | 100 | 100 |
| 0.5 | | 0.04 | | | 1:0.08 | 99 | 100 |
| 0.1 | | 1.0 | | | 1:10 | 62 | 56 |
| 0.1 | | 0.04 | | | 1:0.4 | 28 | 13 |
| 0.020 | | 1.0 | | | 1:50 | 68 | 49 |
| 0.020 | | 0.04 | | | 1:2 | 8 | 0 |
| 0.004 | | 1.0 | | | 1:250 | 43 | 49 |
| 0.004 | | 0.04 | | | 1:10 | 32 | 0 |
| 0.1 | | | 5.0 | | 1:50 | 94 | 94 |
| 0.1 | | | 1.0 | | 1:10 | 91 | 89 |
| 0.1 | | | 0.04 | | 1:0.4 | 11 | 13 |
| 0.020 | | | 5.0 | | 1:250 | 95 | 94 |
| 0.020 | | | 1.0 | | 1:50 | 92 | 87 |
| 0.020 | | | 0.04 | | 1:2 | 0 | 0 |
| 0.004 | | | 5.0 | | 1:1250 | 97 | 94 |
| 0.004 | | | 1.0 | | 1:250 | 94 | 87 |
| 0.004 | | | 0.04 | | 1:10 | 0 | 0 |
| 0.1 | | | | 1.0 | 1:10 | 98 | 98 |
| 0.1 | | | | 0.2 | 1:2 | 97 | 96 |
| 0.1 | | | | 0.04 | 1:0.4 | 59 | 47 |
| 0.1 | | | | 0.008 | 1:0.08 | 15 | 0 |

**Table F2: in vitro -Test with Diaporthe citri**

| (I-655) (ppm) | (13.004) proquinazid (ppm) | (13.005) quinoxyfen (ppm) | (5.003) captan (ppm) | (5.012) folpet (ppm) | Ratio | Efficacy % | Colby expected value % |
|---|---|---|---|---|---|---|---|
| 0.5 | | | | | | 100 | |
| 0.1 | | | | | | 13 | |
| 0.020 | | | | | | 0 | |
| 0.004 | | | | | | 0 | |
| | 10 | | | | | 19 | |
| | 0.08 | | | | | 0 | |
| | | 10 | | | | 54 | |
| | | 2 | | | | 30 | |
| | | | 0.8 | | | 53 | |
| | | | 0.16 | | | 94 | |
| | | | | 10 | | 99 | |
| | | | | 2 | | 99 | |
| | | | | 0.4 | | 53 | |
| 0.5 | 10 | | | | 1:20 | 99 | 100 |
| 0.5 | 0.08 | | | | 1:0.16 | 99 | 100 |
| 0.1 | 10 | | | | 1:100 | 34 | 19 |
| 0.1 | 0.08 | | | | 1:0.8 | 48 | 0 |
| 0.004 | 10 | | | | 1:2500 | 23 | 22 |
| 0.004 | 0.08 | | | | 1:20 | 2 | 3 |
| 0.1 | | 10 | | | 1:100 | 62 | 54 |
| 0.1 | | 2 | | | 1:20 | 45 | 30 |
| 0.5 | | | 0.8 | | 1:1.6 | 99 | 100 |
| 0.5 | | | 0.16 | | 1:0.32 | 99 | 100 |
| 0.1 | | | 0.8 | | 1:8 | 100 | 53 |
| 0.1 | | | 0.16 | | 1:1.6 | 99 | 94 |
| 0.020 | | | 0.8 | | 1:40 | 87 | 53 |
| 0.020 | | | 0.16 | | 1:8 | 100 | 94 |
| 0.5 | | | | 10 | 1:20 | 100 | 100 |
| 0.5 | | | | 2 | 1:4 | 100 | 100 |
| 0.5 | | | | 0.4 | 1:0.8 | 99 | 100 |
| 0.1 | | | | 10 | 1:100 | 100 | 99 |
| 0.1 | | | | 2 | 1:20 | 100 | 99 |
| 0.1 | | | | 0.4 | 1:4 | 94 | 53 |
| 0.004 | | | | 10 | 1:500 | 99 | 99 |
| 0.004 | | | | 2 | 1:100 | 100 | 99 |
| 0.004 | | | | 0.4 | 1:20 | 58 | 53 |

**Table F3: in vitro -Test with Diaporthe citri**

| (I-655) (ppm) | (5.013) mancozeb (ppm) | (5.018) propineb (ppm) | (6.002) isotianil (ppm) | Ratio | Efficacy % | Colby expected value % |
|---|---|---|---|---|---|---|
| 0.5 | | | | | 100 | |
| 0.1 | | | | | 13 | |
| 0.020 | | | | | 0 | |
| 0.004 | | | | | 0 | |
| | 10 | | | | 100 | |
| | 2 | | | | 52 | |
| | 0.4 | | | | 0 | |
| | 0.080 | | | | 0 | |
| | | 100 | | | 100 | |
| | | 20 | | | 98 | |
| | | 4 | | | 30 | |
| | | 0.8 | | | 0 | |
| | | | 20 | | 5 | |
| | | | 4 | | 19 | |
| 0.5 | 10 | | | 1:20 | 100 | 100 |
| 0.5 | 2 | | | 1:4 | 100 | 100 |
| 0.5 | 0.4 | | | 1:0.8 | 100 | 100 |
| 0.5 | 0.080 | | | 1:0.16 | 98 | 100 |
| 0.1 | 10 | | | 1:100 | 100 | 100 |
| 0.1 | 2 | | | 1:20 | 64 | 52 |
| 0.1 | 0.4 | | | 1:4 | 0 | 0 |
| 0.1 | 0.080 | | | 1:0.8 | 12 | 0 |
| 0.5 | | 100 | | 1:200 | 98 | 100 |
| 0.5 | | 20 | | 1:40 | 100 | 100 |
| 0.5 | | 4 | | 1:8 | 98 | 100 |
| 0.5 | | 0.8 | | 1:1.6 | 97 | 100 |
| 0.1 | | 100 | | 1:1000 | 100 | 100 |
| 0.1 | | 20 | | 1:200 | 100 | 98 |
| 0.1 | | 4 | | 1:40 | 86 | 30 |
| 0.1 | | 0.8 | | 1:8 | 0 | 0 |
| 0.020 | | 100 | | 1:5000 | 100 | 100 |
| 0.020 | | 20 | | 1:1000 | 100 | 98 |
| 0.020 | | 4 | | 1:200 | 61 | 30 |
| 0.020 | | 0.8 | | 1:40 | 4 | 0 |
| 0.5 | | | 20 | 1:40 | 100 | 100 |
| 0.5 | | | 4 | 1:8 | 100 | 100 |
| 0.020 | | | 20 | 1:1000 | 22 | 5 |
| 0.020 | | | 4 | 1:200 | 32 | 19 |
| 0.004 | | | 20 | 1:5000 | 21 | 10 |
| 0.004 | | | 4 | 1:1000 | 45 | 23 |

**Table F4: in vitro -Test with Diaporthe citri**

| (I-746) (ppm) | (2.038) isoflu-cypram (ppm) | (3.025) fenpicoxamid (ppm) | (1.002) difeno-conazole (ppm) | (1.055) mefentriflu-conazole (ppm) | Ratio | Efficacy % | Colby expected value % |
|---|---|---|---|---|---|---|---|
| 0.5 | | | | | | 51 | |
| 0.1 | | | | | | 2 | |
| 0.020 | | | | | | 0 | |
| 0.004 | | | | | | 0 | |
| | 1.0 | | | | | 41 | |
| | 0.2 | | | | | 0 | |
| | 0.04 | | | | | 0 | |
| | 0.008 | | | | | 0 | |
| | | 5.0 | | | | 93 | |
| | | 1.0 | | | | 73 | |
| | | 0.2 | | | | 5 | |
| | | 0.04 | | | | 0 | |
| | | | 1.0 | | | 88 | |
| | | | 0.2 | | | 0 | |
| | | | | 1.0 | | 100 | |
| | | | | 0.2 | | 100 | |
| | | | | 0.04 | | 85 | |
| 0.5 | 1.0 | | | | 1:2 | 95 | 61 |
| 0.5 | 0.2 | | | | 1:0.4 | 100 | 33 |
| 0.5 | 0.04 | | | | 1:0.08 | 100 | 33 |
| 0.5 | 0.008 | | | | 1:0.016 | 100 | 33 |
| 0.5 | | 5.0 | | | 1:10 | 93 | 95 |
| 0.5 | | 1.0 | | | 1:2 | 100 | 82 |
| 0.5 | | 0.2 | | | 1:0.4 | 100 | 36 |
| 0.5 | | 0.04 | | | 1:0.08 | 100 | 33 |
| 0.1 | | 5.0 | | | 1:50 | 94 | 93 |
| 0.1 | | 1.0 | | | 1:10 | 91 | 73 |
| 0.1 | | 0.2 | | | 1:2 | 20 | 5 |
| 0.1 | | 0.04 | | | 1:0.4 | 0 | 0 |
| 0.020 | | 5.0 | | | 1:250 | 95 | 93 |
| 0.020 | | 1.0 | | | 1:50 | 83 | 73 |
| 0.020 | | 0.2 | | | 1:10 | 0 | 5 |
| 0.020 | | 0.04 | | | 1:2 | 0 | 0 |
| 0.5 | | | 1.0 | | 1:2 | 100 | 92 |
| 0.5 | | | 0.2 | | 1:0.4 | 69 | 33 |
| 0.1 | | | 1.0 | | 1:10 | 94 | 88 |
| 0.5 | | | 0.2 | | 1:2 | 0 | 0 |
| 0.020 | | | 1.0 | | 1:50 | 93 | 88 |
| 0.020 | | | 0.2 | | 1:10 | 16 | 0 |
| 0.004 | | | 1.0 | | 1:250 | 86 | 88 |
| 0.004 | | | 0.2 | | 1:50 | 27 | 0 |
| 0.5 | | | | 1.0 | 1:2 | 100 | 100 |
| 0.5 | | | | 0.2 | 1:0.4 | 100 | 100 |
| 0.5 | | | | 0.04 | 1:0.08 | 100 | 93 |

**Table F5: in vitro -Test with Diaporthe citri**

| (I-746) (ppm) | (1.021) tebuconazole (ppm) | (1.020) spiroxamine (ppm) | (15.064) (ppm) | Ratio | Efficacy % | Colby expected value % |
|---|---|---|---|---|---|---|
| 0.5 | | | | | 51 | |
| 0.1 | | | | | 2 | |
| 0.020 | | | | | 0 | |
| 0.004 | | | | | 0 | |
| | 1.0 | | | | 99 | |
| | 0.2 | | | | 94 | |
| | 0.04 | | | | 39 | |
| | 0.008 | | | | 21 | |
| | | 20 | | | 6 | |
| | | 4 | | | 0 | |
| | | 0.8 | | | 0 | |
| | | 0.16 | | | 0 | |
| | | | 2 | | 5 | |
| | | | 0.4 | | 2 | |
| | | | 0.080 | | 11 | |
| 0.5 | 1.0 | | | 1:2 | 100 | 99 |
| 0.5 | 0.2 | | | 1:0.4 | 98 | 97 |
| 0.5 | 0.04 | | | 1:0.08 | 75 | 72 |
| 0.5 | 0.008 | | | 1:0.016 | 80 | 64 |
| 0.5 | | 20 | | 1:40 | 82 | 54 |
| 0.5 | | 4 | | 1:8 | 100 | 51 |
| 0.5 | | 0.8 | | 1:1.6 | 100 | 51 |
| 0.5 | | 0.16 | | 1:0.32 | 99 | 51 |
| 0.1 | | 20 | | 1:200 | 25 | 6 |
| 0.1 | | 4 | | 1:40 | 0 | 0 |
| 0.1 | | 0.8 | | 1:8 | 0 | 0 |
| 0.1 | | 0.16 | | 1:1.6 | 0 | 0 |
| 0.020 | | 20 | | 1:1000 | 11 | 6 |
| 0.020 | | 4 | | 1:200 | 0 | 0 |
| 0.020 | | 0.8 | | 1:40 | 0 | 0 |
| 0.020 | | 0.16 | | 1:8 | 2 | 0 |
| 0.5 | | | 2 | 1:4 | 100 | 53 |
| 0.5 | | | 0.4 | 1:0.8 | 97 | 52 |
| 0.5 | | | 0.080 | 1:0.16 | 98 | 56 |
| 0.1 | | | 2 | 1:20 | 5 | 5 |
| 0.1 | | | 0.4 | 1:4 | 0 | 2 |
| 0.1 | | | 0.080 | 1:0.8 | 16 | 11 |
| 0.020 | | | 2 | 1:100 | 19 | 5 |
| 0.020 | | | 0.4 | 1:20 | 12 | 2 |
| 0.020 | | | 0.080 | 1:4 | 9 | 11 |

**Table F6: in vitro -Test with Diaporthe citri**

| (I-746) (ppm) | (13.001) fludioxonil (ppm) | (13.004) proquinazid (ppm) | (13.005) quinoxyfen (ppm) | (5.003) captan (ppm) | Ratio | Efficacy % | Colby expected value % |
|---|---|---|---|---|---|---|---|
| 0.5 | | | | | | 51 | |
| 0.1 | | | | | | 2 | |
| 0.020 | | | | | | 0 | |
| 0.004 | | | | | | 0 | |
| | 5.0 | | | | | 10 | |
| | 1.0 | | | | | 45 | |
| | 0.2 | | | | | 0 | |
| | 0.04 | | | | | 12 | |
| | | 10 | | | | 5 | |
| | | 2 | | | | 0 | |
| | | 0.4 | | | | 11 | |
| | | 0.08 | | | | 16 | |
| | | | 2 | | | 0 | |
| | | | 0.4 | | | 0 | |
| | | | | 20 | | 100 | |
| | | | | 4 | | 100 | |
| | | | | 0.16 | | 49 | |
| 0.5 | 5.0 | | | | 1:10 | 99 | 56 |
| 0.5 | 1.0 | | | | 1:2 | 99 | 73 |
| 0.5 | 0.2 | | | | 1:0.4 | 98 | 51 |
| 0.5 | 0.04 | | | | 1:0.08 | 96 | 57 |
| 0.5 | | 10 | | | 1:20 | 99 | 53 |
| 0.5 | | 2 | | | 1:4 | 97 | 51 |
| 0.5 | | 0.4 | | | 1:0.8 | 93 | 56 |
| 0.5 | | 0.08 | | | 1:0.16 | 97 | 58 |
| 0.5 | | | 2 | | 1:4 | 100 | 96 |
| 0.5 | | | 0.4 | | 1:0.8 | 100 | 96 |
| 0.1 | | | 2 | | 1:20 | 9 | 0 |
| 0.1 | | | 0.4 | | 1:4 | 11 | 0 |
| 0.004 | | | 2 | | 1:500 | 17 | 1 |
| 0.004 | | | 0.4 | | 1:100 | 0 | 1 |
| 0.5 | | | | 20 | 1:40 | 100 | 100 |
| 0.5 | | | | 4 | 1:8 | 100 | 100 |
| 0.5 | | | | 0.16 | 1:0.32 | 97 | 98 |
| 0.1 | | | | 20 | 1:200 | 100 | 100 |
| 0.1 | | | | 4 | 1:40 | 100 | 100 |
| 0.1 | | | | 0.16 | 1:1.6 | 99 | 49 |
| 0.004 | | | | 20 | 1:5000 | 100 | 100 |
| 0.004 | | | | 4 | 1:1000 | 100 | 100 |
| 0.004 | | | | 0.16 | 1:40 | 85 | 50 |

**Table F7: in vitro -Test with Diaporthe citri**

| (I-746) (ppm) | (5.010) dithianon (ppm) | (5.012) folpet (ppm) | (5.013) mancozeb (ppm) | Ratio | Efficacy % | Colby expected value % |
|---|---|---|---|---|---|---|
| 0.5 | | | | | 51 | |
| 0.1 | | | | | 2 | |
| 0.020 | | | | | 0 | |
| 0.004 | | | | | 0 | |
| | 20 | | | | 97 | |
| | 4 | | | | 98 | |
| | 0.8 | | | | 34 | |
| | 0.16 | | | | 0 | |
| | | 10 | | | 98 | |
| | | 2 | | | 98 | |
| | | 0.4 | | | 36 | |
| | | 0.08 | | | 0 | |
| | | | 10 | | 100 | |
| | | | 2 | | 53 | |
| | | | 0.4 | | 0 | |
| | | | 0.080 | | 3 | |
| 0.5 | 20 | | | 1:40 | 99 | 100 |
| 0.5 | 4 | | | 1:8 | 99 | 100 |
| 0.5 | 0.8 | | | 1:1.6 | 98 | 97 |
| 0.5 | 0.16 | | | 1:0.32 | 98 | 96 |
| 0.004 | 20 | | | 1:5000 | 95 | 97 |
| 0.004 | 4 | | | 1:1000 | 99 | 98 |
| 0.004 | 0.8 | | | 1:200 | 44 | 35 |
| 0.004 | 0.16 | | | 1:40 | 0 | 1 |
| 0.1 | | 10 | | 1:100 | 98 | 98 |
| 0.1 | | 2 | | 1:20 | 98 | 98 |
| 0.1 | | 0.4 | | 1:4 | 66 | 36 |
| 0.1 | | 0.08 | | 1:0.8 | 0 | 0 |
| 0.004 | | 10 | | 1:2500 | 98 | 98 |
| 0.004 | | 2 | | 1:500 | 99 | 98 |
| 0.004 | | 0.4 | | 1:100 | 35 | 37 |
| 0.004 | | 0.08 | | 1:20 | 31 | 1 |
| 0.5 | | | 10 | 1:20 | 99 | 100 |
| 0.5 | | | 2 | 1:4 | 100 | 77 |
| 0.5 | | | 0.4 | 1:0.8 | 100 | 51 |
| 0.5 | | | 0.080 | 1:0.16 | 98 | 52 |

**Table F8: in vitro -Test with Diaporthe citri**

| (I-746) (ppm) | (5.018) propineb (ppm) | (15.012) fosetylaluminium (ppm) | (15.016) metrafenone (ppm) | Ratio | Efficacy % | Colby expected value % |
|---|---|---|---|---|---|---|
| 0.5 | | | | | 51 | |
| 0.1 | | | | | 2 | |
| 0.020 | | | | | 0 | |
| 0.004 | | | | | 0 | |
| | 100 | | | | 100 | |
| | 20 | | | | 100 | |
| | 4 | | | | 14 | |
| | 0.8 | | | | 0 | |
| | | 100 | | | 0 | |
| | | 20 | | | 4 | |
| | | 4 | | | 31 | |
| | | 0.8 | | | 22 | |
| | | | 4 | | 0 | |
| | | | 0.8 | | 0 | |
| | | | 0.16 | | 0 | |
| 0.5 | 100 | | | 1:200 | 100 | 100 |
| 0.5 | 20 | | | 1:40 | 100 | 100 |
| 0.5 | 4 | | | 1:8 | 100 | 57 |
| 0.5 | 0.8 | | | 1:1.6 | 98 | 51 |
| 0.020 | 100 | | | 1:5000 | 99 | 100 |
| 0.020 | 20 | | | 1:1000 | 99 | 100 |
| 0.020 | 4 | | | 1:200 | 44 | 14 |
| 0.020 | 0.8 | | | 1:40 | 0 | 0 |
| 0.5 | | 100 | | 1:200 | 95 | 51 |
| 0.5 | | 20 | | 1:40 | 55 | 53 |
| 0.5 | | 4 | | 1:8 | 77 | 66 |
| 0.5 | | 0.8 | | 1:1.6 | 73 | 61 |
| 0.5 | | | 4 | 1:8 | 94 | 51 |
| 0.5 | | | 0.8 | 1:1.6 | 95 | 51 |
| 0.5 | | | 0.16 | 1:0.32 | 99 | 51 |

**Table F9: in vitro -Test with Diaporthe citri**

| (I-746) (ppm) | (6.002) isotianil (ppm) | (17.001) Bacillus subtilis (ppm) | (17.012) Paeni-bacillus terrae (ppm) | (18.001) FLiPPER (ppm) | Ratio | Efficacy % | Colby expected value % |
|---|---|---|---|---|---|---|---|
| 0.5 | | | | | | 51 | |
| 0.1 | | | | | | 2 | |
| 0.020 | | | | | | 0 | |
| 0.004 | | | | | | 0 | |
| | 100 | | | | | 5 | |
| | 20 | | | | | 14 | |
| | 4 | | | | | 23 | |
| | 0.8 | | | | | 12 | |
| | | 200 | | | | 0 | |
| | | 40 | | | | 0 | |
| | | 8 | | | | 0 | |
| | | 1.6 | | | | 0 | |
| | | | 200 | | | 99 | |
| | | | 40 | | | 0 | |
| | | | 8 | | | 0 | |
| | | | 1.6 | | | 3 | |
| | | | | 200 | | 0 | |
| | | | | 40 | | 0 | |
| | | | | 8 | | 0 | |
| | | | | 1.6 | | 22 | |
| 0.5 | 100 | | | | 1:200 | 81 | 29 |
| 0.5 | 20 | | | | 1:40 | 100 | 36 |
| 0.5 | 4 | | | | 1:8 | 100 | 43 |
| 0.5 | 0.8 | | | | 1:1.6 | 97 | 34 |
| 0.5 | | 200 | | | 1:400 | 95 | 25 |
| 0.5 | | 40 | | | 1:80 | 99 | 25 |
| 0.5 | | 8 | | | 1:16 | 99 | 25 |
| 0.5 | | 1.6 | | | 1:3.2 | 99 | 25 |
| 0.5 | | | 200 | | 1:400 | 99 | 99 |
| 0.5 | | | 40 | | 1:80 | 92 | 25 |
| 0.5 | | | 8 | | 1:16 | 88 | 25 |
| 0.5 | | | 1.6 | | 1:3.2 | 95 | 28 |
| 0.5 | | | | 200 | 1:400 | 66 | 25 |
| 0.5 | | | | 40 | 1:80 | 98 | 25 |
| 0.5 | | | | 8 | 1:16 | 88 | 25 |
| 0.5 | | | | 1.6 | 1:3.2 | 92 | 42 |

**Table F10: in vitro -Test with Diaporthe citri**

| (I-749) (ppm) | (7.005) pyrimethanil (ppm) | (2.005) fluopyram (ppm) | (2.028) inpyr-fluxam (ppm) | (3.025) fenpicoxamid (ppm) | Ratio | Efficacy % | Colby expected value % |
|---|---|---|---|---|---|---|---|
| 0.5 | | | | | | 100 | |
| 0.1 | | | | | | 0 | |
| 0.020 | | | | | | 0 | |
| 0.004 | | | | | | 0 | |
| | 20 | | | | | 100 | |
| | 4 | | | | | 94 | |
| | 0.16 | | | | | 0 | |
| | | 20 | | | | 26 | |
| | | 4 | | | | 0 | |
| | | 0.16 | | | | 1 | |
| | | | 1.0 | | | 94 | |
| | | | 0.2 | | | 32 | |
| | | | 0.008 | | | 7 | |
| | | | | 5.0 | | 90 | |
| | | | | 1.0 | | 75 | |
| | | | | 0.2 | | 0 | |
| 0.1 | 20 | | | | 1:200 | 100 | 100 |
| 0.1 | 4 | | | | 1:40 | 98 | 94 |
| 0.1 | 0.16 | | | | 1:1.6 | 0 | 0 |
| 0.020 | 20 | | | | 1:1000 | 100 | 100 |
| 0.020 | 4 | | | | 1:200 | 100 | 94 |
| 0.020 | 0.16 | | | | 1:8 | 0 | 8 |
| 0.5 | | 20 | | | 1:40 | 100 | 100 |
| 0.5 | | 4 | | | 1:8 | 98 | 100 |
| 0.5 | | 0.16 | | | 1:0.32 | 92 | 100 |
| 0.020 | | 20 | | | 1:1000 | 31 | 32 |
| 0.020 | | 4 | | | 1:200 | 14 | 8 |
| 0.020 | | 0.16 | | | 1:8 | 9 | 8 |
| 0.5 | | | 1.0 | | 1:2 | 97 | 100 |
| 0.5 | | | 0.2 | | 1:0.4 | 97 | 100 |
| 0.5 | | | 0.008 | | 1:0.016 | 98 | 100 |
| 0.1 | | | 1.0 | | 1:10 | 96 | 94 |
| 0.1 | | | 0.2 | | 1:2 | 65 | 32 |
| 0.1 | | | 0.008 | | 1:0.08 | 0 | 7 |
| 0.1 | | | | 5.0 | 1:50 | 91 | 90 |
| 0.1 | | | | 1.0 | 1:10 | 77 | 75 |
| 0.1 | | | | 0.2 | 1:2 | 30 | 0 |
| 0.020 | | | | 5.0 | 1:250 | 95 | 90 |
| 0.020 | | | | 1.0 | 1:50 | 81 | 75 |
| 0.020 | | | | 0.2 | 1:10 | 0 | 0 |

**Table F11: in vitro -Test with Diaporthe citri**

| (I-749) (ppm) | (3.020) trifloxystrobin (ppm) | (1.002) difeno-conazole (ppm) | (5.003) captan (ppm) | (5.010) dithianon (ppm) | Ratio | Efficacy % | Colby expected value % |
|---|---|---|---|---|---|---|---|
| 0.5 | | | | | | 100 | |
| 0.1 | | | | | | 0 | |
| 0.020 | | | | | | 0 | |
| 0.004 | | | | | | 0 | |
| | 1.0 | | | | | 98 | |
| | 0.2 | | | | | 97 | |
| | 0.04 | | | | | 94 | |
| | 0.008 | | | | | 82 | |
| | | 1.0 | | | | 90 | |
| | | 0.2 | | | | 16 | |
| | | 0.04 | | | | 13 | |
| | | 0.008 | | | | 0 | |
| | | | 4 | | | 100 | |
| | | | 0.8 | | | 15 | |
| | | | 0.16 | | | 41 | |
| | | | | 20 | | 98 | |
| | | | | 4 | | 98 | |
| | | | | 0.8 | | 35 | |
| 0.1 | 1.0 | | | | 1:10 | 99 | 98 |
| 0.1 | 0.2 | | | | 1:2 | 96 | 97 |
| 0.1 | 0.04 | | | | 1:0.4 | 94 | 94 |
| 0.1 | 0.008 | | | | 1:0.08 | 91 | 82 |
| 0.020 | | 1.0 | | | 1:50 | 90 | 90 |
| 0.020 | | 0.2 | | | 1:10 | 19 | 16 |
| 0.020 | | 0.04 | | | 1:2 | 11 | 13 |
| 0.020 | | 0.008 | | | 1:0.4 | 0 | 0 |
| 0.1 | | | 4 | | 1:40 | 100 | 100 |
| 0.1 | | | 0.8 | | 1:8 | 53 | 19 |
| 0.1 | | | 0.16 | | 1:1.6 | 100 | 44 |
| 0.020 | | | 4 | | 1:200 | 100 | 100 |
| 0.020 | | | 0.8 | | 1:40 | 32 | 15 |
| 0.020 | | | 0.16 | | 1:8 | 90 | 41 |
| 0.5 | | | | 20 | 1:40 | 100 | 100 |
| 0.5 | | | | 4 | 1:8 | 99 | 100 |
| 0.5 | | | | 0.8 | 1:1.6 | 97 | 100 |
| 0.004 | | | | 20 | 1:5000 | 95 | 98 |
| 0.004 | | | | 4 | 1:1000 | 99 | 99 |
| 0.004 | | | | 0.8 | 1:200 | 83 | 52 |

**Table F12: in vitro -Test with Diaporthe citri**

| (I-749) (ppm) | (5.012) folpet (ppm) | (5.013) mancozeb (ppm) | (5.018) propineb (ppm) | (6.002) isotianil (ppm) | Ratio | Efficacy % | Colby expected value % |
|---|---|---|---|---|---|---|---|
| 0.5 | | | | | | 100 | |
| 0.1 | | | | | | 0 | |
| 0.020 | | | | | | 0 | |
| 0.004 | | | | | | 0 | |
| | 2 | | | | | 98 | |
| | 0.4 | | | | | 33 | |
| | 0.08 | | | | | 20 | |
| | | 10 | | | | 100 | |
| | | 2 | | | | 45 | |
| | | 0.4 | | | | 1 | |
| | | | 100 | | | 97 | |
| | | | 20 | | | 100 | |
| | | | 4 | | | 23 | |
| | | | | 100 | | 0 | |
| | | | | 20 | | 0 | |
| | | | | 4 | | 24 | |
| | | | | 0.8 | | 0 | |
| 0.5 | 2 | | | | 1:4 | 99 | 100 |
| 0.5 | 0.4 | | | | 1:0.8 | 98 | 100 |
| 0.5 | 0.08 | | | | 1:0.16 | 99 | 100 |
| 0.1 | 2 | | | | 1:20 | 99 | 98 |
| 0.1 | 0.4 | | | | 1:4 | 74 | 36 |
| 0.1 | 0.08 | | | | 1:0.8 | 15 | 23 |
| 0.020 | 2 | | | | 1:100 | 99 | 98 |
| 0.020 | 0.4 | | | | 1:20 | 42 | 33 |
| 0.020 | 0.08 | | | | 1:4 | 24 | 20 |
| 0.5 | | 10 | | | 1:20 | 100 | 100 |
| 0.5 | | 2 | | | 1:4 | 100 | 100 |
| 0.5 | | 0.4 | | | 1:0.8 | 99 | 100 |
| 0.1 | | 10 | | | 1:100 | 100 | 100 |
| 0.1 | | 2 | | | 1:20 | 60 | 45 |
| 0.1 | | 0.4 | | | 1:4 | 0 | 1 |
| 0.004 | | 10 | | | 1:2500 | 100 | 100 |
| 0.004 | | 2 | | | 1:500 | 46 | 45 |
| 0.004 | | 0.4 | | | 1:100 | 21 | 1 |
| 0.1 | | | 100 | | 1:1000 | 98 | 97 |
| 0.1 | | | 20 | | 1:200 | 100 | 100 |
| 0.1 | | | 4 | | 1:40 | 47 | 23 |
| 0.020 | | | 100 | | 1:5000 | 100 | 97 |
| 0.020 | | | 20 | | 1:1000 | 100 | 100 |
| 0.020 | | | 4 | | 1:200 | 64 | 38 |
| 0.004 | | | 100 | | 1:25000 | 98 | 97 |
| 0.004 | | | 20 | | 1:5000 | 100 | 100 |
| 0.004 | | | 4 | | 1:1000 | 43 | 23 |
| 0.004 | | | | 100 | 1:25000 | 21 | 16 |
| 0.004 | | | | 20 | 1:5000 | 30 | 16 |
| 0.004 | | | | 4 | 1:1000 | 39 | 36 |
| 0.004 | | | | 0.8 | 1:200 | 27 | 16 |

**Table G1: in vitro -Test with Fusarium culmorum**

| (I-655 (ppm) | (3.020) trifloxystrobin (ppm) | (1.055) mefentriflu-conazole (ppm) | (1.021) tebuconazole (ppm) | Ratio | Efficacy % | Colby expected value % |
|---|---|---|---|---|---|---|
| 0.5 | | | | | 19 | |
| 0.1 | | | | | 7 | |
| 0.020 | | | | | 7 | |
| 0.004 | | | | | 0 | |
| | 1.0 | | | | 5 | |
| | 0.2 | | | | 7 | |
| | 0.04 | | | | 0 | |
| | 0.008 | | | | 0 | |
| | | 1.0 | | | 23 | |
| | | 0.2 | | | 0 | |
| | | | 1.0 | | 99 | |
| | | | 0.2 | | 65 | |
| 0.5 | 1.0 | | | 1:2 | 61 | 5 |
| 0.5 | 0.2 | | | 1:0.4 | 23 | 7 |
| 0.5 | 0.04 | | | 1:0.08 | 0 | 0 |
| 0.5 | 0.008 | | | 1:0.016 | 0 | 0 |
| 0.020 | 1.0 | | | 1:50 | 19 | 5 |
| 0.020 | 0.2 | | | 1:10 | 10 | 7 |
| 0.020 | 0.04 | | | 1:2 | 0 | 0 |
| 0.020 | 0.008 | | | 1:0.4 | 0 | 0 |
| 0.5 | | 1.0 | | 1:2 | 66 | 38 |
| 0.5 | | 0.2 | | 1:0.4 | 10 | 19 |
| 0.1 | | 1.0 | | 1:10 | 20 | 28 |
| 0.1 | | 0.2 | | 1:2 | 0 | 7 |
| 0.020 | | 1.0 | | 1:50 | 82 | 29 |
| 0.020 | | 0.2 | | 1:10 | 0 | 7 |
| 0.004 | | 1.0 | | 1:250 | 100 | 23 |
| 0.004 | | 0.2 | | 1:50 | 0 | 0 |
| 0.5 | | | 1.0 | 1:2 | 100 | 99 |
| 0.5 | | | 0.2 | 1:0.4 | 92 | 72 |
| 0.1 | | | 1.0 | 1:10 | 99 | 99 |
| 0.1 | | | 0.2 | 1:2 | 94 | 67 |
| 0.020 | | | 1.0 | 1:50 | 99 | 99 |
| 0.020 | | | 0.2 | 1:10 | 84 | 67 |
| 0.004 | | | 1.0 | 1:250 | 99 | 99 |
| 0.004 | | | 0.2 | 1:50 | 89 | 65 |

**Table G2: in vitro -Test with Fusarium culmorum**

| (I-655) (ppm) | (13.001) fludioxonil (ppm) | (5.003) captan (ppm) | (5.010) dithianon (ppm) | (5.012) folpet (ppm) | (5.018) propineb (ppm) | Ratio | Efficacy % | Colby expected value % |
|---|---|---|---|---|---|---|---|---|
| 0.5 | | | | | | | 19 | |
| 0.1 | | | | | | | 7 | |
| 0.020 | | | | | | | 7 | |
| 0.004 | | | | | | | 0 | |
| | 5.0 | | | | | | 100 | |
| | 1.0 | | | | | | 91 | |
| | 0.2 | | | | | | 0 | |
| | 0.04 | | | | | | 0 | |
| | | 20 | | | | | 5 | |
| | | 4 | | | | | 14 | |
| | | 0.8 | | | | | 2 | |
| | | 0.16 | | | | | 0 | |
| | | | 20 | | | | 100 | |
| | | | 4 | | | | 39 | |
| | | | 0.8 | | | | 0 | |
| | | | 0.16 | | | | 0 | |
| | | | | 10 | | | 100 | |
| | | | | 2 | | | 62 | |
| | | | | 0.4 | | | 0 | |
| | | | | | 100.00 | | 91 | |
| | | | | | 20 | | 0 | |
| | | | | | 4 | | 2 | |
| 0.5 | 5.0 | | | | | 1:10 | 100 | 100 |
| 0.5 | 1.0 | | | | | 1:2 | 98 | 91 |
| 0.5 | 0.2 | | | | | 1:0.4 | 0 | 0 |
| 0.5 | 0.04 | | | | | 1:0.08 | 0 | 0 |
| 0.1 | 5.0 | | | | | 1:50 | 99 | 100 |
| 0.1 | 1.0 | | | | | 1:10 | 96 | 92 |
| 0.1 | 0.2 | | | | | 1:2 | 12 | 6 |
| 0.1 | 0.04 | | | | | 1:0.4 | 8 | 6 |
| 0.5 | | 20 | | | | 1:40 | 100 | 5 |
| 0.5 | | 4 | | | | 1:8 | 29 | 14 |
| 0.5 | | 0.8 | | | | 1:1.6 | 0 | 2 |
| 0.5 | | 0.16 | | | | 1:0.32 | 0 | 0 |
| 0.5 | | | 20 | | | 1:40 | 100 | 100 |
| 0.5 | | | 4 | | | 1:8 | 100 | 39 |
| 0.5 | | | 0.8 | | | 1:1.6 | 0 | 0 |
| 0.5 | | | 0.16 | | | 1:0.32 | 0 | 0 |
| 0.1 | | | 20 | | | 1:200 | 100 | 100 |
| 0.1 | | | 4 | | | 1:40 | 99 | 39 |
| 0.1 | | | 0.8 | | | 1:8 | 0 | 0 |
| 0.1 | | | 0.16 | | | 1:1.6 | 0 | 0 |
| 0.5 | | | | 10 | | 1:20 | 100 | 100 |
| 0.5 | | | | 2 | | 1:4 | 100 | 62 |
| 0.5 | | | | 0.4 | | 1:0.8 | 0 | 0 |
| 0.1 | | | | 10 | | 1:100 | 100 | 100 |
| 0.1 | | | | 2 | | 1:20 | 100 | 62 |
| 0.1 | | | | 0.4 | | 1:4 | 0 | 0 |
| 0.020 | | | | 10 | | 1:500 | 100 | 100 |
| 0.020 | | | | 2 | | 1:100 | 90 | 62 |
| 0.020 | | | | 0.4 | | 1:20 | 0 | 0 |
| 0.004 | | | | 10 | | 1:2500 | 100 | 100 |
| 0.004 | | | | 2 | | 1:500 | 100 | 62 |
| 0.004 | | | | 0.4 | | 1:100 | 0 | 0 |
| 0.5 | | | | | 100.00 | 1:200 | 100 | 91 |
| 0.5 | | | | | 20 | 1:40 | 35 | 0 |
| 0.5 | | | | | 4 | 1:8 | 0 | 2 |

**Table G3: in vitro -Test with Fusarium culmorum**

| (I-746) (ppm) | (2.005) fluopyram (ppm) | (2.038) isoflucypram (ppm) | (3.025) fenpicoxamid (ppm) | (3.020) trifloxystrobin (ppm) | Ratio | Efficacy % | Colby expected value % |
|---|---|---|---|---|---|---|---|
| 0.5 | | | | | | 0 | |
| 0.1 | | | | | | 0 | |
| 0.020 | | | | | | 0 | |
| 0.004 | | | | | | 0 | |
| | 20 | | | | | 3 | |
| | 4 | | | | | 0 | |
| | 0.8 | | | | | 1 | |
| | 0.16 | | | | | 0 | |
| | | 1.0 | | | | 0 | |
| | | 0.2 | | | | 0 | |
| | | 0.04 | | | | 0 | |
| | | 0.008 | | | | 0 | |
| | | | 5.0 | | | 0 | |
| | | | 1.0 | | | 0 | |
| | | | 0.2 | | | 0 | |
| | | | 0.04 | | | 0 | |
| | | | | 1.0 | | 15 | |
| | | | | 0.2 | | 0 | |
| | | | | 0.04 | | 0 | |
| | | | | 0.008 | | 0 | |
| 0.5 | 20 | | | | 1:40 | 55 | 4 |
| 0.5 | 4 | | | | 1:8 | 0 | 1 |
| 0.5 | 0.8 | | | | 1:1.6 | 0 | 2 |
| 0.5 | 0.16 | | | | 1:0.32 | 0 | 1 |
| 0.5 | | 1.0 | | | 1:2 | 32 | 0 |
| 0.5 | | 0.2 | | | 1:0.4 | 0 | 0 |
| 0.5 | | 0.04 | | | 1:0.08 | 0 | 0 |
| 0.5 | | 0.008 | | | 1:0.016 | 0 | 0 |
| 0.5 | | | 5.0 | | 1:10 | 43 | 0 |
| 0.5 | | | 1.0 | | 1:2 | 0 | 0 |
| 0.5 | | | 0.2 | | 1:0.4 | 0 | 0 |
| 0.5 | | | 0.04 | | 1:0.08 | 0 | 0 |
| 0.5 | | | | 1.0 | 1:2 | 68 | 15 |
| 0.5 | | | | 0.2 | 1:0.4 | 0 | 0 |
| 0.5 | | | | 0.04 | 1:0.08 | 0 | 0 |
| 0.5 | | | | 0.008 | 1:0.016 | 0 | 0 |

**Table G4: in vitro -Test with Fusarium culmorum**

| (I-746) (ppm) | (1.002) difenoconazole (ppm) | (1.021) tebuconazole (ppm) | (1.020) spiroxamine (ppm) | Ratio | Efficacy % | Colby expected value % |
|---|---|---|---|---|---|---|
| 0.5 | | | | | 0 | |
| 0.1 | | | | | 0 | |
| 0.020 | | | | | 0 | |
| 0.004 | | | | | 0 | |
| | 1.0 | | | | 0 | |
| | 0.2 | | | | 0 | |
| | 0.04 | | | | 8 | |
| | 0.008 | | | | 3 | |
| | | 1.0 | | | 100 | |
| | | 0.2 | | | 25 | |
| | | 0.04 | | | 0 | |
| | | | 20 | | 2 | |
| | | | 4 | | 0 | |
| | | | 0.8 | | 0 | |
| | | | 0.16 | | 0 | |
| 0.5 | 1.0 | | | 1:2 | 62 | 0 |
| 0.5 | 0.2 | | | 1:0.4 | 0 | 0 |
| 0.5 | 0.04 | | | 1:0.08 | 0 | 8 |
| 0.5 | 0.008 | | | 1:0.016 | 0 | 3 |
| 0.5 | | 1.0 | | 1:2 | 100 | 100 |
| 0.5 | | 0.2 | | 1:0.4 | 100 | 25 |
| 0.5 | | 0.04 | | 1:0.08 | 0 | 0 |
| 0.1 | | 1.0 | | 1:10 | 100 | 100 |
| 0.1 | | 0.2 | | 1:2 | 94 | 25 |
| 0.1 | | 0.04 | | 1:0.4 | 0 | 0 |
| 0.020 | | 1.0 | | 1:50 | 99 | 100 |
| 0.020 | | 0.2 | | 1:10 | 32 | 27 |
| 0.020 | | 0.04 | | 1:2 | 0 | 2 |
| 0.5 | | | 20 | 1:40 | 9 | 3 |
| 0.5 | | | 4 | 1:8 | 0 | 2 |
| 0.5 | | | 0.8 | 1:1.6 | 0 | 2 |
| 0.5 | | | 0.16 | 1:0.32 | 0 | 2 |
| 0.1 | | | 20 | 1:200 | 15 | 2 |
| 0.1 | | | 4 | 1:40 | 5 | 0 |
| 0.1 | | | 0.8 | 1:8 | 10 | 0 |
| 0.1 | | | 0.16 | 1:1.6 | 8 | 0 |
| 0.004 | | | 20 | 1:5000 | 2 | 3 |
| 0.004 | | | 4 | 1:1000 | 9 | 1 |
| 0.004 | | | 0.8 | 1:200 | 12 | 1 |
| 0.004 | | | 0.16 | 1:40 | 2 | 1 |

**Table G5: in vitro -Test with Fusarium culmorum**

| (I-746) (ppm) | (15.064) (ppm) | (13.001) fludioxonil (ppm) | (5.003) captan (ppm) | Ratio | Efficacy % | Colby expected value % |
|---|---|---|---|---|---|---|
| 0.5 | | | | | 0 | |
| 0.1 | | | | | 0 | |
| 0.020 | | | | | 0 | |
| 0.004 | | | | | 0 | |
| | 10 | | | | 9 | |
| | 2 | | | | 1 | |
| | 0.4 | | | | 0 | |
| | | 10 | | | 11 | |
| | | 2 | | | 2 | |
| | | 0.4 | | | 1 | |
| | | 0.08 | | | 1 | |
| | | | 20 | | 100 | |
| | | | 4 | | 70 | |
| | | | 0.16 | | 0 | |
| 0.5 | 10 | | | 1:20 | 41 | 10 |
| 0.5 | 2 | | | 1:4 | 0 | 3 |
| 0.5 | 0.4 | | | 1:0.8 | 0 | 2 |
| 0.1 | 10 | | | 1:100 | 16 | 9 |
| 0.1 | 2 | | | 1:20 | 9 | 1 |
| 0.1 | 0.4 | | | 1:4 | 0 | 0 |
| 0.004 | 10 | | | 1:2500 | 13 | 10 |
| 0.004 | 2 | | | 1:500 | 0 | 2 |
| 0.004 | 0.4 | | | 1:100 | 0 | 1 |
| 0.5 | | 10 | | 1:20 | 55 | 12 |
| 0.5 | | 2 | | 1:4 | 0 | 4 |
| 0.5 | | 0.4 | | 1:0.8 | 0 | 3 |
| 0.5 | | 0.08 | | 1:0.16 | 0 | 2 |
| 0.004 | | 10 | | 1:2500 | 13 | 12 |
| 0.004 | | 2 | | 1:500 | 0 | 3 |
| 0.004 | | 0.4 | | 1:100 | 0 | 3 |
| 0.004 | | 0.08 | | 1:20 | 0 | 2 |
| 0.1 | | | 20 | 1:1000 | 100 | 100 |
| 0.1 | | | 4 | 1:200 | 72 | 70 |
| 0.1 | | | 0.16 | 1:8 | 0 | 0 |
| 0.1 | | | 20 | 1:5000 | 100 | 100 |
| 0.004 | | | 4 | 1:1000 | 99 | 70 |
| 0.004 | | | 0.16 | 1:40 | 0 | 0 |

**Table G6: in vitro -Test with Fusarium culmorum**

| (I-746) (ppm) | (5.010) dithianon (ppm) | (5.012) folpet (ppm) | (5.018) propineb (ppm) | (15.016) metrafenone (ppm) | Ratio | Efficacy % | Colby expected value % |
|---|---|---|---|---|---|---|---|
| 0.5 | | | | | | 0 | |
| 0.1 | | | | | | 0 | |
| 0.020 | | | | | | 0 | |
| 0.004 | | | | | | 0 | |
| | 20 | | | | | 99 | |
| | 4 | | | | | 44 | |
| | 0.8 | | | | | 0 | |
| | | 10 | | | | 100 | |
| | | 2 | | | | 63 | |
| | | 0.4 | | | | 0 | |
| | | | 100 | | | 94 | |
| | | | 20 | | | 0 | |
| | | | 4 | | | 0 | |
| | | | | 20 | | 0 | |
| | | | | 4 | | 0 | |
| | | | | 0.8 | | 0 | |
| 0.5 | 20 | | | | 1:40 | 100 | 99 |
| 0.5 | 4 | | | | 1:8 | 100 | 44 |
| 0.5 | 0.8 | | | | 1:1.6 | 0 | 0 |
| 0.1 | 20 | | | | 1:200 | 100 | 99 |
| 0.1 | 4 | | | | 1:40 | 100 | 44 |
| 0.1 | 0.8 | | | | 1:8 | 0 | 0 |
| 0.020 | 20 | | | | 1:1000 | 100 | 99 |
| 0.020 | 4 | | | | 1:200 | 72 | 44 |
| 0.020 | 0.8 | | | | 1:40 | 0 | 0 |
| 0.004 | 20 | | | | 1:5000 | 99 | 99 |
| 0.004 | 4 | | | | 1:1000 | 47 | 44 |
| 0.004 | 0.8 | | | | 1:200 | 0 | 0 |
| 0.5 | | 10 | | | 1:20 | 100 | 100 |
| 0.5 | | 2 | | | 1:4 | 100 | 63 |
| 0.5 | | 0.4 | | | 1:0.8 | 0 | 0 |
| 0.1 | | 10 | | | 1:100 | 100 | 100 |
| 0.1 | | 2 | | | 1:20 | 99 | 63 |
| 0.1 | | 0.4 | | | 1:4 | 0 | 0 |
| 0.020 | | 10 | | | 1:500 | 100 | 100 |
| 0.020 | | 2 | | | 1:100 | 99 | 63 |
| 0.020 | | 0.4 | | | 1:20 | 0 | 0 |
| 0.004 | | 10 | | | 1:2500 | 99 | 100 |
| 0.004 | | 2 | | | 1:500 | 100 | 63 |
| 0.004 | | 0.4 | | | 1:100 | 0 | 0 |
| 0.5 | | | 100 | | 1:200 | 100 | 94 |
| 0.5 | | | 20 | | 1:40 | 18 | 0 |
| 0.5 | | | 4 | | 1:8 | 0 | 0 |
| 0.5 | | | | 20 | 1:40 | 60 | 0 |
| 0.5 | | | | 4 | 1:8 | 0 | 0 |
| 0.5 | | | | 0.8 | 1:1.6 | 0 | 0 |

**Table G7: in vitro -Test with Fusarium culmorum**

| (I-749) (ppm) | (3.020) trifloxy -strobin (ppm) | (1.055) mefentrifluconazole (ppm) | (13.001) fludioxonil (ppm) | (5.018) pro-pineb (ppm) | Ratio | Efficacy % | Colby expected value % |
|---|---|---|---|---|---|---|---|
| 0.5 | | | | | | 18 | |
| 0.1 | | | | | | 11 | |
| 0.020 | | | | | | 10 | |
| 0.004 | | | | | | 0 | |
| | 1.0 | | | | | 11 | |
| | 0.2 | | | | | 2 | |
| | 0.04 | | | | | 0 | |
| | | 1.0 | | | | 6 | |
| | | 0.2 | | | | 3 | |
| | | | 5.0 | | | 100 | |
| | | | 1.0 | | | 94 | |
| | | | 0.2 | | | 0 | |
| | | | | 100 | | 78 | |
| | | | | 20 | | 17 | |
| | | | | 4 | | 0 | |
| 0.5 | 1.0 | | | | 1:2 | 72 | 21 |
| 0.5 | 0.2 | | | | 1:0.4 | 14 | 13 |
| 0.5 | 0.04 | | | | 1:0.08 | 4 | 11 |
| 0.1 | 1.0 | | | | 1:10 | 33 | 16 |
| 0.1 | 0.2 | | | | 1:2 | 15 | 7 |
| 0.1 | 0.04 | | | | 1:0.4 | 0 | 6 |
| 0.004 | 1.0 | | | | 1:250 | 14 | 11 |
| 0.004 | 0.2 | | | | 1:50 | 0 | 2 |
| 0.004 | 0.04 | | | | 1:10 | 0 | 0 |
| 0.5 | | 1.0 | | | 1:2 | 70 | 23 |
| 0.5 | | 0.2 | | | 1:0.4 | 10 | 20 |
| 0.1 | | 1.0 | | | 1:10 | 70 | 16 |
| 0.1 | | 0.2 | | | 1:2 | 14 | 13 |
| 0.020 | | 1.0 | | | 1:50 | 69 | 16 |
| 0.020 | | 0.2 | | | 1:10 | 9 | 13 |
| 0.5 | | | 5.0 | | 1:10 | 100 | 100 |
| 0.5 | | | 1.0 | | 1:2 | 98 | 94 |
| 0.5 | | | 0.2 | | 1:0.4 | 10 | 8 |
| 0.004 | | | 5.0 | | 1:1250 | 99 | 100 |
| 0.004 | | | 1.0 | | 1:250 | 100 | 94 |
| 0.004 | | | 0.2 | | 1:50 | 0 | 0 |
| 0.5 | | | | 100 | 1:200 | 100 | 81 |
| 0.5 | | | | 20 | 1:40 | 47 | 29 |
| 0.5 | | | | 4 | 1:8 | 10 | 14 |
| 0.1 | | | | 100 | 1:1000 | 80 | 78 |
| 0.1 | | | | 20 | 1:200 | 37 | 17 |
| 0.1 | | | | 4 | 1:40 | 0 | 0 |

**Table H1: in vitro -Test with Parastagonospora nodorum**

| (I-655) (ppm) | (7.005) pyrimethanil (ppm) | (2.002) bixafen (ppm) | (3.020) trifloxystrobin (ppm) | (1.055) mefentrifluconazole (ppm) | Ratio | Efficacy % | Colby expected value % |
|---|---|---|---|---|---|---|---|
| 0.5 | | | | | | 100 | |
| 0.1 | | | | | | 41 | |
| 0.020 | | | | | | 0 | |
| 0.004 | | | | | | 0 | |
| | 4 | | | | | 100 | |
| | 0.8 | | | | | 100 | |
| | 0.16 | | | | | 4 | |
| | | 1.0 | | | | 41 | |
| | | 0.2 | | | | 34 | |
| | | | 1.0 | | | 79 | |
| | | | 0.2 | | | 78 | |
| | | | 0.04 | | | 63 | |
| | | | 0.008 | | | 38 | |
| | | | | 1.0 | | 100 | |
| | | | | 0.2 | | 99 | |
| | | | | 0.04 | | 97 | |
| | | | | 0.008 | | 85 | |
| 0.1 | 4 | | | | 1:40 | 100 | 100 |
| 0.1 | 0.8 | | | | 1:8 | 100 | 100 |
| 0.1 | 0.16 | | | | 1:1.6 | 100 | 43 |
| 0.020 | 4 | | | | 1:200 | 100 | 100 |
| 0.020 | 0.8 | | | | 1:40 | 100 | 100 |
| 0.020 | 0.16 | | | | 1:8 | 100 | 4 |
| 0.004 | 4 | | | | 1:1000 | 100 | 100 |
| 0.004 | 0.8 | | | | 1:200 | 100 | 100 |
| 0.004 | 0.16 | | | | 1:40 | 100 | 5 |
| 0.5 | | 1.0 | | | 1:2 | 100 | 100 |
| 0.5 | | 0.2 | | | 1:0.4 | 100 | 100 |
| 0.020 | | 1.0 | | | 1:50 | 47 | 41 |
| 0.020 | | 0.2 | | | 1:10 | 30 | 34 |
| 0.004 | | 1.0 | | | 1:250 | 57 | 41 |
| 0.004 | | 0.2 | | | 1:50 | 37 | 35 |
| 0.004 | | | 1.0 | | 1:250 | 85 | 79 |
| 0.004 | | | 0.2 | | 1:50 | 82 | 78 |
| 0.004 | | | 0.04 | | 1:10 | 56 | 63 |
| 0.004 | | | 0.008 | | 1:2 | 46 | 38 |
| 0.1 | | | | 1.0 | 1:10 | 100 | 100 |
| 0.1 | | | | 0.2 | 1:2 | 99 | 99 |
| 0.1 | | | | 0.04 | 1:0.4 | 100 | 98 |
| 0.1 | | | | 0.008 | 1:0.08 | 96 | 90 |

**Table H2: in vitro -Test with Parastagonospora nodorum**

| (I-655) (ppm) | (1.018) prothioconazole (ppm) | (1.021) tebuconazole (ppm) | (5.012) folpet (ppm) | (5.013) mancozeb (ppm) | (15.012) fosetylaluminium (ppm) | Ratio | Efficacy % | Colby expected value % |
|---|---|---|---|---|---|---|---|---|
| 0.5 | | | | | | | 100 | |
| 0.1 | | | | | | | 41 | |
| 0.020 | | | | | | | 0 | |
| 0.004 | | | | | | | 0 | |
| | 1.0 | | | | | | 100 | |
| | 0.2 | | | | | | 99 | |
| | 0.04 | | | | | | 91 | |
| | 0.008 | | | | | | 28 | |
| | | 1.0 | | | | | 98 | |
| | | 0.2 | | | | | 79 | |
| | | 0.04 | | | | | 10 | |
| | | 0.008 | | | | | 0 | |
| | | | 10 | | | | 100 | |
| | | | 2 | | | | 91 | |
| | | | | 10 | | | 100 | |
| | | | | 2 | | | 17 | |
| | | | | 0.4 | | | 4 | |
| | | | | 0.080 | | | 0 | |
| | | | | | 100 | | 58 | |
| | | | | | 20 | | 28 | |
| 0.020 | 1.0 | | | | | 1:50 | 100 | 100 |
| 0.020 | 0.2 | | | | | 1:10 | 100 | 99 |
| 0.020 | 0.04 | | | | | 1:2 | 92 | 91 |
| 0.020 | 0.008 | | | | | 1:0.4 | 34 | 28 |
| 0.004 | 1.0 | | | | | 1:250 | 100 | 100 |
| 0.004 | 0.2 | | | | | 1:50 | 99 | 99 |
| 0.004 | 0.04 | | | | | 1:10 | 96 | 91 |
| 0.004 | 0.008 | | | | | 1:2 | 26 | 28 |
| 0.020 | | 1.0 | | | | 1:50 | 97 | 98 |
| 0.020 | | 0.2 | | | | 1:10 | 82 | 79 |
| 0.020 | | 0.04 | | | | 1:2 | 21 | 10 |
| 0.020 | | 0.008 | | | | 1:0.4 | 0 | 0 |
| 0.004 | | 1.0 | | | | 1:250 | 97 | 98 |
| 0.004 | | 0.2 | | | | 1:50 | 84 | 79 |
| 0.004 | | 0.04 | | | | 1:10 | 26 | 10 |
| 0.004 | | 0.008 | | | | 1:2 | 0 | 0 |
| 0.5 | | | 10 | | | 1:20 | 100 | 100 |
| 0.5 | | | 2 | | | 1:4 | 100 | 100 |
| 0.1 | | | 10 | | | 1:100 | 99 | 100 |
| 0.1 | | | 2 | | | 1:20 | 100 | 94 |
| 0.020 | | | 10 | | | 1:500 | 99 | 100 |
| 0.020 | | | 2 | | | 1:100 | 100 | 91 |
| 0.004 | | | 10 | | | 1:2500 | 100 | 100 |
| 0.004 | | | 2 | | | 1:500 | 100 | 92 |
| 0.5 | | | | 10 | | 1:20 | 100 | 100 |
| 0.5 | | | | 2 | | 1:4 | 99 | 100 |
| 0.5 | | | | 0.4 | | 1:0.8 | 100 | 100 |
| 0.5 | | | | 0.080 | | 1:0.16 | 99 | 100 |
| 0.1 | | | | 10 | | 1:100 | 100 | 100 |
| 0.1 | | | | 2 | | 1:20 | 51 | 49 |
| 0.1 | | | | 0.4 | | 1:4 | 45 | 41 |
| 0.1 | | | | 0.080 | | 1:0.8 | 43 | 39 |
| 0.004 | | | | 10 | | 1:2500 | 100 | 100 |
| 0.004 | | | | 2 | | 1:500 | 20 | 17 |
| 0.004 | | | | 0.4 | | 1:100 | 8 | 4 |
| 0.004 | | | | 0.080 | | 1:20 | 2 | 0 |
| 0.5 | | | | | 100 | 1:200 | 100 | 100 |
| 0.5 | | | | | 20 | 1:40 | 99 | 100 |
| 0.020 | | | | | 100 | 1:5000 | 59 | 58 |
| 0.020 | | | | | 20 | 1:1000 | 31 | 28 |
| 0.004 | | | | | 100 | 1:25000 | 59 | 58 |
| 0.004 | | | | | 20 | 1:5000 | 43 | 28 |

**Table H3: in vitro -Test with Parastagonospora nodorum**

| (I-746) (ppm) | (7.005) pyrimethanil (ppm) | (2.002) bixafen (ppm) | (1.055) mefentrifluconazole (ppm) | Ratio | Efficacy % | Colby expected value % |
|---|---|---|---|---|---|---|
| 0.5 | | | | | 100 | |
| 0.1 | | | | | 31 | |
| 0.020 | | | | | 0 | |
| 0.004 | | | | | 0 | |
| | 20 | | | | 100 | |
| | 4 | | | | 100 | |
| | 0.8 | | | | 99 | |
| | 0.16 | | | | 13 | |
| | | 1.0 | | | 45 | |
| | | 0.2 | | | 38 | |
| | | | 0.2 | | 99 | |
| | | | 0.04 | | 98 | |
| | | | 0.008 | | 81 | |
| 0.1 | 20 | | | 1:200 | 100 | 100 |
| 0.1 | 4 | | | 1:40 | 100 | 100 |
| 0.1 | 0.8 | | | 1:8 | 100 | 100 |
| 0.1 | 0.16 | | | 1:1.6 | 84 | 52 |
| 0.020 | 20 | | | 1:1000 | 100 | 100 |
| 0.020 | 4 | | | 1:200 | 100 | 100 |
| 0.020 | 0.8 | | | 1:40 | 100 | 99 |
| 0.020 | 0.16 | | | 1:8 | 52 | 18 |
| 0.5 | | 1.0 | | 1:2 | 100 | 100 |
| 0.5 | | 0.2 | | 1:0.4 | 99 | 100 |
| 0.020 | | 1.0 | | 1:50 | 53 | 48 |
| 0.020 | | 0.2 | | 1:10 | 53 | 41 |
| 0.004 | | 1.0 | | 1:250 | 50 | 45 |
| 0.004 | | 0.2 | | 1:50 | 42 | 38 |
| 0.1 | | | 0.2 | 1:2 | 100 | 99 |
| 0.1 | | | 0.04 | 1:0.4 | 100 | 99 |
| 0.1 | | | 0.008 | 1:0.08 | 98 | 89 |
| 0.020 | | | 0.2 | 1:10 | 98 | 99 |
| 0.020 | | | 0.04 | 1:2 | 97 | 98 |
| 0.020 | | | 0.008 | 1:0.4 | 87 | 81 |
| 0.004 | | | 0.2 | 1:50 | 97 | 99 |
| 0.004 | | | 0.04 | 1:10 | 98 | 98 |
| 0.004 | | | 0.008 | 1:2 | 91 | 81 |

**Table H4: in vitro -Test with Parastagonospora nodorum**

| (I-746) (ppm) | (1.018) prothioconazole (ppm) | (1.020) spiroxamine (ppm) | (13.001) fludioxonil (ppm) | Ratio | Efficacy % | Colby expected value % |
|---|---|---|---|---|---|---|
| 0.5 | | | | | 100 | |
| 0.1 | | | | | 31 | |
| 0.020 | | | | | 0 | |
| 0.004 | | | | | 0 | |
| | 1.0 | | | | 100 | |
| | 0.2 | | | | 99 | |
| | 0.04 | | | | 83 | |
| | | 20 | | | 0 | |
| | | 4 | | | 0 | |
| | | 0.8 | | | 6 | |
| | | | 5.0 | | 75 | |
| | | | 0.2 | | 0 | |
| | | | 0.04 | | 0 | |
| 0.5 | 1.0 | | | 1:2 | 100 | 100 |
| 0.5 | 0.2 | | | 1:0.4 | 99 | 100 |
| 0.5 | 0.04 | | | 1:0.08 | 99 | 100 |
| 0.020 | 1.0 | | | 1:50 | 100 | 100 |
| 0.020 | 0.2 | | | 1:10 | 98 | 99 |
| 0.020 | 0.04 | | | 1:2 | 87 | 84 |
| 0.004 | 1.0 | | | 1:250 | 100 | 100 |
| 0.004 | 0.2 | | | 1:50 | 99 | 99 |
| 0.004 | 0.04 | | | 1:10 | 86 | 83 |
| 0.5 | | 20 | | 1:40 | 100 | 100 |
| 0.5 | | 4 | | 1:8 | 100 | 100 |
| 0.5 | | 0.8 | | 1:1.6 | 100 | 100 |
| 0.1 | | 20 | | 1:200 | 72 | 37 |
| 0.1 | | 4 | | 1:40 | 43 | 37 |
| 0.1 | | 0.8 | | 1:8 | 38 | 41 |
| 0.004 | | 20 | | 1:5000 | 8 | 0 |
| 0.004 | | 4 | | 1:1000 | 18 | 0 |
| 0.004 | | 0.8 | | 1:200 | 0 | 6 |
| 0.5 | | | 5.0 | 1:10 | 100 | 100 |
| 0.5 | | | 0.2 | 1:0.4 | 99 | 100 |
| 0.5 | | | 0.04 | 1:0.08 | 100 | 100 |
| 0.1 | | | 5.0 | 1:50 | 97 | 84 |
| 0.1 | | | 0.2 | 1:2 | 81 | 37 |
| 0.1 | | | 0.04 | 1:0.4 | 40 | 37 |
| 0.020 | | | 5.0 | 1:250 | 83 | 76 |
| 0.020 | | | 0.2 | 1:10 | 0 | 2 |
| 0.020 | | | 0.04 | 1:2 | 0 | 2 |

**Table H5: in vitro -Test with Parastagonospora nodorum**

| (I-746) (ppm) | (5.003) captan (ppm) | (5.013) mancozeb (ppm) | (5.018) pro-pineb (ppm) | (15.012) fosetylaluminium (ppm) | Ratio | Efficacy % | Colby expected value % |
|---|---|---|---|---|---|---|---|
| 0.5 | | | | | | 100 | |
| 0.1 | | | | | | 31 | |
| 0.020 | | | | | | 0 | |
| 0.004 | | | | | | 0 | |
| | 20 | | | | | 100 | |
| | 4 | | | | | 54 | |
| | 0.16 | | | | | 3 | |
| | | 10 | | | | 100 | |
| | | 2 | | | | 19 | |
| | | 0.4 | | | | 1 | |
| | | 0.080 | | | | 4 | |
| | | | 100 | | | 100 | |
| | | | 20 | | | 66 | |
| | | | 4 | | | 40 | |
| | | | 0.8 | | | 7 | |
| | | | | 100 | | 49 | |
| | | | | 20 | | 32 | |
| | | | | 4 | | 2 | |
| | | | | 0.8 | | 0 | |
| 0.5 | 20 | | | | 1:40 | 100 | 100 |
| 0.5 | 4 | | | | 1:8 | 100 | 100 |
| 0.5 | 0.16 | | | | 1:0.32 | 99 | 100 |
| 0.004 | 20 | | | | 1:5000 | 100 | 100 |
| 0.004 | 4 | | | | 1:1000 | 60 | 54 |
| 0.004 | 0.16 | | | | 1:40 | 2 | 3 |
| 0.1 | | 10 | | | 1:100 | 99 | 100 |
| 0.1 | | 2 | | | 1:20 | 42 | 44 |
| 0.1 | | 0.4 | | | 1:4 | 44 | 32 |
| 0.1 | | 0.080 | | | 1:0.8 | 38 | 34 |
| 0.020 | | | 100 | | 1:5000 | 100 | 100 |
| 0.020 | | | 20 | | 1:1000 | 70 | 66 |
| 0.020 | | | 4 | | 1:200 | 44 | 40 |
| 0.020 | | | 0.8 | | 1:40 | 13 | 7 |
| 0.020 | | | | 100 | 1:5000 | 58 | 49 |
| 0.020 | | | | 20 | 1:1000 | 32 | 32 |
| 0.020 | | | | 4 | 1:200 | 0 | 2 |
| 0.020 | | | | 0.8 | 1:40 | 0 | 0 |

**Table H6: in vitro -Test with Parastagonospora nodorum**

| (I-749) (ppm) | (7.005) pyrimethanil (ppm) | (2.002) bixafen (ppm) | (2.005) fluopyram (ppm) | Ratio | Efficacy % | Colby expected value % |
|---|---|---|---|---|---|---|
| 0.5 | | | | | 100 | |
| 0.1 | | | | | 92 | |
| 0.020 | | | | | 0 | |
| 0.004 | | | | | 0 | |
| | 4 | | | | 100 | |
| | 0.8 | | | | 99 | |
| | 0.16 | | | | 18 | |
| | | 1.0 | | | 33 | |
| | | 0.2 | | | 30 | |
| | | 0.04 | | | 3 | |
| | | | 20 | | 65 | |
| | | | 4 | | 41 | |
| | | | 0.8 | | 32 | |
| | | | 0.16 | | 0 | |
| 0.1 | 4 | | | 1:40 | 100 | 100 |
| 0.1 | 0.8 | | | 1:8 | 99 | 100 |
| 0.1 | 0.16 | | | 1:1.6 | 95 | 94 |
| 0.020 | 4 | | | 1:200 | 100 | 100 |
| 0.020 | 0.8 | | | 1:40 | 100 | 99 |
| 0.020 | 0.16 | | | 1:8 | 62 | 18 |
| 0.004 | 4 | | | 1:1000 | 100 | 100 |
| 0.004 | 0.8 | | | 1:200 | 100 | 99 |
| 0.004 | 0.16 | | | 1:40 | 23 | 18 |
| 0.5 | | 1.0 | | 1:2 | 100 | 100 |
| 0.5 | | 0.2 | | 1:0.4 | 100 | 100 |
| 0.5 | | 0.04 | | 1:0.08 | 100 | 100 |
| 0.020 | | 1.0 | | 1:50 | 39 | 33 |
| 0.020 | | 0.2 | | 1:10 | 35 | 30 |
| 0.020 | | 0.04 | | 1:2 | 0 | 3 |
| 0.004 | | 1.0 | | 1:250 | 39 | 33 |
| 0.004 | | 0.2 | | 1:50 | 33 | 30 |
| 0.004 | | 0.04 | | 1:10 | 2 | 3 |
| 0.020 | | | 20 | 1:1000 | 71 | 66 |
| 0.020 | | | 4 | 1:200 | 45 | 41 |
| 0.020 | | | 0.8 | 1:40 | 36 | 32 |
| 0.020 | | | 0.16 | 1:8 | 0 | 0 |
| 0.004 | | | 20 | 1:5000 | 69 | 65 |
| 0.004 | | | 4 | 1:1000 | 53 | 41 |
| 0.004 | | | 0.8 | 1:200 | 42 | 32 |
| 0.004 | | | 0.16 | 1:40 | 0 | 0 |

**Table H7: in vitro -Test with Parastagonospora nodorum**

| (I-749) (ppm) | (2.028) inpyrfluxam (ppm) | (3.020) trifloxystrobin (ppm) | (1.002) difenoconazole (ppm) | (13.001) fludioxonil (ppm) | Ratio | Efficacy % | Colby expected value % |
|---|---|---|---|---|---|---|---|
| 0.5 | | | | | | 100 | |
| 0.1 | | | | | | 92 | |
| 0.020 | | | | | | 0 | |
| 0.004 | | | | | | 0 | |
| | 1.0 | | | | | 33 | |
| | 0.2 | | | | | 33 | |
| | 0.04 | | | | | 23 | |
| | 0.008 | | | | | 0 | |
| | | 1.0 | | | | 83 | |
| | | 0.2 | | | | 75 | |
| | | 0.04 | | | | 61 | |
| | | 0.008 | | | | 36 | |
| | | | 1.0 | | | 97 | |
| | | | 0.2 | | | 83 | |
| | | | 0.04 | | | 16 | |
| | | | 0.008 | | | 0 | |
| | | | | 5.0 | | 75 | |
| | | | | 1.0 | | 34 | |
| | | | | 0.2 | | 0 | |
| | | | | 0.04 | | 0 | |
| 0.020 | 1.0 | | | | 1:50 | 41 | 33 |
| 0.020 | 0.2 | | | | 1:10 | 31 | 33 |
| 0.020 | 0.04 | | | | 1:2 | 14 | 23 |
| 0.020 | 0.008 | | | | 1:0.4 | 0 | 0 |
| 0.004 | 1.0 | | | | 1:250 | 44 | 33 |
| 0.004 | 0.2 | | | | 1:50 | 33 | 33 |
| 0.004 | 0.04 | | | | 1:10 | 28 | 23 |
| 0.004 | 0.008 | | | | 1:2 | 0 | 0 |
| 0.020 | | 1.0 | | | 1:50 | 82 | 83 |
| 0.020 | | 0.2 | | | 1:10 | 76 | 75 |
| 0.020 | | 0.04 | | | 1:2 | 62 | 61 |
| 0.020 | | 0.008 | | | 1:0.4 | 42 | 36 |
| 0.004 | | 1.0 | | | 1:250 | 81 | 83 |
| 0.004 | | 0.2 | | | 1:50 | 79 | 75 |
| 0.004 | | 0.04 | | | 1:10 | 58 | 61 |
| 0.004 | | 0.008 | | | 1:2 | 43 | 36 |
| 0.020 | | | 1.0 | | 1:50 | 98 | 97 |
| 0.020 | | | 0.2 | | 1:10 | 90 | 83 |
| 0.020 | | | 0.04 | | 1:2 | 21 | 16 |
| 0.020 | | | 0.008 | | 1:0.4 | 0 | 0 |
| 0.004 | | | 1.0 | | 1:250 | 98 | 97 |
| 0.004 | | | 0.2 | | 1:50 | 85 | 83 |
| 0.004 | | | 0.04 | | 1:10 | 16 | 16 |
| 0.004 | | | 0.008 | | 1:2 | 0 | 0 |
| 0.020 | | | | 5.0 | 1:250 | 84 | 75 |
| 0.020 | | | | 1.0 | 1:50 | 41 | 34 |
| 0.020 | | | | 0.2 | 1:10 | 0 | 0 |
| 0.020 | | | | 0.04 | 1:2 | 0 | 0 |
| 0.004 | | | | 5.0 | 1:1250 | 84 | 75 |
| 0.004 | | | | 1.0 | 1:250 | 52 | 34 |
| 0.004 | | | | 0.2 | 1:50 | 0 | 0 |
| 0.004 | | | | 0.04 | 1:10 | 0 | 0 |

**Table 11: in vitro -Test with Ustilago segetum var. avenae**

| (I-655) (ppm) | (2.038) isoflucypram (ppm) | (3.020) trifloxystrobin (ppm) | (1.002) difenoconazole (ppm) | Ratio | Efficacy % | Colby expected value % |
|---|---|---|---|---|---|---|
| 0.5 | | | | | 0 | |
| 0.1 | | | | | 0 | |
| 0.020 | | | | | 6 | |
| 0.004 | | | | | 7 | |
| | 1.0 | | | | 100 | |
| | 0.2 | | | | 100 | |
| | 0.04 | | | | 22 | |
| | | 1.0 | | | 82 | |
| | | 0.2 | | | 53 | |
| | | | 1.0 | | 100 | |
| | | | 0.2 | | 57 | |
| | | | 0.04 | | 21 | |
| | | | 0.008 | | 14 | |
| 0.5 | 1.0 | | | 1:2 | 100 | 100 |
| 0.5 | 0.2 | | | 1:0.4 | 100 | 100 |
| 0.5 | 0.04 | | | 1:0.08 | 100 | 22 |
| 0.1 | 1.0 | | | 1:10 | 100 | 100 |
| 0.1 | 0.2 | | | 1:2 | 100 | 100 |
| 0.1 | 0.04 | | | 1:0.4 | 41 | 22 |
| 0.1 | | 1.0 | | 1:10 | 87 | 82 |
| 0.1 | | 0.2 | | 1:2 | 70 | 53 |
| 0.020 | | 1.0 | | 1:50 | 80 | 82 |
| 0.020 | | 0.2 | | 1:10 | 71 | 53 |
| 0.004 | | 1.0 | | 1:250 | 94 | 85 |
| 0.004 | | 0.2 | | 1:50 | 73 | 61 |
| 0.5 | | | 1.0 | 1:2 | 100 | 100 |
| 0.5 | | | 0.2 | 1:0.4 | 100 | 57 |
| 0.5 | | | 0.04 | 1:0.08 | 56 | 21 |
| 0.5 | | | 0.008 | 1:0.016 | 12 | 14 |
| 0.1 | | | 1.0 | 1:10 | 100 | 100 |
| 0.1 | | | 0.2 | 1:2 | 98 | 57 |
| 0.1 | | | 0.04 | 1:0.4 | 21 | 21 |
| 0.1 | | | 0.008 | 1:0.08 | 18 | 14 |
| 0.020 | | | 1.0 | 1:50 | 100 | 100 |
| 0.020 | | | 0.2 | 1:10 | 96 | 57 |
| 0.020 | | | 0.04 | 1:2 | 22 | 21 |
| 0.020 | | | 0.008 | 1:0.4 | 16 | 14 |

**Table 12: in vitro -Test with Ustilago segetum var. avenae**

| (I-655) (ppm) | (1.055) mefen-triflu-conazole (ppm) | (15.064 ) (ppm) | (5.010) dithianon (ppm) | (5.013) mancozeb (ppm) | (5.018) propineb (ppm) | Ratio | Efficacy % | Colby expected value % |
|---|---|---|---|---|---|---|---|---|
| 0.5 | | | | | | | 0 | |
| 0.1 | | | | | | | 0 | |
| 0.020 | | | | | | | 6 | |
| 0.004 | | | | | | | 7 | |
| | 1.0 | | | | | | 100 | |
| | 0.2 | | | | | | 98 | |
| | 0.04 | | | | | | 87 | |
| | 0.008 | | | | | | 34 | |
| | | 10 | | | | | 100 | |
| | | 2 | | | | | 41 | |
| | | 0.4 | | | | | 0 | |
| | | | 20 | | | | 98 | |
| | | | 4 | | | | 100 | |
| | | | 0.8 | | | | 11 | |
| | | | 0.16 | | | | 13 | |
| | | | | 10 | | | 96 | |
| | | | | 2 | | | 8 | |
| | | | | 0.4 | | | 0 | |
| | | | | | 100.00 | | 33 | |
| | | | | | 20 | | 98 | |
| | | | | | 4 | | 1 | |
| 0.004 | 1.0 | | | | | 1:250 | 100 | 100 |
| 0.004 | 0.2 | | | | | 1:50 | 100 | 99 |
| 0.004 | 0.04 | | | | | 1:10 | 99 | 89 |
| 0.004 | 0.008 | | | | | 1:2 | 100 | 46 |
| 0.5 | | 10 | | | | 1:20 | 100 | 100 |
| 0.5 | | 2 | | | | 1:4 | 100 | 41 |
| 0.5 | | 0.4 | | | | 1:0.8 | 3 | 0 |
| 0.1 | | 10 | | | | 1:100 | 100 | 100 |
| 0.1 | | 2 | | | | 1:20 | 100 | 41 |
| 0.1 | | 0.4 | | | | 1:4 | 2 | 0 |
| 0.020 | | 10 | | | | 1:500 | 100 | 100 |
| 0.020 | | 2 | | | | 1:100 | 100 | 45 |
| 0.020 | | 0.4 | | | | 1:20 | 1 | 6 |
| 0.004 | | 10 | | | | 1:2500 | 100 | 100 |
| 0.004 | | 2 | | | | 1:500 | 100 | 45 |
| 0.004 | | 0.4 | | | | 1:100 | 3 | 7 |
| 0.5 | | | 20 | | | 1:40 | 100 | 98 |
| 0.5 | | | 4 | | | 1:8 | 100 | 100 |
| 0.5 | | | 0.8 | | | 1:1.6 | 47 | 11 |
| 0.5 | | | 0.16 | | | 1:0.32 | 13 | 13 |
| 0.5 | | | | 10 | | 1:20 | 100 | 96 |
| 0.5 | | | | 2 | | 1:4 | 98 | 8 |
| 0.5 | | | | 0.4 | | 1:0.8 | 0 | 0 |
| 0.5 | | | | | 100.00 | 1:200 | 100 | 33 |
| 0.5 | | | | | 20 | 1:40 | 96 | 98 |
| 0.5 | | | | | 4 | 1:8 | 24 | 1 |
| 0.1 | | | | | 100.00 | 1:1000 | 36 | 33 |
| 0.1 | | | | | 20 | 1:200 | 100 | 98 |
| 0.1 | | | | | 4 | 1:40 | 23 | 1 |
| 0.020 | | | | | 100.00 | 1:5000 | 29 | 33 |
| 0.020 | | | | | 20 | 1:1000 | 100 | 98 |
| 0.020 | | | | | 4 | 1:200 | 16 | 1 |
| 0.004 | | | | | 100.00 | 1:25000 | 41 | 33 |
| 0.004 | | | | | 20 | 1:5000 | 100 | 98 |
| 0.004 | | | | | 4 | 1:1000 | 12 | 1 |

**Table 13: in vitro -Test with Ustilago segetum var, avenae**

| (I-746) (ppm) | (2.038) isoflucypram (ppm) | (3.025) fenpicoxamid (ppm) | (1.002) difenoconazole (ppm) | (5.013) mancozeb (ppm) | Ratio | Efficacy % | Colby expected value % |
|---|---|---|---|---|---|---|---|
| 0.5 | | | | | | 0 | |
| 0.1 | | | | | | 0 | |
| 0.020 | | | | | | 2 | |
| 0.004 | | | | | | 0 | |
| | 1.0 | | | | | 100 | |
| | 0.2 | | | | | 98 | |
| | 0.04 | | | | | 47 | |
| | 0.008 | | | | | 7 | |
| | | 5.0 | | | | 0 | |
| | | 1.0 | | | | 0 | |
| | | 0.2 | | | | 0 | |
| | | 0.04 | | | | 3 | |
| | | | 1.0 | | | 100 | |
| | | | 0.2 | | | 59 | |
| | | | 0.04 | | | 10 | |
| | | | 0.008 | | | 8 | |
| | | | | 10 | | 99 | |
| | | | | 2 | | 0 | |
| | | | | 0.4 | | 0 | |
| | | | | 0.080 | | 0 | |
| 0.5 | 1.0 | | | | 1:2 | 100 | 100 |
| 0.5 | 0.2 | | | | 1:0.4 | 100 | 98 |
| 0.5 | 0.04 | | | | 1:0.08 | 63 | 47 |
| 0.5 | 0.008 | | | | 1:0.016 | 0 | 7 |
| 0.5 | | 5.0 | | | 1:10 | 27 | 0 |
| 0.5 | | 1.0 | | | 1:2 | 46 | 0 |
| 0.5 | | 0.2 | | | 1:0.4 | 2 | 0 |
| 0.5 | | 0.04 | | | 1:0.08 | 3 | 3 |
| 0.5 | | | 1.0 | | 1:2 | 100 | 100 |
| 0.5 | | | 0.2 | | 1:0.4 | 99 | 59 |
| 0.5 | | | 0.04 | | 1:0.08 | 7 | 10 |
| 0.5 | | | 0.008 | | 1:0.016 | 10 | 8 |
| 0.1 | | | 1.0 | | 1:10 | 100 | 100 |
| 0.1 | | | 0.2 | | 1:2 | 98 | 59 |
| 0.1 | | | 0.04 | | 1:0.4 | 16 | 10 |
| 0.1 | | | 0.008 | | 1:0.08 | 13 | 8 |
| 0.5 | | | | 10 | 1:20 | 100 | 99 |
| 0.5 | | | | 2 | 1:4 | 24 | 0 |
| 0.5 | | | | 0.4 | 1:0.8 | 0 | 0 |
| 0.5 | | | | 0.080 | 1:0.16 | 0 | 0 |

**Table 14: in vitro -Test with Ustilago segetum var. avenae**

| (I-746) (ppm) | (1.055) mefentrifluconazole (ppm) | (1.020) spiroxamine (ppm) | (15.064) (ppm) | (5.012) folpet (ppm) | (5.018) propineb (ppm) | Ratio | Efficacy % | Colby expected value % |
|---|---|---|---|---|---|---|---|---|
| 0.5 | | | | | | | 0 | |
| 0.1 | | | | | | | 0 | |
| 0.020 | | | | | | | 2 | |
| 0.004 | | | | | | | 0 | |
| | 1.0 | | | | | | 100 | |
| | 0.2 | | | | | | 67 | |
| | 0.008 | | | | | | 5 | |
| | | 20 | | | | | 87 | |
| | | 4 | | | | | 0 | |
| | | 0.8 | | | | | 0 | |
| | | 0.16 | | | | | 0 | |
| | | | 10 | | | | 100 | |
| | | | 2 | | | | 68 | |
| | | | 0.4 | | | | 2 | |
| | | | 0.080 | | | | 1 | |
| | | | | 10 | | | 100 | |
| | | | | 2 | | | 100 | |
| | | | | 0.4 | | | 17 | |
| | | | | 0.08 | | | 12 | |
| | | | | | 100.00 | | 79 | |
| | | | | | 20 | | 100 | |
| | | | | | 4 | | 8 | |
| | | | | | 0.8 | | 4 | |
| 0.5 | 1.0 | | | | | 1:2 | 100 | 100 |
| 0.5 | 0.2 | | | | | 1:0.4 | 95 | 67 |
| 0.5 | 0.008 | | | | | 1:0.016 | 0 | 5 |
| 0.1 | 1.0 | | | | | 1:10 | 100 | 100 |
| 0.1 | 0.2 | | | | | 1:2 | 77 | 67 |
| 0.1 | 0.008 | | | | | 1:0.08 | 0 | 5 |
| 0.020 | 1.0 | | | | | 1:50 | 100 | 100 |
| 0.020 | 0.2 | | | | | 1:10 | 66 | 67 |
| 0.020 | 0.008 | | | | | 1:0.4 | 0 | 5 |
| 0.004 | 1.0 | | | | | 1:250 | 100 | 100 |
| 0.004 | 0.2 | | | | | 1:50 | 98 | 67 |
| 0.004 | 0.008 | | | | | 1:2 | 37 | 5 |
| 0.020 | | 20 | | | | 1:1000 | 99 | 88 |
| 0.020 | | 4 | | | | 1:200 | 0 | 2 |
| 0.020 | | 0.8 | | | | 1:40 | 1 | 2 |
| 0.020 | | 0.16 | | | | 1:8 | 0 | 2 |
| 0.004 | | 20 | | | | 1:5000 | 100 | 87 |
| 0.004 | | 4 | | | | 1:1000 | 0 | 0 |
| 0.004 | | 0.8 | | | | 1:200 | 0 | 0 |
| 0.004 | | 0.16 | | | | 1:40 | 0 | 0 |
| 0.5 | | | 10 | | | 1:20 | 99 | 100 |
| 0.5 | | | 2 | | | 1:4 | 90 | 68 |
| 0.5 | | | 0.4 | | | 1:0.8 | 3 | 2 |
| 0.5 | | | 0.080 | | | 1:0.16 | 0 | 1 |
| 0.1 | | | 10 | | | 1:100 | 100 | 100 |
| 0.1 | | | 2 | | | 1:20 | 100 | 68 |
| 0.1 | | | 0.4 | | | 1:4 | 6 | 2 |
| 0.1 | | | 0.080 | | | 1:0.8 | 0 | 1 |
| 0.020 | | | 10 | | | 1:500 | 100 | 100 |
| 0.020 | | | 2 | | | 1:100 | 96 | 69 |
| 0.020 | | | 0.4 | | | 1:20 | 3 | 4 |
| 0.020 | | | 0.080 | | | 1:4 | 3 | 3 |
| 0.004 | | | 10 | | | 1:2500 | 100 | 100 |
| 0.004 | | | 2 | | | 1:500 | 99 | 68 |
| 0.004 | | | 0.4 | | | 1:100 | 2 | 2 |
| 0.004 | | | 0.080 | | | 1:20 | 0 | 1 |
| 0.5 | | | | 10 | | 1:20 | 100 | 100 |
| 0.5 | | | | 2 | | 1:4 | 100 | 100 |
| 0.5 | | | | 0.4 | | 1:0.8 | 34 | 17 |
| 0.5 | | | | 0.08 | | 1:0.16 | 7 | 12 |
| 0.1 | | | | 10 | | 1:100 | 100 | 100 |
| 0.1 | | | | 2 | | 1:20 | 100 | 100 |
| 0.1 | | | | 0.4 | | 1:4 | 24 | 17 |
| 0.1 | | | | 0.08 | | 1:0.8 | 8 | 12 |
| 0.020 | | | | | 100.00 | 1:5000 | 79 | 80 |
| 0.020 | | | | | 20 | 1:1000 | 100 | 100 |
| 0.020 | | | | | 4 | 1:200 | 18 | 9 |
| 0.020 | | | | | 0.8 | 1:40 | 3 | 5 |
| 0.004 | | | | | 100.00 | 1:25000 | 89 | 81 |
| 0.004 | | | | | 20 | 1:5000 | 99 | 100 |
| 0.004 | | | | | 4 | 1:1000 | 9 | 13 |
| 0.004 | | | | | 0.8 | 1:200 | 5 | 9 |

**Table I5: in vitro -Test with Ustilago segetum var. avenae**

| (I-749) (ppm) | (2.038) isoflucypram (ppm) | (3.020) trifloxystrobin (ppm) | (1.002) difenoconazole (ppm) | Ratio | Efficacy % | Colby expected value % |
|---|---|---|---|---|---|---|
| 0.5 | | | | | 0 | |
| 0.1 | | | | | 0 | |
| 0.020 | | | | | 0 | |
| 0.004 | | | | | 1 | |
| | 1.0 | | | | 100 | |
| | 0.2 | | | | 100 | |
| | 0.04 | | | | 45 | |
| | 0.008 | | | | 0 | |
| | | 0.2 | | | 53 | |
| | | 0.04 | | | 40 | |
| | | 0.008 | | | 16 | |
| | | | 1.0 | | 100 | |
| | | | 0.2 | | 70 | |
| | | | 0.04 | | 4 | |
| 0.5 | 1.0 | | | 1:2 | 100 | 100 |
| 0.5 | 0.2 | | | 1:0.4 | 100 | 100 |
| 0.5 | 0.04 | | | 1:0.08 | 91 | 45 |
| 0.5 | 0.008 | | | 1:0.016 | 0 | 0 |
| 0.1 | 1.0 | | | 1:10 | 100 | 100 |
| 0.1 | 0.2 | | | 1:2 | 100 | 100 |
| 0.1 | 0.04 | | | 1:0.4 | 69 | 45 |
| 0.1 | 0.008 | | | 1:0.08 | 0 | 0 |
| 0.1 | | 0.2 | | 1:2 | 61 | 53 |
| 0.1 | | 0.04 | | 1:0.4 | 41 | 40 |
| 0.1 | | 0.008 | | 1:0.08 | 21 | 16 |
| 0.5 | | | 1.0 | 1:2 | 100 | 100 |
| 0.5 | | | 0.2 | 1:0.4 | 100 | 70 |
| 0.5 | | | 0.04 | 1:0.08 | 23 | 4 |
| 0.1 | | | 1.0 | 1:10 | 100 | 100 |
| 0.1 | | | 0.2 | 1:2 | 98 | 70 |
| 0.1 | | | 0.04 | 1:0.4 | 12 | 4 |
| 0.020 | | | 1.0 | 1:50 | 100 | 100 |
| 0.020 | | | 0.2 | 1:10 | 74 | 70 |
| 0.020 | | | 0.04 | 1:2 | 1 | 4 |

**Table I6: in vitro -Test with Ustilago segetum var. avenae**

| (I-749) (ppm) | (13.001) fludioxonil (ppm) | (5.012) folpet (ppm) | (5.013) mancozeb (ppm) | (5.018) propineb (ppm) | Ratio | Efficacy % | Colby expected value % |
|---|---|---|---|---|---|---|---|
| 0.5 | | | | | | 0 | |
| 0.1 | | | | | | 0 | |
| 0.020 | | | | | | 0 | |
| 0.004 | | | | | | 1 | |
| | 5.0 | | | | | 100 | |
| | 1.0 | | | | | 100 | |
| | 0.2 | | | | | 60 | |
| | 0.04 | | | | | 10 | |
| | | 2 | | | | 100 | |
| | | 0.4 | | | | 7 | |
| | | | 10 | | | 100 | |
| | | | 2 | | | 5 | |
| | | | 0.080 | | | 1 | |
| | | | | 20 | | 100 | |
| | | | | 4 | | 26 | |
| | | | | 0.8 | | 6 | |
| 0.5 | 5.0 | | | | 1:10 | 100 | 100 |
| 0.5 | 1.0 | | | | 1:2 | 100 | 100 |
| 0.5 | 0.2 | | | | 1:0.4 | 100 | 60 |
| 0.5 | 0.04 | | | | 1:0.08 | 0 | 10 |
| 0.5 | | 2 | | | 1:4 | 100 | 100 |
| 0.5 | | 0.4 | | | 1:0.8 | 15 | 7 |
| 0.1 | | 2 | | | 1:20 | 100 | 100 |
| 0.1 | | 0.4 | | | 1:4 | 19 | 7 |
| 0.020 | | 2 | | | 1:100 | 100 | 100 |
| 0.020 | | 0.4 | | | 1:20 | 12 | 7 |
| 0.004 | | 2 | | | 1:500 | 100 | 100 |
| 0.004 | | 0.4 | | | 1:100 | 15 | 7 |
| 0.5 | | | 10 | | 1:20 | 100 | 100 |
| 0.5 | | | 2 | | 1:4 | 59 | 5 |
| 0.5 | | | 0.080 | | 1:0.16 | 0 | 1 |
| 0.1 | | | 10 | | 1:100 | 100 | 100 |
| 0.1 | | | 2 | | 1:20 | 7 | 5 |
| 0.1 | | | 0.080 | | 1:0.8 | 0 | 1 |
| 0.004 | | | 10 | | 1:2500 | 100 | 100 |
| 0.004 | | | 2 | | 1:500 | 10 | 7 |
| 0.004 | | | 0.080 | | 1:20 | 3 | 4 |
| 0.5 | | | | 20 | 1:40 | 100 | 100 |
| 0.5 | | | | 4 | 1:8 | 100 | 26 |
| 0.5 | | | | 0.8 | 1:1.6 | 8 | 6 |
| 0.1 | | | | 20 | 1:200 | 100 | 100 |
| 0.1 | | | | 4 | 1:40 | 67 | 26 |
| 0.1 | | | | 0.8 | 1:8 | 13 | 6 |
| 0.020 | | | | 20 | 1:1000 | 100 | 100 |
| 0.020 | | | | 4 | 1:200 | 62 | 33 |
| 0.020 | | | | 0.8 | 1:40 | 11 | 14 |

## Claims

1. Active compound combination comprising
(A) at least one compound selected from the group consisting of (I-655) 6-chloro-3-(3-cyclopropyl-2-fluorophenoxy)-N-[2-(2,4-dimethylphenyl)-2,2-difluoroethyl]-5-methylpyridazine-4-carboxamide, (I-667) 3-(3-bromo-2-fluorophenoxy)-6-chloro-N-[2-(2-chloro-4-methylphenyl)-2,2-difluoroethyl]-5-methylpyridazine-4-carboxamide, (I-746) 6-chloro-N-[2-(2-chloro-4-methylphenyl)-2,2-difluoroethyl]-3-(3-cyclopropyl-2-fluorophenoxy)-5-methylpyridazine-4-carboxamide, (I-749) 6-chloro-3-(3-cyclopropyl-2-fluorophenoxy)-N-[2-(3,4-dimethylphenyl)-2,2-difluoroethyl]-5-methylpyridazine-4-carboxamide, (I-784) 6-chloro-3-(3-chloro-2-fluorophenoxy)-N-[2-(2,4-dimethylphenyl)-2,2-difluoroethyl]-5-methylpyridazine-4-carboxamide, (I-840) N-[2-(2-bromo-4-methylphenyl)-2,2-difluoroethyl]-6-chloro-3-(3-cyclopropyl-2-fluorophenoxy)-5-methylpyridazine-4-carboxamide,
and
(B) at least one further active compound selected from (1.002) difenoconazole, (1.018) prothioconazole, (1.020) spiroxamine, (1.021) tebuconazole, (1.055) mefentrifluconazole, (2.002) bixafen, (2.005) fluopyram, (2.028) inpyrfluxam, (2.038) isoflucypram, (3.020) trifloxystrobin, (3.025) fenpicoxamid, (5.003) captan, (5.010) dithianon, (5.012) folpet, (5.013) mancozeb, (5.018) propineb, (6.002) isotianil, (7.005) pyrimethanil, (13.001) fludioxonil, (13.004) proquinazid, (13.005) quinoxyfen, (15.012) fosetyl-aluminium, (15.016) metrafenone, (15.064) (N'-[2-chloro-4-(2-fluorophenoxy)-5-methylphenyl]-N-ethyl-N-methylimidoformamide) and (18.001) a composition comprising one or more fatty acids or derivatives thereof selected from unsaturated and saturated C₁₂-C₂₄ fatty acids, salts thereof, esters thereof or mixtures of any of the foregoing, wherein at least 95% of said fatty acids or derivatives thereof are in the range of C₁₄ to C₂₀ .

2. Composition for controlling harmful microorganisms, preferably phytopathogenic harmful fungi, in crop protection and in the protection of materials, **characterized by** a content of an active compound combination according to claim 1, in addition to at least one extender and/or surfactant.

3. Method for controlling harmful microorganisms, preferably phytopathogenic harmful fungi, in crop protection and in the protection of materials, **characterized in that** an active compound combination according to claim 1 or a composition according to claim 2 is applied to the harmful microorganisms and/or their habitat.

4. Use of an active compound combination according to claim 1 or a composition according to claim 2 for control of harmful microorganisms, preferably phytopathogenic harmful fungi, in crop protection and in the protection of materials.

5. Use of an active compound combination according to claim 1 or a composition according to claim 2 for treatment of a transgenic plant.

6. Use of an active compound combination according to claim 1 or a composition according to claim 2 for treatment of seed, preferably seed of a transgenic plant.

7. Seed coated with an active compound combination according to claim 1 or a composition according to claim 2.

## Patentansprüche

1. Wirkstoffkombination, umfassend
(A) mindestens eine Verbindung, ausgewählt aus der Gruppe bestehend aus (I-655) 6-Chlor-3-(3-cyclopropyl-2-fluorphenoxy)-N-[2-(2,4-dimethylphenyl)-2,2-difluorethyl]-5-methylpyridazin-4-carboxamid, (I-667) 3-(3-Brom-2-fluorphenoxy)-6-Chlor-N-[2-(2-Chlor-4-methylphenyl)-2,2-difluorethyl]-5-methylpyridazin-4-carboxamid, (I-746) 6-Chlor-N-[2-(2-Chlor-4-methylphenyl)-2,2-difluorethyl]-3-(3-cyclopropyl-2-fluor-phenoxy)-5-methylpyridazin-4-carboxamid, (I-749) 6-Chlor-3-(3-cyclopropyl-2-fluorphenoxy)-N-[2-(3,4-dimethylphenyl)-2,2-difluorethyl]-5-methylpyridazin-4-carboxamid, (I-784) 6-Chlor-3-(3-Chlor-2-fluorphenoxy)-N-[2-(2,4-dimethylphenyl)-2,2-difluorethyl]-5-methylpyridazin-4-carboxamid, (I-840) N-[2-(2-Brom-4-methylphenyl)-2,2-difluorethyl]-6-Chlor-3-(3-cyclopropyl-2-fluorphenoxy)-5-methylpyridazin-4-carboxamid,
und
(B) mindestens einen weiteren Wirkstoff, ausgewählt aus(1.002) Difenoconazole,(1.018) Prothioconazole,(1.020) Spiroxamine,(1.021) Tebuconazole,(1.055) Mefentrifluconazole, (2.002) Bixafen,(2.005) Fluopyram, (2.028) Inpyrfluxam, (2.038) Isoflucypram, (3.020) Trifloxystrobin, (3.025) Fenpicoxamid, (5.003) Captan, (5.010) Dithianon, (5.012) Folpet, (5.013) Mancozeb,(5.018) Propineb, (6.002) Isotianil,(7.005) Pyrimethanil, (13.001) Fludioxonil, (13.004) Proquinazid, (13.005) Quinoxyfen, (15.012) Fosetyl-Aluminium, (15.016) Metrafenone, (15.064) (N'-[2-Chlor-4-(2-fluorphenoxy)-5-methylphenyl]-N-ethyl-N-methylimidoformamid) und (18.001) eine Zusammensetzung, umfassend eine oder mehrere Fettsäuren oder Derivate davon, ausgewählt aus ungesättigten und gesättigten C₁₂-C₂₄-Fettsäuren, deren Salzen, deren Estern oder Mischungen aus einem der Vorgenannten, wobei mindestens 95 % der genannten Fettsäuren oder Derivate davon im Bereich von C₁₄ to C₂₀ liegen.

2. Zusammensetzung zur Bekämpfung von schädlichen Mikroorganismen, vorzugsweise phytopathogenen schädlichen Pilzen, im Pflanzenschutz und im Materialschutz, **gekennzeichnet durch** einen Gehalt an einer Wirkstoffkombination nach Anspruch 1, zusätzlich zu mindestens einem Streckmittel und/oder Tensid.

3. Verfahren zur Bekämpfung von schädlichen Mikroorganismen, vorzugsweise phytopathogenen schädlichen Pilzen, im Pflanzenschutz und im Materialschutz, **dadurch gekennzeichnet, dass** eine Wirkstoffkombination nach Anspruch 1 oder eine Zusammensetzung nach Anspruch 2 auf die schädlichen Mikroorganismen und/oder deren Habitat appliziert wird.

4. Verwendung einer Wirkstoffkombination nach Anspruch 1 oder einer Zusammensetzung nach Anspruch 2 zur Bekämpfung von schädlichen Mikroorganismen, vorzugsweise phytopathogenen schädlichen Pilzen, im Pflanzenschutz und im Materialschutz.

5. Verwendung einer Wirkstoffkombination nach Anspruch 1 oder einer Zusammensetzung nach Anspruch 2 zur Behandlung einer transgenen Pflanze.

6. Verwendung einer Wirkstoffkombination nach Anspruch 1 oder einer Zusammensetzung nach Anspruch 2 zur Behandlung von Saatgut, vorzugsweise Saatgut einer transgenen Pflanze.

7. Saatgut, beschichtet mit einer Wirkstoffkombination nach Anspruch 1 oder einer Zusammensetzung nach Anspruch 2.

## Revendications

1. Combinaison de composés actifs comprenant
(A) au moins un composé sélectionné parmi le groupe consistant en (I-655) 6-chloro-3-(3-cyclopropyl-2-fluorophenoxy)-N-[2-(2,4-dimethylphenyl)-2,2-difluoroethyl]-5-methylpyridazine-4-carboxamide, (I-667) 3-(3-bromo-2-fluorophenoxy)-6-chloro-N-[2-(2-chloro-4-methylphenyl)-2,2-difluoroethyl]-5-methylpyridazine-4-carboxamide, (I-746) 6-chloro-N-[2-(2-chloro-4-methylphenyl)-2,2-difluoroethyl]-3-(3-cyclopropyl-2-fluorophenoxy)-5-methylpyridazine-4-carboxamide, (I-749) 6-chloro-3-(3-cyclo-propyl-2-fluorophenoxy)-N-[2-(3,4-dimethylphenyl)-2,2-difluoroethyl]-5-methylpyridazine-4-carboxamide, (I-784) 6-chloro-3-(3-chloro-2-fluorophenoxy)-N-[2-(2,4-dimethylphenyl)-2,2-difluoroethyl]-5-methylpyridazine-4-carboxamide,
et
(B) au moins un autre composé actif sélectionné parmi (1.002) difenoconazole, (1.018) prothioconazole, (1.020) spiroxamine, (1.021) tebuconazole, (1.055) mefentrifluconazole, (2.002) bixafen, (2.005) fluopyram, (2.028) inpyrfluxam, (2.038) isoflucypram, (3.020) trifloxystrobin, (3.025) fenpicoxamid, (5.003) captan, (5.010) dithianon, (5.012) folpet, (5.013) mancozeb, (5.018) propineb, (6.002) isotianil, (7.005) pyrimethanil, (13.001) fludioxonil, (13.004) proquinazid, (13.005) quinoxyfen, (15.012) fosetyl-aluminium, (15.016) métrafénone, (15.064) (N'-[2-chloro-4-(2-fluorophenoxy)-5-methylphenyl]-N-ethyl-N-methylimidoformamide) et (18.001) une composition comprenant un ou plusieurs acides gras ou dérivés de ceux-ci sélectionnés parmi les acides gras C₁₂-C₂₄ insaturés et saturés, leurs sels, leurs esters ou des mélanges de l'un quelconque de ce qui précède, dans laquelle au moins 95 % desdits acides gras ou dérivés de ceux-ci sont dans la plage de C₁₄ à C₂₀.

2. Composition destinée à lutter contre des micro-organismes nuisibles, de préférence des champignons nuisibles phytopathogènes, dans la protection des cultures et dans la protection des matériaux, **caractérisée par** une teneur en une combinaison de composés actifs selon la revendication 1, en plus d'au moins un diluant et/ou agent tensioactif.

3. Procédé de lutte contre des micro-organismes nuisibles, de préférence des champignons nuisibles phytopathogènes, dans la protection des cultures et dans la protection des matériaux, **caractérisé en ce qu'**une combinaison de composés actifs selon la revendication 1 ou une composition selon la revendication 2 est appliquée aux micro-organismes nuisibles et/ou à leur habitat.

4. Utilisation d'une combinaison de composés actifs selon la revendication 1 ou d'une composition selon la revendication 2 pour lutter contre des micro-organismes nuisibles, de préférence des champignons nuisibles phytopathogènes, dans la protection des cultures et dans la protection des matériaux.

5. Utilisation d'une combinaison de composés actifs selon la revendication 1 ou d'une composition selon la revendication 2 pour traiter un végétal transgénique.

6. Utilisation d'une combinaison de composés actifs selon la revendication 1 ou d'une composition selon la revendication 2 pour traiter des semences, de préférence des semences d'un végétal transgénique.

7. Semences enrobées d'une combinaison de composés actifs selon la revendication 1 ou d'une composition selon la revendication 2.
